Europäisches Patentamt

European Patent Office

Office européen des brevets

(19)

(11) **EP 1 503 231 A1**

(12) **EUROPEAN PATENT APPLICATION**
published in accordance with Art. 158(3) EPC

(43) Date of publication:
**02.02.2005 Bulletin 2005/05**

(51) Int Cl.⁷: **G02B 6/24**

(21) Application number: **02783569.3**

(86) International application number:
**PCT/JP2002/012040**

(22) Date of filing: **19.11.2002**

(87) International publication number:
**WO 2003/091777 (06.11.2003 Gazette 2003/45)**

(84) Designated Contracting States:
**AT BE BG CH CY CZ DE DK EE ES FI FR GB GR IE IT LI LU MC NL PT SE SK TR**

(30) Priority: **26.04.2002 JP 2002127262
05.09.2002 JP 2002260519
07.11.2002 JP 2002324386**

(71) Applicant: **IBIDEN CO., LTD.
Ogaki-shi Gifu-ken 503-0917 (JP)**

(72) Inventor: **HIROSE, Naohiro c/o IBIDEN CO., LTD.
Ibi-gun, Gifu 501-0695 (JP)**

(74) Representative: **Hart Davis, Jason
Cabinet Beau de Loménie,
158, rue de l'Université
75340 Paris Cedex 07 (FR)**

(54) **OPTICAL TRANSMISSION STRUCTURE, OPTICAL GUIDE, METHOD FOR FABRICATING OPTICAL WAVEGUIDE, AND OPTICAL INTERCONNECTION COUPLER**

(57)     An object of the present invention is to provide an optical transmission structural body capable of preferably transmitting an optical signal between an optical wiring and an optical waveguide irrespective of a shape of a portion of the optical wiring, the portion being connected to a core part of the optical waveguide.

The optical transmission structural body of the present invention is constituted so that at least an optical wiring and an optical waveguide are connected to each other and an optical signal can be transmitted between a core of the optical wiring and a core part of the optical waveguide, wherein a portion of the optical wiring, the portion being connected to the core part of the optical waveguide, is not specially subjected to a planarization processing or has a surface roughness Ra based on JIS B 0601 of 0.1 μm or more.

EP 1 503 231 A1

**Description**

Technical Field

The present invention relates to an optical transmission structural body, an optical waveguide, an optical waveguide formation method and an optical wiring connection body.

Background Art

Recently, fields of optical communication and optical informationprocessingusingoptical techniques as well as fields of electronic equipment and optical equipment have rapidly developed, and it is an important problem to develop techniques for connecting various types of optical devices. Conventionally, the optical devices of various types are connected to each other through an optical wiring such as an optical fiber or the like. For such connection, quite high positional accuracy is required. Since an operation for such connection is carried out either manually or by means of highly accurate alignment equipment, the operation has disadvantageously caused an increase in connection cost.

In order to solve this problem, a technique for a self-organizing optical waveguide has been developed. According to this technique, an end of an optical wiring or the like to be connected to an optical device is immersed in a photosensitive composition, and a photosensitive material is irradiated with light through this optical wiring or the like. The photosensitive material is thereby gradually photosensitized and a core part of an optical waveguide is formed on a tip end of this optical connection end. Thereby, even without particularly expensive alignment equipment, an optical waveguide constituted to be able to transmit an optical signal between the optical wiring and the optical device can be formed, and the problem that causes the increase in connection cost can be solved.

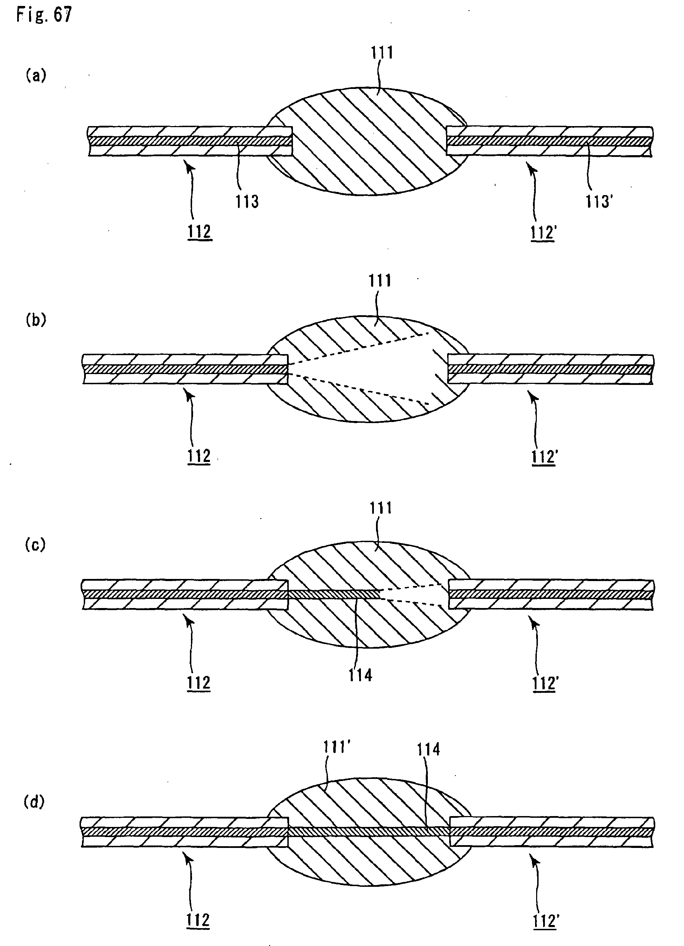

Such a self-organizing optical waveguide formation technique will be briefly described with reference to the drawings. Figs. 67(a) to 67(d) are schematic diagrams for describing one example of a method of forming the core part of the optical waveguide that connects different optical fibers to each other using this self-organizing optical waveguide technique.

First, optical fibers 112 and 112' are arranged such that one end of one optical fiber faces one end of the other optical fiber. A photosensitive composition 111 is applied so as to surround the ends of the optical fibers 112 and 112', whereby the ends of the optical fibers 112 and 112' are both immersed in the photosensitive composition 111 (see Fig. 67 (a)). In Fig. 67(a), 113 and 113' represent cores of the respective optical fibers 112 and 112'.

Means (not shown) for irradiating light such as light of a high pressure mercury lamp is provided on the other end of one optical fiber 112 which does not face the other optical fiber 112', and light for curing the photosensitive composition 111 is irradiated from one end of the optical fiber 112 toward one end of the optical fiber 112' arranged to face one end of the optical fiber 112 using this means (see Fig. 67(b)).

By irradiating the light from one end of one optical fiber 112 to that of the other optical fiber 112' , the photosensitive composition 111 is gradually cured from an optical fiber 112-side correspondingly to an optical path, and the core part 114 of the optical waveguide that connects the optical fiber 112 to the optical fiber 112' is formed (see Figs. 67 (c) to Fig. 67 (d)).

Furthermore, due to the development of the fields using the optical techniques such as the optical communication and the optical information processing, attention has been focused on optical fibers mainly in communication fields. Particularly in the IT (Information Technology) field, an optical communication technique employing the optical fibers is necessary to provide a high speed Internet network.

The optical fiber has features: (1) low loss, (2) high band, (3) small diameter and light weight, (4) non-induction, (5) resource saving, and the like. A communication system which employs the optical fibers having these features can considerably decrease the number of relays as compared with a communication systemwhich employs conventional metallic cables, can be easily constructed and maintained, and can improve its economical development and reliability.

Further, since the optical fiber can transmit not only light having a single wavelength but also light having many different wavelengths simultaneously, i.e., only one optical fiber can provide multiple transmission of light having many different wavelengths, it is possible to realize a large capacity of a transmission path capable of dealing with diversified purposes and to deal with picture service and the like.

Emission light emitted from an optical component such as a semiconductor laser is incident on such an optical fiber. It is an important element in the optical communication how efficiently the emission light is caused to be incident on the optical fiber. In long-distance transmission, in particular, it is required to cause the emission light to be incident on the optical fiber with high efficiency.

However, it is necessary to provide a gap between the optical fiber and the optical component for the purpose of preventing the optical fiber from being damaged due to a thermal expansion of the optical fiber or the like. The gap is, therefore, a hindrance for realizing the efficient incidence of the emission light on the optical fiber.

To avoid this problem, a method of causing the emission light of the optical component to be incident on the optical fiber by providing a lens such as a collimator lens or a condensing lens between the optical component and the optical fiber is used. With this method, even if the gap is provided between the optical component and the optical fiber, the emission light of the optical component can be caused to be efficiently incident on the optical fiber.

This method can be used for not only transmitting the light from the optical component to the optical fiber but also transmitting a light from the optical fiber to the optical component and transmitting light from one optical fiber to the other optical fiber. With this method, efficient light transmission can be achieved in any of these cases.

Furthermore, following the development of the fields using the optical techniques such as the optical communication and the optical information processing, performances of various types of optical communication devices have been enhanced, thereby disadvantageously complicating connection between the devices for optical communication.

Summary of the Invention

The achievement of the connection between an optical wiring and an optical waveguide involves a serious problem other than the above-described cost problem. Namely, when the optical wiring is connected to the optical waveguide, connection ends of the optical wiring and the optical waveguides should be flattened so as to realize low connection loss. To this end, it has been said that it is necessary to carry out a highly accurate facet processing.

Taking connection of general optical fibers as an example, it has been said that: if a facet of a connection end of the optical wiring or the like is not flat, a bubble, a disorder of fiber cores, or the like occurs to result in a connection loss or the like during connection using a fusion technique; and if facets of the optical fibers are simply, physically connected to each other (mechanically spliced together), a connection loss due to a diffuse reflection or the like occurs to a connection portion of an optical waveguide connected to the optical wiring or the like. In addition, it has been said that: even if the self-organizing optical waveguide technique is used, a connection loss due to a diffuse reflection of a transmission light or the like occurs at the connection portion of the optical waveguide thus formed with the optical wiring or the like.

Therefore, if the optical fibers or the like from which covering members or the like are removed, respectively, are simply connected to each other, relatively flat facets can be formed by cutting the facets using a fiber cutter or the like. For a fiber array, a connector or the like, into which a single optical fiber or the like or a plurality of optical fibers or the like are assembled, however, a grinding processing is carried out for a long period of time using fine grinder powders after cutting because of the necessity of making connection facets uniform or the like. The grinding processing is not limited to surface grinding but spherical grinding such as PC grinding, inclined grinding or the like is necessary to be carried out in some cases. Therefore, there have been inevitable problems such as complicated steps and a cost increase. Specifically, an optical fiber facet grinding method using a silica-containing abrasive or the other method has been proposed.

However, after detailed consideration of an optical transmission structural body configured by connecting an optical wiring to an optical waveguide, the present inventor found that an optical signal can be appropriately transmitted between the optical wiring and the optical waveguide no matter what shape a portion of the optical wiring connected to the core part of the optical waveguide is, and completed an optical transmission structural body according to a first aspect of a first group of the present invention.

Furthermore, after detailed consideration of an optical waveguide formation method using the self-organizing optical waveguide formation technique, the present inventor found that the core part of an optical waveguide excellent in connection with the optical wiring can be formed without carrying out the highly accurate facet processing. The present inventor also found that the problems such as the complicated steps can be solved by forming such a core, and thereby completed an optical waveguide formation method according to a second aspect of the first group of the present invention.

The first aspect of the first group of the present invention is an invention relating to the optical transmission structural body, and the second aspect thereof is an invention relating to the optical waveguide formation method.

An optical transmission structural body according to the first aspect of the first group of the present invention is an optical transmission structural body constituted such that: at least an optical wiring and an optical waveguide are connected to each other; and an optical signal can be transmitted between a core of the above-mentioned optical wiring and a core part of the above-mentioned optical waveguide, wherein a portion of the above-mentioned optical wiring, the above-mentioned portion being connected to the core part of the above-mentioned optical waveguide, is not specially subjected to a planarization processing or has a surface roughness Ra based on JIS B 0601 of 0.1 $\mu$m or more.

In the optical transmission structural body according to the first aspect of the first group of the present invention, the core of the above-mentioned optical wiring may be connected to the core part of the above-mentioned optical waveguide; and a coating layer may be formed at least on an circumference of an end of the above-mentioned optical wiring on a side on which connection to the core part of the above-mentioned optical waveguide is conducted.

In the optical transmission structural body according to the first aspect of the first group of the present invention, an optical refractive index of the core part of the above-mentioned optical waveguide may be 90 to 110% of an optical refractive index of a portion of the above-mentioned optical wiring, more desirably 95 to 105% of an optical refractive index of the portion of the optical wiring, the above-mentioned portion being connected to the core part of the above-mentioned optical waveguide.

In the optical transmission structural body according to the first aspect of the first group of the present invention, an optical path conversion mirror may be formed on an end surface of the core part of the optical waveguide at opposite side to the side on which the core part of the above-mentioned optical waveguide is connected to the above-mentioned optical wiring, and the core part of the optical waveguide may include at least one bent portion.

In the optical transmission structural body according to the first aspect of the first group of the present invention, a roughened surface is desirably formed partially or entirely in a portion other than the portion connected to the core part of the optical waveguide on a surface of the optical wiring.

An optical waveguide formation method according to the second aspect of the first group of the present invention is an optical waveguide formation method which comprising steps of:immersing a part of an optical wiring in a photosensitive composition;irradiating light into the above-mentioned photosensitive composition through the above-mentioned optical wiring; and forming a core part corresponding to an optical path of light in the above-mentioned photosensitive composition, wherein a portion of the above-mentioned optical wiring, the above-mentioned portion being connected to the core part of the above-mentioned optical waveguide, is not specially subjected to a planarization processing or has a surface roughness Ra based on JIS B 0601 of 0.1 µm or more.

In the optical waveguide formation method according to the second aspect of the first group of the present invention, desirably, the above-mentioned part of the optical wiring immersed in the photosensitive composition is an end of the above-mentioned optical wiring, and a coating layer is formed on an circumference of the end of the optical wiring.

In the optical waveguide formation method according to the second aspect of the first group of the present invention, an optical refractive index of the core part is desirably 90 to 110%, more desirably 95 to 105% of an optical refractive index of the portion of the optical wiring, the above-mentioned portion being connected to the core part.

Moreover, when forming an optical waveguide with the technology of a self-organizing optical waveguide, it is necessary to irradiate light from a facet of optical wiring to a photosensitive composite such as an optical fiber. After preparing a light source in the a facet side of everything but an optical fiber as such a method, the method of carrying out incidence of the light from other a facet of an optical fiber using the light source is used.

According to the method, the light which carried out incidence can be guided inside of an optical fiber, and emerge from a facet of an optical fiber, and it can form the core part according to the course of the light in a photosensitive composite.

However, since a light source was not able to be prepared in the facet side of everything but an optical fiber when optical parts, such as a light receiving element and a luciferin child, are prepared in the facet side of everything but an optical fiber, incidence of the light was not able to be carried out from other facet of an optical fiber, and light was not able to be irradiated from a facet of an optical fiber to a photosensitive composite. That is, technology of a self-organizing optical waveguide was not able tobe usedby composition of the optical device containing an optical fiber etc. Thus, since complicated connection as which very highposition accuracy which was mentioned above is required had to be made when technology of a self-organizing optical waveguide cannot be used, the problem which a process makes complicated that cost increases was unavoidable.

Then, by this inventor's repeating examination wholeheartedly about this problem, consequently carrying out incidence of the light through the side of optical wiring, even if it is the case where a light source cannot be prepared in the facet side of everything but optical wiring, and incidence of the light cannot be carried out from other facet of optical wiring Light could be irradiated from a facet of optical wiring to the photosensitive composite, it found out that it became possible to form an optical waveguide using the technology of a self-organizing optical waveguide, and the formation method of an optical waveguide present invention of the second group was completed.

The second group of the present invention is an invention related to the optical waveguide formation method. Formation method of an optical waveguide according to the present invention of the second group is an optical waveguide formation method which comprising steps of: immersing a part of an optical wiring in a photosensitive composition; irradiating light into said photosensitive composition through said optical wiring; and forming a core part corresponding to an optical path of light in said photosensitive composition, wherein irradiating light from facet of said optical wiring is the light which carried out incidence through the side of said optical wiring.

In the formation method of an optical waveguide according to the present invention of the second group, before carrying out incidence of said light for the side of the optical wiring to which incidence of said light is carried out, it is desirable to make it curve.

Moreover, as for the light which carries out incidence through the side of said optical wiring, it is desirable that it is the light which condensed with the lens.

And when forming an optical waveguide which connects between different optical fibers using the technology of a self-organizing optical waveguide, as shown in Fig. 67, the method of irradiating light towards the end of the optical fiber of another side from each end of not only the method of irradiating light towards the end of the optical fiber of another side from the end of one optical fiber, and forming an optical waveguide but a different optical fiber, and forming an optical waveguide can also be used.

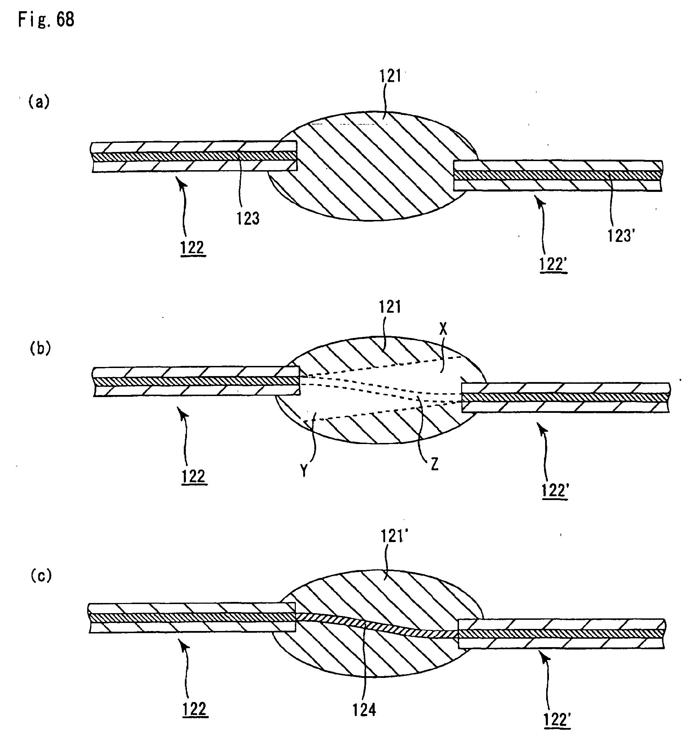

Fig. 68 (a) - (c) is a schematic diagrams for describing other examples of the method of forming an optical waveguide which connects between different optical fibers using the technology of a self-organizing optical waveguide.

An optical fiber is arranged so that the ends may carry out abbreviation opposite of the end of two optical fibers 122 connected optically concrete first and 122', while flooding with the photosensitive composite 121. Here, optical axis of optical fibers has not agreed completely (see Fig. 68 (a)). In addition, 123 and 123' is the core of an optical fiber 122 and 122' among a figure, respectively.

Next, the means (not shown) for irradiating light, respectively is prepared in the two optical fiber 122 and end side where 122' has not faced each other, and using said means, from the end of two optical fibers 122 and 122', the light for stiffening the photosensitive composite 121 is turned to optical fiber 122' of the other party, and the end of 122, and is irradiated, respectively, (see Fig. 68 (b)).

In this case, in an optical fiber 122, the mutual Idei light X which comes out of the end of 122' and is put, and the portion Z which Y overlaps, the intensity of light becomes high Then, if the intensity of light is set up so that only the intensity of the light of the superposition portion Z may turn into intensity to which the polymerization of the photosensitive composite can be carried out, the core part 124 will be formed in the portion Z which the mutual Idei light overlaps (see Fig. 68 (c)).

It is possible to form the core part 124 of an optical waveguide in the course of the light which connects an optical fiber 122 and the ends of 122' with this method though optical axis of a pair of optical fibers 122 and 122' did not agree completely but has shifted, and to combine both with it optically by high probability. Moreover, even if this method is the case where the end which a different optical fiber compared with the method shown in Fig. 67 since it was the method of forming a core part faced from each end which a different optical fiber faced is remarkably separated, it can form the core part which connects between more certainly different optical fibers. Furthermore, since this method is the method of forming a core part from each end which a different optical fiber faced, it can form the core part which connects between optical fibers which are different for a short time compared with the method shown in Fig. 67.

Since a core part will be formed by stiffening some photosensitive composites of a liquid as mentioned above when forming an optical waveguide using such technology, a core part tended to flow at the time of formation. However, as mentioned above, by forming the core part which connects between different optical fibers for a short time, this core part cannot be easily influenced of a flow, and can form the core part of the stable form. Thus, it can be said that the method of irradiating light towards the end of the optical fiber of another side from each end of a different optical fiber, and forming a core part (hereinafter, also referred to as "a method of forming a core part by bidirectional irradiation") is a method more desirable than the method (hereinafter, also referred to as "a method of forming a core part by the one direction irradiation") of irradiating light towards the end of the optical fiber of another side from the end of one optical fiber, and forming a core part, because even if it is the case where the end of a different optical fiber is remarkably separated when optical axis of a different optical fiber has shifted In the point that it is possible to form an optical waveguide which connects between more certainly different optical fibers, and the core part of the stable form can be formed.

However, the method of forming a core part by bidirectional irradiation is the method of using, only when light can be irradiated towards the end of the optical fiber of another side from each end of a different optical fiber, and the method of forming a core part by this bidirectional irradiation had the case where it could use neither by the optical fiber nor composition of an optical device. Since optical parts are prepared in the end side of the optical fiber of one among the ends where a different optical fiber has not faced each other, when the means for irradiating light cannot be established, specifically.

The case where the light receiving element is prepared in the end side of the optical fiber of one among the ends where a different optical fiber has not faced each other, when the luciferin child who cannot irradiate light of the wavelength which can stiffen a photosensitive composite was prepared, the method of forming a core part by bidirectional irradiation was not able to be used.

In such a case, the end where an optical fiber which is different to the range which can form an optical waveguide which connects a different optical fiber using the method of forming a core part by the 1 direction irradiation in order to form an optical waveguide of the stable form certainly faced each other needed to be brought close, and optical axis of a different optical fiber needed to be made to agree completely. Therefore, the work of highly precise positioning will be required and the formation process of an optical waveguide might become complicated. Moreover, when the formation process of an optical waveguide became complicated, it was difficult to solve the problem which serves as a cause of a connection cost rise of an optical fiber using the technology of a self-organizing optical waveguide. Then, this inventor repeated examination wholeheartedly and completed present invention of the third group.

The purpose of present invention of the third group is offering the formation method of an optical waveguide which can form certainly an optical waveguide of the stable form which connects between different optical wiring, without working highly precise position, even if the case where the means for irradiating light at the end side of optical wiring of one cannot be established among the ends where different optical wiring has not faced each other, by enabling it to form a core part from each end which different optical wiring faced.

The third group of the present invention is an invention related to the optical waveguide formation method.

The third group of the present invention is an optical waveguide formation method which comprising steps of: immersing a part of an optical wiring in a photosensitive composition; irradiating light into said photosensitive composition through said optical wiring; and forming a core part corresponding to an optical path of light in said photosensitive composition, wherein irradiating light from facet of saidoptical wiring is the light which carried out incidence through the side of said optical wiring.

As for the above-mentioned optical reflective means, in the formation method of optical waveguide this invention of the third group, it is desirable that it is a mirror or is an optical filter.

Further, as already mentioned, as a method for connecting various optical devices to each other through an optical fiber or the like when establishing optical connection, a method using a connector, amethod for fusing the optical fiber or the like with the various optical devices, amethod for bonding the optical fiber or the like to the various optical devices by an optical adhesive, and the like have been used. However, any of these methods is a method for connecting the optical fiber or the like to the various optical devices by pressing each of the various optical device against the optical fiber or the like. Therefore, it has been said that: when connecting them, a damage of end surfaces of the optical fiber and the optical devices or deformation of connection portions or the like occurs. A connection loss resulting from diffuse reflection of a transmitted light might possibly occur to the connection portions in which the optical fiber are connected to the respective optical devices.

Furthermore, if the method for bonding the optical fiber or the like to the various optical devices by the optical adhesive is used, it is necessary to carry out a highly accurate end surface processing for making connection ends flat or spherical so as to realize low-loss connection. Therefore, it has been said that: there is no way to avoid disadvantages including the complicated steps and the cost increase.

If the above-mentioned self-organizing optical waveguide technique is used, the core part might be fluidized when forming the optical waveguide because the photosensitive composition is a liquid. As a result, a shape of the core part became sometimes unstable. With the optical waveguide including the core part of the unstable shape, it has been disadvantageously difficult to realize low connection loss between the optical devices.

As a result of dedicated study for solving these problems, the present inventor discovered that by forming an optical waveguide connecting different optical wirings to each other, and comprising a core part and a cladding part an optical signal, and then by pulling both ends of at least the core part, the core part is not fluidized and the shape of the core part is stabilized.

The present inventor also discovered that in an optical waveguide connected to optical wirings or optical components, and comprising a core part and a cladding part, both ends of at least the core part being pulled, the shape of the core part is stabilized, no damage, deformation or the like occurs to an end surface of the optical waveguide and those of the optical wirings or the like connected to both ends of the optical waveguide, respectively, and low connection loss between the different optical wirings or the like canbe realized. The present inventor thus completed a fourth group of the present invention.

A first aspect of the fourth group of the present invention is an invention relating to an optical waveguide, and a second aspect thereof is an invention relating to an optical waveguide formation method.

An optical waveguide according to the first aspect of the fourth group of the present invention is an optical waveguide comprising a core part and a cladding part, each of both ends thereof being connected to optical wirings or optical components, respectively, wherein both ends of at least the core part are pulled.

In the optical waveguide according to the first aspect of the fourth group of the present invention, the core part desirably comprises a photosensitive composition. The cladding part desirably comprises a resin composition.

Further, an optical waveguide formation method according to the second aspect of the fourth group of the present invention comprises steps of: arranging different optical wirings such that one end of one of the optical wirings substantially faces one end of the other optical wiring and at least both of the faced ends thereof are immersed in a photosensitive composition; and irradiating light at least from one of the above-mentioned optical wirings to the other optical wiring, thereby forming a core part that connects the above-mentioned optical wirings to each other, wherein both ends of the core parts are pulled.

In the optical waveguide formation method according to the second aspect of the fourth group of the present invention, desirably, after pulling the above-mentioned core part or while pulling the above-mentioned core part, a stable cladding part is formed around the above-mentioned core part.

Moreover, as described above, if a lens is to be arranged between an optical component and an optical fiber during optical transmission, a very small lens should be used as the lens. In order to efficiently transmit a light, high accuracy is required for a shape of the lens. Manufacturing of such a lens is disadvantageously complicated and has disadvantageously caused a cost increase.

In addition the arrangement of the lens in the optical component, the optical fiber or the like is carried out manually or using a facility which can perform positioning with high accuracy. The arrangement requiring considerably high positioning accuracy has caused a problem of increased cost.

As a result of dedicated study for solving these problems, the present inventor discovered that an optical waveguide including a core part a shape of which is such that the core part is gradually thinner toward one end of the core part can be employed in place of the above-mentioned lens, and that the optical waveguide of such a shape can be formed easily at a low cost by using a predetermined method.

The present inventor also discovered that the optical waveguide having the above-mentioned shape can be formed while being directly attached to an optical wiring such as an optical component or an optical fiber, and that the above-mentioned problems can be solved since a highly accurate positioning step is not required when the optical waveguide is formed in that state. The present inventor thus completed a fifth group of the present invention.

A first aspect of the fifth group of the present invention is an invention relating to an optical waveguide, and a second aspect thereof is an invention relating to an optical waveguide formation method.

An optical waveguide according to the first aspect of the fifth group of the present invention is an optical waveguide formed independently of an optical wiring, wherein a shape of a core part is formed to be gradually thinner toward one end of the core part.

In the optical waveguide according to the first aspect of the fifth group of the present invention, a cladding part is desirably formed around the core part. The core part desirably comprises a photosensitive composition.

Further, an optical waveguide formation method according to the second aspect of the fifth group of the present invention comprises a step of irradiating light into a photosensitive composition through an optical wiring, thereby growing a cured matter of the above-mentioned photosensitive composition having a shape for condensing the above-mentioned light to form a core part having such a shape that the core part becomes gradually thinner toward one end of the core part.

In the optical waveguide formation method according to the second aspect of the fifth group of the present invention, desirably, after forming the above-mentioned core part, a stable cladding part is formed around the above-mentioned core part.

Moreover, connection between the devices for optical communications is becoming complicated, and it will be necessary to bend the optical wiring which connects between the devices for optical communications in connection with this. Under the present circumstances, optical wiring is bent at a big angle, or when with a small radius it bends circularly, optical transmission ability will fall. Therefore, in case optical wiring is bent, when bending an optical waveguide simply, in consideration of the radiation loss etc. , it must bend at a minute angle, and the occupancy area of an optical waveguide will become large. Moreover, when bending in the shape of a curve, without reducing the optical transmission ability of optical wiring (for example, when bending in the shape of S character), the complicated design of there being the necessity of using a right bowstring function etc. was required for calculation of the curvature radius, and the flexibility of a design was low. Moreover, when bending optical wiring, preparing a reflective means in the perimeter part of a portion by which optical wiring was bent, or establishing the high refraction domain which has the lens effect in a part of optical wiring is proposed. However, also in such optical wiring, the complicated design was required and the flexibility of a design was also low. Moreover, in order to make only optical path crooked rather than to bend the optical wiring itself, the method of setting up a mirror, a prism, etc. as another parts at the end of optical wiring etc. is proposed. When additional optical parts, such as a mirror, were used at this time, it was disadvantageous at the point that the formation process becomes complicated and manufacture cost and a product price become high further. Furthermore, air etc. makes a substance different sharply an optical refractive index placed between the optical wiring ends which ground aslant and were produced as a method of making other optical path crooked, and the method of all reflecting light using the optical big refractive-index difference is proposed. However, in order to use all reflection by the optical big refractive-index difference between optical waveguide and air by this method, the flexibility to demand of being able to apply only to the optical wiring which makes a big crookedness angle (for example, 90 ° ), but forming arbitrary crookedness angles was sharply low. Two or more optical wiring from which this inventor repeats examination wholeheartedly in order to solve said problem, consequently an optical refractive index differs is connected. At then, this time even when it had the crookedness part of the arbitrary bent form by making facet of the side linked to other optical wiring of optical wiring of at least one into predetermined form, it found out that it could consider as the optical wiring connection object which is excellent in optical transmission ability, and present invention of the sixth group was completed.

The sixth group of the present invention is about an optical wiring connection object.

The optical wiring connection object of the sixth group of the present invention is an optical wiring connection body constituted such that: plural optical wiring are connected to transmit an optical signal to each other, wherein said optical wiring connection body includes a bent portion, said optical wiring connected to each other has different optical refractive index,

at least one of said optical wiring does not cross at right angles to optical axis on the facet of the side connected with other optical wiring.

As for the optical wiring connection object of present invention of the sixth group, it is desirable to have had the optical wiring A and the optical wiring B at least, and for facet of said optical wiring A and facet of said optical wiring B to have been connected, and to have bent in the connection part of said optical wiring A and said optical wiring B. Moreover, as for the optical wiring connection object of present invention of the sixth group, it is desirable to have had the optical wiring C and the optical wiring D at least, and for the side of the end of said optical wiring C and facet of said optical wiring D to have been connected, and to have bent in the connection part of said optical wiring C and said optical wiring D. Moreover, while having the optical wiring E, the optical wiring F, and the optical wiring G at least and connecting the side of the end of said optical wiring E, and facet of said optical wiring F, the optical wiring connection object of present invention of the sixth group It is desirable for facet of the side to which the optical wiring F of said optical wiring E was connected, and facet of said optical wiring G to have been connected, and to have bent in the connection part of said optical wiring E and said optical wiring F and the connection part of said optical wiring E and said optical wiring G. Moreover, since only one an optical waveguide was able to be formed to the light source usually equipped with the single irradiation domain in formation of an optical waveguide using technology of self-organizing optical waveguide which was mentioned above, efficiency was bad. Moreover, when an optical waveguide of the many hearts was required, two or more an optical waveguide formed by the single heart had to be bundled with fusion bond or adhesives, and there was a problem that post-processing was troublesome. Then, although it is possible to increase the number of light sources, to make the light emitted from these light sources condense with a lens, respectively, and to form through and two or more an optical waveguide for an optical fiber simultaneously, there is a problem that equipment will become complicated if it is made such, and equipment cost becomes expensive.

Present invention of the seventh group is made in view of said situation, is excellent in manufacture efficiency, and aims to let multi-heart connection offer the formation method of easy an optical waveguide.

The seventh group of the present invention is invention about the optical waveguide formation method.

The optical waveguide formation method according to the seventh group of the present invention is an optical waveguide formation method which comprising steps of: forming an optical waveguide according to course of the light by irradiating light into photosensitive composite, wherein forming two or more an optical waveguide at the tip of each said optical wiring,by passing the optical wiring of two or more laid in parallel in the light which came out of the light source equipped with the single irradiation domain, and was put, and glaring into said photosensitive composite.

Moreover, the light irradiated into said photosensitive composite makes the pair which should be combined optically, and it is desirable to glare towards optical wiring of the other party, respectively from optical wiring. Moreover, when an optical waveguide was formed using the technology of self-organizing optical waveguide mentioned above, the diameter of the section of formed an optical waveguide might not become fixed. When the length of an optical waveguide became long especially, the diameterby the side of the tip (the side connected with optical wiring, opposite side) might have become thin. This is considered because the intensity may differ by the optical wiring and tip side (the intensity of light becomes weak by the tip side) in optical path of the light irradiated by the photosensitive composite. Thus, although it is convenient when connecting a thick optical fiber to a thin optical fiber if the tip side of formed an optical waveguide becomes thin, it is not desirable when it is going to connect a thin optical fiber to a thick optical fiber conversely. Moreover, since the diameter by the side of the tip of an optical waveguide cannot fully be extended when it is going to connect an optical fiber to the optical device which has the luminescence part of a big area compared with the diameter, joint loss will be easy to be produced. Thus, it was difficult to adjust the path of an optical waveguide formed freely by the formation method of the conventional an optical waveguide.

Present invention of the eighth group is made in view of said situation, and aims at offering the formation method of an optical waveguide which can adjust the diameter of an optical waveguide formed freely in a certain amount of range.

The eighth group of the present invention is about the formation method of an optical waveguide.

The eighth group of the present invention is an optical waveguide formation method which comprising steps of:placing a photosensitive composite into a case made of resin, and making a line harden of the irradiation region of light by and irradiating light in said photosensitive composite, wherein in said case made of resin, recurrence rate of the light which recur after being scattered on the circumference from the irradiation region of said light differs along the formation direction of said an optical waveguide.

As for recurrence rate of said light, in an optical waveguide of present invention of the eighth group, it is desirable to make it have differed by changing the reflectance of the light in the inside of said resin accommodation part along the formation direction of said an optical waveguide. Moreover, as for recurrence rate of said light, it is desirable to also make it have differed by changing the distance of the irradiation region of said light and the inside of said resin accommodation part along the formation direction of said an optical waveguide.

# EP 1 503 231 A1

Brief Description of the Drawings

Fig. 1 is a partly cross-sectional view schematically showing one embodiment of an optical transmission structural body according to the first aspect of the first group of the present invention.

Figs. 2 (a) to 2 (c) are partly cross-sectional views each schematically showing another embodiment of the optical transmission structural body according to the first aspect of the first group of the present invention.

Fig. 3 is a partly cross-sectional view schematically showing still another embodiment of the optical transmission structural body according to the first aspect of the first group of the present invention.

Figs. 4 (a) and 4 (b) are partly cross-sectional views each schematically showing yet another embodiment of the optical transmission structural body according to the first aspect of the first group of the present invention.

Figs. 5 (a) and 5 (b) are partly cross-sectional views each schematically showing yet another embodiment of the optical transmission structural body according to the first aspect of the first group of the present invention.

Fig. 6 is a partly cross-sectional view schematically showing yet another embodiment of the optical transmission structural body according to the first aspect of the first group of the present invention.

Fig. 7 is a partly cross-sectional view schematically showing yet another embodiment of the optical transmission structural body according to the first aspect of the first group of the present invention.

Figs. 8 (a) and 8 (b) are partly cross-sectional views each schematically showing yet another embodiment of the optical transmission structural body according to the first aspect of the first group of the present invention.

Figs. 9 (a) and 9 (b) are partly cross-sectional views each schematically showing yet another embodiment of the optical transmission structural body according to the first aspect of the first group of the present invention.

Fig. 10 is a partly cross-sectional view schematically showing yet another embodiment of the optical transmission structural body according to the first aspect of the first group of the present invention.

Fig. 11 is a partly cross-sectional view schematically showing an embodiment in which an optical signal is transmitted between the optical transmission structural bodies according to the first aspect of the first group of the present invention.

Fig. 12 is a partly cross-sectional view schematically showing an embodiment in which the optical transmission structural bodies according to the first aspect of the first group of the present invention are used while being arranged.

Fig. 13 is a partly cross-sectional view schematically showing another embodiment of a conventional optical transmission structural body.

Figs. 14 (a) to 14 (d) are schematic diagrams for describing one example of an optical waveguide formation method according to the second aspect of the first group of the present invention.

Fig. 15 is a schematic diagram for describing part of steps of the optical waveguide formationmethod according to the second aspect of the first group of the present invention.

Fig. 16 is a schematic diagram for describing part of steps of the optical waveguide formationmethod according to the second aspect of the first group of the present invention.

Fig. 17 is a schematic diagram for describing part of steps of the optical waveguide formation method according to the second aspect of the first group of the present invention.

Figs. 18 (a) and 18 (b) are schematic diagrams for describing part of steps of the optical waveguide formationmethod according to the second aspect of the first group of the present invention.

Fig. 19 (a) is a schematic diagram for describing part of steps of the optical waveguide formation method according to the second aspect of the first group of the present invention; and Fig. 19 (b) is a partly enlarged cross-sectional view of Fig. 19 (a) .

Figs. 20 (a) to 20 (d) are schematic diagrams for describing another example of the optical waveguide formation method according to the second aspect of the first group of the present invention.

Figs. 21 (a) to 21 (c) are schematic diagrams for describing another embodiment of the optical waveguide formation method according to the second aspect of the first group of the present invention.

Fig. 22 is a schematic diagram for describing part of steps of the optical waveguide formation method according to the second aspect of the first group of the present invention.

Fig. 23 is a schematic diagram for describing part of steps of the optical waveguide formation method according to the second aspect of the first group of the present invention.

Fig. 24 is a general view for describing the optical waveguide formation method according to Example 1.

Fig. 25 is a general view for describing the optical waveguide formation method according to Example 5.

Figs. 26 (a) and26 (b) are schematic diagrams for describing part of steps of the optical waveguide formation method according to the second aspect of the first group of the present invention.

Figs. 27 (a) and 27(b) are schematicdiagrams for describing part of steps of the optical waveguide formationmethod according to the second aspect of the first group of the present invention.

Fig. 28 is a general view for describing the optical waveguide formation method according to Example 13.

Figs. 29(a) and 29(b) are schematicdiagrams for describing part of steps of the optical waveguide formation method according to the third group of the present invention.

Fig. 30 (a) to (d) is a schematic diagrams for explaining signs that the core part which connects between different optical wiring by the formation method of optical waveguide according to the third group of the present invention.

Fig. 31 (a) and (b) are a schematic diagrams for explaining other examples of the formation method of the optical waveguide according to the third group of the present invention.

Figs. 32(a) to 32(c) are cross-sectional views each schematically showing one example of an optical waveguide according to the first aspect of the fourth group of the present invention.

Fig. 33 is a general view for describing the optical waveguide formation method according to Example 17.

Figs. 34(a) to 34(d) are schematic diagrams showing examples of shapes of a core part that constitutes the optical waveguide.

Fig. 35 is a schematic diagram showing an optical waveguide in which a number of core parts are formed in an array.

Figs. 36 (a) to 36 (c) are schematic diagrams for describing one embodiment of the optical waveguide formation method according to the second aspect of the fifth group of the present invention.

Figs. 37 (a) to 37 (c) are schematic diagrams for describing another embodiment of the optical waveguide formation method according to the second aspect of the fifth group of the present invention.

Figs. 38 (a) to 38 (c) are schematic diagrams for describing further another embodiment of the optical waveguide formation method according to the second aspect of the third group of the present invention.

Fig. 39 is a general view for describing the optical waveguide formation method according to Example 19.

Fig. 40 is a general view for describing the optical waveguide formation method according to Example 20.

Fig. 41 is a sectional view showing typically an example of the optical wiring connection object of this invention of the sixth group.

Fig. 42 is a sectional view showing typically an example of the optical wiring connection object of this invention of the sixth group.

Fig. 43 is a sectional view showing typically an example of the optical wiring connection object of this invention of the sixth group.

Fig. 44 (a) - (c) is a schematic diagrams for explaining an example of a method which manufactures the optical wiring connection object of this invention of the sixth group.

Fig. 45 (a) - (c) is a schematic diagrams for explaining an example of a method which manufactures the optical wiring connection object of this invention of the sixth group.

Fig. 46 is an outline figure for explaining the formation method of the optical transmission structure object performed in the cases of the operation 21-23.

Fig. 47 is a sectional view showing typically an example of the optical wiring connection object of this invention of the sixth group.

Fig. 48 is a sectional view showing typically an example of the optical wiring connection object of this invention of the sixth group.

Fig. 49 is graph which shows the relation between the optical refractive index (n12) of the optical wiring 6102 in the optical wiring connection object 6100 of the first enforcement form of this invention of the sixth group, and the angle theta 1 of the optical wiring 6101 and the optical wiring 6102 to make.

Fig. 50 is graph end face 6101a of the optical wiring 6101 in the optical wiring connection object 6100 of the first enforcement form of this invention of the sixth group indicates the relation between optical axes, the angle alpha 1 to make, and the angle theta 1 of the optical wiring 6101 and the optical wiring 6102 to make to be.

Fig. 51 is a general view showing the optical waveguide formation method according to Example 18.

Fig. 52 is an enlarged plan view showing a state where an optical fiber is fixed to a V-groove substrate according to Example 18.

Fig. 53 is an enlarged plan view showing a state where the optical fiber is fixed to the V-groove substrate according to Example 18.

Fig. 54 is an enlarged cross-sectional view showing an optical waveguide formation state according to Example 18.

Fig. 55 is an outline figure showing the formation method of optical waveguide of a case of the operation 25.

Fig. 56 is an expansion plane view in the state where the optical fiber was fixed to V slot board, in a case of theoperation 25.

Fig. 57 is an expanded sectional view showing the formation state of optical waveguide in a case of the operation 25.

Fig. 58 is an outline figure showing the formation method of optical waveguide of a case of the operation 26-1.

Fig. 59 is an A-A sectional view of Fig. 58.

Fig. 60 is a B-B sectional view of Fig. 58. Fig. 61 is a C-C sectional view of Fig. 58.

Fig. 62 is a D-D sectional view of Fig. 58.

Fig. 63 is an outline figure showing the formation method of optical waveguide of a case of the operation 26-2.

Fig. 64 is an E-E sectional view of Fig. 63.

Fig. 65 is an outline figure showing the formation method of optical waveguide of a case of the operation 26-3.

Fig. 66 is an F-F sectional view of Fig. 65.

Figs. 67 (a) to 67 (d) are schematic diagrams for describing one example of a method of forming a core part that connects different optical wirings to each other using the self-organizing optical waveguide technique.

Figs. 68 (a) to 68 (c) are schematic diagrams for describing another example of a method of forming a core part that connects different optical wirings to each other using the self-organizing optical waveguide technique.

Fig. 69 is a partly cross-sectional view schematically showing another embodiment of the optical transmission structural body according to the first aspect of the first group of the present invention.

Fig. 70 is a partly cross-sectional view schematically showing another embodiment in which the optical transmission structural bodies according to the first aspect of the first group of the present invention are used while being arranged.

Fig. 71 is an illustration for describing an optical path of light irradiated to a photosensitive composition through a facet of an optical wiring in the optical waveguide formation method according to the second aspect of the first group of the present invention.

Fig. 72 is a general view for describing an optical wiring formation method according to Example 8.

Fig. 73 is a general view for describing the optical waveguide formation method according to Example 8.

Fig. 74 is a general view for describing the optical wiring formation method according to Reference Example 2.

Explanation of Symbols

1001, 1011, 1021, 1031 photosensitive composition
1002, 1012, 1012', 1022, 1022', 1032 optical wiring (optical fiber)
1003, 1013, 1023, 1033 core
1004, 1014, 1024, 1034 core part
1005, 1015 ultraviolet irradiation device
1100 optical transmission structural body
1102 optical wiring
1104 core part
2001, 2011, 2021, 2031, 2041 photosensitive composition
2002, 2012, 2022, 2032, 2042 optical fiber
2002a, 2012a, 2022a, 2032a, 2042a, 2042b end face (of optical fiber)
2003, 2013, 2023, 2033, 2043 core
2004, 2014, 2024, 2034, 2044 core parts
2007, 2017 Protection wall
2045 Ultraviolet ray irradiation equipment
2048 Light guides
3011, 3021 photosensitive composition
3012, 3022 optical fiber
3013, 3023 cores
3014, 3024 core part
3015, 3025 Ultraviolet ray irradiation equipments (optical irradiation means)
3017, 3027 optical parts
3018, 3028 light-receiving element
3019 Mirror (optical reflective means)
3029 Optical filter (optical reflective means)
4100, 4110, 4120 optical waveguide
4011, 4021 photosensitive composition
4012, 4022 optical fiber
4013, 4023 core
4014, 4024 core part
4105 cladding part
5001, 5021, 5031, 5041 photosensitive composition
5002, 5022, 5032, 5042 optical fiber
5003, 5023 core

5004, 5024, 5034, 5044 core part
5007 lens
6001 6011 Photosensitive composites
6100, 6200, 6300, 6400, 6500 Optical wiring connection objects
6101, 6102, 6201, 6202, 6301, 6302, 6303, 6901, 6402, 6403, 6501, 6502, 6503 Optical wiring
7010 tape-shaped fiber (a plurality of optical wirings)
7012 high pressure mercury lamp (light source)
7013, 7018 V-groove substrate for optical fiber
7014 UV-cured resin (photosensitive composition)
7015, 7019 V-groove pressing plate
8010 fiber
8011 V Slot for Optical Fibers (Resin Accommodation Part)
8012 Resin Storage Part (Resin Accommodation Part)
8013 Substrate for Optical Fibers
8014 Control Board
8015 Metal Film

Detailed Disclosure of the Invention

First, an optical transmission structural body according to a first aspect of a first group of the present invention will be described.
The optical transmission structural body according to the first aspect of the first group of the present invention is constituted such that:

at least an optical wiring and an optical waveguide are connected to each other; and
an optical signal can be transmitted between a core of the above-mentioned optical wiring and a core part of the above-mentioned optical waveguide,

wherein

a portion of the above-mentioned optical wiring, the above-mentioned portion being connected to the core part of the above-mentioned optical waveguide, is not specially subjected to a planarization processing or has a surface roughness Ra based on JIS B 0601 of 0.1 $\mu$m or more.

The optical transmission structural body according to the first aspect of the first group of the present invention is sufficiently low in connection loss between the optical wiring and the optical waveguide, and excellent in optical signal transmission performance although the portion of the optical wiring connected to the core part of the optical waveguide is not specially subjected to a planarization processing or having a surface roughness Ra based on JIS B 0601 of 0.1 $\mu$m or more.
Further, in manufacturing the optical transmission structural body, the portion of the optical wiring connected to the core part of the optical waveguide can be normally formed only by cutting using a cutting tool for cutting an electric wiring or the like without performing a highly accurate end surface processing. Therefore, an optical waveguide formation process can be simplified. Besides, since a manufacturing process can be simplified, the optical transmission structural body is economically advantageous.
The optical transmission structural body according to the first aspect of the first group of the present invention is constituted so that at least the optical wiring and the optical waveguide are connected to each other.
Any optical wiring can be employed as long as it causes a light such as ultraviolet ray, visible light or infrared ray to pass and thereby transmits information. Specific examples of the optical wiring include an optical fiber and the like.
The portion of the optical wiring connected to the core part of the optical waveguide is not specially subjected to a planarization processing or has a surface roughness Ra based on JIS B 0601 of 0.1 $\mu$m or more.
As already described in "Background Art" part, if the surface roughness Ra of the end surface of the optical wiring is set at less than 0.1 $\mu$m, a complicated processing such as polishing using dispersion particles such as silica has been required.
Further, if the optical fiber is cut by using a fiber cleaver (fiber cutter) , a cut surface is a mirror surface and a surface roughness Ra of the cut surface is substantially zero. Therefore, by cutting the optical fiber using the fiber cleaver, an optical wiring the fact of which has the surface roughness Ra based on JIS B 0601 of less than 0.1 $\mu$m can be obtained without the complicated polishing processing. However, if the optical transmission structural body according to the first aspect of the first group of the present invention is manufactured using such an optical wiring, a yield is deteriorated in a step of cutting the optical fiber. If an array-like optical transmission structural body in which the optical fibers are arranged is manufactured, in particular, the deterioration of yield is great, so that an operation itself requires skill to a certain degree.

In contrast, if an optical wiring the end surface of which is not subjected to the planarization processing or having the surface roughness Ra based on JIS B 0601 of 0.1 μm or more is used as the optical wiring, the above-mentioned disadvantages which occur during manufacturing of the optical transmission structural body can be avoided.

A material for the optical wiring is not limited to a specific material as long as it transmits light such as ultraviolet ray, visible light or infrared ray. The material may be an inorganic material or may be an organic material.

Examples of the inorganic material include a material mainly consisting of quartz glass, and a multi-component glass mainly consisting of soda-lime glass, borosilicate glass, or the like. Examples of a polymer material (plastic) include silicone resin, and acrylic resin such as PMMA (polymethyl methacrylate). As the polymer material (plastic), the material used for the optical waveguide described below can be used.

Examples of a material for the core part of the optical waveguide include an organic material. Specifically, examples of the organic material include those similar to photosensitive compositions used for an optical waveguide formation method according to the second aspect of the first group of the present invention to be described later.

The core part may include particles such as resin particles, inorganic particles or metal particles, if necessary. By including the particles, it is possible to match a thermal expansion coefficient of the optical waveguide to that of the optical wiring. Specifically, examples of the particles include those similar to particles contained in the photosensitive composition used in the optical waveguide formation method according to the second aspect of the first group of the present invention to be described later. In addition, a cladding part of the optical waveguide to be described later may contain particles, if necessary.

In the optical transmission structural body, an optical refractive index of the core part of the optical waveguide is not limited to a specific value. However, in view of a practically available range of the optical refractive index, the optical refractive index of the optical waveguide needs to be higher than that of air or a vacuum. It is therefore desirable that a lower limit of the optical refractive index is higher than 1.0. In addition, in light of almost all materials that may possibly be materials for the core part of the optical waveguide except for minerals such as diamonds, an upper limit of the optical refractive index of the core part is desirably 2.0 or less.

It is desirable that the lower limit of the optical refractive index of the core part of the optical waveguide is 90% and the upper limit thereof is 110% of that of the portion of the optical wiring, said portion being connected to the core part of the optical waveguide.

If the optical refractive index of the core part of the optical waveguide falls within the above-mentioned range, a return loss is 25 dB or more, thereby ensuring a more excellent optical signal transmission performance.

Specifically, if quartz fibers are connected by placing them face to face, a small gap (e.g., an air layer) is interposed between the optical fibers. In this case, if the refractive index of the core of the optical fiber is set at 1.46 and that of the gap (air layer) is set at 1.00, the return loss is 14.6 dB. However, the optical transmission structural body constituted such that the optical wiring and the optical waveguide are connected to each other and such that the core part of the optical waveguide has an optical refractive index falling within the above-mentioned range, has a return loss of 25 dB or more. As compared with the optical fibers which are connected by placing face to face, an excellent communication performance is ensured.

The return loss LR (dB) can be calculated using the following Equation (A):

$$LR = -10\log R \qquad\qquad (A)$$

wherein $R = \{(n_1 - n_0)/(n_1 + n_0)\}^2$, $n_1$ is the refractive index of the core of the optical fiber, and no is the refractive index of the gap (air layer).

Furthermore, although direct comparison cannot be made, if the structural body has the return loss of 25 dB or more, a grade of the structural body is C in accordance with JIS C 5963 (general rules of optical connector having optical fiber cord).

It is desirable that the lower limit of the optical refractive index of the core part of the optical waveguide is 95% of that of the portion of the optical wiring, said portion being connected to the core part of the optical waveguide. It is desirable that the upper limit of the optical refractive index of the core part of the optical waveguide is 105% thereof.

If the optical refractive index of the core part of the optical waveguide falls within the above-mentioned range, the return loss is 30 dB or more, thereby ensuring more excellent optical signal transmission performance.

Although direct comparison cannot be made, if the optical transmission structural body has the return loss of 30 dB or more, the grade thereof is D in accordance with to JIS C 5963.

It is more desirable that the lower limit of the optical refractive index of the core part of the optical waveguide is 98% of that of the portion of the optical wiring, said portion being connected to the core part of the optical waveguide.

It is more desirable that the upper limit of the optical refractive index of the core part of the optical waveguide is 102% thereof.

If the optical refractive index of the core part of the optical waveguide falls within the above-mentioned range, the return loss is 40 dB or more (39.9 dB or more to be accurate), thereby ensuring particularly excellent optical signal transmission performance.

Although direct comparison cannot be made, if the optical transmission structural body has the return loss of 40 dB or more, the grade thereof is F in accordance with JIS C 5963.

If an optical signal is incident on the optical transmission structural body using a semiconductor laser or the like, generation of a reflected light on an interface between the optical wiring and the optical waveguide becomes causes of a noise. However, if the return loss is 40 dB or more, the generation of the noise resulting from the reflected light can be suppressed.

If the reflected light returns to the semiconductor laser, lasing is made unstable and a malfunction of the semiconductor laser occurs in some cases. However, by setting the return loss at 40 dB or more, such a disadvantage can be avoided.

If the quartz fibers are connected by placing face to face, a method for reducing the return loss by filling the gap between the fibers with a material (e.g., silicon oil) having an equivalent optical refractive index range is generally used. However, if the optical wiring the end surface of which not subjected to a planarization processing or has the surface roughness Ra based on JIS B 0601 of 0.1 μm or more is used as seen in the present invention, an unnecessary gap is inevitably formed when placing the optical wirings face to face, resulting in the deterioration of the optical connection loss. They have been practically unavoidable disadvantages.

Furthermore, in the optical transmission structural body according to the first aspect of the first group of the present invention, if the core part of the optical waveguide is inevitably formed by curing the photosensitive composition, the core part desirablyhas the optical refractive index in the above-mentioned range, and the lower limit of the optical refractive index of the core part before curing, i.e., the lower limit of the optical refractive index of the photosensitive composition is desirably 90% of that of the core of the optical wiring, more desirably 95%, most desirably 98%. The upper limit thereof is desirably 110% of the optical refractive index of the core of the optical wiring, more desirably 105%, most desirably 102%.

If the optical refractive index of the photosensitive composition itself falls within the above-mentioned range, the transmission loss of the optical signal between the core of the optical wiring and the core part of the optical waveguide can be reduced, and excellent reliability can be ensured.

The terms "the optical refractive index of the portion of the optical wiring, said portion being connected to the core part of the optical waveguide" means the optical refractive index of the core or the like of a step index optical fiber ("SI optical fiber") which has a single optical refractive index. If the portion connected to the core part of the optical waveguide is a core such as that of a graded index optical fiber ("GI optical fiber"), the core of the optical wiring has an optical refractive index in a certain range. Therefore, the above-mentioned terms means a peak optical refractive index of the core of the optical wiring.

It is noted that if the core part of the optical waveguide formed according to the first aspect of the first group of the present invention has the optical refractive index in a certain range, a peak optical refractive index of the core part is similarly referred to as the optical refractive index of the core part.

Embodiments of the optical transmission structural body according to the first aspect of the first group of the present invention will be described hereinafter with reference to the drawings.

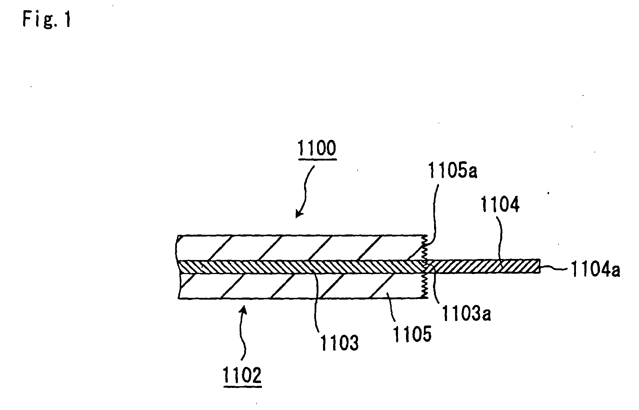

Fig. 1 is a partly cross-sectional view typically showing one embodiment of the optical transmission structural body according to the first aspect of the first group of the present invention.

As shown in Fig. 1, an optical transmission structural body 1100 is constituted so that an optical wiring 1102 comprising a core 1103 and a cladding 1105 is connected to an optical waveguide comprising a core part 1104. A portion 1103a of the optical wiring 1102 connected to the core part 1104 of the optical waveguide is not specially subjected to a planarization processing or has the surface roughness Ra based on JIS B 0601 of 0.1 μm or more. In the optical transmission structural body 1100, aportion 1105a of the cladding 1105 flushwith the connected portion 1103a is not specially subjected to the planarization processing or has the surface roughness Ra based on JIS B 0601 of 0.1 μm or more, similarly to the portion 1103a.

In such an optical transmission structural body 1100, it is possible to ensure transmitting an optical signal between the optical wiring 1102 and the core part 1104 of the optical waveguide.

Further, in the optical transmission structural body shown in Fig. 1, an end surface 1104a of the core part of the optical waveguide at opposite side to a side on which the optical wiring is connected is of a shape perpendicular to a longitudinal direction of the core part and plane. However, the shape of the end surface of the optical waveguide that constitutes the optical transmission structural body according to the first aspect of the first group of the present invention is not limited to the shape shown in Fig. 1.

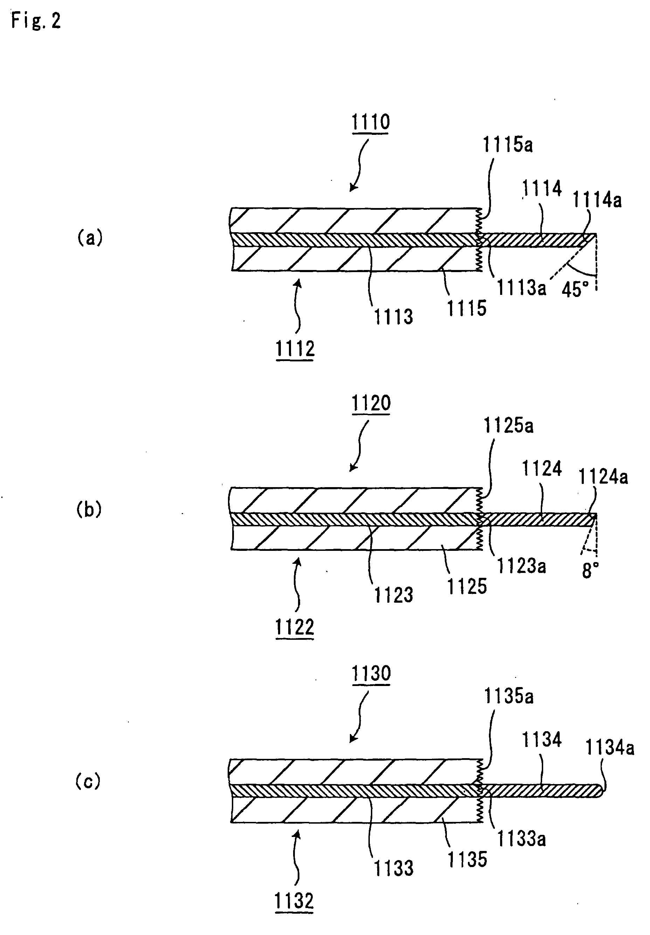

Specifically, as shown in Figs. 2(a) to 2(c), the shape of the end surface of the core part of the optical waveguide at the opposite side to the side on which the optical wiring is connected may be an inclined face or a spherical face.

Figs. 2(a) to 2(c) are partly cross-sectional views schematically showing another embodiments of the optical transmission structural body according to the first aspect of the first group of the present invention.

As shown in Fig. 2(a), in an optical transmission structural body 1110, anopticalpathconversionmirror (inclined face) 1114a is formed on an end surface of a core part 1114 of an optical waveguide at opposite side to a side on which an optical wiring 1112 is connected. If the optical path conversionmirror 1114a is formed, a direction of an optical path of an optical signal transmitted through the optical wiring 1112 and the core part 1114 of the optical waveguide can be changed to a desired direction.

It is noted that the optical transmission structural body 1110 is equal to the optical transmission structural body 1100 shown in Fig. 1 in configuration except that the optical path conversion mirror 1114a is formed. In Fig. 2(a), reference symbol 1113 represents a core and 1115 represents a cladding.

As shown in Fig. 2(b), in an optical transmission structural body 1120, an end surface 1124a of a core part 1124 of an optical waveguide at the opposite side to a side on which an optical wiring 1122 is connected is subjected to an anti optical reflection processing.

Namely, in the optical transmission structural body 1110 shown in Fig. 1, the end surface 1104a of the optical waveguide at opposite side to the side on which the optical wiring is connected is formed to be perpendicular to an optical axis of the core part of the optical waveguide. The end surface 1124a of the core part 1124 of the optical waveguide in the optical transmission structural body 1120 shown in Fig. 2 (b) , by contrast, is an inclined face inclined at 8°, as compared with the end surface 1104a of the core part 1104 shown in Fig. 1.

Thus, if the end surface of the optical waveguide at the opposite side to the side on which the optical wiring is connected inclined at a predetermined angle, reflection of the optical signal by the end surface can be prevented during transmission of the optical signal through the optical wiring and the optical waveguide. Needless to say, in the optical transmission structural body according to the first aspect of the first group of the present invention, the inclination angle of the inclined face is not limited to a specific angle.

It is noted that the optical transmission structural body 1120 equal in configuration to the optical transmission structural body 1100 shown in Fig. 1 except that the optical path conversion mirror 1124a is formed thereto. In Fig. 2 (b), reference symbol 1123 represents a core and 1125 represents a cladding. The cross-sectional view of Fig. 2 (b) schematically shows the embodiment according to the first aspect of the first group of the present invention. The inclination angle of the end surface of the core part shown in Fig. 2 (b) is shown bigger than 8° so as to help understand the embodiment.

As shown in Fig. 2(c), in an optical transmission structural body 1130, a lens 1134a is formed on an end surface of a core part 1134 of an optical waveguide at an opposite side to a side on which an optical wiring 1132 is connected. If the lens 1134a is formed as described above, the light does not spread when the optical signal transmitted through the Optical wiring 1132 and the core part 1134 of the optical waveguide is emitted. Therefore, if an optical component is arranged to be opposed to the end surface on which the lens 1134a is formed, the optical signal can be preferably transmitted between the optical transmission structural body and the optical component.

It is noted that the optical transmission structural body 1130 is equal in configuration to the optical transmission structural body 1100 shown in Fig. 1 except that the lens 1134a is formed on the end surface of the core part. In Fig. 2(c), reference symbol 1133 represents a core and 1135 represents a cladding.

Furthermore, in the optical transmission structural body according to the first aspect of the first group of the present invention, in case a lens is formed on the end surface of the core part, the shape of the lens is not limited to a specific one.

In the optical transmission structural body, the shape of the end surface of the core part of the optical waveguide at the opposite side to the side on which the optical wiring is connected may be a slightly curved face that does not specially function as a lens. The slightly curved end surface can be used when the optical transmission structural bodies each having the end surface of such a shape are physically brought into contact with each other.

Moreover, in the optical transmission structural body according to the first aspect of the first group of the present invention, the shape of the core part of the optical waveguide may be such that the core part is gradually thinner from an end on the side on which the optical wiring is connected to an opposite end, or such that the core part is gradually thicker. In some cases, the shape of the core part of the optical waveguide may be such that the core part is gradually thinner from the end on the side on which the optical wiring is connected to the opposite end, the core part is formed thick at one point, and then thinner again.

Namely, it is not always necessary that the shape of the core part of the optical waveguide such that a cross-sectional shape in a direction perpendicular to an optical axis is equal from one end to the other end of the core part.

Further, in the optical transmission structural body according to the first aspect of the first group of the present invention, the core part of the optical waveguide may include at least one bent portion.

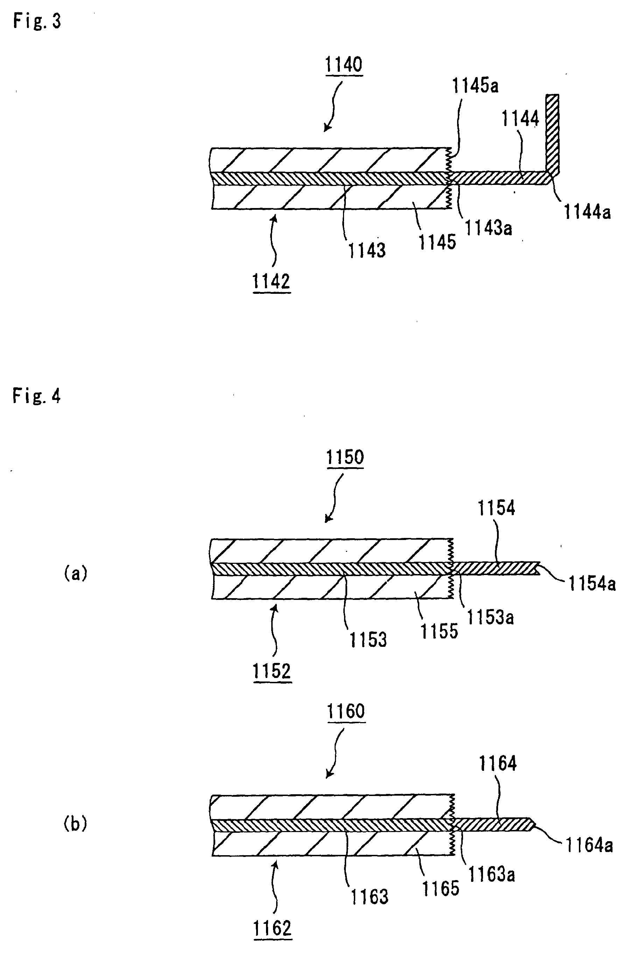

Fig. 3 is a partly cross-sectional view schematically showing still another embodiment of the optical transmission structural body according to the first aspect of the first group of the present invention.

As shown in Fig. 3, in an optical transmission structural body 1140, a bent portion 1144a is formed on a core part 1144 of an optical waveguide. If the bent portion 1144a is formed, a direction of a transmission path of an optical signal through the core part 1144 can be changed to a desired direction. The optical transmission structural body 1140 is equal in configuration to the optical transmission structural body 1100 shown in Fig. 1 except that the bent portion 1144a is formed. In Fig. 3, reference symbol 1143 represents a core and 1145 represents a cladding.

The number of the bent portions formed on the core part is not limited to one, as shown in Fig. 3, but may be two or more.

An angle of the bent portion is not limited to 90°, as shown in Fig. 3, but may be an arbitrary angle.

In the optical transmission structural body according to the first aspect of the first group of the present invention shown in each of Figs. 1 to 3, the optical signal is emitted or incident through the end surface of the core part of the optical waveguide at opposite side to the side on which the optical wiring is connected in one direction. However, in the optical transmission structural body according to the first aspect of the first group of the present invention, the optical signal may be emitted or incident in two or more different directions. If the shape of the end surface is made such a shape, the optical transmission structural body according to the first aspect of the first group of the present invention can function as, for example, an optical coupler (an optical branching device). Specific examples of the optical coupler will next be described with reference to the drawings.

Figs. 4 (a) and 4 (b) are partly cross-sectional views each schematically showing yet embodiment of the optical transmission structural body according to the first aspect of the first group of the present invention.

As shown in Fig. 4(a), in an optical transmission structural body 1150, a mirror for optical branching 1154a is formed on an end surface of a core part 1154 of an optical waveguide at opposite side to a side on which an optical wiring 1152 is connected. The mirror for optical branching 1154a is constituted by two reflection surfaces at 90° against each other. Therefore, in case an optical signal is emitted through the mirror for optical branching 1154a, the optical signal is emitted in different directions through the respective two reflection surfaces.

The optical transmission structural body 1150 is equal in configuration to the optical transmission structural body 1100 shown in Fig. 1 except that the mirror for optical branching 1154a is formed. In Fig. 4 (a) , reference symbol 1153 represents a core and 1155 represents a cladding.

In an optical transmission structural body 1160 shown in Fig. 4 (b) , similarly to the optical transmission structural body 1150 shown in Fig. 4(a), a mirror for optical branching 1164a is formed on an end surface of a core part 1164 of an optical waveguide at opposite side to a side on which an optical wiring 1162 is connected. This optical path conversion mirror can separate an optical signal emitted from the end surface of the core part 1164 of the optical waveguide at opposite side to the side on which the optical wiring 1162 is connected to two optical signals.

The optical transmission structural body 1160 shown in Fig. 4 (b) differs from the optical transmission structural body 1150 shown in Fig. 4 (a) only in a direction of each reflection surface of the mirror for optical branching. That is, in the optical transmission structural body 1150, the mirror for optical branching 1154a is formed to be concave on the optical wiring 1152 side. In the optical transmission structural body 1160, the mirror for optical branching 1164a is formed to protrude to an opposite side to the optical wiring 1162. In Fig. 4(b), reference symbol 1163 represents a core and 1165 represents a cladding.

The optical transmission structural bodies 1150 and 1160 shown in Figs. 4(a) and 4(b), respectively, can function as optical couplers.

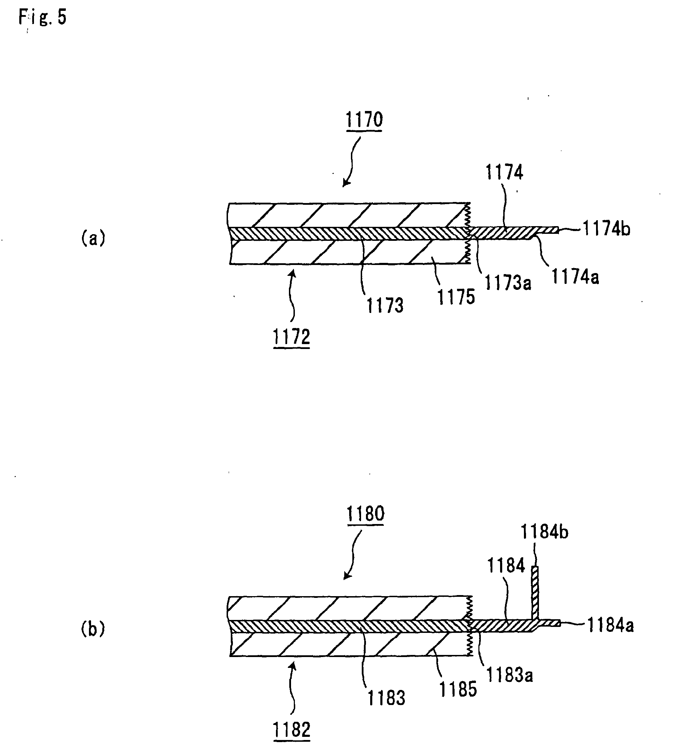

Figs. 5 (a) and 5 (b) are partly cross-sectional views each schematically showing yet another embodiments of the optical transmission structural body according to the first aspect of the first group of the present invention.

As shown in Fig. 5(a), in an optical transmission structural body 1170, a core part 1174 o.f an optical waveguide that constitutes this optical transmission structural body 1170 includes two end surfaces 1174a and 1174b formed at different positions. The end surface 1174a is an optical path conversion mirror.

In the optical transmission structural body 1170 constituted as described above, an optical signal transmitted from an optical wiring 1172 to the core part 1174 of the optical waveguide can be separated to an optical signal transmitted through the end surface 1174a and an optical signal transmitted through the end surface 1174b. In addition, optical signals separately incident through the end surfaces 1174a and 1174b, respectively can be both transmitted through the optical wiring 1172.

The optical transmission structural body 1170 is equal in configuration to the optical transmission structural body 1100 shown in Fig. 1 except for the structure of the optical waveguide 1174. In Fig. 5 (a), reference symbol 1173 represents a core and 1175 represents a cladding.

As shown in Fig. 5(b), in an optical transmission structural body 1180, a core part 1184 of an optical waveguide that constitutes this optical transmission structural body 1180 is branched halfway, and has two end surfaces 1184a and 1184b formed at different positions.

In the optical transmission structural body 1180 constituted as described above, an optical signal transmitted from an optical wiring 1182 to the core part 1184 of the optical waveguide can be separated to an optical signal transmitted through the end surface 1184a and an optical signal transmitted through the end surface 1184b. In addition, optical signals separately incident through the end surfaces 1184a and 1184b, respectively, can be both transmitted through the optical wiring 1182.

The optical transmission structural body 1180 is equal in configuration to the optical transmission structural body 1100 shown in Fig. 1 except for the structure of the optical waveguide 1184. In Fig. 5 (a), reference symbol 1183 represents a core and 1185 represents a cladding.

The optical transmission structural bodies 1170 and 1180 shown in Figs. 5(a) and 5(b), respectively, can function as optical couplers similarly to those shown in Figs. 4 (a) and 4 (b) .

Furthermore, the optical transmission structural body according to the first aspect of the first group of the present invention may be embodied by the following embodiments to be described below with reference to the drawings.

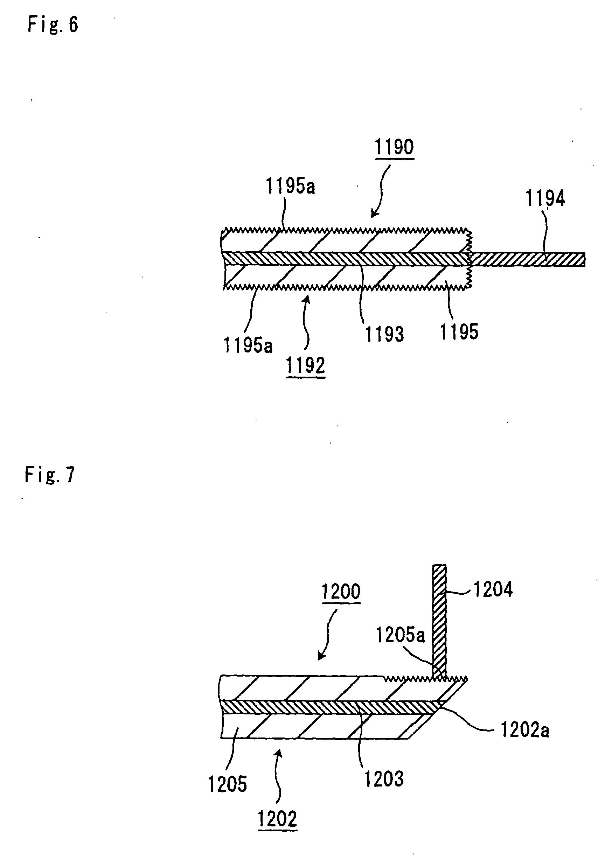

Fig. 6 is a partly cross-sectional view schematically showing yet another embodiment of the optical transmission structural body according to the first aspect of the first group of the present invention.

As shown in Fig. 6, in an optical transmission structural body 1190, a roughened surface 1195a is formed on a surface of a cladding 1195 that constitutes an optical wiring 1192. If the roughened surface 1195a is thus formed, adhesion between the optical transmission structural body 1190 according to the first aspect of the first group of the present invention and the other optical component, a ferrule, or the like is improved when the optical transmission structural body is attached to the other optical component, the ferrule, or the like through an adhesive or the like.

The optical transmission structural body 1190 is equal in configuration to the optical transmission structural body 1100 shown in Fig. 1 except that the roughened surface 1195a is formed. In Fig. 6, reference symbol 1193 represents a core.

Moreover, in the optical transmission structural body according to the first aspect of the first group of the present invention, a portion on which the roughened surface is formed is not limited to the surface of the cladding, but may be a portion other than that connected to the core part of the optical waveguide on a surface of the optical wiring.

A method for forming the roughened surface on the optical wiring is not limited to a specificmethod. The roughened surface can be formed by physical polishing, chemical polishing or the like.

As the physical polishing, a method such as a scrub method using sandpaper, a wrapping paper or the like can be used.

As the chemical polishing, a method such as an immersion method for immersing the optical wiring in a solution that can dissolve the optical wiring can be used. Specifically, if the optical wiring is a quartz optical fiber, a method for immersing the optical wiring in a strong alkali solution such as KOH, a strong acid solution such as HF, or the like that can dissolve the cladding comprising quartz glass, or the like can be used.

In the optical transmission structural body, the optical wiring may be subjected to a surface modification processing. If the optical wiring is subjected to the surface modification processing, the adhesion to the other optical component such as a ferrule is improved similarly to the instance in which the roughened surface is formed on the optical wiring.

The shape of the optical waveguide 1194 in the optical transmission structural body 1190 shown in Fig. 6 is equal to the structure of the optical waveguide 1104 in the optical transmission structural body 1100 shown in Fig. 1. However, in the optical transmission structural body in which the roughened surface is formed on the portion other than the portion connected to the core part of the optical waveguide on the surface of the optical wiring, the optical waveguide may have the shape shown in one of Figs. 2 to 5 or the other shape.

The optical transmission structural body shown in each of Figs. 1 to 6 is constituted such that the core of the optical wiring is connected to the core part of the optical waveguide. In the optical transmission structural body according to the first aspect of the first group of the present invention, the core of the optical wiring is not always, directly connected to the core part of the optical waveguide as long as the optical transmission structural body is constituted to be able to transmit the optical signal between the optical wiring and the optical waveguide. Therefore, the optical transmission structural body according to the first aspect of the first group of the present invention may have a structure shown in Fig. 7.

Fig. 7 is a partly cross-sectional view schematically showing yet another embodiment of the optical transmission structural body according to the first aspect of the first group of the present invention.

In an optical transmission structural body 1200 shown in Fig. 7, one end surface 1202a of an optical wiring 1202 is shaped to be able to function as a mirror. Therefore, the optical transmission structural body 1200 is constituted such that a core 1203 of the optical wiring 1202 is not directly connected to a core part 1204 of an optical waveguide, and such that an optical signal can be transmitted through a cladding 1205. In addition, a portion 1205a of a cladding 1205 of the optical wiring 1202 connected to the core part 1204 of the optical waveguide and a neighborhood of the portion 1205a are not specially subjected to a planarization processing or surface roughness Ra of the portion 1205a and that of the neighborhood of the portion 1205a based on JIS B 0601 are 0.1 μm or more.

In the optical transmission structural body constituted as described above, the optical signal can be preferably transmitted between the core of the optical wiring and the core part of the optical waveguide through the cladding of the optical wiring. In such an optical transmission structural body, the cladding of the optical wiring is made of a material excellent in optical signal transmissivity.

Further, in the optical transmission structural body according to the first aspect of the first group of the present invention, a length of the optical waveguide connected to the optical wiring is not limited to a specific length, and does not always need to be a length to a certain degree as shown in the optical waveguides shown in Figs. 1 to 7.

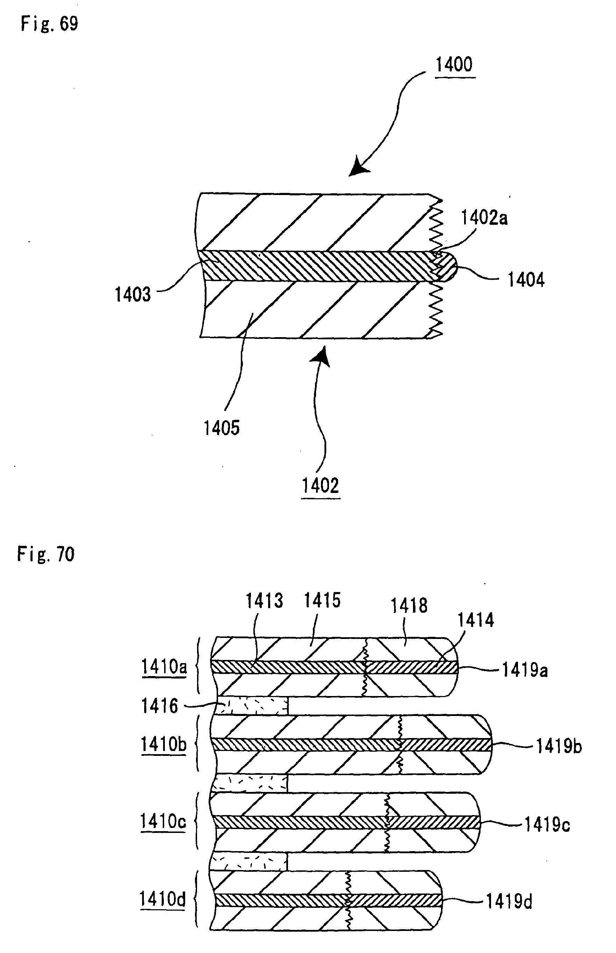

Fig. 69 is a partly cross-sectional view schematically showing another embodiment of the optical transmission structural body according to the first aspect of the first group of the present invention.

In an optical transmission structural body 1400 shown in Fig. 69, a semispherical optical waveguide 1404 that can function as a lens is connected to an end surface 1403a of a core 1403 of an optical wiring 1402. As can be seen, in the optical transmission structural body according to the first aspect of the first group of the present invention, the optical waveguide that can function as a lens may be directly connected to the optical wiring.

In Fig. 69, reference symbol 1405 represents a cladding.

Further, in the optical transmission structural body according to the first aspect of the first group of the present invention, the portion of the optical wiring connected to the core part of the optical waveguide is not specially subjected to a planarization processing or a surface roughness Ra of the portion based on JIS B 0601 is 0.1 $\mu$m. Irregularities are normally present in this portion. The optical transmission structural body according to the first aspect of the first group of the present invention may be constituted to include such an optical wiring, the optical waveguide may be formed only in a concave portion of the end surface of the core of the optical wiring.

In the optical transmission structural body shown in each of Figs. 1 to 7 and Fig. 69, the optical wiring that constitutes the optical transmission structural body comprises the core and the cladding. The optical wiring that constitutes the optical transmission structural body according to the first aspect of the first group of the present invention may have a coating layer formed on a circumference of an end of the optical waveguide on the side on which the core part of the optical waveguide is connected.

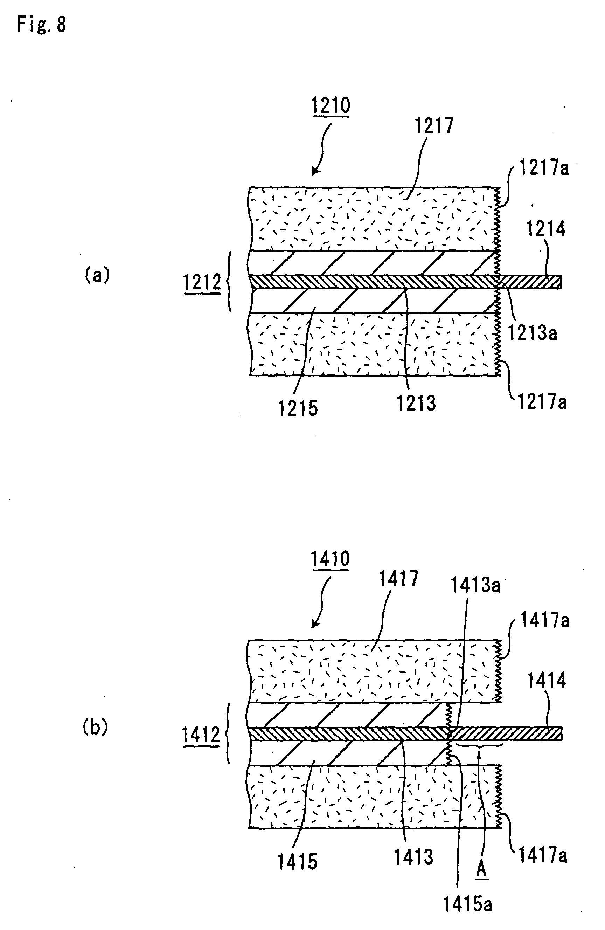

The optical transmission structural body having the coating layer formed on the circumference of the optical wiring will now be described with reference to the drawings. Figs. 8 (a) and 8 (b) are partly cross-sectional views each schematically showing yet another embodiments of the optical transmission structural body according to the first aspect of the first group of the present invention.

In an optical transmission structural body 1210 shown in Fig. 8(a), a core 1213 of an optical wiring 1212 is directly connected to a core part 1214 of an optical waveguide, and a coating layer 1217 is formed on a circumference of an end of the optical wiring 1212 on a side on which the core part 1214 of the optical waveguide is connected. It is noted that the optical transmission structural body 1210 is equal in configuration to the optical transmission structural body 1100 shown in Fig. 1 except that the coating layer 1217 is formed. In Fig. 8(a), reference symbol 1215 represents a cladding.

Since the coating layer is formed in such a portion, the optical transmission structural body 1210 is more excellent in mechanical strength. This reason will next be described briefly with reference to the drawing.

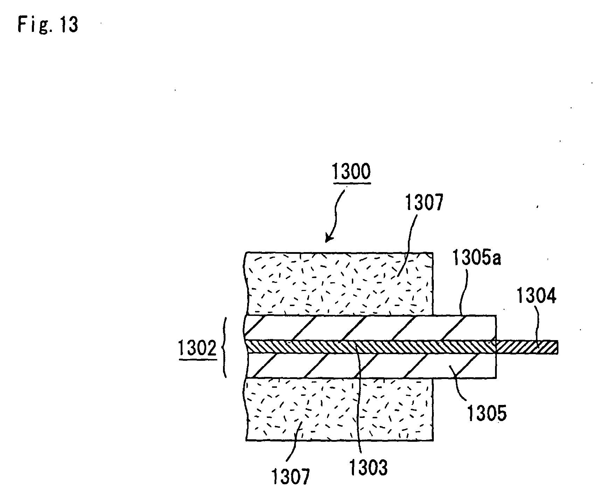

Fig. 13 is a partly cross-sectional view schematically showing another embodiment of a conventional optical transmission structural body. In a conventional optical transmission structural body 1300 shown in Fig. 13, even if a coating layer is formed on a circumference of an optical wiring, no coating layer is formed on a circumference 1305a of a portion of the optical wiring 1302 which is connected to a core part 1304 of an optical waveguide. Conventionally, when the core of the optical wiring is connected to the core part of the optical waveguide, it has been understood that it is necessary to carry out the planarization processing to the end surface of the optical wiring as described above. To carry out the planarization processing such as a polishing processing, it has been necessary to peel off the coating layer around the end surface of the optical wiring to thereby expose the core 1303 and a cladding 1305 for the planarization processing.

As can be understood, the optical transmission structural body inwhich the coating layer on the circumference of the portion of the optical wiring 1302 which portion is connected to the core part 1304 of the optical waveguide is peeled off tends to be bent at the portion 1305a from which this coating layer is peeled off when an external force is applied to the optical transmission structural body. This optical transmission structural body is inferior in mechanical strength to the optical transmission structural body 1210 in which the coating layer 1217 is formed on the circumference of the end of the optical wiring 1212 on the side on which the core part 1214 of the optical waveguide is connected shown in Fig.8.

Furthermore, the optical transmission structural body having the coating layer formed on the circumference of the optical wiring may be an optical transmission structural body 1410 shown in Fig. 8(b) constituted so that: end surfaces (an end surface 1413a of a core 1413 and an end surface 1415a of a cladding 1415) of an optical wiring 1412 on a side on which a core part 1414 of an optical waveguide is connected are present inside of an end surface 1417a of a coating layer 1417, and so that the end surface of the optical wiring having the coating layer formed thereon may be concave.

In the optical transmission structural body 1410 having such a shape, a neighborhood (indicated by "A" in Fig. 8(b)) of a portion of the core part 1414 connected to the optical wiring can be protected to a certain degree. In this case, therefore, the optical transmission structural body is excellent in mechanical strength.

The embodiment of the optical transmission structural body shown in Fig. 8(b) is equal to the embodiment of the optical transmission structural body shown in Fig. 8 (a) except that the end face thereof on the side for the connection to the core part of the optical waveguide exists at an inner side from the end face of the coating layer.

Furthermore, in the optical transmission structural body in which the coating layer is formed on the circumference of the end of the optical wiring on the side on which the core part of the optical waveguide is connected as shown in each of Figs. 8 (a) and 8 (b) , the end surface of the coating layer (representd by reference symbol 1217a in Fig. 8(a), and reference symbol 1417a in Fig. 8 (b) ) maybe subjected to a planarizationprocessing. However, it is desired that: the end surface of the coating layer is not specially subjected to the planarization processing, or a surface roughness Ra of the end surface of the coating layer based on JIS B 0601 is 0.1 μm or more.

Furthermore, the embodiments of the optical transmission structural body having the coating layer formed on the circumference of the optical wiring are not limited to those shown in Figs. 8 (a) and 8 (b). If the coating layer is transparent (transparent to a communication wavelength light) , for example, a position at which the core part of the optical waveguide is connected to the optical wiring may be on the surface of the coating layer. In this case, if a mirror is formed on the end surface of the optical wiring at a desired angle, the optical signal can be transmitted through the coating layer and this structural body can function as an optical transmission structural body.

In the optical transmission structural body shown in each of Figs. 1 to 8, the air around the core part of the optical waveguide functions as the cladding part. In the optical transmission structural body according to the first aspect of the first group of the present invention, a cladding part comprising an organic material or the like may be formed around the core part of the optical waveguide. If the optical waveguide is constituted by the core part and the cladding part comprising the air, the core part is quite unstable per se, tends to be damaged, and is required to be dealt with quite carefully. Therefore, the optical transmission structural body is not so practical.

If the cladding part comprising the organic material or the like is formed around the core part, the organic material may be completely cured, semi-cured, or uncured. Desirably, the organic material is completely cured. This is because:if the organic material is semi-cured or uncured, the core part is unstable and should be dealt with quite carefully, similarly to the instance in which the cladding part is made of the air.

Ifthecladdingpart comprises the completely curedorganic material, by contrast, the mechanical strength of the optical waveguide is improved.

Moreover, in the optical transmission structural body according to the first aspect of the first group of the present invention, the end surface of the optical waveguide at opposite side to the side on which the optical wiring is connected may be subjected to various end surface processings as described above. Alternatively, the other optical components may be directly connected to the end surface of the optical waveguide.

Specific examples of the instance in which the other optical component is directly connected to the end surface of the optical waveguide will be described with reference to the drawings.

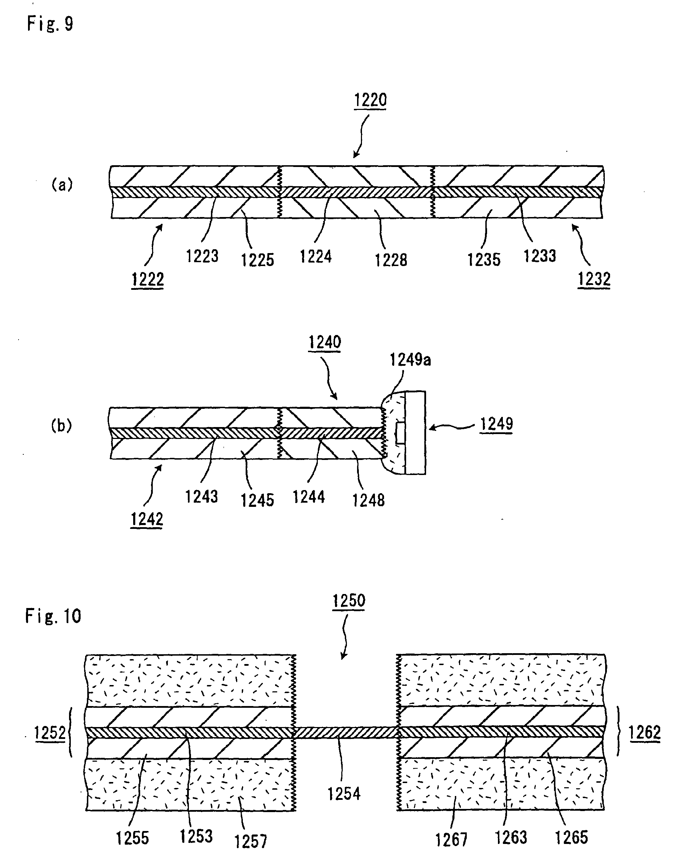

Figs. 9 (a) and 9 (b) are partly cross-sectional views each schematically showing yet another embodiments of the optical transmission structural body according to the first aspect of the first group of the present invention.

As shown in Fig. 9(a), in an optical transmission structural body 1220, an end of a core part 1224 of an optical waveguide on a opposite side to the side on which an optical wiring 1222 is connected is also connected to the other optical wiring 1232. In addition, a solidified cladding part 1228 is formed around the core part 1224.

In the optical transmission structural body 1220 constituted as described above, an optical signal can be preferably transmitted between the optical wiring 1222 and the optical wiring 1232 through the optical waveguide.

In this optical transmission structural body 1220, similarly to the above, at least one of portions of the optical wirings 1222 and 1232 which are connected to the core part 1224 of the optical waveguide is not specially subjected to a planarization processing, or a surface roughness Ra of at least one of the portions based on JIS B 0601 is 0.1 μm or more. In Fig. 9(a), reference symbols 1223 and 1233 represent cores, and 1225 and 1235 represent cladding parts.

As shown in Fig. 9(b), in an optical transmission structural body 1240, an end of a core part 1244 of an optical wiring at opposite side to a side on which an optical wiring 1242 is connected is connected to an optical element 1249. In addition, a solidified cladding part 1248 is formed around the core part 1244.

In the optical transmission structural body 1240 constituted as described above, if the optical element is a light receiving element, an optical signal transmitted through the optical wiring and the optical waveguide can be received by this light receiving element. If the optical element is a light emitting element, an optical signal transmitted from this light emitting element canbe transmitted through the optical waveguide and the optical wiring. In Fig. 9(b), reference symbol 1243 represents a core and 1245 represents a cladding part.

Furthermore, in the optical transmission structural body 1240, a surface protection layer 1249a comprising resin is formed on a surface of the optical element 1249 on a side on which the optical element 1249 is connected to the optical waveguide 1244. A portion of this surface protection layer 1249a connected to the optical waveguide may not be specially subjected to a planarization processing. A material for the surface coating layer may be the same as a material for the core part or the cladding part.

As can be seen, in the optical transmission structural body according to the first aspect of the first group of the present invention, if the other optical component (including the optical wiring) is connected to the end surface of the optical waveguide at opposite side to the side on which the optical wiring is connected, then the portion of the optical component connected to the core part of the optical waveguide may not be specially subj ected to the planari zation processing, or a surface roughness Ra of the portion based on JIS B 0601 may be 0.1 µm or more. In this case, similarly to the above, the optical signal can be preferably transmitted between the optical element and the optical waveguide.

In the optical transmission structural body shown in each of Figs. 9 (a) and 9(b), the optical wiring or the optical element (the light receiving element or the light emitting element) is connected to the end of the optical waveguide at opposite side to the side on which the optical wiring is connected. However, the optical component that can be connected to the end of the optical waveguide is not limited to the optical' wiring or the optical element but the other optical component can be connected thereto. Specific examples of the other optical component include optical components such as a lens, a prism, a filter and a mirror.

Furthermore, the optical component formed on the end surface of the optical waveguide on the side on which the optical waveguide is connected to the optical wiring is a optical component such as a lens, a prism, a filter or a mirror, an optical wiring or the like, the other optical waveguide may be connected to the optical component or the optical wiring so as to be able to transmit the optical signal between the other optical waveguide and the optical waveguide connected to the optical wiring through the optical component.

In addition, in the optical transmission structural body in which the optical component (the optical wiring, the optical element, the optical component or the like) is connected to the end of the optical waveguide at opposite side to the side on which the optical wiring of the core part is connected, a roughened surface may be formed on a portion other than the portion of the optical component which is connected to the core part.

This is because if the roughened surface is formed, adhesion is improved when the optical transmission structural body is attached to the other optical component through adhesive.

Fig. 10 is a partly cross-sectional view schematically showing yet another embodiment of the optical transmission structural body according to the first aspect of the first group of the present invention.

As shown in Fig. 10, in an optical transmission structural body 1250, optical wirings 1252 and 1262 are connected to both ends of an optical waveguide comprising a core part 1254, respectively. Coating layers 1257 and 1267 are formed on circumference of ends of the respective optical wirings 1252 and 1262 connected to the core part 1254 of the optical waveguide.

Since the coating layers 1257 and 1267 are formed, the optical transmission structural body 1250 constituted as described above is excellent in mechanical strength for the reasons described above. In Fig. 10, reference symbols 1253 and 1263 represent cores, and 1255 and 1265 represent cladding parts.

Various embodiments of the optical transmission structural body according to the first aspect of the first group of the present invention have been described so far with reference to the drawings. However, embodiments of the optical transmission structural body according to the first aspect of the first group of the present invention are not limited to these embodiments.

A method for manufacturing the optical transmission structural body will be described later in detail.

In addition, embodiments of the single optical transmission structural body have been described so far. A combination of a plurality of optical transmission structural bodies according to the first aspect of the first group of the present invention can be used. Specific embodiments of the combination of the optical transmission structural bodies will be described with reference to the drawings.

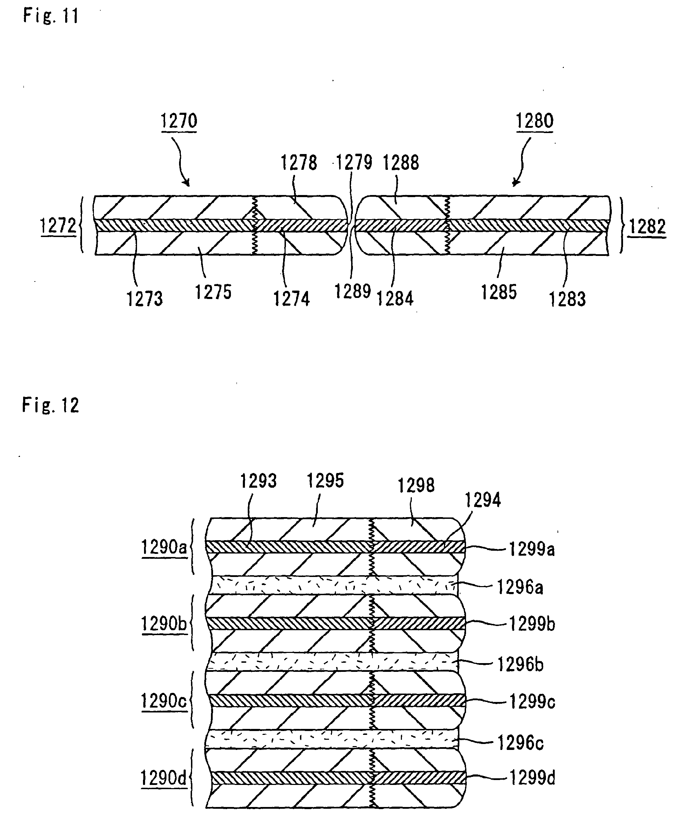

Fig. 11 is a partly cross-sectional view schematically showing an embodiment in which an optical signal is transmitted between the optical transmission structural bodies according to the first aspect of the first group of the present invention.

In the embodiment shown in Fig. 11, two optical transmission structural bodies 1270 and 1280 are arranged such that an optical signal can be transmitted between the optical transmission structural bodies 1270 and 1280, i.e., so that an end of an optical waveguide of one optical transmission structural body at opposite side to the side on which an optical wiring is connected is opposed to an end of an optical waveguide of the other optical transmission structural body.

It is noted that the optical transmission structural bodies 1270 and 1280 are equal in configuration to the optical transmission structural body shown in Fig. 2(c) except that solidified cladding parts 1278 and 1288 are formed around core parts 1274 and 1284 of the respective optical waveguides, and that lenses 1279 and 1289 are formed on end surfaces of core parts 1274 and 1284 of the respective optical waveguides at opposite side to the sides on which the optical waveguides are connected to optical wirings 1272 and 1283. In Fig. 11, reference symbols 1273 and 1283 represent cores, and 1275 and 1285 represent cladding parts.

In this embodiment, the optical signal can be preferably transmitted between the optical transmission structural bodies.

Further, even if a shape of the end surface of each core part is a curved surface which does not specially function as a lens and which is slightly curved, the optical transmission structural bodies are arranged such that the side of the optical waveguide of one optical transmission structural body on which the optical wiring is connected is opposed to the side of the optical waveguide of the other optical transmission structural body, as seen in the embodiment shown in Fig. 11. In addition, by causing these optical transmission structural bodies to press each other, interposition of airs having different optical refractive index can be minimized in a gap between the optical transmission structural bodies, the optical transmission structural bodies can efficiently contact each other in contact portions thereof, and the optical signal can be preferably transmitted between the optical transmission structural bodies.

If the both optical transmission structural bodies are arranged so as to be able to transmit the optical signal between them, it is not always necessary to form the lens on the end surface of one optical transmission structural body opposed to the other optical transmission structural body as shown in Fig. 11 but the end surface may have an arbitrary shape.

Fig. 12 is a partly cross-sectional view schematically showing an embodiment in which the optical transmission structural bodies according to the first aspect of the first group of the present invention are used while being arranged.

In the embodiment shown in Fig. 12, four optical transmission structural bodies 1290a to 1290d are arranged equidistantly, and lenses 1299a to 1299d are formed on ends of optical waveguides in the optical transmission structural bodies opposite to sides on which the optical waveguides are connected to optical wirings, respectively.

Resin layers 1296a to 1296c are formed in gaps between the optical transmission structural bodies and adjacent optical transmission structural bodies, respectively. The resin layers 1296a to 1296c fix the adjacent optical transmission structural bodies to one another. A material for the resin layers 1296a to 1296d may be either the same as or different from a material for a core part 1294 or a cladding part 1298. In addition, the layers 1296a to 1296c are not limited to resin layers but may be simply air layers or layers of an inorganic matter such as glass.

By employing optical transmission structural bodies in such an embodiment, the optical transmission structural bodies can function as an array-like optical transmission structural body capable of transmitting an optical signal on many paths simultaneously.

It is noted that each of the optical transmission structural bodies 1290a to 1290d is equal in configuration to the optical transmission structural body 1270 shown in Fig. 11. In Fig. 12, reference symbol 1293 represents a core and 1295 represents a cladding part.

In the embodiment shown in Fig. 12, portions of the optical wirings connected to the optical waveguides in all the optical transmission structural bodies 1290a to 1290d are uniform. However, the portions are not always uniform in the respective optical transmission structural bodies.

Fig. 70 is a partly cross-sectional view schematically showing another embodiment in which the optical transmission structural bodies according to the first aspect of the first group of the present invention are used while being arranged.

In the embodiment shown in Fig. 70, four optical transmission structural bodies 1410a to 1410d are arranged equidistantly, and lenses 1419a to 1419d are formed on ends of optical waveguides in the optical transmission structural bodies opposite to sides on which the optical waveguides are connected to optical wirings, respectively, similarly to the embodiment shown in Fig. 12.

Further, in the embodiment shown in Fig. 70, positions of interfaces between the optical wirings each comprising a core part 1413 and a cladding part 1415 and the optical waveguides each comprising a core part 1414 and a cladding part 1418 are not uniform. Shapes of the ends of the optical wirings on the sides on which the optical wirings are connected to the optical waveguide are not the same among the optical transmission structural bodies 1410a to 1410d.

In the embodiment shown in Fig. 70, a gap between one of the optical transmission structural bodies and the adjacent optical transmission structural body is constituted by a resin layer 1416 and an air layer. Specifically, the gap between each optical transmission structural body and the adjacent optical transmission structural body and the gap between a neighborhood of the end of each optical wiring on the side on which the optical wiring is connected and the adjacent optical wiring is constituted by the air layers, respectively. On the other hand, the gap between the adjacent optical wirings other than the neighborhoods of the ends thereof comprises the resin layer. It is noted that the resin layer fixes the adjacent optical wirings to each other.

Specific examples of the embodiment shown in Fig. 70 include an optical transmission structural body in which optical waveguides are connected to fibers of fiber ribbons (tape fibers) which are cut by a nipper, scissors, or the like, and from which coating layers near cut ends of the fiber ribbons are removed, respectively.

In the embodiments shown in Figs. 12 and 70, all the optical waveguides have an equal length, an equal shape of an end surface, and the like. However, in embodiments in which the optical transmission structural bodies according to the first aspect of the first group of the present invention are used while being arranged, optical waveguides may differ in length, the shape of an end surface, and the like.

In the embodiments shown in Figs. 12 and 70, the optical wirings are arranged equidistantly. However, in embodiments in which the optical transmission structural bodies according to the first aspect of the first group of the present invention are used while being arranged, optical wirings are not necessarily arranged equidistantly.

In the array-like optical transmission structural body that employs a plurality of optical transmission structural bodies according to the first aspect of the first group of the present invention, the adjacent optical transmission structural bodies need not necessarily fixed to each other by the resin layer. The respective optical transmission structural bodies may be fixed to substrates in which a plurality of V-grooves are formed, and may function as the array-like optical transmission structural body in this state.

In each of the array-like optical transmission structural bodies shown in Figs. 12 and 70, the lens is formed on the end surface of the optical waveguide at opposite side to the side on which the optical wiring is connected. However, in the array-like optical transmission structural body, the end surface may not be lens-shaped but may be subjected to an end surface processing or an optical component or the like may be connected to the end surface.

An optical waveguide formationmethod according to a second aspect of the first group of the present invention will be described hereinafter.

The optical waveguide formation method according to the second aspect of the first group of the present invention is an optical waveguide formation method which comprising steps of:

immersing a part of an optical wiring in a photosensitive composition;
irradiating light into the above-mentioned photosensitive composition through the above-mentioned optical wiring; and

forming a core part corresponding to an optical path of light in the above-mentioned photosensitive composition,

wherein

a portion of the above-mentioned optical wiring, the portion being connected to the core part of the above-mentioned optical waveguide, is not specially subjected to a planarization processing or has a surface roughness Ra based on JIS B 0601 of 0.1 $\mu$m or more.

With the optical waveguide formation method according to the second aspect of the first group of the present invention, even if the portion of the optical waveguide connected to the core part of the optical wiring for irradiating the photosensitive composition with the light is not specially subjected to the planarization processing or has the surface roughness Ra based on JIS B 0601 of 0.1 $\mu$m or more, the core part excellent in connection performance with the optical wiring can be formed.

Accordingly, the portion connected to the core part of the optical wiring can be formed by cutting the portion using a cutting tool normally used for cutting an electric wiring or the like, or using an arbitrary cutting method (e.g., snapping the portion by the hand) without the cutting tool even if a highly accurate end surface processing is not carried out. Thus, the formation method according to the second aspect of the first group of the present invention can simplify an optical waveguide formation step. Besides, since the formation step can be simplified, the method is economically advantageous.

As already described with respect to the optical transmission structural body according to the first aspect of the first group of the present invention, if the surface roughness Ra of the end surface of the optical wiring is set at less than 0.1 $\mu$m, a complicated polishing processing is required. If the optical fiber is cut by using the fiber cleaver, the surface roughness Ra of the end surface of the optical fiber can be set at less than 0.1 $\mu$m. However, if a cutting operation using the fiber cleaver is carried out, yield is deteriorated and the operation itself requires skill to a certain degree.

The optical waveguide formation method according to the second aspect of the first group of the present invention, by contrast, does not require the above-mentioned complicated polishing processing, and can simplify the step. The formation method is also economically advantageous.

By using this optical waveguide formation method according to the second aspect of the first group of the present invention, the optical transmission structural body according to the first aspect of the first group of the present invention in which the optical wiring is connected to the optical waveguide can be preferably manufactured.

In the optical waveguide formation method according to the second aspect of the first group of the present invention, it is desirable that a photosensitive composition to be used includes a component which is cured when being photosensitized, i.e., contains a photocurable resin. This is because the resin is cured by being irradiated with the light and stably present without a core part formed being mixed with surroundings.

The photosensitive composition will refer to the photosensitive composition containing the photocurable resin hereinafter unless specified otherwise.

The optical waveguide formation method according to the second aspect of the first group of the present invention will be described with reference to the drawings.

In the drawings for describing the formation method according to the second aspect of the first group of the present invention, the portion of the optical wiring connected to the core part is shown to be plane. However, the drawings typically depict the formation method. As already described, the portion of the optical wiring connected to the core part is not specially subjected to the planarization processing or has the surface roughness Ra based on JIS B 0601 of 0.1 μm or more.

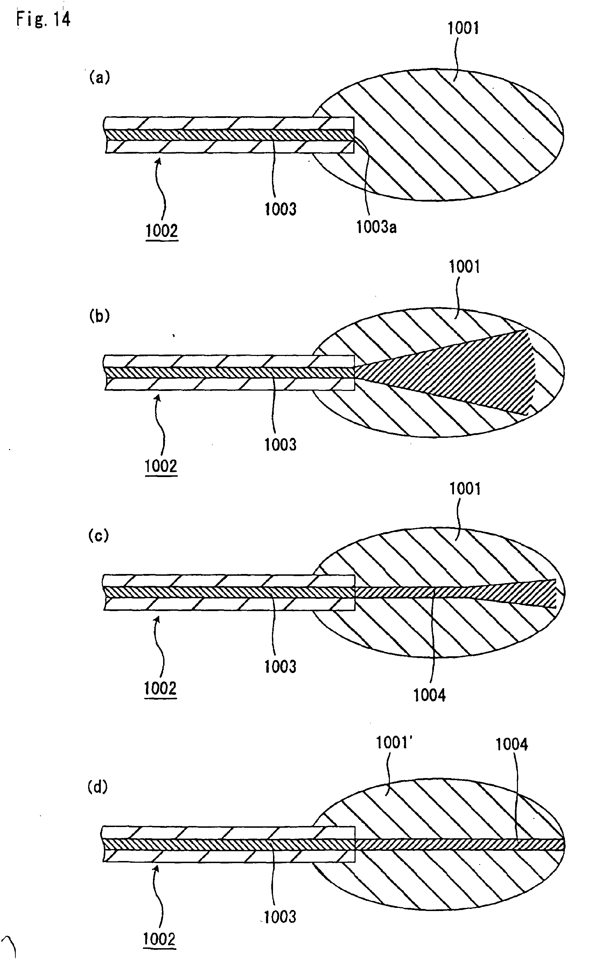

Figs. 14 (a) to 14 (d) are schematic diagrams for describing one example of the optical waveguide formation method according to the second aspect of the first group of the present invention.

In the optical waveguide formation method according to the second aspect of the first group of the present invention, one end of an optical wiring is immersed in a photosensitive composition, and light is irradiated to the photosensitive composition through this optical wiring, thereby forming a core part corresponding to an optical path and providing an optical waveguide.

Examples of the optical wiringmay include the same optical wiring that constitutes the optical transmission structural body according to the first aspect of the first group of the present invention.

Specifically, a photosensitive composition 1001 is coated so as to surround a portion of an optical wiring 1002 connected to a core part (see Fig. 14 (a) ) , the photosensitive composition 1001 is put in a container, and one end of the optical wiring is immersed in the photosensitive composition 1001.

Optical refractive indexes of the photosensitive composition before and after curing are not limited to specific indexes. Desirably, however, a lower limit the optical refractive index of the cured photosensitive composition (the optical refractive index of the core part) is 90% of that of the portion of the optical wiring connected to the core part, and an upper limit thereof is 110% of the portion of the optical wiring connected to the core part.

By using the photosensitive composition that can form the core part having the optical refractive index in such a range, the core part excellent in connection performance with the optical wiring can be formed even if the portion of the optical wiring connected to the core part has the surface roughness in the above-mentioned range.

The lower limit of the optical refractive index of the core part is more desirably 95% of that of the portion of the optical wiring connected to the core part, most desirably 98%. The upper limit of the optical refractive index of the core part is more desirably 105% of that of the portion of the optical wiring connected to the core part, further desirably 102%.

The reason that it is desirable to form the core part having the optical refractive index in such a range is as follows. If the optical waveguide connected to the optical wiring is formed using the formation method according to the second aspect of the first group of the present invention, the optical transmission structural body in which the optical wiring is connected to the optical waveguide is excellent in optical signal transmission performance.

A specific return loss in case the core part (optical waveguide) having the optical refractive index in the above-mentioned range is formed is already described with respect to the optical transmission structural body according to the first aspect of the first group of the present invention.

The optical refractive index of the core of the optical wiring differs depending on a material. The optical refractive index no of pure quartz glass is about 1.46. Therefore, if the pure quartz glass is used for the optical wiring, the optical refractive index $n_D$ of the core of the optical wiring after the photosensitive composition is cured is desirably in a range of about 1.31 to 1.61. The optical refractive index $n_D$ means an optical refractive index of the core when a light having a bright line Na of 589 nm is caused to pass.

In addition, the optical refractive index of resin or the like used for the optical wiring and the optical waveguide changes depending on a wavelength. However, a ratio (of the optical refractive index of the core part of the optical waveguide to that of the core of the optical wiring) hardly changes in an ultraviolet range to a near-infrared range.

Furthermore, in the formation method according to the second aspect of the first group of the present invention, it is desirable that the core part formed by photosensitizing the photosensitive composition has the optical refractive index falling within the above-mentioned range, and that the optical refractive index of the core part before photosensitizing the photosensitive composition, i.e., that of the photosensitive composition itself desirably falls within the following range.

A lower limit of the optical refractive index of the photosensitive composition itself is desirably 90% of that of the portion of the optical wiring connected to the core part of the optical waveguide, more desirably 95%, most desirably 98%. An upper limit of the optical refractive index of the photosensitive composition itself is desirably 110% of that of the portion of the optical wiring connected to the core part of the optical waveguide, more desirably 105%, most desirably 102%.

This is because: if the optical refractive index of the core part before photosensitizing the photosensitive composition falls within the above-mentioned range, and if the photosensitive composition is irradiated with light through the optical wiring, then it is ensured that this light is irradiated in a desired direction, and the light is not scattered on an interface between the optical wiring and the photosensitive composition.

If the core part before and after photosensitization has the optical refractive indexes in the above-mentioned ranges, respectively, it is possible to form an optical waveguide connected to the optical wiring, which is not subjected to a highly accurate end surface processing, with higher reliability.

Furthermore, there is the other reason that it is desirable that the core part has the refractive indexes in the above-mentioned ranges in the formation method according to the second aspect of the first group of the present invention.

The reason will be described briefly with reference to the drawings.

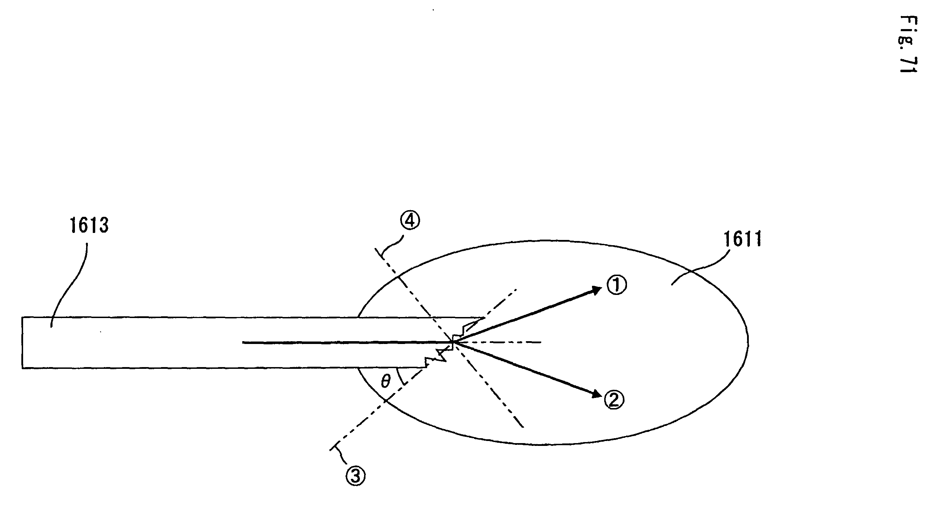

Fig. 71 is an illustration for describing an optical path of light irradiated to a photosensitive composition through a facet of an optical wiring in the optical waveguide formation method according to the second aspect of the first group of the present invention.

Generally, if the end surface of the optical wiring such as an optical fiber is not specially subj ected to a planarization processing; it is unlikely that a centerline of the end surface (representd by ③ in Fig. 71) is perpendicular to an optical axis.

Normally, it is considered that an angle θ (see Fig. 71) between the centerline of the end surface of the optical wiring and the optical axis is at least an angle other than 90°. The angle is unavoidably an arbitrary value. In this case, if there is an optical refractive index difference between the core of the optical wiring and the core part of the optical waveguide, and if the light is irradiated to the photosensitive composition in the formation method according to the second aspect of the first group of the present invention, the optical path of the irradiated light is bent in an arbitrary direction. As a result, the core part of the optical waveguide is formed to be bent at an arbitrary angle corresponding to the optical path.

Generally, if the optical path is considered an optical path approximately to the Snell's law, the optical path of the irradiated light is bent in a direction indicated by ① in Fig. 71 at θ > 90° and (the optical refractive index of the core of the optical wiring) > (the optical refractive index of the core part of the optical waveguide). The optical waveguide is bent in a direction indicated by ② in Fig. 71 at θ < 90° and (the optical refractive index of the core of the optical wiring) < (the optical refractive index of the core part of the optical waveguide). In Fig. 71, ④ represents a normal line of the centerline.

As described above, if a bending angle is irregular, the formation method according to the second aspect of the first group of the present invention can be applicable to any optical refractive index. However, the core part of the optical waveguide eventually formed is formed in a predetermined arbitrary direction, and characteristic values of final optical waveguide components are irregular.

The reason is as follows. The bending angle can take various values with respect to the arbitrary angle θ between the centerline and the optical axis for the optical wiring which is not specially subjected to the planarization processing. Therefore, the bending angle cannot be specified to a certain angle.

This disadvantage can be solved by the center line of the end surface of the optical wiring which is not specially subjected to the planarization processing so as to set the angle of the center line with respect to the optical axis at 90° by simple polishing. The "simple polishing" may be polishing for setting the Ra of the end surface at 0.1 µm or more. This is because this polishing can greatly simplify a polishing step as compared with conventional polishing using fine grinder powders.

To solve the disadvantage, another method for reducing the optical refractive index difference between the core of the optical wiring and the core part of the optical waveguide while using the optical wiring which is not specially subjected to the planarization processing can be used. Accordingly, for this reason, it is desirable that the optical refractive index falls within the above-mentioned range.

Specifically, on assumption that the angle θ is 45°, a possible bending angle while the optical refractive index of the core of the optical wiring is set at 1.48 will be described. If the optical refractive index of the core part of the optical waveguide is 90 to 110% of that of the core of the optical wiring, a core part formation direction is bent arbitrarily between 6.8° to -5.0°. If the optical refractive index of the core part of the optical waveguide is 95 to 105% of that of the core of the optical wiring, the core part formation direction is bent arbitrarily between 3.1° to -2.7°. If the optical refractive index of the core part of the optical waveguide is 98 to 102% of that of the core of the optical wiring, the core part formation direction is bent arbitrarily between 1.2° to -1.1°. It is assumed herein that the bending angle in the direction indicated by ① shown in Fig. 71 is a positive value.

As can be understood, if the optical refractive index difference between the core of the optical wiring and the core part of the optical waveguide is smaller, then the bending angle is narrower, and the irregularities of the characteristic values of the final optical waveguide components are smaller.

The photosensitive composition is not limited to a specific photosensitive composition as long as a photosensitive composition has a basic characteristic as an optical waveguide, that is, transmissivity relative to light in a desired wavelength band and has the optical refractive index in the above-mentioned range. Specific examples of the photosensitive compositionmay include compositions which contain acrylic resins, such as PMMA (polymethyl methacrylate), PMMA deuteride, PMMA deuteride fluoride, and PMMA fluoride, and which also contain various additives, solvents, and the like such as a monomer, a photo polymerization initiator, and an intensifier if it is necessary.

Examples of the photosensitive composition also may include compositions each containing, as a photosensitized resin component, silicone resin such as epoxy resin, epoxy resin fluoride, polyolefin resin, or silicone resin deuteride, benzocyclobutene, or the like, and also containing various additives, solvents, and the like such as a monomer, a photo polymerization initiator, and an intensifier if it is necessary.

Examples of a method for photosensitizing the resin component may include a method for adding an acrylic group or an acryloyl group to a terminal or a side chain of the resin component, and the like.

Further, a material which contains a polyene compound having an acrylic group or an acryloyl group added to a terminal or side chain of a molecule, a polythiol compound, and a photo polymerization initiator, as well as various additives, solvents, and the like such as a monomer, a photo polymerization initiator, and an intensifier if it is necessary, can be used as the photosensitive composition.

In the present specification, it is assumed that the photosensitive composition consisting of an organic composition includes not only a polymer having a chemical reaction when being irradiated with a light as described above but also a monomer a photo polymerization reaction of which progresses when being irradiated with the light, such as methyl methacrylate, and those both/either of two or more resin components and two or more monomers that have a chemical reaction when being irradiated with the light and that form a resin complex.

It suffices that the photosensitive composition used for the formation method according to the second aspect of the first group of the present invention is a photosensitive composition a curing reaction of which progresses when the composition is irradiated with the light. For example, the photosensitive composition may contain epoxy resin, and a photoinitiator which generates a Lewis acid when being irradiated with the light such as an aromatic diazonium salt or an aromatic iodonium salt. Further, the photosensitive composition may contain a photoinitiator which generates radicals when being irradiated with the light such as benzoin alkyl ether, an acetophenone derivative, benzophenone, or a benzophenone derivative, and contain a resin component polymerization of which progresses by a radical polymerization mechanism, or may contain a photoinitiator from which strong acid is let loose when being irradiated with the light such as chlorinated acetophenone or a chlorinated acetophenone derivative, and contain a resin component polymerization of which progresses by an acid.

In the present specification, therefore, a composition in which even if the resin component does not include a photosensitive functional group, the curing reaction progresses when being irradiated with a light, will be referred to as a photosensitive composition.

Furthermore, the photosensitive composition used for the optical waveguide formation method may be a mixture of two or more photosensitive compositions.

The photosensitive composition may further contain particles such as resin particles, inorganic particles, or metal particles.

By forming the optical waveguide using the photosensitive composition containing such particles, the thermal expansion coefficient of the optical wiring can be matched to that of the optical waveguide.

Examples of the resin particles include those of thermosetting resin, thermoplastic resin, photosensitive resin, resin obtained by photosensitizing apart of thermosetting resin, a resin complex of thermosetting resin and thermoplastic resin, and a complex of photosensitive resin and thermoplastic resin.

Specifically, examples of the resin particles may include those of thermosetting resin such as epoxy resin, phenol resin, polyimide resin, bismaleimide resin, polyphenylene resin, polyolefin resin, and fluororesin; resin obtained by reacting the thermosetting groups (e.g., the epoxy group of the epoxy resin) of these thermosetting resins with a methacrylic acid or an acrylic acid to thereby acrylate it; thermoplastic resin such as phenoxy resin, polyethersulfone (PES) , polysulfone (PSF), polyphenylenesulfone (PPS), polyphenylene sulfide (PPES), polyphenyl ether (PPE), and polyetherimide (PI); and photosensitive resin such as acrylic resin.

Further, a resin complex of the thermosetting resin and the thermoplastic resin, or a resin complex of the acrylated resin, the photosensitive resin, and the thermoplastic resin can be used.

As the resin particles, rubber-comprising resin particles can be also used.

Examples of the inorganic particles may include those of aluminum compounds such as alumina and aluminum hydroxide, calcium compounds such as calcium carbonate and calcium hydroxide, potassium compounds such as potassium carbonate, magnesium compounds such as magnesia, dolomite, basicmagnesium carbonate, and silicon compounds such as silica and zeolite.

As the inorganic particles, those comprising phosphorus or phosphorus compounds can be also used.

Examples of the metal particles may include those comprising gold, silver, copper, palladium, nickel, platinum, iron, zinc, lead, aluminum, magnesium and calcium.

These resin particles, inorganic particles and metal particles may be used alone or in combination of two or more of them.

The shapes of the particles are not limited to specific shapes and the particles may be spherical, elliptic, crushed form, polygonal or the like. Among these shapes, the spherical or elliptic particles are desirable. Since the spherical or elliptic particles have no edges, cracks and the like is less likely to occur to the optical waveguide.

The particle diameter of each particle is desirably smaller than a communication wavelength. When the particle diameter is larger than the communication wavelength, the transmission of the optical signal is hampered in some cases.

In the present specification, the particle diameter of the particle refers to a length of a longest part of the particle.

If the photosensitive composition contains particles, a lower limit of a blending ratio of the particles after the photosensitive composition is cured is desirably 10% by weight, more desirably 20% by weight. An upper limit of the blending ratio theparticles after thephotosensitive composition is cured is desirably less than 80% by weight, more desirably 70% by weight. If the blending ratio of the particles is less than 10% by weight, an advantage of blending the particles cannot be greatly acquired. If it exceeds 80% by weight, transmission of the optical signal is often hampered.

The photosensitive composition is cured when being irradiated with light, and provided as the core part having the optical refractive index within the specific range as described above.

Therefore, in the formation method according to the second aspect of the first group of the present invention, the photosensitive composition may be selected and used so that the core part has the optical refractive index within the above-mentioned range. However, even if the photosensitive composition having an optical refractive index out of this range is used, the photosensitive composition can be used by adjusting the optical refractive index. If the optical refractive index of the photosensitive composition is to be adjusted, it is desirable to adjust it so that the optical refractive index of the core part after the photosensitive composition is cured falls within the above-mentioned range.

Generally, if a ratio of a molecular refraction to a molecular volume is higher, the optical refractive index of a polymer is higher. Therefore, by adjusting the molecular refraction and/or the molecular volume, the optical refractive index of the polymer can be adjusted.

Specifically, in case the molecular refraction (a sum of atomic refractions of individual groups that constitute a cyclical unit of the high polymer) is adjusted, a group having a high polarizability such as chlorine or sulfur is introduced, then the atomic refraction becomes higher, and the'molecular refraction can be, therefore, increased.

Also, if a double-bond group or an aromatic ring group is introduced to lower symmetry of molecules, the polarizability can be increased.

In adjustment of density, the density can be increased by reducing a molecular weight between bridge points.

Furthermore, since fluorine is large in volume relative to its polarizability, the density can be also increased by introducing a fluorine-containing group.

In addition, one end surface 1003a of the core of the optical wiring 1002 used in the second aspect of the first group of the present invention may not be specially subjected to the planarization processing such as the polishing processing. In this case, a surface roughness Ra of the end surface based on JIS B 0601 is not limited to a specific roughness. Nevertheless, it is unlikely that the surface roughness Ra of the end surface is set at less than 0.1 μm without carrying out any planarization processing to the end surface. Normally, therefore, the surface roughness Ra of the end surface is at least 0.1 μm or more.

Further, if the fiber array or the like is manufactured, a cutting processing or the like is necessary. Therefore, according to the second aspect of the first group of the present invention, the planarization processing such as a simple polishing processing may be often carried out. In that case, there is no need to carry out an accurate polishing processing so as to set the surface roughness Ra of the end surface at less than 0.1 μm. The cutting processing using a fiber cutter or the like is a kind of the planarization processing for the end surface. Therefore, according to the second aspect of the first group of the present invention, the cutting processing is included in the planarization processing.

According to the second aspect of the first group of the present invention, if the end surface of the optical wiring is subjected to the planarization processing, the polishing processing may be carried out so that the surface roughness Ra of at least the end surface of the optical wiring is set at 0.1 μm or more. In addition, the surface roughness Ra of the end surface of the optical wiring after the polishing processing may be 1 μm or more. This is because the polishing processing can be carried out more easily at a lower cost. The portion having such a surface roughness is also excellent in connection performance with the core part formed substantially in an extension of the portion.

In the optical waveguide formation method according to the second aspect of the first group of the present invention, the portion connected to the core part of the optical waveguide is not subjected to the planarization processing or has the surface roughness Ra based on JIS B 0601 being 0.1 μm or more. After immersing this portion in the photosensitive composition, the photosensitive composition is irradiated with light through the optical wiring 1002 (see Fig. 14(b)).

By thus irradiating the light through the optical wiring 1002, the photosensitive composition 1001 starts to be cured from an optical wiring side correspondingly to the optical path, and a core part 1004 of the optical waveguide connected to the optical wiring 1002 is thereby formed (see Figs. 14 (c) and 14 (d)).

In this optical waveguide formationmethod, a fittingplate is arranged on the optical path in the photosensitive composition 1001 in advance when the photosensitive composition 1001 is irradiated with the light through the optical wiring 1002. It is thereby possible to form an optical waveguide having a smoother end surface at opposite side to the side on which the optical wiring is connected.

In the optical waveguide formation method according to the second aspect of the first group of the present invention, the core part is gradually formed from the optical waveguide side corresponding to the path of the irradiated light.

It is therefore desirable that the photosensitive composition used in the formation method according to the second aspect of the first group of the present invention is a photosensitive composition the optical refractive index of which after being cured is higher than the optical refractive index of the uncured photosensitive composition. By setting the optical refractive index of the cured photosensitive composition higher than that of the uncured photosensitive composition, the light is intensively irradiated through the optical wiring into the photosensitive composition from the tip end of the core part while the light is constrained in the core part. It is therefore possible to further ensure forming the optical waveguide corresponding to the optical path.

Furthermore, in the formation method according to the second aspect of the first group of the present invention, the type of the light irradiated when curing the photosensitive composition is not limited to a specific type of light. The light may be appropriately selected based on components of the photosensitive composition, and a light containing an ultraviolet ray having a wavelength of 200 to 500 nm or the like can be used as the light.

As a light source for irradiating the light having such a wavelength, a high pressure mercury lamp or the like can be used. Alternatively, a metal halide lamp, a xenon lamp, a laser or the like can be used as the light source.

In the optical waveguide formation method according to the second aspect of the first group of the present invention, when the light is irradiated through the optical wiring, the light is normally introduced from the end of the optical wiring at opposite side to the side on which the optical wiring is immersed in the photosensitive composition. However, the light may be often introduced from the side surface of the optical wiring. This is because the light can be efficiently introduced if the light is introduced from the side surface of the optical wiring, depending on the shape of the optical wiring or the like. As a specific method for introducing the light from the side surface of the optical wiring, the same method as that used in the optical waveguide formation method according to the second aspect of the first group of the present invention, or the like can be used.

Through these steps, the core part of the optical waveguide connected to the optical wiring can be formed.

If the optical waveguide formation method shown in Figs. 14 (a) to 14 (d) is used, the optical transmission structural body shown in Fig. 1 can be manufactured. In the formation method according to the second aspect of the first group of the present invention, the optical transmission structural bodies as shown in Figs. 2 to 8 can be also used by using the reflection plate, the fitting plate, or the like.

Specific examples of the formation of the optical transmission structural bodies shown in Figs. 2 to 8 will next be described with reference to the drawings.

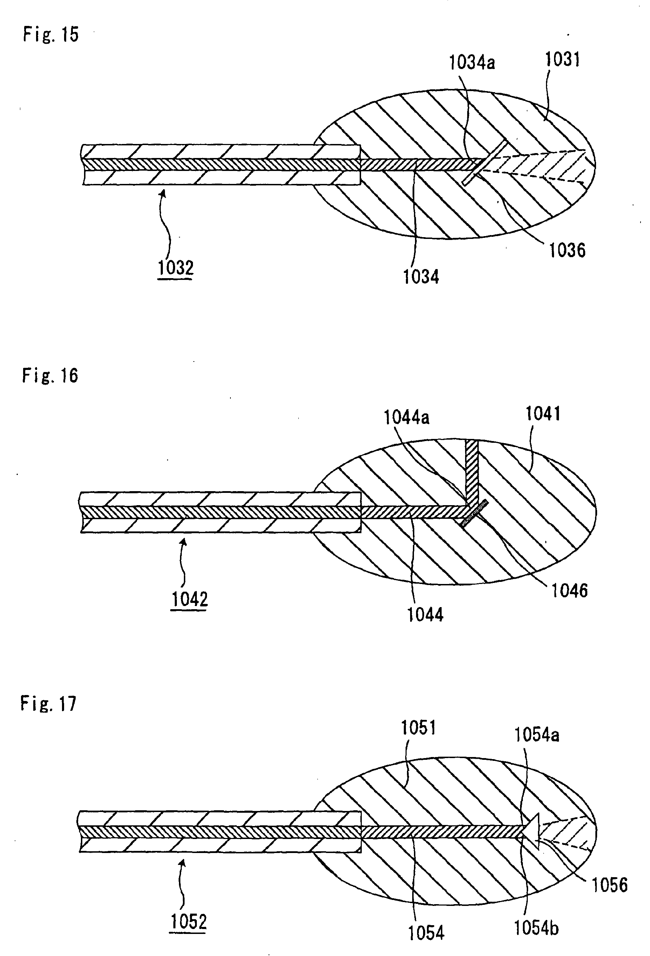

Figs. 15 to 19 are schematic diagrams for describing a part of steps of the optical waveguide formation method according to the second aspect of the first group of the present invention.

If the optical waveguide having the optical conversion mirror formed on the end surface of the optical waveguide at opposite side to the side on which the optical wiring is connected shown in Fig. 2 (a) is to be formed as shown in Fig. 15, a fitting plate 1036 is arranged on an optical path of light when the light is irradiated into a photosensitive composition 1031 through an optical wiring 1032 in the optical waveguide formation method according to the second aspect of the first group of the present invention. In this condition, an end surface 1034a of the optical waveguide at opposite side to a side on which the optical wiring is connected can be formed along a shape of the fitting plate 1036, so that the end surface can be provided as the optical conversion mirror.

In the optical waveguide formation method shown in Fig. 15, the fitting plate is arranged such that an inclination angle of a surface irradiated with the light from the fitting plate with respect to the end surface of the optical wiring is 45°, thereby forming the optical path conversion mirror at 90°. However, the inclination angle of the surface irradiated with the light from the fitting plate with respect to the end surface of the optical wiring is not limited to 45° but may be an arbitrary angle. Specifically, by setting the inclination angle of the surface irradiated with the light from the fitting plate with respect to the end surface of the optical wiring at 8°, the end surface of the optical waveguide at opposite side to the side on which the optical wiring is connected can be provided as an antireflection processing surface as seen in the optical transmission structural body shown in Fig. 2(b).

If a fitting plate having a spherical surface is arranged on the optical path of irradiated light, a lens can be formed on an end surface of an optical waveguide at opposite side to a side on which an optical wiring is connected as seen in the optical transmission structural body shown in Fig. 2(c).

Further, a fitting plate having a light-irradiated surface at an inclination angle of 0° (a fitting plate having a light-irradiated surface in parallel to the end surface of the optical wiring) may be employed as the fitting plate. If such a fitting plate is employed, the end surface of the optical waveguide at opposite side to the side on which the optical wiring is connected can be made smoother in the optical transmission structural body shown in Fig. 1.

According to the second aspect of the first group of the present invention, "the inclination angle of the surface irradiated with the light from the fitting plate with respect to the end surface of the optical wiring" means an angle formed between the end surface and the fitting plate if it is assumed that the end surface of the optical wiring is a surface perpendicular to an optical axis of an emission end (or incidence end) of the optical wiring.

As the fitting plate, a plate which substantially completely transmits and absorbs or either transmits or absorbs the irradiated light, or the like can be employed. A material for the fitting plate may be appropriately selected based on a wavelength of the light irradiated through the optical wiring, the optical refractive index of the photosensitive composition, and the like.

Further, if the optical transmission structural body having the bent portion formed on the core part of the optical waveguide as shown in Fig. 3 is to be manufactured, a mirror 1046 is arranged on an optical path of light when the light is irradiated into a photosensitive composition 1041 through an optical wiring 1042 in the optical waveguide formation method according to the second aspect of the first group of the present invention as shown in Fig. 16. In this condition, the optical path of the irradiated light is bent, so that a core part 1044 of the optical waveguide that includes a bent portion 1044a can be formed.

In the formation method shown in Fig. 16, the mirror is arranged such that an angle of the formed bent portion is 90°. However, the angle of the formed bent portion is not limited to 90°, but the mirror may be arranged such that the bent portion at a desired angle can be formed.

Furthermore, the number of bent portions formed in the formation method according to the second aspect of the first group of the present invention is not limited to one but may be two or more. Accordingly, in the formation method according to the second aspect of the first group of the present invention, the mirror may be arranged on the optical path of the irradiated light in accordance with the number of bent portions to be formed.

A material for the mirror (a material for a reflection surface) is not limited to a specificmaterial as long as amaterial has a high reflectance with respect to the light irradiated through the optical wiring. The material may be appropriately selected based on the wavelength of the irradiated light and the like. Specifically, examples of the material may include aluminum and silicon.

In addition, the reflection surface of the mirror needs to be subj ected to a planarization processing to a certain degree so as to change the angle of the optical path to a predetermined degree. Alternatively, a surface roughness Ra of the reflection surface based on JIS B 0601 may be 0.1 μm or more.

Further, if the optical transmission structural body having the mirror for optical branching formed on the end surface of the optical waveguide at opposite side to the side on which the optical wiring is connected as shown in Fig. 4 (a) is to be formed, a fitting plate 1056 having two surfaces at 90° with respect to each other is arranged on an optical path of light when the light is irradiated into a photosensitive composition 1051 through an optical wiring 1052 as shown in Fig. 17. In this condition, the end surface of a core part 1054 to be formed at opposite side to the side on which the optical wiring is connected can be formed along a shape of the fitting plate 1056. The end surface can be, thus, provided as the mirror for optical branching having reflection surfaces 1054a and 1054b.

The shape of the fitting plate when the optical waveguide including the mirror for optical branching is formed is not limited to the shape shown in Fig. 17, but may be appropriately selected in accordance with the shape of the mirror for optical branching to be formed.

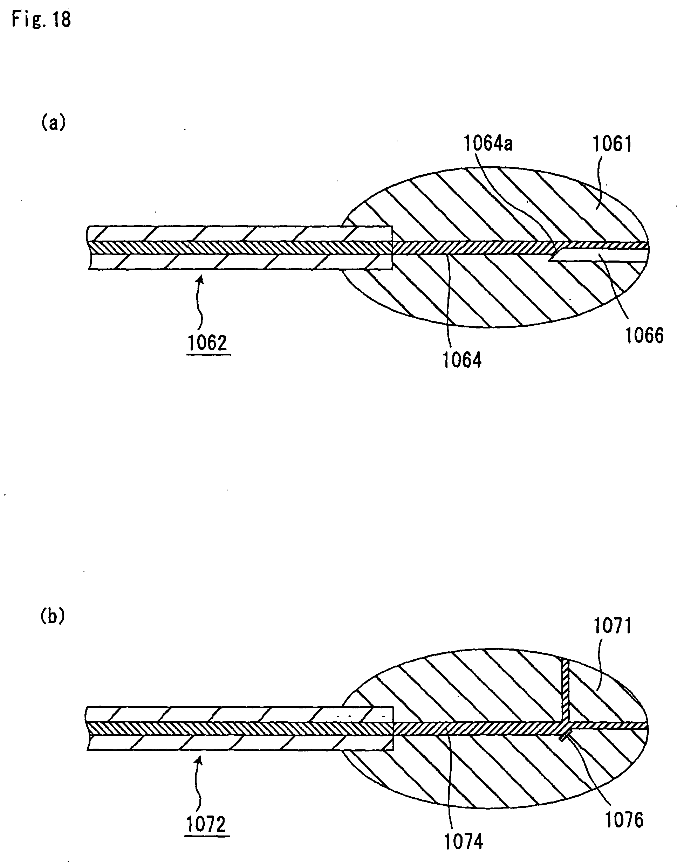

If the optical waveguide having a plurality of end surfaces formed at different positions, respectively, at opposite side to the side on which the optical wiring is connected as shown in Fig. 5(a) is to be formed, a fitting plate 1066 is arranged only on a part of an optical path of a light when the light is irradiated into a photosensitive composition 1061 through an optical wiring 1062 as shown in Fig. 18(a).

By thus arranging the fitting plate 1066 on a part of the optical path, an optical path conversion mirror 1064a having a shape along the fitting plate 1066 can be formed on a part of a core part 1064 to be formed. The shape of the fitting plate employed in this method is not limited to a specific shape, but the fitting plate may be thick as shown in Fig. 18 (a) or thin.

If the optical waveguide shown in Fig. 5 (b) is to be formed, a mirror 1076 is arranged only at the part of an optical path of a light when the light is irradiated into a photosensitive composition 1071 through an optical wiring 1072 as shown in Fig. 18(b). By arranging the mirror at such a position, a part of the irradiated light is reflected by this mirror 1076, so that a core part 1074 as shown in Fig. 5(b) can be formed.

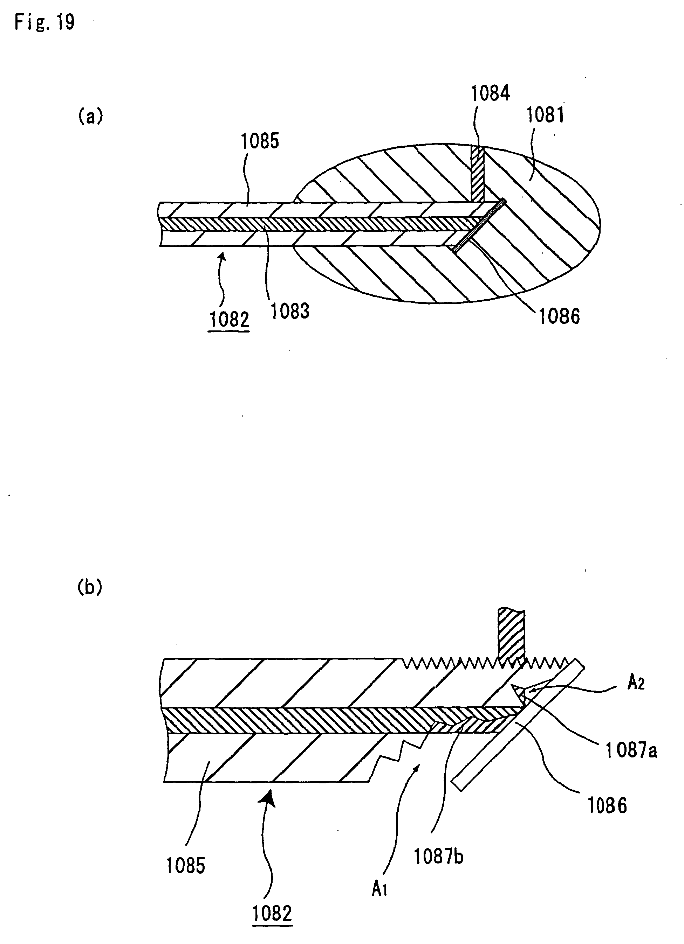

Further, if the optical waveguide is constituted so that the optical signal can be transmitted between the optical waveguide and the optical wiring, and so that the optical waveguide is not directly connected to the core part of the optical wiring as shown in Fig. 7 is to be formed, amirror 1086 is attached to an end of an optical wiring 1082 immersed in a photosensitive composition 1081 in advance as shown in Fig. 19(a). By irradiating the light through the optical wiring 1082 while the mirror is attached in this state, a core part 1084 which enables an optical signal to be transmitted between the optical waveguide and the optical wiring and which is connected to a cladding part 1085 of the optical wiring 1082 can be formed.

Furthermore, if the mirror 1086 is attached to the end of the optical wiring, an end surface of the optical wiring on a side on which the mirror is attached to the optical wiring is not subjected to a planarization processing or has a surface roughness within the above-mentioned range. Due to this, the end surface is not formed to be closely attached to the mirror, and gaps (indicated by $A_1$ and $A_2$ in Fig. 19(b)) are normally, sometimes present between the end surface of the optical wiring and the mirror, as shown in Fig. 19(b).

In this case, in the formation method according to the second aspect of the first group of the present invention, when the optical wiring in this state is immersed in the photosensitive composition and the light is irradiated into the photosensitive composition through the optical wiring, resin layers 1087a and 1087b (functioning as a core part of the optical waveguide) made of the same material as that for a core part 1084 of the optical waveguide are formed in the respective gaps between the end surface of the optical wiring and the mirror 1086. As a result, the optical waveguide formed can preferably transmit an optical signal to the optical wiring.

Fig. 19 (b) is a partial enlarged view of Fig. 19 (a). In Fig. 19(b), the photosensitive composition is not shown.

As described with reference to Figs. 16, 18(b) and 19, in the formation method according to the second aspect of the first group of the present invention, the mirror employed when the optical waveguide is formedmaybe kept attached to the optical waveguide after the optical waveguide is formed. Besides, after the optical waveguide is formed, the mirror may be detached and a portion of the optical waveguide in contact with the mirror maybe exposed to the air or the like. Since the optical waveguide and the air greatly differ in optical refractive index, the air acts as a mirror per se. Further, after detaching the mirror, another metal film, multilayer film, or the like more excellent in reflected light efficiency with respect to the communication wavelength may be attached to the optical waveguide by a method such as sputtering or deposition.

If the mirror is detached as described above, a reflection surface (e.g., a coating layer) of the mirror employed when forming the optical waveguide is desirably plane. If the mirror is not detached, the reflection surface of the mirror is not necessarily subjected to the planarization processing.

In the optical waveguide formation method according to the second aspect of the first group of the present invention, the optical waveguide comprising the cured core part and the uncured cladding part can be formed corresponding to the optical path by using the above-mentioned method.

However, the uncured cladding part is normally a liquid. In this state, the core part tends to be fluidized and the optical waveguide is quite unstable.

It is therefore desirable to form a solid cladding part by curing the uncured cladding part after forming the core part. To do so, after the core part is formed, the uncured cladding part is irradiated with a light, thereby solidifying an entire system. However, if a member containing only one type of the photosensitive component is used as the photosensitive component, the core part and the cladding part are substantially equal in optical refractive index after the cladding part is cured. As a result, the light cannot be constrained in the core part, and the core part cannot function as the optical waveguide.

It is therefore desirable that the solidified cladding part is formedby the following method, thereby providing a stable optical waveguide having the entire system solidified.

The method including forming the core part, removing the photosensitive composition around the core part, and then carrying out a curing processing to form the cladding part can be used. Nevertheless, as described above, if only the core part is cured, the core part is often quite unstable. To remove the uncured photosensitive composition in this state, it is necessary to handle the photosensitive composition very carefully.

Accordingly, the cladding part is desirably formed by the following method.

Resin or a resin composition (hereinafter, also referred to as "cladding formation resin") other than a photosensitive composition for forming the core part (hereinafter, also referred to as "core formation resin") is mixed together in the photosensitive composition. As the cladding formation resin, a photosensitive composition which is not polymerized until a light higher in intensity than the light for the core formation resin, and optical refractive indexes of which before and after curing are both lower than that of the core part is selected. As long as the composition has the above-mentioned properties, one of the above-mentioned photosensitive compositions can be appropriately selected as the cladding formation resin and used.

As already described, the light is irradiated through the optical wiring. At this time, the light having an intensity with which the light can polymerize the core formation resin but the light substantially cannot polymerize the cladding formation resin is irradiated. In this condition, in the photosensitive composition, only the core formation resin higher in photosensitivity selectively starts to be polymerized. If only the core formation resin starts to be polymerized in the photosensitive composition including the core formation resin and the cladding formation resin, the photosensitive composition starts to be removed from the core formation resin to be cured. This is because the uncured cladding formation resin keeps fluidity. In addition, since the core part is higher in optical refractive index than the uncured cladding formation resin, the light irradiated through the optical wiring is intensively irradiated on the tip end while being constrained in the core part which is formed. As a result, by the light irradiated from one end of the optical wiring, the core formation resin is preferentially cured corresponding to the optical path, the core part corresponding to the optical path is formed, and the uncured photosensitive composition surrounds the core part.

Thereafter, the light from the light source is set so as to be able to irradiate the entire uncured photosensitive composition. A power of the light source is increased, and the light having an intensity with which the cladding formation resin can be polymerized is irradiated. Thus, the cladding formation resin and the uncured core formation resin are cured, thereby making it possible to form the cladding part that surrounds the core part.

As can be seen, if two types of photosensitive compositions different in light intensity for triggering a polymerization reaction are mixed together in advance, and the optical waveguide is formed using the mixture photosensitive compositions, resins polymerization reactions of which are triggered through different polymerization reaction mechanisms can be selected as the core formation resin and the cladding formation resin, respectively.

Namely,aradical-polymerized photosensitive composition, represented by acrylic resin, polymerization of which is triggered by a sequential polymerization reaction by radicals, and a cation-polymerized photosensitive composition, represented by epoxy resin, polymerization of which is triggered through ion pairs can be selected. If these photosensitive compositions are selected, the polymerization reaction of the radical polymerized photosensitive composition progresses faster than that of the cation polymerized photosensitive composition. Therefore, if weak light is irradiated, only the acrylic resin is selectively polymerized.

Alternatively, by irradiating the weak light, progress states of the polymerization of the two types of photosensitive compositions may be made more different so as to be able to ensure polymerizing one of the photosensitive compositions.

This can be done by increasing a polymerization reaction speed of the radical-polymerized photosensitive composition. Specifically, the acrylic resin will be taken as an example. By increasing the number of acrylic groups contained per unit weight of the acrylic resin (that is, an acrylic equivalent weight) or increasing a density of amonomer, adensityof reaction groups relating to polymerization is increased, thereby enabling increasing a polymerization reaction speed. Alternatively, by increasing a quantum yield (a quantity of generated radicals per phonon quantity) or a density of a photo polymerization initiator, the polymerization reaction speed can be increased.

Further, by decreasing the polymerization reaction speed of the cation-polymerized photosensitive composition, the progresses of the polymerization of the two types of photosensitive compositions can be made different. Specifically, the epoxy resin will be taken as an example. By decreasing the number of epoxy groups contained per unit weight of the epoxy resin (that is, an epoxy equivalent weight) or decreasing a density of a monomer, the density of reaction groups relating to polymerization is decreased, thereby enabling decreasing the polymerization reaction speed. Further, by decreasing the quantum yield (a quantity of generated cations per phonon quantity) or the density of the photo polymerization initiator, the polymerization reaction speed can be decreased.

Furthermore, even if two photosensitive compositions polymerization reactions of which progress through the same mechanism are mixed together, only one of the photosensitive compositions can be selectively polymerized. In this case, since their reactions progress through the same mechanism, it is difficult to selectively polymerize one of the photosensitive compositions even by mixing two resins different in the photo polymerization initiator or the intensifier used therefor. However, by making densities of reaction groups of matrix oligomer molecules different, only one of the photosensitive compositions can be selectively polymerized. If the radical-polymerized acrylic resins are used, one of them containing more reaction groups reactive to a certain irradiated light (i.e., having a less acrylic equivalent weight) is selectively polymerized.

If the optical waveguide is formed using the core formation resin and the cladding formation resin, the polymerization reactions of the both resins can be triggered using one light source. An equipment cost and the number of steps can be therefore reduced.

In selection of the core formation resin and the cladding formation resin, even if curing wavelengths of the both resins are not completely equal, the polymerization reactions of the resins can be triggered using one light source by adding the intensifier or the like. The reason is as follows. Even if the photosensitive compositions do not absorb the irradiated light in wavelength regions of the compositions or absorb only a small quantity of the light, the polymerization reactions can progress by adding an appropriate intensifier which can absorb the light in the wavelength range and using an energy absorbed by the initiator. In other words, if the intensifier is added, the photosensitive composition can largely absorb the irradiated light in the wavelengths of the light, and eventually increase a sensitivity. Generally, an absorption wavelength range thus widened is expanded to a longer-wave side than an original absorption wavelength region of a radical generator, and photons generated by the light source can be used efficiently. The sensitivity is thereby improved.

Alternatively, resin which is not polymerized until a heat treatment is carried out may be selected in place of the photosensitive composition having the above-mentioned properties as the cladding formation resin. The cladding part may be formed by a method for thermally curing an uncured resin in place of the method for forming the core part and then irradiating the light having the high intensity with the entire uncured photosensitive resin, thereby providing the optical waveguide.

Further, resin which is not polymerized until the resin is irradiated with light having a wavelength different from that of light for the core formation resin, and the optical refractive index of which after curing is lower than the optical refractive index of the core formation resin after curing may be selected as the cladding formation resin. The cladding part may be formed by a method for irradiating the light at a wavelength at which the cladding formation resin is polymerized to the entire uncured photosensitive resin, thereby providing the optical waveguide.

By using one of these formation methods, the optical waveguide excellent in connection performance with the optical wiring, and excellent in stability after the entire system is solidified, can be formed.

If the photosensitive compositions comprising two or more types of photosensitive compositions (e.g., the core formation resin and the cladding formation resin) are used, a blending ratio of the photosensitive compositions is not limited to a specific ratio.

Moreover, the method according to the second aspect of the first group of the present invention can be also used as a method for forming an optical waveguide that optically connects two optical wirings to each other.

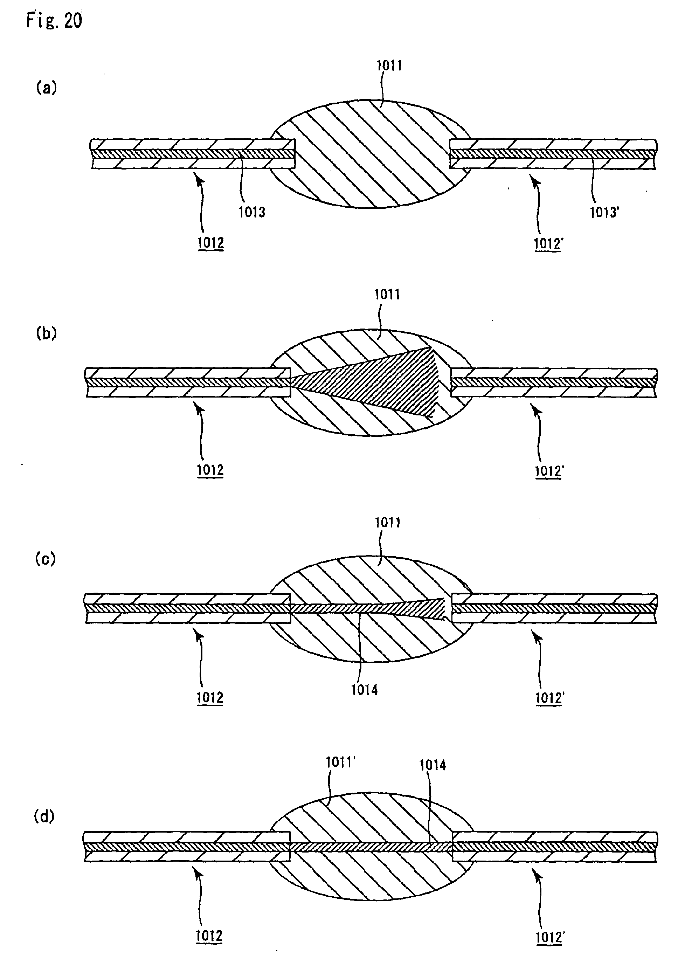

Figs. 20 (a) to 20 (d) are schematic diagrams for describing another embodiment of the optical waveguide formation method according to the second aspect of the first group of the present invention. The optical formation method will be described, while referring to an example inwhich an optical fiber is employed as the optical wiring.

Specifically, optical fibers 1012 and 1012' that form a pair to be optically connected are first arranged face to face with each other, and a photosensitive composition is, for example, coated so as to surround an area between the faced ends of the optical fibers 1012 and 1012'. By doing so, both the ends of the optical fibers 1012 and 1012' are immersed in a photosensitive composition 1011 (see Fig. 20(a)).

Next, light for curing the photosensitive composition 1011 is irradiated from one optical fiber 1012 to the optical fiber 1012' that faces the optical fiber 1012 (see Fig. 20(b)).

By thus irradiating the light from one optical fiber 1012 to the other optical fiber 1012' , the photosensitive composition 1011 is gradually cured from an optical fiber 1012 side correspondingly to an optical path of the light, thereby forming a core part of an optical waveguide that connects the optical fiber 1012 to the optical fiber 1012' (see Figs. 20 (c) and 20(d)).

Thereafter, a cladding part is formed by the same method as one of those described above if it is necessary, whereby the optical waveguide that optically connects the two optical fibers to each other can be formed.

In the method for forming the optical waveguide that connects the two optical fibers to each other, the light is irradiated only through one optical fiber. Alternatively, lights may be irradiated from the two optical fibers, respectively, to the counterpart optical fibers. If so, the lights may be irradiated simultaneously through two optical fibers or alternately irradiated from the optical fibers.

Furthermore, if the lights are irradiated simultaneously from the two optical fibers to the counterpart optical fibers, the core part that connects the two optical fibers to each other can be formed even if optical axes of the two optical fibers are from each other.

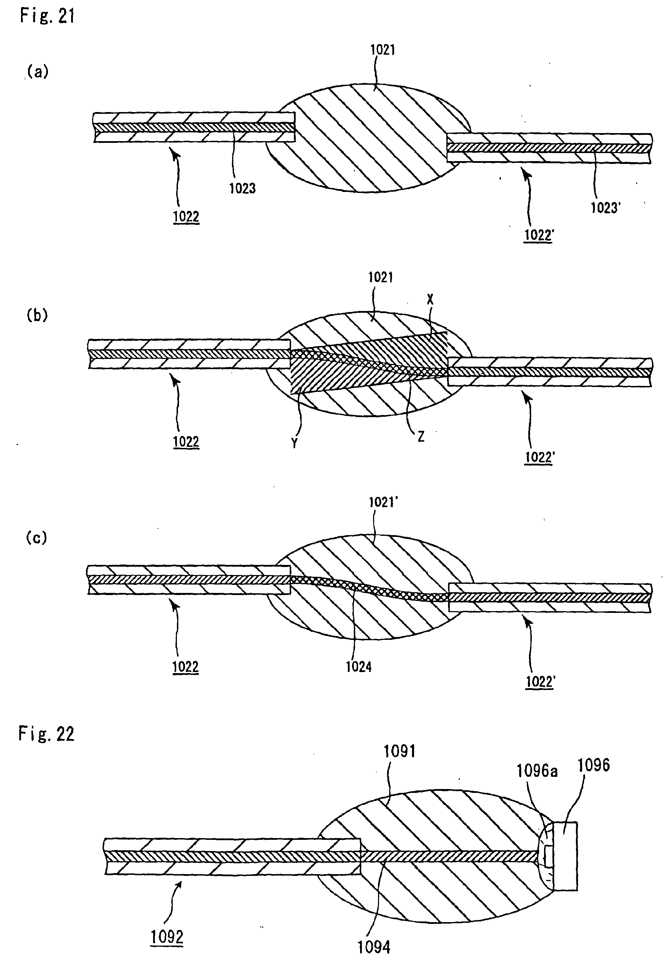

Figs. 21 (a) to 21 (c) are schematic diagrams for describing another example of the optical waveguide formation method according to the second aspect of the first group of the present invention.

First, one ends of two optical fibers 1022 and 1022' which are optically connected to each other are immersed in the photosensitive composition 1021 and, also, the optical fibers are arranged such that the ends thereof substantially face each other. Herein, the optical axes of the two optical fibers are deviated from each other (see Fig. 21(a)).

Lights for curing a photosensitive composition 1021 are irradiated from the two optical fibers 1022 and 1022' to the counterpart optical fibers 1022' and 1022, respectively (see Fig. 21 (b)). In this case, an intensity of the light is higher in a portion Z in which emission lights X and Y emitted from the optical fibers 1022 and 1022' are superposed on each other. Therefore, if the intensity of the light in the superposedportion Z is set so that only the core formation resin can be polymerized, a core part 1024 can be formed in the portion Z in which the emission lights are superposed on each other (see Fig. 21 (c)).

With this method, even if the optical axes of the paired optical fibers 1022 and 1022' are deviated from each other, then the core part 1024 is formed on an optical path of the light that connects ends of the optical fibers 1022 and 1022' to each other, and the two optical fibers 1022 and 1022' can be optically connected with a high probability.

In addition, as described with reference to Fig. 20, if the optical waveguide that connects the two optical fibers to each other is to be formed by arranging the two optical fibers face to face with each other, and by irradiating the light from one of the optical fibers or the lights from the both optical fibers, coating layers may be formed on circumference of the ends of the two optical fibers immersed in the respective photosensitive compositions. By forming the optical waveguide using the optical fibers thus coated with the coating layers, respectively, the optical transmission structural body shown in Fig. 10 can be manufactured.

If the optical waveguide is to be formed using the optical fibers coated with these coating layers, it is desirable that an end surface of each coating layer flush with the core part of the optical fiber is not specially subjected to aplanarization processing or has the surface roughness Ra based on JIS B 0601 of 0.1 μm or more. This is because the end surfaces of the coating layers having the above-mentioned shape can be formed only using a cutting tool used to cut an electric wiring and the like. The cutting of the optical wirings may be carried out by using the other arbitrary cutting method without particularly using the cutting tool.

Further, if the cladding part is to be formed around the core part after forming the core part that connects the two optical wirings, the cladding part may be formed while pulling both ends of the core part or while keeping a state of pulling the both ends of the core part.

By thus pulling the both ends of the core part, the shape of the core part can be stabilized. Therefore, by forming the cladding part around this core part, the optical waveguide comprising the core part of the stabilized shape and the stable cladding part can be formed.

Further, the method for forming the cladding part while pulling the core part as described above can be used as the following method for forming the stable cladding part. After the core part using the photosensitive composition only comprising the core formation resin, the uncured photosensitive composition is removed. Next, after immersing the core part in another photosensitive composition, the stable cladding part is formed by subjecting this photosensitive composition to a curing processing.

The method for forming the stabilized-shape core part and the stable cladding part by pulling the both ends of the core part as described above can be used when forming not only for forming the optical waveguide that connects the optical wirings to each other but for the method, in which irradiation of a light from the optical wirings toward the mirror, the fitting plate, the optical component, and the like is conducted, thereby forming the core part, and the stable cladding part around the core part. In this case, bypulling the optical wirings as well as the mirror, the fitting plate, the optical component and the like, the both ends of the core part may be pulled.

In addition, to pull the both ends of the core part is advantageous in that even if a cured cladding part is not formed, the core part can be stabilized.

Moreover, by using the formation method according to the second aspect of the first group of the present invention, an optical signal transmission optical path on which the optical wiring and the optical component are connected to each other through the optical waveguide (see Fig. 9(b)) can be formed.

Specifically, as shown in Fig. 22, when a light is irradiated into a photosensitive composition 1091 through an optical wiring 1092, an optical component 1096 is arranged on an optical path of the irradiated light in advance. In this state, by irradiating the light through the optical wiring 1092, a core part 1094 of the optical wiring that connects the optical wiring 1092 to the optical component 1096 can be formed. It is noted that a surface protection layer 1096a is formed on a surface of the optical component 1096 connected to the core part.

After thus forming the core part, a cladding part is formed around the core part by one of the above-mentioned methods, thereby providing the optical transmission structural body shown in Fig. 9(b).

Furthermore, by forming the optical waveguide connected to one end of the optical wiring using the formation method according to the second aspect of the first group of the present invention, the array-like optical transmission structural body can be manufactured.

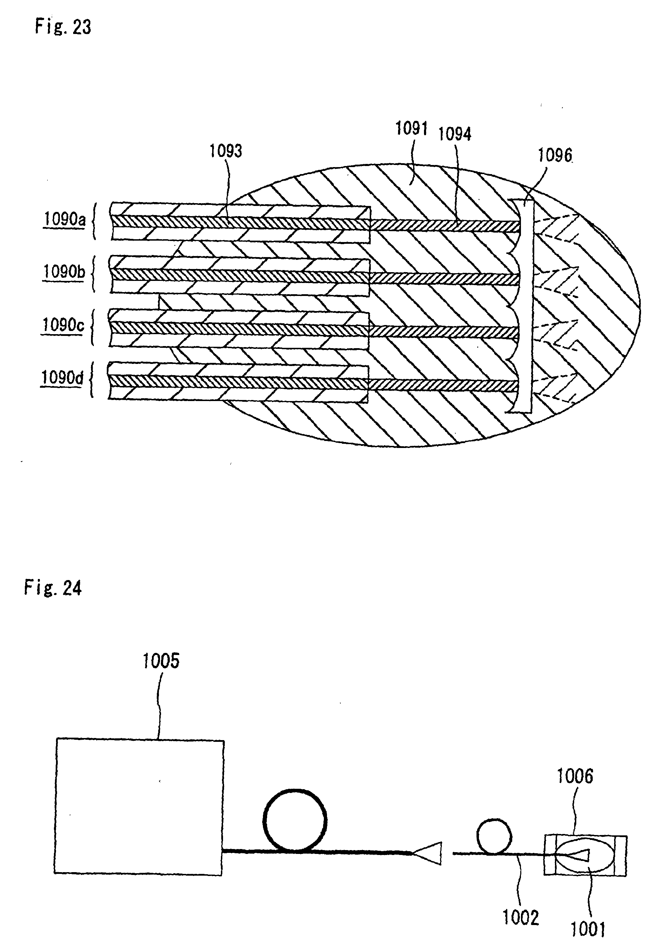

Specifically, aplurality of optical wirings 1090a to 1090d (four optical wirings in Fig. 23) are arranged equidistantly. In this state, one end of each of the optical wirings thus arranged is immersed in a photosensitive composition 1091. In this state, light is irradiated through all the optical wirings. A fitting plate 1096 for forming a lens on the end surface of the optical waveguide is formed on the optical path of the irradiated light. By forming the solidified cladding part around the core part by one of the above-mentioned methods, an array-like optical transmission structural body can be formed (see Fig. 23). In Fig. 23, reference symbol 1093 represents a core of each optical wiring, and 1094 represents the core part of the optical wiring.

In the array-like optical transmission structural body manufactured by such a method, a resin layer made of the same material as that for the cladding part is formed between the adjacent optical wirings.

In the formation of the array-like optical transmission structural body, if a plurality of optical wirings are arranged equidistantly, and if the respective optical wirings are fixed into grooves of a substrate on which a plurality of grooves are formed equidistantly, the array-like optical transmission structural body can be provided without fixing an area between the adjacent optical wirings with a resin layer.

Next, the optical waveguide formation method according to the second group of the present invention will be explained.

The optical waveguide formation method according to the second group of the present invention is an optical waveguide formation method which comprising steps of: immersing a part of an optical wiring in a photosensitive composition; irradiating light into said photosensitive composition through said optical wiring; and forming a core part corresponding to an optical path of light in said photosensitive compositions, wherein irradiating light from facet of said optical wiring is the light which carried out incidence through the side of said optical wiring.

By the formation method of an optical waveguide present invention of the second group, in order to carry out incidence of the light through the side of optical wiring, even if it is the case where a light source cannot be prepared in the facet side of everything but optical wiring, and incidence of the light cannot be carried out from other facet of optical wiring, it becomes possible to irradiate light from facet of optical wiring to a photosensitive composite. Therefore, it is economically advantageous, while being able to simplify connection according to the formation method of an optical waveguide present invention of the second group, without receiving most restrictions in the composition of optical wiring etc. and optical parts etc. , since an optical waveguide can be formed with the technology of self-organizing optical waveguide. The same thing as the optical wiring which constitutes the optical wiring connection object of invention of the first of present invention of the first group as said optical wiring etc. is mentioned. In addition, flat-ized processing may be performed to the facet, and, as for the optical wiring used by present invention of the second group, facet processing does not need to be performed especially. Moreover, the side may be worn by covering material and the optical wiring used by present invention of the second group does not need to be covered. When using the optical wiring which is not covered by covering material, incidence of the light can be carried out through the side of optical wiring as it is. On the other hand, in using the optical wiring covered by covering material, it becomes possible by removing a part of above-mentioned covering material to carry out incidence of the light through the side of optical wiring. Moreover, it is also possible to carry out incidence of the light through the side of optical wiring, without removing a part of above-mentioned covering material, in using the optical wiring covered by covering material with possible making light penetrate.

In addition, in the following explanation, the case where the optical wiring which is not covered by covering material is used is explained. Hereafter, the formation method of an optical waveguide present invention of the second group is explained, referring to a drawing.

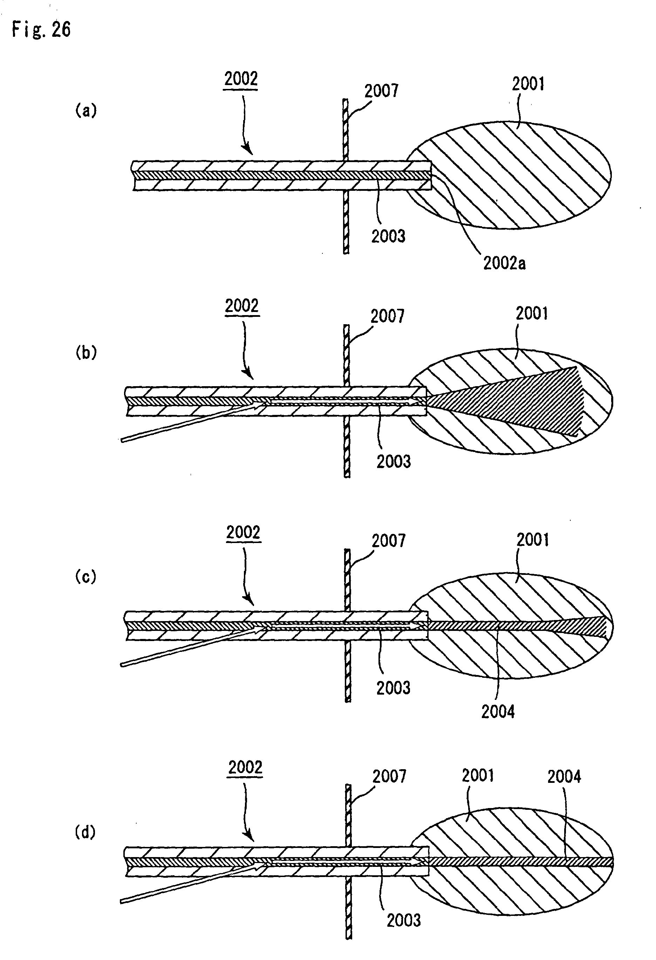

Fig. 26 (a) - (d) is a schematic diagrams for describing an example of the formation method of an optical waveguide of the second group of the present invention. In addition, the white arrow shows typically the course of the light which carries out incidence through the side of optical wiring, or the course of light of waveguiding under said optical wiring, among the figure.

(1) facet of optical wiring is first immersed into a photosensitive composition. Specifically, it plasters, or (Fig. 26(a) reference) and a photosensitive composite are put into a container, and facet of optical wiring is immersed here so that facet 2002a of the optical wiring 2002 may be wrapped in for the photosensitive composite 2001. At this time, you may establish the protection wall 2007 (see Fig. 26 (a)). Although incidence of the light irradiated using the light source etc. is carried out through the side of optical wiring by the formation method of an optical waveguide present invention of the second group, at this time, a part of light irradiated using the light source etc. is directly irradiated by the photosensitive composite, without minding optical wiring, and there is a possibility that a photosensitive composite may harden by this. Then, by establishing a protection wall, the light irradiated by the photosensitive composite, without minding optical wiring can be covered, and it can prevent that a photosensitive composite hardens by such light. The setting position of said protection wall will not be limited especially if it is the position which can cover the light directly irradiated by the photosensitive composite, without minding optical wiring. Moreover, what is necessary is not to limit the quality of the material of said protection wall, especially form, etc., and just to be able to cover the light made to irradiate a photosensitive composite directly, without minding optical wiring.

As for the above-mentioned photosensitive composition, the same photosensitive compositions as which was used in the second aspect of the first group of the present invention and the like can be used.

Moreover, although it is desirable that it is an organic composite as for the photosensitive compositions used for the formation method of an optical waveguide present invention of the second group, said photosensitive compositions may be an inorganic composition which consists of what is not limited to an organic composite and doped germanium, P, etc. to quartz.

In said photosensitive composition, particles may be contained further.

By forming an optical waveguide using the photosensitive compositions containing particles, adjustment of a heat expansion coefficient can be achieved between optical wiring and an optical waveguide.

Incidentally, specific examples of the particles may include the same as those contained in the photosensitive compositions used in the optical waveguide formation method according to the second aspect of the first group of the present invention.

Further, the shape, the diameter, a blending ratio of the particles and the like of each particle are the same as those of the particle contained in the photosensitive compositions used in the optical waveguide formation method according to the second aspect of the first group of the present invention.

Moreover, since the core part is formed in gradually from the optical wiring side by the formation method of an optical waveguide present invention of the second group according to the irradiated course of light, as for said photosensitive composite, it is desirable that it is that to which the optical refractive index becomes higher than hardening before after hardening. It is because it will glare intensively from a tip and an optical waveguide according to the course of light can be formed more certainly, being shut up in the core part in which the light irradiated through optical wiring when an optical refractive index became high after hardening was formed.

In order to form a core part by the formation method of an optical waveguide present invention of the second group in the state where facet of optical wiring was flooded with the photosensitive composite, as for the minimum of the optical refractive index after hardening of this photosensitive composite, it is desirable that it is 90% of the optical refractive index of the core of said optical wiring, and, as for the maximum, it is desirable that it is 110%. It is because the core part which was excellent with connection nature with this optical wiring can be formed if the photosensitive composite which can form the core part which has the optical refractive index of said range is used. As for the minimum of the optical refractive index after hardening of said photosensitive composite (optical refractive index of said core part), it is more desirable that it is 95% of the optical refractive index of the core of said optical wiring, and it is still more desirable that it is 98%. On the other hand, as for the maximum, it is more desirable that it is 105% of the optical refractive index of the core of said optical wiring, and it is still more desirable that it is 102%. Therefore, the quality of the material of the core of said optical wiring is pure silica glass etc., and when the optical refractive index nD is about 1.46, it is desirable to use that whose optical refractive indicees nD after hardening are about 1.31 - abbreviation 1.61 as said photosensitive composite. In addition, although optical refractive indicees, such as resin used for optical wiring or an optical waveguide, change depending on the wavelength, the ratio (optical refractive index of the core of the optical refractive index optical wiring of the core part of an optical waveguide) hardly changes in for example, an ultraviolet ray domain - near infrared rays domain. Moreover, as for the minimum, it is desirable that it is 90% of the optical refractive index of the core of said optical wiring, the optical refractive index of the core part before hardening, i.e., the optical refractive index of saidphotosensitive composite itself, has 95 more desirable%, and 98% is still more desirable. On the other hand, as for the maximum, it is desirable that it is 110%, it is more desirable, and is still more desirable. 102% of, 105% of Thus, by the formation method of an optical waveguide present invention of the second group, although it is desirable to use it, choosing the photosensitive composite which has the optical refractive index of the range described above after hardening, even if it is a photosensitive composite used as the optical refractive index besides said range, it can be used, being able to adjust the optical refractive index. Moreover, when adjusting the optical refractive index of a photosensitive composite, it is desirable to adjust so that the optical refractive index of the core part before and behind hardening may become said range here. The method explained by invention of the second of present invention of the first group as a method which adjusts the optical refractive index of said photosensitive composite, and the same method, i.e., the method of adjusting molecule refraction and molecular volume, can be used.

Incidentally, in the second group of the present invention, "The optical refractive index of the core of the optical wiring" means the optical refractive index of the core if the core of the optical wiring has a single optical refractive index similarly to a step index optical fiber ("SI optical fiber") and means a peak optical index of the core of the optical wiring if the core has the optical refractive index in a certain range similarly to a graded index optical fiber ("GI optical fiber") .

(2) Next, irradiate light from facet of the optical wiring 2002 by carrying out incidence of the light through the side of the optical wiring 2002 (see Fig. 26 (b)).

Consequently, the core part according to the course of the light in the photosensitive composite 2001 can be formed. By carrying out incidence of the light through the side of the optical wiring 2002, a part of light which carried out incidence will guide under the optical wiring 2002, and it will act as Idei into a photosensitive composite from facet of the optical wiring 2002, consequently a core part will be formed according to the course of the light which acted as Idei into aphotosensitive composite. What is necessary is not to be limited especially as a light which carries out incidence through the side of said optical wiring at this time, but just to irradiate the light of the wavelength of an ultraviolet ray domain that what is necessary is just to choose suitably in consideration of composition of the photosensitive composite mentioned above etc., if said photosensitive composite is a composite which has photosensitivity in an ultraviolet ray domain. A high-pressure mercury lamp etc. can be used as a light source which irradiates the light of the wavelength of an ultraviolet ray domain. Moreover, ametal halide lamp, axenon lamp, laser, etc. canbeused. Moreover, the number of said light sources does not necessarily need to be one. It is good also as carrying out incidence of the light through the side of optical wiring from two or more parts using two ormore light sources. Moreover, as for the light which carries out incidence through the side of said optical wiring, it is desirable that it is the light which condensed with the lens. It is because intensity of light irradiated from facet of optical wiring to a photosensitive composite can be strengthened since incidence of the light can be efficiently carried out towards the core of optical wiring while being able to strengthen intensity of the light which carries out incidence through the side of optical wiring compared with the case where it does not condense with a lens. Thus, a core part can be efficiently formed from facet of said optical wiring by irradiating the light of strong intensity to a photosensitive composite. If it is the lens as said lens which can condense light, it is not limited especially and a well-known condenser etc. can be mentioned conventionally. Although it is not limited especially if the angle of the angle of the light which carries out incidence through the side of optical wiring, and optical axis of this optical wiring to make is over 0 degree, the angle is so desirable that it is small. It is because a core part can be efficiently formed from facet of said optical wiring since loss of the light in said optical wiring can be reduced by controlling that the light which carried out incidence through the side of optical wiring penetrates optical wiring. In addition, the light which carried out incidence through the side of optical wiring does not necessarily need to guide under optical wiringby all reflection. decreasing gradually, in case it reflects in optical wiring, it may come out of facet of optical wiring, and the light which carried out incidence through the side of optical wiring may shine Moreover, by the formation method of an optical waveguide present invention of the second group, in order to carry out incidence of the light through the side of optical wiring, a part of light which carried out incidence waveguide clad of said optical wiring, and it is apprehensive about a core part being formed from clad in facet of optical wiring. however, the thing for which a core part is formed from above-mentioned,clad in order to almost disappear, by the time it is easy to decrease the light which waveguide clad compared with the light which waveguide a core and reaches facet of said optical wiring, it can be said that there is nothing.

(3) By irradiating light from facet of the optical wiring 2002 in this way, the photosensitive composite 2001 will begin to harden from an optical wiring side according to the course of light, and the core part 2004 of an optical waveguide will be formed on extension of the core 2003 of the optical wiring 2002 (see Fig. 26 (c) and (d)). Moreover, while the formation method of an optical waveguide present invention of the second group can be used when it is possible to carry out incidence of the light through other facet (facet which has not been immersed into a photosensitive composite) of optical wiring, and carrying out incidence of the light through the side of said optical wiring in this case, you may carry out incidence of the light through other facet of said optical wiring. Since intensity of light irradiated to a photosensitive composite by doing in this way can be strengthened, it becomes possible to form a core part more efficiently from facet of said optical wiring. In addition, before carrying out incidence of the light for the side of the optical wiring to which incidence of the light is carried out by the formation method of an optical waveguide present invention of the second group although the side to which incidence of the light of optical wiring is carried out may be straight as shown in Fig. 26, it is desirable to make it curve. It is because a core part can be efficiently formed from facet of said optical wiring since it can control that the light which carried out incidence through the side of optical wiring penetrates optical wiring and loss of the light in said optical wiring can be reduced.

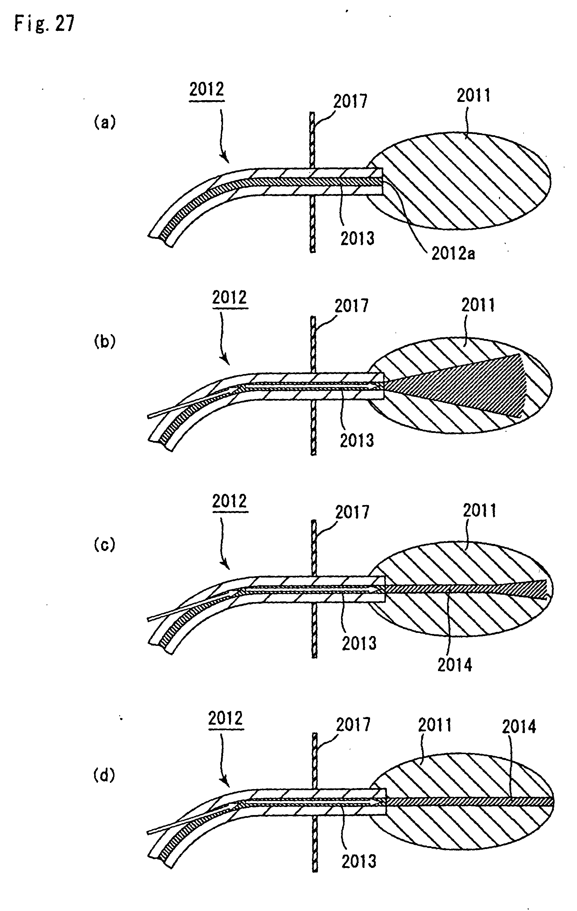

Fig. 27 (a) - (d) is a schematic diagrams for describing other examples of the formation method of an optical waveguide of present invention of the second group. In addition, the white arrow shows typically the course of the light which carries out incidence through the side of optical wiring, or the course of light of waveguide(ing) under said optical wiring, among the figure.

(1) First, the side of the optical wiring 2012 is incurvated and facet of the optical wiring 2012 is immersed into the photosensitive composite 2011. In addition, after facet of optical wiring is immersed into a photosensitive composite, you may incurvate the side of this optical wiring. Moreover, about the grade which incurvates said optical wiring, if it is the grade which does not do damage to optical wiring, it is possible for it not to be limited especially and to set up suitably according to the optical refractive index of optical wiring etc. Moreover, like the formation method of an optical waveguide explained as a method immersed in facet of optical wiring into a photosensitive composite while referring to Fig. 26, it plasters, or (Fig. 27 (a) reference) and a photosensitive composite are put into a container, and a facet of optical wiring is immersed here so that facet 2012a of the optical wiring 2012 may be wrapped in for the photosensitive composite 2011. At this time, you may establish the protection wall 2017 like the formation method of an optical waveguide explained while referring to Fig. 26 (see Fig. 27 (a)). Moreover, the same thing as'the formation method of an optical waveguide explained also about said photosensitive composite while referring to Fig. 26 can be used.

(2) Next, irradiate light froma facet of the optical wiring 2012 by carrying out incidence of the light through the side which the optical wiring 2012 incurvated (see Fig. 27 (b)). Consequently, the core part 2014 according to the course of the light in the photosensitive composite 2011 can be formed. As for the light which carries out incidence through the side which said optical wiring incurvated, it is desirable that they are abbreviation parallel to optical axis of this optical wiring in the part which carries out incidence of the light. It is because a core part can be efficiently formed from a facet of said optical wiring since it can control more certainly that the light which carried out incidence through the side which optical wiring incurvated penetrates this optical wiring and loss of the light in said optical wiring can be reduced. (3) By irradiating light from a facet of the optical wiring 2012 in this way, the photosensitive composite 2011 will begin to harden from an optical wiring side according to the course of light, and the core part 2014 of an optical waveguide will be formed on extension of the core 2013 of the optical wiring 2012 (see Fig. 27 (c) and (d) ) . Moreover, although the formation method of an optical waveguide explained while referring to Fig. 27 was the method of carrying out incidence of the light from one place of the side which optical wiring incurvated, you may make it use the method of carrying out incidence of the light from two or more parts of the side which optical wiring incurvated. the abbreviation from two or more parts of the side which optical wiring specifically incurvated by making optical wiring spiral using one light source you may carry out incidence of the light simultaneously In this case, since incidence of the light can be efficiently carried out to optical wiring compared with the method of carrying out incidence of the light from one place of the side which optical wiring incurvated, a core part can be efficiently formed from a facet of said optical wiring. of course, the abbreviation from two or more parts of the side which optical wiring incurvated using two or more light sources after making optical wiring spiral you may carry out incidence of the light simultaneously Furthermore, when it is possible to carry out incidence of the light through other facet (facet which has not been immersed into a photosensitive composite) of optical wiring, while carrying out incidence of the light through the side which said optical wiring incurvated, you may carry out incidence of the light through other facet of said optical wiring. Since intensity of light irradiated from a facet of said optical wiring to a photosensitive composite by doing in this way can be strengthened, it becomes possible to form a core part more efficiently from a facet of said optical wiring.

By the formation method of an optical waveguide present invention of the second group, an optical waveguide which consists of a core part hardened according to the course of light and a non-hardened claddpart by the formationmethodof an optical waveguide explained while referring to Fig. 26, the formation method of an optical waveguide explained while referring to Fig. 27 canbe formed. However, a non-hardened cladding part is usually a liquid, and a core part tends to flow in this state, and it is very unstable as an optical waveguide. Therefore, after forming said core part, it is desirable to form a solid cladding part by performing hardening processing to the cladding part which is not hardened above-mentioned. Then, after forming said core part, it is possible by irradiating light at a non-hardened cladding part to solid-ize the whole system. Since a core part and a cladding part will have the almost same optical refractive index and it becomes impossible to confine light in a core part by hardening of a cladding part when using what contains only one kind of photosensitive composite as said photosensitive composite, it will stop however, functioning as an optical waveguide. Therefore, it is desirable to consider as stable an optical waveguide which the whole system solid-ized by forming the cladding part solid-ized using the following methods. In forming said cladding part, after removing the photosensitive composite which is not hardened of the circumference after forming said core part, then flooding said core part with another resin composite (you may be a photosensitive composite and may not be a photosensitive composite), a stable cladding part can be formed by performing hardening processing to this resin composite. However, in case this method removes a photosensitive non-hardened composite with some length of the core part to form, very carefully and it has that it is not so practical. a method a core part. Therefore, it is desirable to use the method of forming a core part and a cladding part beforehand using the photosensitive composite whichmixed the resin for core formation and the resin for clad formation as the method explained also by the formation method of an optical waveguide invention of the second present invention of the first group, i.e., a photosensitive composite.

Here, the same photosensitive composite as what was used by invention of the second of present invention of the first group as a photosensitive composite containing said resin for core formation and said resin for clad formation can be used. In present invention of this second group, when irradiating light into a photosensitive composite, as it mentioned above, although the polymerization of the resin for core formation is possible, through the side of optical wiring to said photosensitive composite from a facet of this optical wiring While only the resin for core formation hardens preferentially like the case of invention of the second of present invention of the first group and the core part according to the course of the light is formed by irradiating the light of substantial almost impossible intensity, the polymerization of the resin for clad formation It will be in the state where the photosensitive composite the circumference of whose is not hardened surrounded. Then, a stable cladding part can be formed in the circumference of a core part by hardening the resin for clad formation. In addition, also in the formation method of an optical waveguide present invention of the second group, like invention of the second of present invention of the first group, in case the resin for clad formation is hardened, the non-hardened resin for core formation may harden. While excelling in connection nature with optical wiring by using such a formation method, an optical waveguide which the whole system solid-izes and is excellent in stability can be formed.

Moreover, the formation method of an optical waveguide present invention of the second group can also be used as a method of forming an optical waveguide which connects between optical wiring of two optically as well as invention of the second of present invention of the first group. It explains referring to Fig. 20 hereafter referred to when explaining invention of the second of present invention of the method of the first group. First, opposite arrangement of the optical wiring 1012 and 1012' which make the pair which should be combined optically is carried out, and both facet1012a and 1012' a that the optical wiring 1012 and 1012' faced by applying a photosensitive composite so that between facet1012a of this optical wiring 1012 and 1012' and 1012'a may be surrounded etc. are flooded with the photosensitive composite 1011 (see Fig. 20 (a)). Next, incidence of the light for stiffening said photosensitive composite 1011 is carried out through the side of one optical wiring 1012, and it is irradiated towards optical wiring 1012' which counters from facet1012a of the optical wiring 1012 (see Fig. 20 (b)). Thus, the core part of an optical waveguide to which the photosensitive composite 1011 hardens from the optical wiring 1012 side to gradually, and connects the optical wiring 1012 and optical wiring 1012' according to the course of light will be formed by irradiating light toward optical wiring 1012' of another side from one optical wiring 1012 (see Fig. 20(c) - (d)). Then, an optical waveguide which connects between optical wiring of two optically can be formed by forming a cladding part using said method and the same method. Moreover, it is be in case a cladding part is formed in the circumference of this core part after forming the core part which connects between optical wiring of two, be while pulling the both ends of a core part, or desirable to form a cladding part, maintaining the state where the both ends of a core part were pulled. Thus, since the form of a core part can be stabilized by pulling the both ends of a core part, an optical waveguide which consists of a core part of the stable form and a stable cladding part can be formed by forming a cladding part in the circumference of this core part. In addition, the method of using by invention of the second of present invention of the fourth group mentioned later as the method of pulling the both ends of a core part and a method of maintaining to shaped body which pulled the both ends of a core part, the same method, etc. can be used. Moreover, the method of forming a cladding part, while pulling a core part, as mentioned above First, after forming a core part using the photosensitive composite which consists only of resin for core formation, After removing a photosensitive non-hardened composite, then using said core part as another resin composite, also in the formation method of an optical waveguide which forms a stable cladding part, it can use suitably by performing hardening processing to this resin composite. Moreover, by the formation method of an optical waveguide which connects between the optical wiring of two mentioned above, although light is irradiated only from facet of optical wiring of one, it may replace with this method and light may be irradiated toward optical wiring of another side from each facet of optical wiring of two. In this case, it may decide to carry out incidence of the light through the side of each optical wiring, and among optical wiring of two, by optical wiring of one, incidence of the light may be carried out through the side, and you may decide to carry out incidence of the light from the facet by other optical wiring. About whether which method is used, it is possible to choose according to the structure of optical wiring and optical parts etc. Moreover, light may be simultaneously irradiated from each facet of optical wiring of two which faced each other, and light may be irradiated by turns from facet of each optical wiring which faced each other. Moreover, the core part which connects between optical wiring of two though optical axis of optical wiring of two has shifted in irradiating light simultaneously toward optical wiring of another side from each facet of optical wiring of two can be formed. It explains referring to Fig. 21 hereafter referred to when explaining invention of the second of present invention of the method of the first group.

That is, while flooding with the photosensitive composite 1021 each facet of the optical wiring 1022 of two connected optically first, and 1022', optical wiring is arranged so that the facet may counter mostly. In addition, optical axis of optical wiring has shifted (see Fig. 21 (a)). Next, from each facet1022a of the optical wiring 1022 of two, and 1022', and 1022'a, the light for stiffening the photosensitive composite 1021 is turned to optical wiring 1022' of the other party, and 1022, and is irradiated (see Fig. 21 (b)). Here, incidence of the light irradiated from facet1022a and 1022'a is carried out through each side of the optical wiring 1022 and 1022'. in this case, in the optical wiring 1022, the mutual Idei light X which comes out of each facet of 1022', and is put, and the portion Z which Y overlaps, the intensity of light becomes high Then, if the intensity of the light of the superposition portion Z is set up so that only the resin for core formation may serve as intensity in which polymerization is possible, the core part 1024 will be formed in the portion Z which the mutual Idei light overlaps (see Fig. 21 (c)). by this method, the core part 1024 is formed in the course of the light which connects facet1022a of both light wiring 1022 and 1022', and 1022'a though optical axis of a pair of optical wiring 1022 and 1022' has shifted, and both are optically combined according to high probability things can be carried out Although it is possible to form the core part which connects different optical wiring by the formation method of an optical waveguide present invention of the second group as mentioned above At this time, it is also possible by replacing with optical wiring of 1, using optical elements, 'such as a light receiving element, and immersing the light receiving face (light receiving part) and a facet of other optical wiring into a photosensitive composite to form the core part which carries out the direct file of light receiving face of said light receiving element and the facet of optical wiring of others above. In this case, incidence of the light will be carried out through the side of optical wiring of others above, and light will be irradiated from a facet of optical wiring of others above to said light receiving face. Moreover, it is also possible to form the core part which carries out the direct file of said luciferin child's luminescence side and the facet of optical wiring of others above by replacing with optical wiring of 1 and using the method which used and mentioned optical elements, such as a luciferin child, above, and the same method. In addition, the optical parts which can be replaced with and used for optical wiring of 1 may not be limited to optical elements mentioned above, such as a luciferin child and a light receiving element, and may be optical parts, such as a lens and a mirror. Thus, with the optical wiring in which the core part was attached directly, or optical parts, positioning is unnecessary between an optical waveguide (core part), optical wiring, etc.

Next, the optical waveguide formation method according to the third group of the present invention will be explained.

The optical waveguide formation method according to the third group of the present invention is an optical waveguide formation method which comprising steps of: arranging different optical wirings such that one end of one of the optical wirings substantially faces one end of the other optical wiring and at least both of the faced ends thereof are immersed in a photosensitive composition; and irradiating light at least from one of said optical wirings to the other optical wiring, thereby forming a core part that connects said optical wirings to each other, wherein establishing the optical irradiation means for irradiating light at one end of one of optical wiring towards one end of other optical wiring, establishing the optical reflective means at one end of other optical wiring for reflecting the light which is irradiated by using said optical irradiation means at one end of one of optical wiring, irradiating light at one end of one of optical wiring towards one end of other optical wiring, and reflecting the light which is irradiated by using said optical irradiation means at one end of one of optical wiring to form a core part at both of the faced ends thereof.

By the formation method of an optical waveguide present invention of the third group, light can be irradiated towards the end of other optical wiring from each end which optical wiring different the account of a top faced by reflecting the light which glared and irradiated light with said optical reflective means from the end of optical wiring of one using an optical irradiation means. Therefore, if it is possible to prepare an optical irradiation means in the optical wiring side of one among the ends where different optical wiring has not faced each other, even if it is the case where an optical irradiation means cannot be prepared in other optical wiring side, it will become possible to irradiate light towards the end of optical wiring of another side from each end of different optical wiring, and to form a core part. Therefore, it is possible to irradiate light towards the end of optical wiring of another side from each end of different optical wiring, and to form a core part, without receiving most restrictions in optical wiring, the composition of optical parts, etc. according to the formation method of an optical waveguide present invention of the third group, and an optical waveguide of the stable form which connects between different optical wiring can be formed certainly, without working highly precise positioning. The same thing as the optical wiring which constitutes the optical wiring connection object of invention of the first of present invention of the first group as said optical wiring etc. is mentioned. In addition, flat-ized processing may be performed to the facet, and, as for the optical wiring used by present invention of the third group, especially facet processing does not need to be performed. Moreover, in this specification, said optical wiring and light used in case formed an optical waveguide performs optical communications are also made transmission light. In present invention of the third group, an optical reflective means will not be especially limited, if it is a means by which the light irradiated using said optical irradiation means can be reflected. Amirror, an optical filter, etc. can be mentioned as said optical reflective means. Moreover, it is possible to prepare combining a diffraction lattice, a prism, a one-way mirror, a lens, etc., or to prepare combining them, and a mirror and an optical filter, and to also make it function as an optical reflectivemeans. In these, it is desirable to use a mirror or an optical filter. It is because a core part can be more certainly formed from each end which different optical wiring faced since the light which a manufacturing process did not become complicated and was irradiated using said optical irradiation means can be reflected with high reflectance.

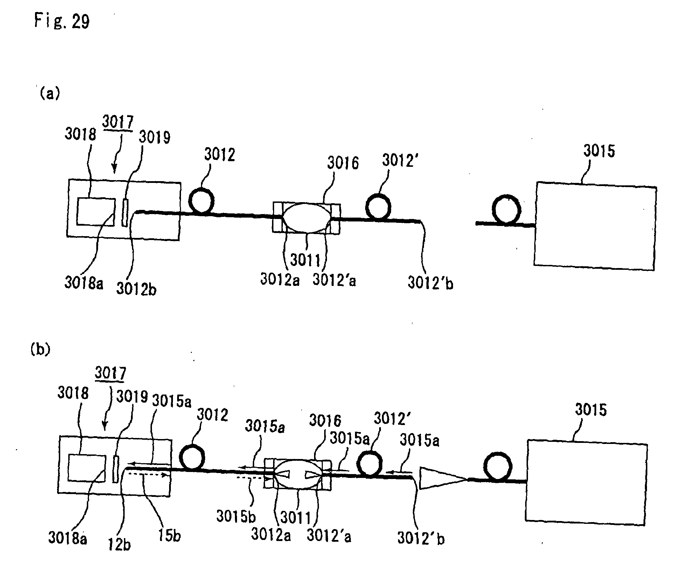

Hereafter, the formation method of an optical waveguide present invention of the third group is explained, referring to a drawing. In addition, in the following explanation, it sets to the formation method of an optical waveguide present invention of the third group. Although the method using a mirror as an optical reflective means is considered also as the first formation method of present invention of the third group and the method using a filter as an optical reflective means is explained as being called the second formation method of present invention of the third group The formation method of an optical waveguide present invention of the third group is good also as using any of the optical reflective means which it is not limited to the these firsts and second formation methods, and was mentioned above. First, the first formation method of present invention of the third group is explained. Fig. 29 (a) and (b) are the outline figures for explaining an example of the first formation method of present invention of the third group. (1) First, as shown in Fig. 29 (a), arrange an optical fiber 3012 and 3012' and arrange the optical irradiation means 3015 and a mirror 3019 further. Specifically, an optical fiber 3012 and 3012' are arranged so that each end 3012a of an optical fiber 3012 and 3012' and 3012' a may face each other. About especially the distance between the ends (end 3012a, 3012' a) where different optical wiring (an optical fiber 3012, 3012') faced each other at this time, although not limited, it is desirable to set up in consideration of the intensity of light irradiated using the optical irradiation means 3015, composition of a photosensitive composite, etc. within limits bywhich sufficient catoptric light is obtained from the mirror 3019 which is an optical reflective means. In addition, about an optical irradiation means, an optical reflective means, and a photosensitive composite, it will explain in full detail later. Moreover, the optical parts 3017 which equipped with the light receiving element 3018 the end 3012b side which has not faced optical fiber 3012' among the end are formed in the optical fiber 3012. Furthermore, between end 3012b and light receiving face 3018a of the light receiving element 3018, dozens of micrometers - about several mm clearance is prepared so that it may originate in heat expansion of an optical fiber 3012 and the light receiving element 3018 may not be damaged. And the mirror 3019 which is an optical reflective means is formed in clearance which established the optical irradiation means 3015 and was further prepared in the end 3012'b side which has not faced an optical fiber 3012 among the ends of optical fiber 3012' between end 3012b of an optical fiber 3012, and light receiving face 3018a of the light receiving element 3018. Said optical irradiation means will not be especially limited, if it is a means to irradiate the light which can stiffen a photosensitive composite while being able to irradiate light towards the end of other optical wiring (optical fiber 3012) from the end of optical wiring (optical fiber 3012' ) of the above 1. What is necessary is just to suppose it that a means to irradiate the light of the wavelength of an ultraviolet ray domain is established that what is necessary is just to choose suitably in consideration of composition of a photosensitive composite etc., if a means to irradiate the light which can stiffen said photosensitive composite is a composite which has photosensitivity in an ultraviolet ray domain. Moreover, a high-pressure mercury lamp etc. can be used as a means to irradiate the light of the wavelength of an ultraviolet ray domain. Moreover, a metal halide lamp, a xenon lamp, laser, etc. can be used. In addition, about a photosensitive composite, it mentions later. Moreover, among the ends where different optical wiring has not faced each other, when of one the luciferin child is prepared in the end side of optical wiring, it is also possible to operate said luciferin child as an optical irradiation means. At this time, said luciferin child needs to irradiate the light which can stiffen a photosensitive composite like the optical irradiation means mentioned above. As said luciferin child, LD (semiconductor laser), DFB-LD (distribution return type-semiconductorlaser), Light Emitting Diode (light emitting diode) , etc. can be mentioned. Moreover, as a method of carrying out incidence of the light to optical wiring of 1 using said optical irradiationmeans If it is possible to carry out incidence of the light to the end of other optical wiring and the end which has not faced each other among the ends of optical wiring of one It is also possible to use the method of carrying out incidence of the light indirectly through not the thing limited to the method of carrying out direct incidence of the light to the end of other optical wiring and the end which has not faced each other among the ends of optical wiring of one but a mirror, a guide, etc. Moreover, especially as a mirror prepared as an optical reflective means, it is not limited and all the reflective mirrors (for example, aluminum mirror etc.) that do not make light penetrate, the mirror in which only the light of the wavelength within the limits of specification is reflected can be mentioned. Moreover, it is possible to use the laser mirror which has high reflectance to the light of specific wavelength, such as laser light. As reflective side form of said mirror, a plane, concave, etc. can be mentioned, and when the reflective side form of a mirror is concave, the concave may be a surface of a sphere, and may be a non-surface of a sphere.

Moreover, as for the reflectance of said mirror, it is desirable that it is 20% or more. It is because the effect of present invention of the third group can fully be acquired since a core part can be efficiently formed from both of ends where different optical wiring faced each other. In addition, the reflectance of said mirror is a value over the wavelength of light irradiated using said optical irradiation means. Moreover, when preparing as a mirror all the reflective mirrors mentioned above, preparing free desorption is desirable. It is because said mirror can be removed after ending formation of an optical waveguide. When preparing the mirror which the light irradiated using an optical irradiation means as a mirror can be reflected mirror on the other hand, and can make transmission light penetrate, you may prepare free desorption , and may fix and prepare. It is because it is not necessary to remove said mirror even if it is in the state which prepared said mirror after ending formation of an optical waveguide, since transmission light is not reflected. Moreover, in the first formation method of present invention of the third group, the position in which a mirror is prepared is not limited between light receiving face 3018a of the light receiving element 3018, and end 3012b of an optical fiber 3012, as shown in Fig. 29. It is good also as forming in the arbitrary positions of optical wiring the slit which divides a core, and inserting a mirror in this slit. Furthermore, both end 3012a of anoptical fiber 3012 and 3012' and 3012' a are immersed into the photosensitive composite 3011 by applying the photosensitive composite 3011 so that an optical fiber 3012 and the end which 3012' faced may be surrounded etc. The same thing as the photosensitive composite used by invention of the second of present invention of the first group as said photosensitive composite etc. can be used. Moreover, although it is desirable that it is an organic composite as for the photosensitive composite used for the formation method of an optical waveguide present invention of the third group, said photosensitive composite may be an inorganic composite which consists of what is not limited to an organic composite and doped germanium, P, etc. to quartz. In said photosensitive composite, the particle may be contained further. By forming an optical waveguide using the photosensitive composite containing a particle, adjustment of a heat expansion coefficient can be aimed at between optical wiring and an optical waveguide. In addition, the same thing as the particle contained in the photosensitive composite used by the formation method of an optical waveguide present invention of the second group as said particle etc. is mentioned. The form of said particle, particle diameter, the amount of combination, etc. are the same as that of the particle contained in the photosensitive composite used by the formation method of an optical waveguide present invention of the second group. Moreover, since the core part is formed in gradually from the an optical waveguide side by the formation method of an optical waveguide present invention of the third group according to the irradiated course of light, as for said photosensitive composite, it is desirable that it is that to which the optical refractive index becomes higher than hardening before after hardening. It is because it will glare intensively from a tip and an optical waveguide according to the course of light can be formed more certainly, being shut up in the core part in which the light irradiated through optical wiring when an optical refractive index became high after hardening was formed. In order to form a core part in the state where the end of optical wiring was flooded with the photosensitive composite, by the formation method of an optical waveguide present invention of the third group, as for the minimum of the optical refractive index after hardening of this photosensitive composite, it is desirable that it is 90% of the optical refractive index of the core of said optical wiring, and, as for the maximum, it is desirable that it is 110%. It is because the core part which was excellent with connection nature with this optical wiring can be formed if the photosensitive composite which can form the core part which has the optical refractive index of said range is used. As for the minimum of the optical refractive index after hardening of said photosensitive composite, it is more desirable that it is 95% of the optical refractive index of the core of saidoptical wiring, and it is still more desirable that it is 98%. On the other hand, as for the maximum, it is more desirable that it is 105% of the optical refractive index of the core of said optical wiring, and it is still more desirable that it is 102%.

Therefore, the quality of the material of the core of said optical wiring is pure silica glass, and when the optical refractive index nD is about 1.46, it is desirable to use that whose optical refractive indicees nD after hardening are about 1.31 - abbreviation 1.61 as said photosensitive composite. In addition, although optical refractive indicees, such as resin used for optical wiring or an optical waveguide, change depending on the wavelength, the ratio (optical refractive index of the core of the optical refractive index optical wiring of the core part of an optical waveguide) hardly changes in an ultraviolet ray domain - near infrared rays domain. Moreover, as for the minimum, it is desirable that it is 90% of the optical refractive index of the core of said optical wiring, the optical refractive index of the core part before hardening, i.e., the optical refractive index of said photosensitive composite itself, has 95 more desirable%, and 98% is still more desirable. On the other hand, as for the maximum, it is desirable that it is 110%, it is more desirable, and is 102% of 105% of still more desirable. Thus, by the formation method of an optical waveguide present invention of the third group, although it is desirable to use it, choosing the photosensitive composite which has the optical refractive index of the range described above after hardening, even if it is a photosensitive composite used as the optical refractive index besides said range, it can be used, being able to adjust the optical refractive index. Moreover, when adjusting the optical refractive index of a photosensitive composite, it is desirable to adjust so that the optical refractive index of the core part before and behind hardening may become said range here. The method explained by invention of the second of present invention of the first group as a method which adjusts the optical refractive index of said photosensitive composite, and the same method, i.e., the method of adjusting molecule refraction and molecular volume, can be used. In addition, the definition of the above "the optical refractive index of the core of optical wiring" is the same as that of present invention of the second group. So that each end of different optical wiring by performing the process of the above (1) may be immersed in for face and both the ends that faced each other at least may be immersed into a photosensitive composite can arrange said optical wiring, and further, while establishing the optical irradiation means for irradiating light towards the end of other optical wiring at the optical wiring side of 1 from the end of optical wiring of the above 1 The optical reflective means for reflecting the light which used said optical irradiation means and irradiated it at the optical wiring side of above others can be established.

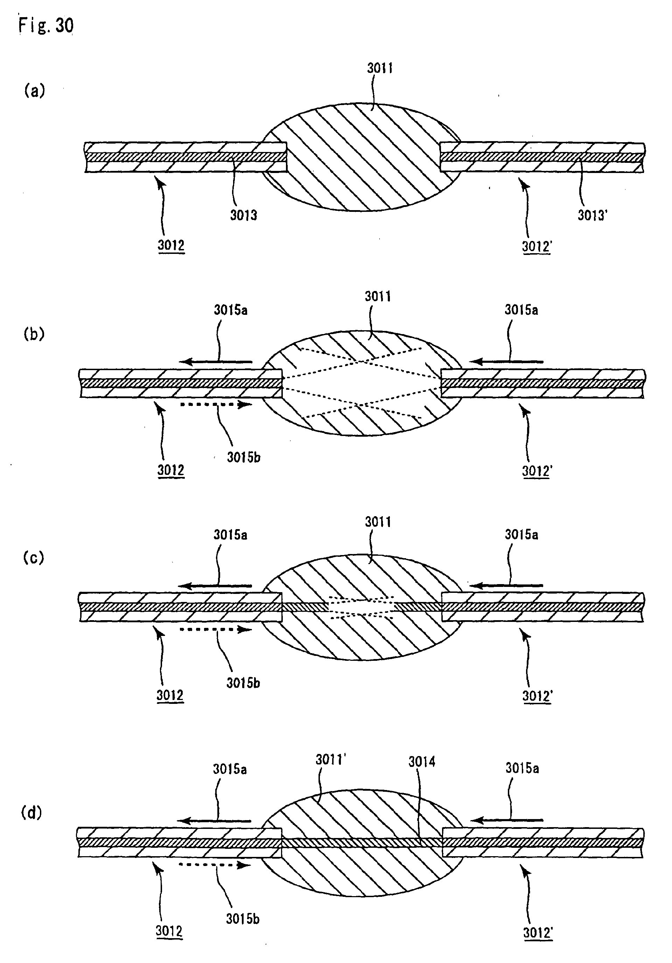

(2) Next, reflect the light which glared and irradiated light from end 3012'a of optical fiber 3012' by the mirror 3019 which is an optical reflective means using the optical irradiation means 3015 (see Fig. 29 (b)). Consequently, a core part can be formed from each end 3012a which an optical fiber 3012 and 3012' faced, and 3012'a. Specifically, optical (irradiation light) 3015a irradiated using the optical irradiation means 3015 is irradiated towards end 3012a of an optical fiber 3012 from end 3012' a of optical fiber 3012' through optical fiber 3012'. Thereby, the core part is formed from end 3012'a. Moreover, through an optical fiber 3012, irradiation light 3015a is irradiated from end 3012b of an optical fiber 3012 to a mirror 3019, and is reflected by the mirror 3019. Optical (catoptric light) 3015b reflected by the mirror 3019 is irradiated from end 3012a of an optical fiber 3012 through an optical fiber 3012. Thereby, the core part is formed from end 3012a. Fig. 30 (a) - (d) is a schematic diagrams for describing signs that the core part which connects between different optical fibers by the formation method of the first an optical waveguide mentioned above is formed. First, by performing the process of (1) mentioned above, as shown in Fig. 30 (a), an optical fiber 3012 and 3012' are arranged so that both end 3012a which each end 3012a of an optical fiber 3012 and 3012' and 3012'a faced each other, and faced each other at least, and 3012'a may be immersed into the photosensitive composite 3011. In addition, 3013 and 3013' is the core of an optical fiber 3012 and 3012' among a figure, respectively. Next, perform the process of (2) mentioned above and the optical irradiation means 3015 (not shown) is used. When light is irradiated towards end 3012a of an optical fiber 3012 and light makes it reflect from end 3012' a of optical fiber 3012' by the mirror 3019 which is an optical irradiation means As shown in Fig. 30 (b), while irradiating end 3012'a to irradiation light 3015a of optical fiber 3012', end 3012a to catoptric light 3015b of an optical fiber 3012 is irradiated. Thus, by irradiating light from each end 3012a of an optical fiber 3012 and 3012', and 3012'a, according to the course of light, the photosensitive composite 3011 can harden gradually from end 3012a and 3012' a, and can form the core part of an optical waveguide which connects an optical fiber 3012 and optical fiber 3012' (see Fig. 30(c) - (d)). Moreover, in order according to the formation method of the first an optical waveguide to irradiate light from each of the end where a different optical fiber faced each other like the method of forming a core part by the bidirectional irradiation explained while referring to Fig. 68 and to form a core part, even if it is the case where optical axis of a different optical fiber has not agreed completely, the core part which connects a different optical fiber can be formed.

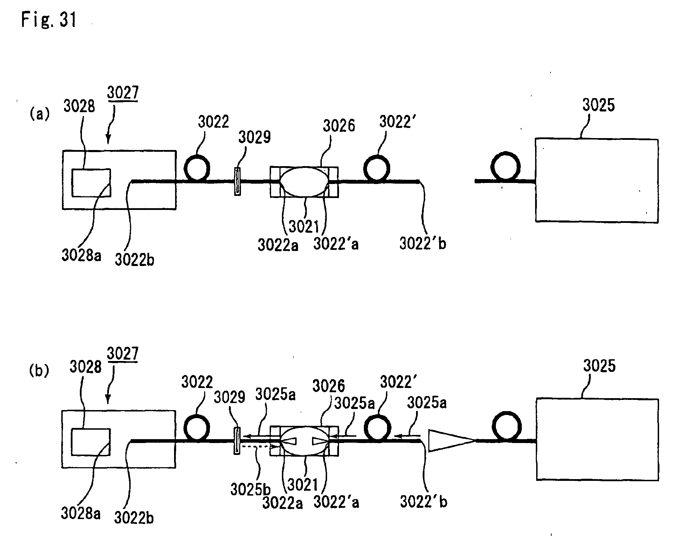

Next, the second formation method of present invention of the third group is explained. Fig. 31 (a) and (b) are the outline figures for explaining an example of the second formation method of present invention of the third group. (1) First, as shown in Fig. 31 (a), arrange an optical fiber 3022 and 3022' and arrange the optical irradiation means 3025 and the optical filter 3029 further. Specifically, like the formation method of the first an optical waveguide mentioned above, an optical fiber 3022 and 3022' are arranged and the optical filter 3029 which is an optical reflective means is formed in an optical fiber 3022 side so that each end 3022a of an optical fiber 3022 and 3022' and 3022'a may face each other. The optical parts 3027 which equipped with the light receiving element 3028 the end 3022b side which has not faced optical fiber 3022' among the end are formed in the optical fiber 3022. In addition, by the second formation method of present invention of the third group, you may form beforehand the optical filter 3029 which is an optical reflective means in an optical fiber 3022 side. If it is possible to reflect the light irradiated using an optical irradiation means as said optical filter, it is not limited especially and LWPF (long wave long region passage type filter), BPF (zone passage type filter), SWPF (short wavelength region passage type filter) , etc. can be used. Moreover, these can also be combined and used. When using the optical filter which cannot make transmission light penetrate at this time, it is desirable to prepare said optical filter free desorption. It is because said optical filter can be removed after ending formation of an optical waveguide. On the other hand, when using the optical filter which can make transmission light penetrate, said optical filter may be prepared free desorption, and may be fixed and prepared. It is because it is not necessary to remove said optical filter even if it is in the state which prepared said optical filter after ending formation of an optical waveguide, since transmission light is not reflected. A dielectric multilayer film filter etc. can be mentioned as such an optical filter. Especially said dielectric multilayer film filter is not limited, and dielectric multilayer film filters marketed, such as a filter which constituted thin films, such as silica and titania, over two or more layers on substrates, such as silica glass, can be used for it. Such a dielectric multilayer film filter can form in the arbitrary positions of optical wiring the slit which divides a core, and can prepare it by inserting in this slit etc. Moreover, said dielectric multilayer film filter can also be directly formed in the end of optical wiring by not considering as individual parts and making the end of optical wiring not necessarily carry out the vacuum evaporation of the thin films, such as silica and titania, over two or more layers. At this time, said dielectric multilayer film filter may be formed in the end which faced other optical wiring, and may be formed in the end which has not faced other optical wiring. in addition as an optical filter FAI a bug it is also possible to use a rating filter above-mentioned FAI a bug a rating filter irradiates an ultraviolet ray coherent wiring optical of the quartz system which doped germanium etc. and can be formed by the method of producing periodic optical refractive-index abnormal conditions in the direction of Nagate of this optical wiring etc. Moreover, as for the reflectance of the optical filter mentioned above, it is desirable that it is 20% or more. It is because the effect of present invention of the third group can fully be acquired since a core part can be efficiently formed from both of ends where different optical wiring faced each other. In addition, the reflectance of said optical filter is a value over the wavelength of light irradiated using said optical irradiation means. Moreover, the optical irradiation means 3025 is formed in the end 3022'b side which has not faced an optical fiber 3022 among the ends of optical fiber 3022' like the first formation method of present invention of the third group mentionedabove. Inaddition, about an optical irradiation means, the same thing as the first formation method of present invention of the third group can be used. Furthermore, both end 3022a of an optical fiber 3022 and 3022' and 3022'a are immersed into the photosensitive composite 3021 by applying the photosensitive composite 3021 so that an optical fiber 3022 and the end which 3022' faced may be surrounded like the first formation method of present invention of the third group mentioned above etc. The thing same as said photosensitive composite as the first formation method of present invention of the third group mentioned above can be used.

So that each end of different optical wiring (an optical fiber 3022, 3022') by performing the process of the above (1) may be immersed in for and both the ends that faced each other at least may be immersed into a photosensitive composite Can arrange said optical wiring, and further, while establishing the optical irradiation means for irradiating light towards the end of other optical wiring at the optical wiring side of 1 from the end of optical wiring of the above 1 The optical reflective means for reflecting the light which used said optical irradiation means and irradiated it at the optical wiring side of above others can be established. (2) Next, reflect the light which glared and irradiated light from end 3022a of optical fiber 3022' with the optical filter 3029 which is an optical reflective means using the optical irradiationmeans 3025 (see Fig. 31 (b)). Consequently, a core part can be formed from each end 3022a which an optical fiber 3022 and 3022' faced, and 3022'a. Specifically, optical (irradiation light) 3025a irradiated using the optical irradiation means 3025 is irradiated towards end 3022a of an optical fiber 3022 from end 3022'a of optical fiber 3022' through optical fiber 3022'. Thereby, the core part is formed from end 3022'a. Moreover, irradiation light 3025a is irradiated through an optical fiber 3022 to the optical filter 3029 prepared in the optical fiber 3022 side, and is reflected with the optical filter 3029. Optical (catoptric light) 3025b reflected with the optical filter 3029 is irradiated from end 3022a of an optical fiber 3022. Thereby, the core part is formed from end 3022a. About signs that the core part which connects between different optical fibers by the second formation method of present invention of the third group is formed, it is the same as that of the first formation method of present invention of the third group shown in Fig. 30, and since it is already explanation settled, explanation here is omitted. Moreover, according to the second formation method of present invention of the third group, even if it is the case where optical axis of a different optical fiber has not agreed completely like the first formation method of present invention of the third group, the core part which connects a different optical fiber can be formed. By the formation method of an optical waveguide present invention of the third group, an optical waveguide which consists of a core part which connects different optical wiring by the first formation method mentioned above, the second formation method, etc., and a non-hardened cladding part can be formed. However, a non-hardened cladding part is usually a liquid, and a core part tends to flow in this state, and it is very unstable as an optical waveguide. Therefore, after forming said core part, it is desirable to form a solid cladding part by performing hardening processing to the cladding part which is not hardened above-mentioned. Then, after forming said core part, it is possible by irradiating light at a non-hardened cladding part to solid-ize the whole system. Since a core part and a cladding part will have the almost same optical refractive index and it becomes impossible to confine light in a core part by hardening of a cladding part when using what contains only one kind of photosensitive composite as saidphotosensitive composite, it will stop however, functioning as an optical waveguide. Therefore, it is desirable to consider as stable an optical waveguide which the whole system solid-ized by forming the cladding part solid-ized using the following methods. In forming said cladding part, after removing the photosensitive composite which is not hardened of the circumference after forming said core part, then flooding said core part with another resin composite (you may be a photosensitive composite and may not be a photosensitive composite), a stable cladding part can be formed by performing hardening processing to this resin composite. Handling a method a core part tends to flow, and a core part very carefully in case this method removes a photosensitive non-hardened composite since the form is very unstable. Moreover, it is desirable to remove the photosensitive composite which is not hardened of the circumference, pulling a core part by raising the core part connected to this optical wiring from a photosensitive non-hardened composite, pulling optical wiring etc., in case a photosensitive non-hardened composite is removed, as mentioned above. It is in the state where the form of a core part was stabilized, and is because the photosensitive composite which is not hardened of the circumference is removable. Then, with the state held where the core part was pulled, said core part can be flooded with another resin composite, and an optical waveguide which consists of a core part of the stable form and a stable cladding part can be formed by performing hardening processing to this resin composite.

Moreover, the method of forming a core part and a cladding part beforehand using the photosensitive composite which mixed the resin for core formation and the resin for clad formation as the method explained by the formation method of an optical waveguide invention of the second present invention of the first group and the same method, i. e., a photosensitive composite, in addition to said method can also be used. Here, the same photosensitive composite as what was used by invention of the second of present invention of the first group as a photosensitive composite containing said resin for core formation and said resin for clad formation can be used. In present invention of this third group, although the polymerization of the resin for core formation is possible in case light is irradiated into a photosensitive composite by the bidirectional irradiation which used the reflectivemeans By irradiating the light of substantial almost impossible intensity, the polymerization of the resin for clad formation While only the resin for core formation hardens preferentially and the core part according to the course of the light is formed like the case of invention of the second of present invention of the first group, it will be in the state where the photosensitive composite the circumference of whose is not hardened surrounded. Then, stable clad can be formed in the circumference of a core part by hardening the resin for clad formation. In addition, also in the formationmethod of an optical waveguide present invention of the third group, like invention of the second of present invention of the first group, in case the resin for clad formation is hardened, the non-hardened resin for core formation may harden. While excelling in connection nature with optical wiring by using such a formation method, an optical waveguide which the whole system solid-izes and is excellent in stability can be formed. Moreover, when forming a cladding part by the method mentioned above, it is be while pulling a core part from the both ends, or desirable to form a cladding part, maintaining the state where the both ends of a core part were pulled.

As mentioned above, when an optical waveguide which consists of a core part which connects different optical wiring, and a non-hardened cladding part is formed, a core part tends to flow and the form is very unstable. However, the form can be stabilized by pulling a core part from the both ends. Therefore, where the form of a core part is stabilized, an optical waveguide which form stabilized more can be formed by forming a cladding part. Although the method which is immersed in the endof different optical wiring in a photosensitive composite here, and forms an optical waveguide was explained At this time, the core part directly attached in the luminescence side of optical parts can be formed by replacing with optical wiring of 1, using optical elements, such as a luciferin child, immersing the luminescence side (luminescence part) into a photosensitive composite, or plastering this luminescence side with a photosensitive composite. In this case, a luciferin child needs to irradiate the light which can stiffen a photosensitive composite, as mentioned above. Moreover, the core part directly attached in light receiving face of optical parts can be formed by replacing with optical wiring of 1, using optical elements, such as a light receiving element, immersing the light receiving face (light receiving part) into a photosensitive composite, or plastering this light receiving face with a photosensitive composite. In this case, a light receiving element needs to be what can reflect the light which the light receiving face irradiated from the optical irradiation means. At this time, said light receiving face will function as an optical reflective means. Moreover, the core part which connects a light receiving element with optical wiring can also be formed by carrying out the vacuum evaporation of the optical filter to light receiving face. Furthermore, it is also possible to form the core part which connects the luminescence side of the optical parts of 1 and light receiving face of other optical parts by replacing with different optical wiring and using the luciferin child who irradiates the light which can stiffen aphotosensitive composite, and the light receiving element on which the light receiving face functions as an optical reflective means. Thus, with the optical wiring in which the core part was attached directly, or optical parts, positioning is unnecessary between an optical waveguide (core part), optical wiring, etc.

An optical waveguide according to the first aspect of the fourth group of the prevent invention will be described.

The optical waveguide according to the first aspect of the fourth group of the present invention is an optical waveguide comprising a core part and a cladding part, each of both ends thereof being connected to optical wirings or optical components, respectively,

wherein

both ends of at least said core part are pulled.

In the optical waveguide according to the first aspect of the fourth group of the present invention, since the both ends of the core part are pulled, a shape of the core part is stabilized, and an optical loss in the optical waveguide can be reduced.

Further, a force for pressing the core part and each optical wiring or optical component against each other is not applied, damage, deformation or the like does not occur to an end surface of the optical waveguide and those of the optical wirings and the like connected to the both ends of the optical wiring, respectively. Therefore, a connection loss resulting from diffuse reflection of a transmitted light, radiation of the light to an outside, and the like is less likely to occur.

Therefore, the optical waveguide according to the first aspect of the fourth group of the present invention can realize low connection loss between the different optical wirings and the like.

"The both ends are pulled" means herein a state in which a tensile stress is generated in at least the core part by pulling the both ends of at least the core part in a direction substantially equal to or a direction opposite to a progress direction of the transmitted light on the optical waveguide (which direction will be generically referred to as "direction substantially parallel to the progress direction of the transmitted light" hereinafter). This tensile stress is a force generated at least on the core part due to the fact that the optical wirings and the like connected to the both ends are pulled.

Accordingly, a state in which the core part is pulled in the direction substantially parallel to the progress direction of the transmitted light by a gravity and the like also corresponds to "the both ends are pulled" in the present invention. On the other hand, a state in which the both ends of the core part are pulled in a direction other than the direction substantially parallel to the progress direction of the transmitted light, e.g., a direction substantially perpendicular to the progress direction of the transmitted light, does not correspond to "the both ends are pulled" according to the present invention.

It is also assumed herein that examples of the optical waveguide according to the first aspect of the fourth group of the present invention includes an optical waveguide in which one end of at least the core part is fixed and in which only the other end of the core part is pulled. Even if only the other end is pulled, the tensile stress applied to the core part is similar in state to that applied to the core part the both ends of which are pulled, so that the low connection loss between the different optical wirings and the like can be realized.

Examples of the optical component include optical elements such as light receiving elements, e.g., a PD (photodiode) and anAPD (avalanche photodiode) , and light emitting elements, e.g., an LD (a semiconductor laser), a DFB-LD (distributed feedback-type semiconductor laser) , and an LED (light emitting diode), and optical parts such as a lens, a mirror, a prism, and a filter.

Examples of the optical wiring include that similar to the optical wiring that constitutes the optical wiring connection body according to the first aspect of the first group of the present invention. An end of each optical wiring used according to the fourth group of the present invention may be either subjected to a planarization processing or not specially subjected to the planarization processing.

The configuration of the optical waveguide according to the first aspect of the fourth group of the present invention will next be described.

A length of the optical waveguide according to the first aspect of the fourth group of the present invention is not limited to a specific length. However, the length is desirably set in light of a material for the optical waveguide and the like. Specifically, the length of the optical waveguide is normally about 50 to 5000 μm, desirably about 100 to 3000 μm.

If the length falls within the above-mentioned range, it is possible to sufficiently acquire the advantage of the first aspect of the fourth group of the present invention in that the shape of the core part is stabilized by pulling the both ends of the core part.

If the length of the optical waveguide is less than 50 μm, then the optical waveguide is too short, and it is almost unlikely that the shape of the optical waveguide is made unstable. Therefore, the advantage of the first aspect of the fourth group of the present invention, that is, the shape of the core part is stabilized by pulling the both ends of the core part may not possibly be able to be sufficiently acquired. If the length exceeds 5000 μm, then the optical waveguide is too long. Even if the both ends of the core part are pulled, it is difficult to stabilize the shape of the core part. Therefore, the advantage of the first aspect of the fourth group of the present invention, that is, the shape of the core part is stabilized by pulling the both ends of the core part may not possibly be able to be sufficiently acquired.

In the optical waveguide according to the first aspect of the fourth group of the present invention, a cross-sectional shape of the core part is not limited to a specific shape but examples of the cross-sectional shape include a generally complete round. The cross-sectional shape means herein a shape of a cut surface of the core part perpendicular to the progress direction of the transmitted light.

In the optical waveguide according to the first aspect of the fourth group of the present invention, a size of a cross section of the core part is not limited to a specific size. However, if the both end of the optical waveguide are connected to the respective optical wirings, the size of the cross section of the core part on each end is desirably, substantially equal to that of a cross section of the core of each optical wiring. This is because it is possible to further ensure realizing the low connection loss.

In addition, if the both ends of the optical waveguide are connected to the respective optical components such as optical elements or optical parts, and the connected optical components are light emitting elements, it is desirable that the size of the cross section of the core part on each end is substantially equal to or larger than that of a light emitting surface (light emittingportion) of each light emitting element. This is because it is possible to further ensure realizing the low connection loss.

If the connected optical components are light receiving elements, it is desirable that the size of the cross section of the core part on each end is substantially equal to or smaller than that of a light receiving surface (light receiving portion) of each light receiving element. This is because it is possible to further ensure realizing the low connection loss.

It is noted that the magnitude of the cross section of the core part is not always fixed. Accordingly, the shape of the core part is not limited to a specific shape but may be partially thicker or gradually thicker from one end to the other end.

It is desirable, however, that the shape of the core part according to the first aspect of the fourth group of the present invention is such that a progress direction of a transmitted light incident from the optical wiring or optical component connected to one end of the core part, a progress direction of the transmitted light on the optical waveguide, and a progress direction of a transmitted light emitted to the optical wiring or optical component connected to the other end are equal. Specifically, if the optical waveguide connects optical wirings each having a cylindrical core to each other, the shape of the core part of the optical waveguide is desirably cylindrical. This is because the optical loss in the optical waveguide can be reduced.

Amaterial and the like for the optical waveguide according to the first aspect of the fourth group of the present invention will be described.

The material for the optical waveguide according to the first aspect of the fourth group of the present invention is not limited to a specific material. However, an organic material is desirable, and it is particularly desirable that the core part consists of an organic material. If the core part consists of an organic material, the both ends of the core part are pulled, thereby facilitating stabilizing the shape of the core part and making it possible to sufficiently acquire the advantage of the first aspect of the fourth group of the present invention.

Specific examples of the organic material include resin compositions which have a photosensitivity, each of which contains a resin component such as PMMA (polymethyl methacrylate), PMMA deuteride, PMMA deuteride fluoride, or PMMA fluoride, and in each of which a monomer, a photo polymerization initiator, an intensifier, a solvent, and the like is blended with the resin component if it is necessary; and resin compositions in each of which various additives are blended with a resin component such as epoxy resin. Examples of the photosensitive composition also include compositions each of which contains, as a photosensitized resin component, epoxy resin, epoxy resin fluoride, polyolefinresin, silicone resin such as silicone resin deuteride, resin consisting of benzocyclobutene, and the like, and each of which also contains various additives, solvents, and the like such as a monomer, a photo polymerization initiator, and an intensifier if it is necessary.

In the present specification, the resin compositions particularly having the photosensitivity among the resin compositions will be referred to as photosensitive compositions.

As the resin composition, the photosensitive composition is desirable. It is particularly desirable that the core part consists of the photosensitive composition. The use of such a photosensitive composition is suitable for forming the optical waveguide according to the first aspect of the fourth group of the present invention, particularly suitable for forming the core part. Accordingly, as the organic material, the same compositions as the photosensitive compositions used according to the second aspect of the first group of the present invention are available.

The core part may further contain particles. The optical waveguide containing such particles enables matching the thermal expansion coefficient of the optical waveguide to that of each optical component when the optical waveguide is directly attached to the optical component or the optical wiring.

Specific examples of the particles may include the same as those contained in the photosensitive compositions used in the optical waveguide formation method according to the second group of the present invention.

Further, the shape and diameter of each particle are the same as those of the particle contained in the photosensitive compositions used in the optical waveguide formation method according to the second group of the present invention.

If the core part contains particles, a blending ratio of the particles after curing is desirably 10 to 80% by weight, more desirably 20 to 70% by weight. If the blending ratio of the particles is less than 10% by weight, an advantage of blending the particles cannot be greatly acquired. If it exceeds 80% by weight, transmission of the optical signal is often hampered.

In the optical waveguide according to the first aspect of the fourth group of the present invention, the cladding part is not limited to a specific one if it functions as means for constraining a light guided into the core part by the core part. The cladding part may consist of a resin composition. If a gas such as the air is present around the core part, the gas functions as the cladding part.

It is however desirable that the cladding part consists of the resin composition in the optical waveguide according to the first aspect of the fourth group of the present invention.

As described above, even if the air is present around the core part, the core part made of one of the above-mentioned materials has normally higher optical refractive index than that of the air. The core part can therefore function as the optical waveguide. Nevertheless, by forming the cladding part around the core part, it is possible to further ensure transmitting the optical signal.

According to the fourth group of the present invention, the resin composition is a composition in which various additives are blended with the resin component if it is necessary. Needless to say, the photosensitive composition is assumed to be one of resin composition.

Further, if the material for the core part is the photosensitive composition, and the refractive index of the photosensitive composition after being cured is higher than that of the photosensitive composition before being cured, then a part of the photosensitive composition is cured to form the core part, and the uncured photosensitive composition remaining around the core part can function as the cladding part. In this case, however, the core part has fluidity, which is undesirable for reliability of the optical waveguide. It is therefore desirable that the claddingpart is cured and thereby stabilized.

Amaterial for the cladding part is not limited to a specific material as long as an optical refractive index of the material is lower than that of the core part. Specific examples of the material for the cladding part include the same as those for the core part.

In addition, a shape of the cladding part is not limited to a specific shape. Examples of an outside shape of the cladding part include a cylindrical shape and a prismatic shape.

The cladding part may contain the above-mentioned particles similarly to the core part.

In the optical waveguide according to the first aspect of the fourth group of the present invention, a magnitude of a force forpullingboth ends of at least the core part is desirably set in a range in which the optical waveguide is not broken, or the optical waveguide and the optical wirings and the like connected to the both ends of the optical waveguide are not disconnected fromone another, according to the thickness, length, material or the like of the optical waveguide. In addition, the magnitude of the force for pulling the both ends of at least the core part is not necessarily always constant.

The optical waveguide according to the first aspect of the fourth group of the present invention comprises means for maintaining a state where at least both ends of the core part are pulled. Desirably, the means is integrally formed with the optical waveguide. It is therefore possible to easily move the optical waveguide in the state where the both ends of the core part are pulled.

The optical waveguide according to the first aspect of the fourth group of the present invention may not always include the above-mentioned means. If the optical wirings and the like connected to the optical waveguide are disposed in a device such as an optical high precision slide base (e.g., an X stage) and the like and pulled by the device to thereby pull the both ends of the core part, then the optical waveguide serves as the optical waveguide according to the first aspect of the fourth group of the present invention although the optical waveguide does not include the above-mentioned means. This is because the both ends of the core part are pulled. In this case, the optical wirings may be placed on the optical high precision slide base either directly or through amember for fixing the optical wirings such as an optical fiber fixing base.

The optical waveguide according to the first aspect of the fourth group of the present invention will next be described with reference to the drawings.

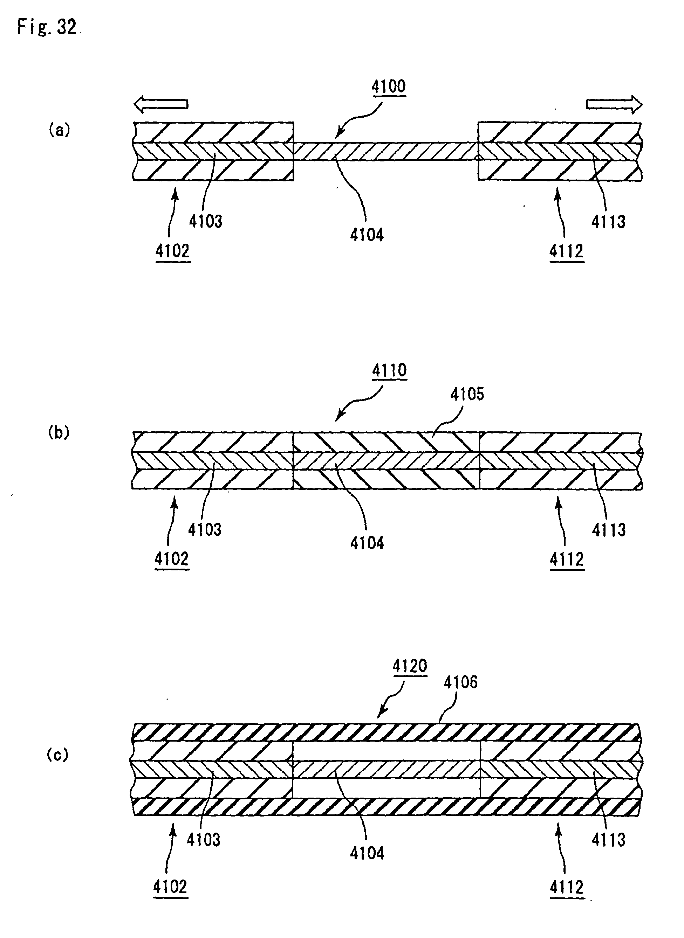

Figs. 32(a) to 32(c) are cross-sectional views schematically showing embodiments of the optical waveguide according to the first aspect of the fourth group of the present invention, respectively.

In Figs. 32, an outlined arrow indicates a direction in which a tensile force is applied.

An optical waveguide 4100 shown in Fig. 32 (a) is comprising a core part 4104 and an air cladding part (not shown). One end of the optical waveguide 4100 is connected to a core 4103 of an optical wiring 4102, and the other end thereof is connected to a core 4113 of an optical wiring 4112. The optical wirings 4102 and 4112 are placed on different devices such as optical high precision slide bases (not shown), and pulled by the corresponding devices, respectively. Since the optical wirings 4102 and 4112 are pulled by the corresponding devices in arrow directions, respectively, so that both ends of the core part 4104 of the optical waveguide 4100 are pulled.

An optical waveguide 4110 shown in Fig. 32 (b) is an optical waveguide in which a cladding part 4105 comprising the resin composition is formed around the core part 4104 of the optical waveguide 4100 shown in Fig. 32(a).

In the optical wirings 4102 and 4112, a force for pulling by the devices such as the optical high precision slide bases, respectively, is removed. However, the core part 4104 of the optical waveguide 4110 is kept in a state in which the both ends of the core part 4104 are pulled. Accordingly, the cladding part 4105 functions as means for keeping the state in which the both ends of the core part 4104 as well.

An optical waveguide 4120 shown in Fig. 32 (c) is an optical waveguide in which a coating layer 4106 which integrally coats the optical wirings 4102 and 4112 connected to both ends of the optical waveguide 4100 shown in Fig. 32(a), respectively, is formed.

In the optical wirings 4102 and 4112, a force for pulling by the devices such as the optical high precision slide bases, respectively, is removed. However, the core part 4104 of the optical waveguide 4120 is kept in a state in which the both ends of the core part 4104 are pulled. Accordingly, the coating layer 4106 functions as means for keeping the state of pulling the both ends of the core part 4104 as well.

By allowing the force for pulling the both ends of the core part to be adjustable, the optical waveguide according to the first aspect of the fourth group of the present invention can function as an On/Off switch. Namely, by intensifying the force for pulling the both ends of the core part to stabilize the shape of the core part, and by reducing an optical loss of a transmitted light, the transmitted light can be caused to pass, and the switch is turned "On". In addition, by weakening the force for pulling the both ends of the core part to make the shape of the core part unstable, and by intensifying the optical loss of the transmitted light, it is difficult to cause the transmitted light to pass, and the switch can be turned "Off".

Further, by allowing the force for pulling the both ends of the core part to be accurately adjustable, the optical waveguide according to the first aspect of the fourth group of the present invention can function as an optical attenuator.

Namely, by adjusting the force for pulling the both ends of the core part to change the shape of the core part, and by adj usting the optical loss of the transmitted light, an intensity of the transmitted light passing through the optical waveguide can be adjusted.

The optical waveguide according to the first aspect of the fourth group of the present invention can be formed by, for example, an optical waveguide formation method according to the second aspect of the fourth group of the present invention to be described later.

The optical waveguide formation method according to the second aspect of the fourth group of the present invention will be described.

The optical waveguide formation method according to the second aspect of the fourth group of the present invention comprises the steps of:

arranging different optical wirings such that
one end of one of the optical wirings substantially faces one end of the other optical wiring and at least both of the faced ends thereof are immersed in a photosensitive composition; and
irradiating light at least from one of said optical wirings to the other optical wiring, thereby forming a core part that connects said optical wirings to each other,

wherein
both ends of the core parts are pulled.

In the optical waveguide formation method according to the second aspect of the fourth group of the present invention, the core part can be formed while the both ends are connected to the respective optical wirings. Besides, since the both ends of the core part are pulled, it is unnecessary to press the optical wirings against each other and fix them to each other when connecting them, and the core part and the optical wirings are not pressed against one another as seen in the conventional art. As a result, the optical waveguide can be formed without generating a damage, a deformation, and the like on end surfaces of the optical wirings and the like. In addition, since the both ends of the core part are pulled, the core part is not fluidized and the optical waveguide including the core part having a stable shape can be obtained.

Therefore, the optical waveguide obtained by the optical waveguide formation method according to the second aspect of the fourth group of the present invention can realize low connection loss between the optical wirings connected to the optical waveguide.

In the optical waveguide formation method according to the second aspect of the fourth group of the present invention, the optical wirings are arranged such that one end of one of the optical wirings substantially faces one end of the other optical wiring, and such that at least both of the faced ends thereof are immersed in the photosensitive composition. Alternatively, optical components such as optical elements or optical parts can be employed in place of the optical wirings.

Accordingly, a light emitting element and a light receiving element may be arranged such that a light emitting surface (light emitting portion) of the light emitting element substantially faces a light receiving surface (light receiving portion) of the light receiving element, and such that at least the light emitting surface and the light receiving surface facing each other are immersed in the photosensitive composition. Further, the optical wiring and the optical part may be'arranged face to face with each other, and the optical waveguide connecting the optical wiring to the optical part may be formed.

Furthermore, "one end of one of the optical wirings substantially faces one end of the other optical wiring" means that: the different optical wirings are not necessarily arranged such that optical axes thereof are aligned with each other, that the optical axes of the different optical wirings may be deviated each other within a range in which the core part that connects the optical wirings to each other can be formed by irradiating a light from at least one of the optical wirings to the other optical wiring.

An instance of arranging the different optical wirings such that the optical axes of the optical wirings are aligned with each other will first be described. An instance in which the optical axes of the different optical wirings are deviated from each other will be described later.

Now, the optical waveguide formation method according to the second aspect of the fourth group of the present invention will be described with reference to the drawings. The formation method will be described herein while referring to Fig. 20 which is referred to when describing the optical waveguide formation method according to the second aspect of the first group of the present invention.

In the optical waveguide formation method according to the second aspect of the fourth group of the present invention, the different optical wirings are arranged such that one end of one of the optical wirings substantially faces one end of the other optical wiring, and such that at least the ends facing each other are immersed in the photosensitive composition.

Specifically, optical fibers 1012 and 1012' are arranged such that one end of the optical fiber 1012 faces one end of the optical fiber 1012', and the photosensitive composition 1011 is, for example, coated so as to surround the area between the ends of the optical fibers 1012 and 1012', thereby immersing the ends of the both optical fibers 1012 and 1012' in the photosensitive composition 1011 (see Fig. 20(a)).

Next, light for curing the photosensitive composition is irradiated from one optical fiber 1012 to the optical fiber 1012' which is arranged to face the optical fiber 1012 (see Fig. 20 (b)).

By thus irradiating the light from one optical fiber 1012. to the other optical fiber 1012', the photosensitive composition is gradually cured from the optical fiber 1012 side correspondingly to the optical path of the light, and the core part of the optical waveguide that connects the optical fiber 1012 to the optical fiber 1012' is formed (see Figs. 20 (c) and 20(d)).

In the present specification, it is defined that a cured matter grown by irradiating the light includes a semi-cured matter. Therefore, it is defined that to cure the photosensitive composition by irradiating the light also contain to semi-cure the photosensitive composition.

In the formation method for the optical waveguide that connects the two optical fibers to each other, the light is irradiated only through one of the optical fibers. Alternatively to this method, lights may be irradiated from the two optical fibers to the counterpart optical fibers, respectively. In that case, the lights may be irradiated through the two optical fibers simultaneously or alternately.

In the optical waveguide formation method according to the second aspect of the fourth group of the present invention, the type of the light irradiated when curing the photosensitive composition is not limited to a specific type of light. The light may be appropriately selected based on components of the photosensitive composition. If the photosensitive composition exhibits a photosensitivity in an ultraviolet range, light having a wavelength in the ultraviolet range may be irradiated. As a light source for irradiating the light having such a wavelength, a high pressure mercury lamp and the like can be used. Alternatively, a metal halide lamp, a xenon lamp, a laser, and the like can be used as the light source.

As can be seen, in the optical waveguide formation method according to the second aspect of the fourth group of the present invention, the core part is gradually formed from the optical wiring side corresponding to the optical path of the irradiated light.

Accordingly, the refractive index of the photosensitive composition used in the optical waveguide formation method according to the second aspect of the fourth group of the present invention after curing is desirably higher than that of the photosensitive composition before curing. By setting the optical refractive index of the curedphotosensitive composition higher, the light irradiated through the optical wiring can be intensively irradiated from a tip end thereof while the light is constrained in the formed core part. It is, therefore, possible to further ensure forming the optical waveguide corresponding to the optical path of the light.

In the optical waveguide formation method according to the second aspect of the fourth group of the present invention, a lower limit of the optical refractive index of this photosensitive composition after curing is desirably 90% of that of the core of the optical wiring and an upper limit thereof is desirably 110% so as to form the core part while one end of each of the optical wirings is immersed in the photosensitive composition.

If the photosensitive composition which can form the core part having the optical refractive index within the above-mentioned ranges is used, it is possible to form the core part more excellent in connection performance with the optical wirings.

The lower limit of the optical refractive index of the photosensitive composition after curing is more desirably 95% of that of the core of the optical wiring, most desirably 98%. The upper limit thereof is more desirably 105% of that of the core of the optical wiring, most desirably 102%.

Accordingly, if a material for the core of the optical wiring is pure quartz glass and an optical refractive index $n_D$ of pure quartz glass is about 1.46, for example, it is desirable to use the photosensitive composition the optical refractive index $n_D$ of which after being cured is about 1.31 to 1.61.

Further, the optical refractive index of the resin or the like used for the optical wirings or the optical waveguide changes depending on a wavelength. However, a ratio (of the optical refractive index of the core part of the optical waveguide to that of the core of the optical wiring) hardly changes from, for example, an ultraviolet range to a near-infrared range.

In addition, a lower limit of the optical refractive index of the core part before curing, i.e., that of the photosensitive composition and the like itself is also, desirably 90% of that of the core of the optical wiring, more desirably 95%, most desirably 98%. An upper limit thereof is desirably 110%, more desirably 105%, most desirably 102%.

As can be seen, in the optical waveguide formation method according to the second aspect of the fourth group of the present invention, it is desirable to select and use the photosensitive composition having the optical refractive index within the above-mentioned range after curing. Even if the photosensitive composition has an optical refractive index out of the above-mentioned range, the photosensitive composition can be used by adjusting the optical refractive index. If the optical refractive index of the photosensitive composition is to be adjusted, it is desirable to make adjustment so that the optical refractive indexes of the core part before and after curing fall within the respective ranges mentioned above.

As a method for adjusting the optical refractive index of the photosensitive composition, the same method as that described in relation to the second aspect of the first group of the present invention, that is, a method for adjusting a molecular refraction and a molecular volume can be used.

Incidentally, the definition of "the optical refractive index of the core of the optical wiring" is the same as that according to the second group of the present invention.

Through these steps, in the optical waveguide formation method according to the second aspect of the fourth group of the present invention, the optical waveguide comprisingthe cured core part and the uncured cladding part corresponding to the optical path of the light can be formed.

However, the uncured cladding part is normally a liquid. In this state, the core part tends to be fluidized and the optical waveguide is quite unstable.

Therefore, in the optical waveguide formation method according to the second aspect of the fourth group of the present invention, after the core part is formed, the both ends of the core part are pulled to stabilize the shape of the core part.

Examples of a method for pulling the both ends of the core part includes a method including steps of: mounting different optical wirings on separate devices such as optical high precision slide bases, respectively; forming the core part that connects the different optical wirings to each other while mounting them; and pulling the different optical wirings by the respective devices. The number of devices such as optical high precision slide bases is not always two but may be one. In the latter case, one of the optical wirings may be placed and fixed onto a base for fixing the one optical wiring, the other optical wiring may be placed on the device such as the optical high precision slide base, and the other optical wiring may be pulled by the device. As the method for pulling the both ends of the core part, a method using gravity as a force for pulling the core part can be adopted. Namely, after forming the core part that connects the different optical wirings to each other, one of the optical wirings is raised and the core part is suspended in a vertical direction, whereby the both ends of the core part can be pulled.

It is noted that even if one of the optical wirings is fixed and only the other optical wiring is pulled, or even if one of the optical wirings is raised and the core part is suspended in the vertical direction as described above, the both ends of the core part are pulled.

The magnitude of the force for pulling the core part is desirably set based on the thickness, length, material, and the like of the optical waveguide described above. Specifically, the force is desirably set so that the length of the core part extends by about 5 to 50%. This force is not always constant.

In the optical waveguide formation method according to the second aspect of the fourth group of the present invention, after or while pulling the core part by one of the above-mentioned methods, the stable cladding part is desirably formed around the core part.

The reason is as follows. By forming the stable cladding part around the core part after or while pulling the both ends of the core part, the optical waveguide in which the state of pulling the both ends of the core part is kept can be formed.

Accordingly, in the optical waveguide thus obtained, even after the force for pulling the optical wirings connected to the both ends of the optical waveguides, respectively, is removed, the state of pulling the both ends of the core part can be kept. Further, by forming the stable cladding part, the optical waveguide capable of transmitting the optical signal is provided further surely.

"While pulling" means a state in which at least one end of the core part is displaced by being pulled. "After pulling" means not a state in which the pulling force is removed but a state in which the both ends of the core part are pulled and in which a displacement generated on the end of the core part is stopped. Accordingly, even "while pulling" or "after pulling" the core part, a tensile stress is applied to the core part.

If the above-mentioned cladding part is to be formed, a more stable cladding part can be formed by forming the core part, removing the uncured photosensitive composition around the core part, immersing the core part in another resin composition (which may be either the photosensitive composition or non-photosensitive composition), and subjecting this resin composition to a curing processing.

With this method, it is required to deal with the core part very carefully when removing the uncured photosensitive composition and the like. Therefore, the method is not so practical.

However, according to the optical waveguide formation method according to the second aspect of the fourth group of the present invention, by contrast, the core part connected to the optical wirings is raised from the uncured photosensitive composition while pulling the both optical wirings. It is thereby possible to remove the uncured photosensitive composition around the core part while pulling the core part and stabilizing the shape of the core part. Thereafter, while keeping a state in which the core part is pulled, the core part is immersed in another resin composition, and this resin composition is subjected to a curing processing. Thus, the optical waveguide comprising the core part having a stabilized shape and the stable cladding part can be formed.

Incidentally, processing for pulling the core part may only be carried out before the resin composition is subjected to the curingprocessing after the core part is immersed in another resin composition, without specially carrying out the pulling processing or the like at the time of removing the uncured photosensitive composition around the core part.

Further, besides the above-mentioned methods, the same method as that described in relation to the optical waveguide formation method according to the second aspect of the first group of the present invention, that is, the method for forming the core part and the cladding part using the photosensitive composition in which the core formation resin and the cladding formation resin are mixed together in advance as the photosensitive composition can be used.

As the photosensitive composition containing the core formation resin and the resin cladding formation resin, one of the same photosensitive compositions as those used according to the second aspect of the first group of the present invention can be used.

According to the second aspect of the fourth group of the present invention, by irradiating a light having an intensity with which the light can polymerize the core formation resin but the light substantially cannot polymerize the cladding formation resin into the photosensitive composition, only the core formation resin is preferentially cured, the core part corresponding to the path of the light is formed, and the uncured photosensitive resin surrounds the core part, similarly to the second aspect of the first group of the present invention.

Next, by curing the cladding formation resin after or while pulling the core part by one of the above-mentioned methods, the stable cladding part can be formed around the core part. If the cladding formation resin is cured using such a method, the uncured core formation resin is sometimes cured when curing the cladding formation resin similarly to the second aspect of the first group of the present invention.

By using such a formation method, the optical waveguide excellent in connection performance with the optical wirings and excellent in stability after the entire system is solidified, can be formed.

The method for forming the optical waveguide by immersing one end of each optical wiring in the photosensitive composition has been described. Alternatively, an optical element such as a light emitting element can be used in place of the optical wiring. By immersing a light emitting surface (light emitting portion) of the light emitting element in the photosensitive composition or coating the photosensitive composition on the light emitting surface, the core part directly attached to the light emitting surface of the optical component can be formed.

For the optical wirings or the optical components to which the core part is directly attached, positioning of the optical waveguide (core part) and each optical wiring or the like is unnecessary.

The optical waveguide formation method in case the optical axes of the different optical wirings are not completely aligned with each other will next be described. The formation method will be described herein while referring to Fig. 21 which is referred to when describing the optical waveguide formation method according to the second aspect of the first group of the present invention.

By simultaneously irradiating lights from the two optical fibers to the counterpart optical fibers, the core part that connects the two optical fibers to each other can be formed even if the optical axes of the two optical fibers are deviated from each other.

That is, the optical fibers 1022 and 1022' are arranged such that one end of each of the two optical fibers 1022 and 1022' optically connected to each other is immersed in the photosensitive composition 1021, and such that one end of one of the optical fibers substantially faces one end of the other optical fiber. The optical axes of the optical fibers are deviated from each other (see Fig. 21(a)).

Lights for curing the photosensitive composition 1021 are irradiated from the two optical fibers 1022 and 1022' to the counterpart optical fibers 1022' and 1022, respectively (see Fig. 21(b)). In this case, the intensity of the light is higher in a portion Z in which emission lights X and Y emitted from the optical fibers 1022 and 1022' are superposed on each other. Therefore, if the intensity of the light in the superposed portion Z is set so that only the core formation resin can be polymerized, the core part 1024 can be formed in the portion Z in which the emission lights are superposed on each other (see Fig. 21 (c)).

With this method, even if the optical axes of the paired optical fibers 1022 and 1022' are deviated each other, then the core part 1024 is formed on the optical path of the light that connects ends of the optical fibers 1022 and 1022' to each other, and the two optical fibers 1022 and 1022' can be optically connected with a high probability.

In addition, in the optical waveguide formation method according to the second aspect of the fourth group of the present invention, if the optical waveguide is formed as described above, the core part 1024 may then be pulled so that the optical axes of the optical fibers 1022 and 1022' are aligned with each other, or the core part 1024 may then be pulled while the axes of the optical fibers are deviated.

Herein, the method for forming the optical waveguide using the photosensitive composition has been described. If the optical waveguide according to the second aspect of the fourth group of the present invention consists of a resin composition other than the photosensitive composition, the optical waveguide can be formed by the following method.

Different optical wirings are arranged such that one end of one optical wiring faces one end of the other optical wiring. A cylindrical core formation member filled with a resin composition including thermosetting resin is arranged between the respective ends, and heating is carried out at a predetermined temperature, thereby forming a core part that connects the different optical wirings to each other. Thereafter, the core part formation member is removed while the core part is left, and the both ends of the core part are pulled, whereby the optical waveguide according to the first aspect of the fourth group of the present invention can be formed.

An optical waveguide according to the first aspect of the fifth group of the present invention will next be described.

The optical waveguide according to the first aspect of the fifth group of the present invention is an optical waveguide formed independently of an optical wiring, wherein a shape of a core part is formed to be gradually thinner toward one end of the core part. In the optical waveguide according to the first aspect of the fifth group of the present invention, the thinner one end of the core part will be also referred to as an apex and the other end will be also referred to as a bottom hereinafter.

Since the shape of the core part is such that the core part is gradually thinner toward one end of the core part in the optical waveguide according to the first aspect of the fifth group of the present invention, a light incident from the bottom can be condensed and the condensed light can be efficiently emitted from the apex.

"A shape of a core part (is) formed to be gradually thinner toward one end of the core part" is not limited to a specific shape as long as the core part is shaped such that the apex is smaller than the bottom. The shape of the core part may be such that only a pair of parallel surfaces of a square column are planed so as to have substantially an equal inclination. The shape of the core part is desirably a generally conical shape, a generally pyramid shape, or an icicle-like shape, also desirably a shape such that the apex is smaller than the bottom and the apex and the bottom are substantially analogous, or such that the apex is smaller than the bottom and the apex and the bottom are non-analogous (e.g. , such that the apex is circular and the bottom is polygonal). With such a shape, it is possible to ensure condensing the light incident from the bottom.

Further, if the shape of the core part is such that the apex is smaller than the bottom and such that the apex and the bottom are non-analogous, the shape is useful when, for example, a core of an optical fiber having a circular cross section and a core of an optical wiring having a rectangular cross section (e.g., a core of a plane optical waveguide consisting of quartz or polymer) are connected to each other through the optical waveguide, or when a core of an optical fiber having a circular cross section and a rectangular emission port of a laser diode are connected to each other through the optical waveguide.

Conventionally, if optical wirings or optical components having different cross-sectional shapes are connected to each other, an optical connection loss might have occurred due to the different cross-sectional shapes. As described above, if the optical waveguide shaped such that the apex and the bottom are non-analogous is used, the cross-sectional shape is gradually changed. Thus if this optical waveguide is used, it is possible to suppress the occurrence of the optical connection loss due to the difference in cross-sectional shape between the optical wirings or optical components to be connected to each other, and to further ensure that the light incident from the bottom is condensed toward the apex. "Formed independently of an optical wiring" means not that the optical waveguide is formed integrally as an extension of the optical wiring using the same material but that the optical waveguide and the optical wiring are formed at different timings using different materials. It does not matter whether the optical waveguide and the optical wiring are formed to be bonded to each other. Accordingly, as will be described later, this optical waveguide can be dealt with as an independent component. However, if the optical waveguide is formed on a tip end of the optical wiring, then the optical waveguide and the optical wiring are bonded to each other, and the optical waveguide and the optical wiring are desirably used as they are. This is because it is possible to ensure receiving an optical signal without performing positioning.

In the optical waveguide according to the first aspect of the fifth group of the present invention, when optical components, optical wirings, or an optical component and an optical wiring are optically connected to each other, the optical waveguide according to the first aspect of the fifth group of the present invention interposes between them so that an optical signal is transmitted from the bottom to the apex. With this constitution, it is possible to ensure transmitting the optical signal without using an expensive lens such as a collimator lens or a condensing lens.

Furthermore, by directly attaching the bottom of the core part to the optical component or the optical wiring on an optical signal emission side, the optical signal can be transmitted surely and efficiently through the core part.

Examples of the optical component include optical elements such as light receiving elements, e.g., a PD (photodiode) and anAPD (avalanchephotodiode) , and light emitting elements, e.g., an LD (a semiconductor laser), a DFB-LD (distributed feedback-type semiconductor laser) , and an LED (light emitting diode), and optical parts such as a lens, a mirror, a prism, and a filter.

Examples of the optical wiring include that similar to the optical wiring that constitutes the optical wiring connection body according to the first aspect of the first group of the present invention. An end of the optical wiring used according to the fifth group of the present invention may be either subjected to a planarization processing or not specially subjected to the planarization processing.

In the optical waveguide according to the first aspect of the fifth group of the present invention, it suffices that the shape of the core part is such that the core part is gradually thinner toward one end thereof, and a material for the core part is not limited to a specific material.

The core part may therefore comprise either an inorganic material or an organic material.

In particular, the core part desirably comprise an organic material since the organic material is excellent is workability.

Specific examples of the inorganic material include insulator crystals such as $LiNbO_3$ (lithium niobate) and YIG (yttrium iron garnet); semiconductor compounds such as GaAs (gallium arsenide) and InP (indium phosphide); and multi-component glass such as quartz glass and $SiO_2$-$B_2O_3$-$Na_2O$.

Specific examples of the organic material include photosensitive compositions each of which contains a resin component such as PMMA (polymethyl methacrylate) , PMMA deuteride, PMMA deuteride fluoride, or PMMA fluoride, and in each of which a monomer, a photo polymerization initiator, an intensifier, a solvent, or the like is blended with the resin component if it is necessary; and resin compositions each of which contains a resin component such as epoxy resin, epoxy resin fluoride, polyolefin resin, silicone resin such as silicone resin deuteride, or resin consisting of benzocyclobutene, and in each of which various additives are blended with the resin component if it is necessary.

Among the examples of the organic material, the photosensitive composition is desirably used. The use of such a photosensitive composition is suitable for forming the core part having the above-mentioned shape. Accordingly, as the organic material, the same compositions as the photosensitive compositions used in the formation of the optical waveguide according to the second aspect of the first group of the present invention and the like are available.

Further, the photosensitive composition may be an inorganic composition containing quartz doped with Ge, P or the like.

The method for forming the core part having the above-mentioned shape using such a photosensitive composition will be described later.

The core part may further contain particles. The optical waveguide using the photosensitive composition containing such particles enables the thermal expansion coefficient of the optical wiring to be matched to that of the optical waveguide when the optical waveguide is directly attached to the optical component or the optical wiring.

Specific examples of the particles include the same particles as those contained in the photosensitive compositions used in the optical waveguide formation method according to the second group of the present invention.

Further, the shape and diameter of each particle are the same as those of the particle contained in the photosensitive compositions used in the optical waveguide formation method according to the second group of the present invention.

If the core part contains particles, a blending ratio of the particles after curing is desirably 10 to 80% by weight, more desirably 20 to 70% by weight. If the blending ratio of the particles is less than 10% by weight, an advantage of blending the particles cannot be greatly acquired. If it exceeds 80% by weight, transmission of the optical signal is often hampered.

In the optical waveguide according to the first aspect of the fifth group of the present invention, it is desirable that a cladding part is formed around the core part having the above-mentioned shape. By forming the cladding part around the core part, it is possible to further ensure transmitting the optical signal.

If the material for core part is the photosensitive composition and an optical refractive index of the photosensitive composition after being cured is higher than that of the photosensitive composition before being cured, then an uncured photosensitive composition left around the core part when curing a part of the photosensitive composition and forming the core part can function as the cladding part. In this case, however, the cladding part has a fluidity and is not desirable in light of reliability of the optical waveguide. Desirably, therefore, the cladding part is stabilized by being cured.

If the core part is made of the above-mentioned material, the optical refractive index of the material is higher than that of the air. Therefore, the air present around the core part functions as the cladding part and the optical signal can be transmitted by the core part without the need to form the cladding part consisting of the inorganicmaterial or the organic material around the core part.

In the optical waveguide according to the first aspect of the fifth group of the present invention, therefore, the air can also function as the stable cladding part.

Amaterial for the claddingpart is not limited to a specific one as long as the material is lower in optical refractive index than the core part. Specifically, examples of the material for the cladding part include the same materials as those for the core part.

Further, a shape of the cladding part is not limited to a specific shape. The cladding part may have such an outside shape as to be gradually thinner toward one end, a cylindrical shape, or a prismatic shape similarly to the core part.

Further, the cladding part may also contain the above-mentioned particles.

As a method for adjusting the optical refractive indexes of the core part and the cladding part, a conventionally well-known method can be used.

Namely, if the optical waveguide consists of the inorganic material, the optical refractive indexes can be adjusted by blending a dopant for increasing the optical refractive indexes suchas titania ($TiO_2$) , alumina ($Al_2O_3$), germania ($GeO_2$) , or sulfur (S) , a dopant for decreasing the optical refractive indexes such as boronia ($B_2O_3$) or fluorine (F), or the like.

As a method for forming the optical waveguide according to the first aspect of the fifth group of the present invention, a conventionally well-known method can be used if the core part consists of the inorganic material.

Namely, in order to form the optical waveguide consisting of the inorganic material, an epitaxial growth method using vapor-phase epitaxy (VPE), liquid-phase epitaxy (LPE), molecular beam epitaxy (MPE) , or the like; a deposition method such as chemical vapor deposition, e.g., plasma CVD, thermal CVD, or optical CVD, vacuum deposition, or physical vapor deposition (PVD), e.g., sputtering, or the like can be used.

If the shape of the core part is set such that the core part is gradually thinner toward one end of the core part when forming the core part consisting of the inorganic material using one of these methods, a raw material may be grown or deposited into such a shape, or a cylindrical or prismatic optical waveguide may be formed first, and the optical waveguide may be then subjected to an etching processing, a polishing processing, or the like, thereby providing the optical waveguide having the above-mentioned shape.

An instance in which the core part consists of the organic material will be described later. The optical waveguide can be formed by an optical waveguide formation method according to the second aspect of the fifth group of the present invention.

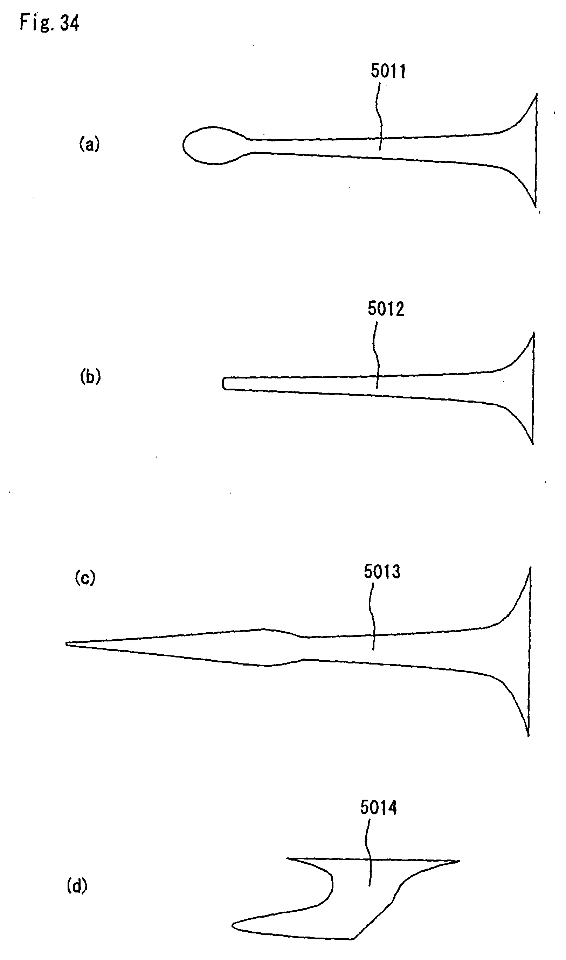

The core part shaped such that the core part is gradually thinner toward one end thereof has been described above. Alternatively, the core part may have one of shapes shown in Figs. 34(a) to 34(d).

Namely, the shape of a core part 5011 shown in Fig. 34 (a) is such that the core part 5011 is gradually thinner toward one end thereof, becomes thick once near the end, and gradually thinner again. The shape of a core part 5012 shown in Fig. 34 (b) is such that the core part 5012 is gradually thinner toward one end thereof. However, in Fig. 34 (b) , the end of the core part 5012 is not steeple-shaped but suddenly thinned to form substantially a sphere. The shape of a core part 5013 shown in Fig. 34 (c) is such that the core part 5013 is gradually thinner toward one end thereof, thick by a short distance, and gradually thinner again. The shape of a core part 5014 shown in Fig. 34 (d) is such that the core part 5014 is gradually thinner toward one end thereof but bent substantially perpendicularly halfway.

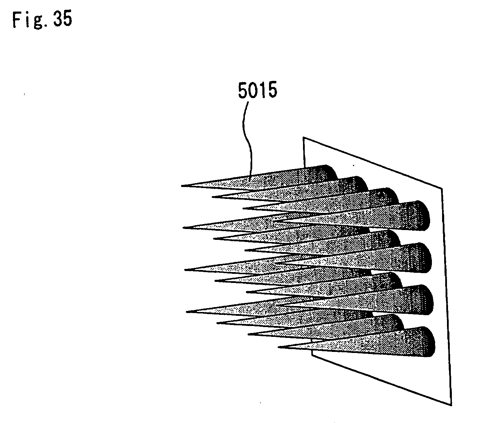

Further, the optical waveguide according to the first aspect of the fifth group of the present invention may be such that many core parts 5054 are formed in an array as shown in Fig. 35. In such an optical waveguide, it is possible to ensure that many optical components or optical wirings can be optically connected simultaneously, or to optically connect many optical components and optical wirings simultaneously. It is, therefore, possible to ensure transmitting an optical signal.

The optical waveguide formation method according to the second aspect of the fifth group of the present invention will be described.

The optical waveguide formation method according to the second aspect of the fifth group of the present invention comprises a step of irradiating light into a photosensitive composition through an optical wiring, thereby growing a cured matter of said photosensitive composition having a shape for condensing said light to form a core part having such a shape that the core part becomes gradually thinner toward one end of the core part.

With the optical waveguide formation method according to the second aspect of the fifth group of the present invention, the core part of a shape such that the core part is gradually thinner toward one end thereof can be appropriately formed.

In the optical waveguide formation method according to the second aspect of the fifth group of the present invention, the core part is formed by forming the cured matter according to an optical path of the irradiated light, and this cured matter is grown into a shape so as to condense the irradiated light. Therefore, the irradiated light follows an optical path condensed in the photosensitive composition. As a result, the core part having the shape such that the core part is gradually thinner toward one end thereof can be formed.

In the optical waveguide formation method according to the second aspect of the fifth group of the present invention, by irradiating the light into the photosensitive composition through the optical wiring, the photosensitive composition is cured. In the irradiation of the light, one of the following methods may be used.

(i) A method including steps of immersing one end of the optical wiring into the photosensitive composition, and of irradiating the light (hereinafter, also referred to as "a first formation method according to the second aspect of the fifth group of the present invention").
(ii) A method including steps of putting the photosensitive composition in a container, and of irradiating the light through a wall surface of this container (hereinafter, also referred to as "a second formation method according to the second aspect of the fifth group of the present invention"):

With the first formation method according to the second aspect of the fifth group of the present invention, an optical waveguide directly attached to the optical wiring can be formed. With the second formation method according to the second aspect of the fifth group of the present invention, an optical waveguide which can be used in place of a lens when optically connecting mainly the optical components, the optical wirings, or the optical component to the optical wiring.

The first formation method according to the second aspect of the fifth group of the present invention will first be described with reference to the drawings.

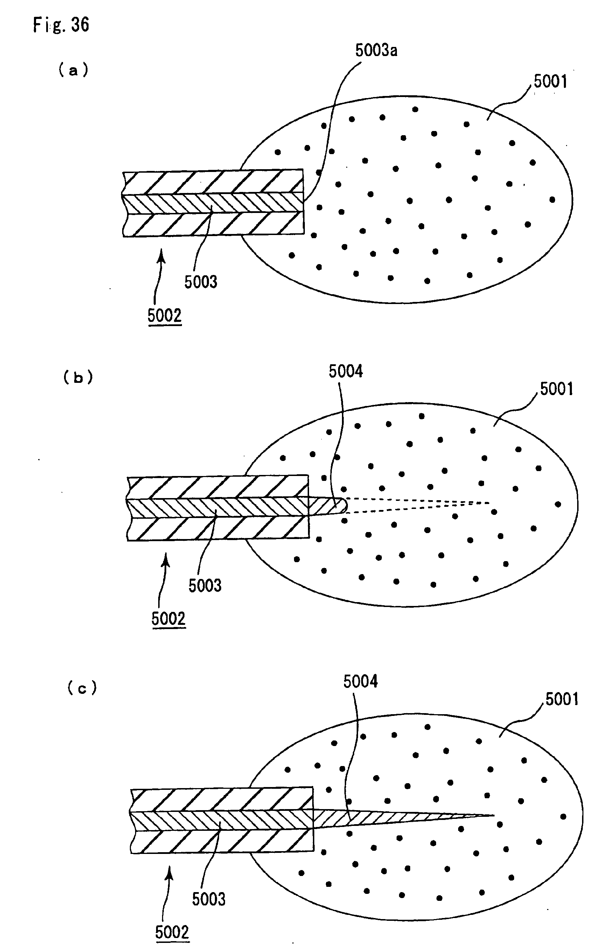

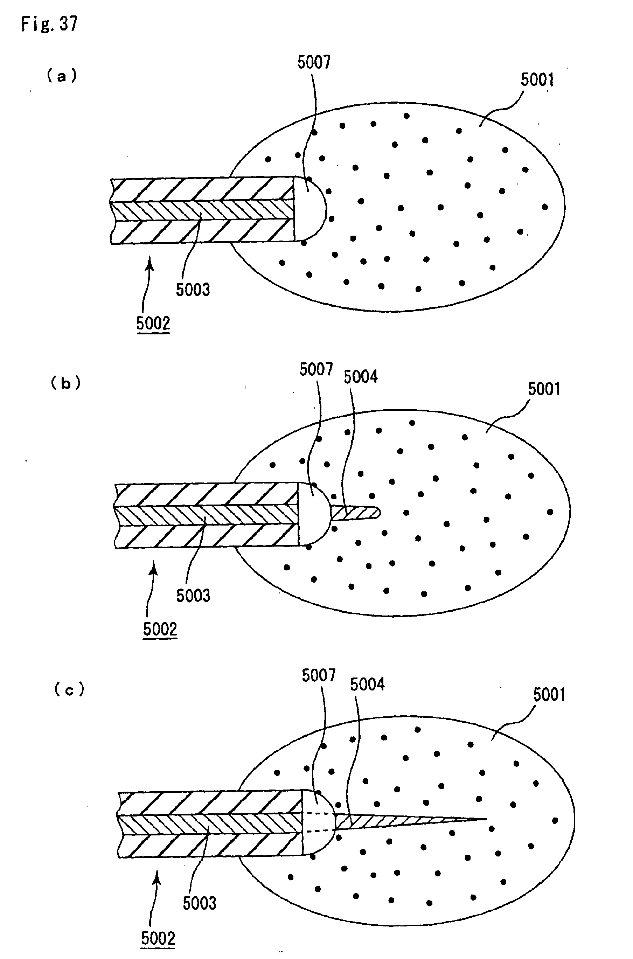

Figs. 36(a) to 36(c) and Figs. 37 (a) to 37(c) are schematic diagrams for describing embodiments of the optical waveguide formation method according to the second aspect of the fifth group of the present invention (the first formation method according to the second aspect of the fifth group of the present invention), respectively.

In the first formation method according to the second aspect of the fifth group of the present invention, one end of an optical wiring is first immersed in a photosensitive composition, and a light is irradiated into the photosensitive composition through this optical wiring, thereby forming a core part corresponding to an optical path of the light and providing an optical waveguide.

Specifically, a photosensitive composition 5001 is coated so as to surround a tip end of an optical wiring 5002 (see Figs. 36(a) and 37(a)), the photosensitive composition is put in a container, and one end of the optical wiring is immersed in the photosensitive composition.

Next, light is irradiated into the photosensitive composition 5001 through the optical wiring 5002, thereby growing a cured matter of this photosensitive composition 5001, and forming the core part corresponding to the optical path of the irradiated light.

To grow the curedmatter of the photosensitive composition 5001, by growing the cured matter into a shape of condensing the irradiated light (see Figs. 36 (b) and 37 (b)), the core part of the shape such that the core part is gradually thinner toward one end thereof can be formed (see Figs. 36(c) and 37(c)).

Examples of a method for forming the cured matter of the shape of condensing the light includes a method including steps of attaching a condensing lens or a collimator lens to a light emission end of the optical wiring, and of irradiating the light through this condensing lens or the like (see Fig. 37) , a method including a step of irradiating a light having a low intensity, and a combination method of these methods.

If the light having a low intensity is irradiated, the intensity changes depending on components of the photosensitive composition. Therefore, a specific intensity cannot be mentioned.

The reason that the cured matter of the shape of condensing the light is formed when the light having a low intensity is irradiated through the optical wiring will be described briefly.

If the light is irradiated through the optical wiring such as an optical fiber, an intensity distribution of the light on an emission-side end surface has a form similar to that of a normal distribution in which the intensity is the highest in a central portion of the optical wiring and continuously lower toward an outer edge of the optical wiring. Due to this, if the light having the low intensity is irradiated into the photosensitive composition through the optical wiring, it is estimated that the cured part that reflects high intensity portion is formed, and that a shape of this cured matter is a shape for condensing the light.

Incidentally, even if light having a high intensity is irradiated through the optical wiring, the high intensity portion of the light on an emission-side end surface has a form similar to that of the normal distribution. However, light irradiated from an outer edge of the end surface has also an intensity enough to cure the photosensitive composition. Thus, in this case, it is estimated that the cure matter that reflects the intensity distribution of the light cannot be formed, and that the shape of the cured matter is not the shape for condensing the light.

As can be understood, with the first formation method according to the second aspect of the fifth group of the present invention, by growing the cured matter into the shape for condensing the light, the core part of the shape such that the core part is gradually thinner toward one end thereof is formed.

Further, in the first formation method according to the second aspect of the fifth group of the present invention, the type of the light irradiated when curing the photosensitive composition is not limited to a specific type of light. The light may be appropriately selected based on components of the photosensitive composition. If the photosensitive composition exhibits a photosensitivity in an ultraviolet range, a light source such as a high pressure mercury lamp for irradiating a light having a wavelength in the ultraviolet range can be used. Alternatively, a metal halide lamp, a xenon lamp, a laser, or the like can be used as the light source.

The photosensitive composition after being cured needs to be higher in optical refractive index than that before being cured. If the optical refractive index is higher after the photosensitive composition is cured, the light is irradiated through the optical wiring into the photosensitive composition so that the light is condensed while being constrained in the core part formed.

With the first formation method according to the second aspect of the fifth group of the present invention, the core part is formed while one end of the optical wiring is immersed in the photosensitive composition. Desirably, therefore, a lower limit of the optical refractive index of this photosensitive composition after being cured is 90% of that of a core of the optical wiring, and an upper limit thereof is 110%.

If the photosensitive composition which can form the core part having the optical refractive indexes within the above-mentioned ranges is used, it is possible to form the core part excellent in connection performance with the optical wiring.

The lower limit of the optical refractive index of the photosensitive composition after curing is more desirably 95% of that of the core of the optical wiring, most desirably 98%. The upper limit thereof is more desirably 105% of that of the core of the optical wiring, most desirably 102%.

Accordingly, if a material for the core of the optical wiring is pure quartz glass and an optical refractive index $n_D$ of pure quartz glass is about 1.46, for example, it is desirable to use the photosensitive composition the optical refractive index $n_D$ of which after being cured is about 1.31 to 1.61.

Further, the optical refractive index of the resin or the like used for the optical wirings or the optical waveguide changes depending on a wavelength. However, a ratio (of the optical refractive index of the core part of the optical waveguide to that of the core of the optical wiring) hardly changes from, for example, an ultraviolet range to a near-infrared range.

In addition, a lower limit of the optical refractive index of the core part before curing, i.e., that of the photosensitive composition or the like itself is also, desirably 90% of that of the core of the optical wiring, more desirably 95%, most desirably 98%. An upper limit thereof is desirably 110%, more desirably 105%, most desirably 102%.

As can be seen, in the optical waveguide formation method according to the second aspect of the fifth group of the present invention, it is desirable to select and use the photosensitive composition having the optical refractive index within the above-mentioned range after curing. Even if the photosensitive composition has an optical refractive index out of the above-mentioned range, the photosensitive composition can be used by adjusting the optical refractive index. If the optical refractive index of the photosensitive composition is to be adj ustable, it is desirable to make adj ustment so that the optical refractive indexes of the core part before and after curing fall within the respective ranges described above.

As a method for adjusting the optical refractive index of the photosensitive composition, the same method as that described in relation to the second aspect of the first group of the present invention, that is, a method for adjusting a molecular refraction and a molecular volume, for example, can be used.

Incidentally, the definition of "the optical refractive index of the core of the optical wiring" is the same as that according to the second group of the present invention.

The method for forming the optical waveguide by immersing one end of the optical wiring in the photosensitive composition has been described. Alternatively, an optical element such as a light emitting element can be used in place of the optical wiring. By immersing a light emitting surface (light emitting portion) of the light emitting element in the photosensitive composition or coating the photosensitive composition on the light emitting surface, the core part directly attached to the light emitting surface of the optical component can be formed.

For the optical wirings or the optical components to which the core part is directly attached, positioning of the optical waveguide (core part) and each optical wiring or the like is unnecessary.

The second formation method according to the second aspect of the fifth group of the present invention will next be described with reference to the drawings.

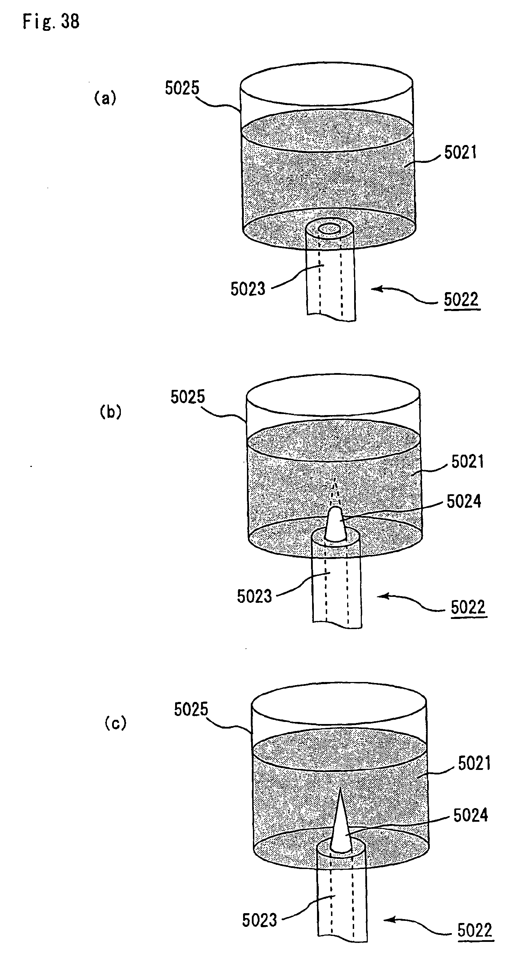

Figs. 38 (a) to (c) are schematic diagrams for describing one embodiment of the optical waveguide formation method according to the second aspect of the fifth group of the present invention (the second formation method according to the second aspect of the fifth group of the present invention).

In the second formation method according to the second aspect of the fifth group of the present invention, a photosensitive composition is first put in a container, and a light is irradiated into the photosensitive composition through a wall surface of this container, thereby forming a core part corresponding to an optical path of the light and providing an optical waveguide.

A material for the container is not limited to a specific material as long as the material transmits the irradiated light. A shape of the container is not limited to a specific shape.

Specifically, a photosensitive composition 5021 is put in a cylindrical container 5025, and one end of an optical wiring 5022 is fixedly attached to a bottom of this container 5025 (see Fig. 38(a)).

Next, light is irradiated into the photosensitive composition 5021 through the wall surface (bottom) of the container 5026, thereby growing a cured matter of this photosensitive composition 5021, and forming the core part corresponding to the optical path of the irradiated light.

To grow the cured matter of the photosensitive composition 5021, by growing the cured matter into a shape of condensing the irradiated light (see Figs. 38(b)), the core part of the shape such that the core part is gradually thinner toward one end thereof can be formed (see Figs. 38(c)).

Examples of a method for forming the cured matter of the shape of condensing the light includes a method including steps of attaching a condensing lens or a collimator lens to an end of the optical wiring on a side on which the optical wiring is attached to the wall surface of the container, and of irradiating the light through this condensing lens or the like, a method including a step of irradiating a light having a low intensity, and a combination method of these methods.

In the second formation method according to the second aspect of the fifth group of the present invention, similarly to the first formation method, the intensity of the light for the method of irradiating the light having a low intensity changes depending on components of the photosensitive composition, the material for the container, and the like. Therefore, a specific intensity cannot be mentioned.

In the second formation method according to the second aspect of the fifth group of the present invention, examples of the light irradiated when curing the photosensitive composition include the same as those used in the first formation method according to the second aspect of the fifth group of the present invention. As a light source of the light, the same as that used in the first formation method according to the second aspect of the fifth group of the present invention can be used.

Similarly to the photosensitive composition used in the first formation method according to the second aspect of the fifth group of the present invention, the photosensitive composition used in the second formation method according to the second aspect of the fifth group of the present invention needs to be a photosensitive composition which has higher optical refractive index after being cured compared to that before being cured.

By using the first or second formation method according to the second aspect of the fifth group of the present invention, the core part of the shape such that the core part is gradually thinner toward one end thereof can be formed.

In the first or second formation method according to the second aspect of the fifth group of the present invention, to form the core part corresponding to the optical path of the light irradiated through the optical wiring, if the core part is formed by arranging an optical element such as a light receiving element so that a light receiving element (light receiving portion) of the element is arranged on the optical path of this light, and by irradiating the light while the optical element is being arranged, the cured matter of the photosensitive composition is grown so as to condense the light toward the light receiving surface. Therefore, the core part directly attached to the light receiving surface of the optical component can be formed. The optical component to which the core part formed by such a method is directly attached can ensure receiving the optical signal.

In the optical waveguide formation method according to the second aspect of the fifth group of the present invention, after forming the core part by one of the above-mentioned methods , a stable cladding part is desirably formed around the core part.

The reason is as follows. By forming the stable cladding part around the core part, the optical waveguide which can ensure transmitting the optical signal can be provided.

If the cladding part is to be formed, a more stable cladding part can be formed by forming the core part, removing the uncured photosensitive composition around the core part, immersing the core part in another resin composition (which may be either the photosensitive composition or non-photosensitive composition) , and subjecting this resin composition to a curing processing.

With this method, however, it is required to deal with the core part very carefully when removing the uncured photosensitive composition or the like. Therefore, the method is not so practical.

Desirably, therefore, the method described in relation to the optical waveguide formation method according to the second aspect of the first group of the present invention, that is, the method for forming the core part and the cladding part using the photosensitive composition in which the core formation resin and the cladding formation resin are mixed together in advance is used.

As the photosensitive composition containing the core formation resin and the cladding formation resin, one of the same photosensitive compositions as those used according to the second aspect of the first group of the present invention can be used. According to the second aspect of the fifth group of the present invention, by irradiating a light having an intensity with which the light can polymerize the core formation resin but the light substantially cannot polymerize the cladding formation resin into the photosensitive composition when the light is irradiated into the photosensitive composition using the method for irradiating the light having the low intensity, or the method for irradiating the light through the condensing lens, only the core formation resin is preferentially cured, the core part corresponding to the path of the light is formed, and the uncured photosensitive resin surrounds the core part, similarly to the second aspect of the first group of the present invention.

Thereafter, by curing the cladding formation resin, the stable cladding part can be formed around the core part. If the cladding formation resin is cured using such a method, the uncured core formation resin is sometimes cured when curing the cladding formation resin similarly to the second aspect of the first group of the present invention.

By using such a formation method, the optical waveguide excellent in connection performance with the optical wirings and excellent in stability after the entire system is solidified, can be formed.

If the optical waveguide of one of the shapes shown in Figs. 34 (a) to 34 (c) is formed, the intensity of an irradiated light may be changed with passage of time according to the shape of the optical waveguide when, for example, the light is irradiated into the photosensitive composition using the above-mentioned method. If the optical waveguide of the shape shown in Fig. 34(d) is formed, the mirror or the like may be arranged on the optical path in advance when, for example, the light is irradiated into the photosensitive composition using one of the above-mentioned methods.

Furthermore, to form the core part, a resist formation method, a mold formation method, an exposure-development method, an RIE (Reactive Ion Etching) method, or the like can be used.

Next, the optical wiring connection body according to the sixth group of present invention will be explained.

The optical wiring connection body according to the sixth group of present invention is constituted such that: plural optical wiring are connected to transmit an optical signal to each other, wherein said optical wiring connection body includes a bent portion said optical wiring connected to each other has different optical refractive index, at least one of said optical wiring does not cross at right angles to optical axis on the facet of the side connected with other optical wiring.

Although the optical wiring connection object of present invention of the sixth group has a crookedness part as mentioned above, even if said crookedness part is not a crookedness part but the bent crookedness part of the shape of a smooth curve, it has in the characteristic required of an optical wiring connection object, i.e., the outstanding optical transmission ability, with said optical wiring connection object.

Furthermore, when considering as the optical wiring connection object which has the bent crookedness part as an optical wiring connection object of present invention of the sixth group, a complicated design is not needed but the optical wiring connection object which is excellent in optical transmission ability can be designed easily.

In addition, the size can be made compact when using said optical wiring connection object as an optical waveguide parts. moreover, pitch conversion which optical path of an optical signal could be made crooked at arbitrary angles, and was looked at by the conventional electric wiring design, without using additional optical parts, such as a mirror, when the optical wiring connection obj ect of present invention of the sixth group was used it can unite wiring length and the complicated wiring design of branched wiring etc. can be easily taken in also in an optical wiring design Said optical wiring connection object is connected so that two or more optical wiring can transmit an optical signal.

Especially if said optical wiring is through and a thing for this transmitting information about light, such as an ultraviolet ray, visible light, and infrared rays, it will not be limited, but an optical fiber, an optical waveguide, etc. are mentioned as the example.

Moreover, said optical wiring may consist only of a core, and may consist of a core and clad. Especially as long as it is the material which lets light, such as an ultraviolet ray, visible light, and infrared rays, pass as a material of said optical wiring, it may not be limited, but you may be a charge of non-equipments, and may be an organic material. As said inorganic material, multi-ingredient system glass, such as semiconductor compound; silica glass, $SiO_2$-$B_2O_3$-$Na_2O$, etc., such as insulator crystal;Si(s) (silicon) , such as $LiNbO_3$ (lithium niobate) and YIG (yttriumirongarnett) , GaAs (galliumarsenide) , and InP (InDium Phosphide), etc. is mentioned. Moreover, the multi-ingredient glass which makes the main ingredients what makes silica glass the main ingredients, soda lime glass, borosilicate glass, etc. as said inorganic material is mentioned.

Furthermore, as said inorganic material, the inorganic composite which has the photosensitivity which doped germanium, P, etc. is mentioned to quartz.

As said organic material, PMMA (poly (methyl methacrylate)), heavy hydrogen-ized PMMA, It responds to resin ingredients, such as heavy hydrogen fluoride-ized PMMA and fluoride-ized PMMA, at necessity. the increase of a monomer and an optical polymerization start agent admiration an agent the photosensitive composite; epoxy resin with which the solvent etc. was blended a fluoride-ized epoxy resin and poly me the resin composite with which various additive agents were blended with resin ingredients, such as silicone resin, such as fin system resin, silicone resin, and heavy hydrogen-ized silicone resin, and resin which consists of benzocyclobutene, if needed is mentioned moreover the case where said resin composite may be a photosensitive composite, and a photosensitive composite is used said epoxy resin and me fin system resin etc. photosensitivity giving these resin necessity responding the increase of a monomer and an optical polymerization start agent admiration an agent etc.

What was blended can be used as a photosensitive composite in addition, said epoxy resin and poly me as a method of giving photosensitivity to fin system resin etc. , the method of giving an allyl group and a acrylloyl group machine to the end of these resin and a side chain etc. is mentioned Moreover, the polyene compound which has an allyl group and a acrylloyl group in the end of a molecule or a side chain, a PORICHI all compound, an optical polymerization start agent, and the thing that contains various additive agents, a solvent, etc. if needed can also be used as a photosensitive composite.

Moreover, what contains an epoxy resin and the optical start agent which generates Lewis acid by irradiating light, such as perfume fellows diazonium salt and perfume fellows iodinium salt, that what is necessary is just that to which a hardening reaction advances by irradiating light as said photosensitive composite can be used.

Furthermore, the thing containing the optical start agent from which strong acid is isolated, and the resin ingredient for which polymerization advances with acid can also be used as a photosensitive composite by irradiating light, such as a thing containing the optical start agent which generates radical, and the resin ingredient for which polymerization advances according to a radical polymerization mechanism, chlorination asetofenon, and its derivative, by irradiating light, such as benzoinallyl group ether, asetofenon derivatives, benzofenon, and its derivative.

In addition, in this specification, by irradiation of not only the high polymer that starts a chemical reaction by irradiation of light but light, including the monomer to which an optical polymerization reaction advances, for example, acrylic acid (meta) mechyl etc., two or more kinds of resin ingredients and/or monomers shall start a chemical reaction to a photosensitive composite by irradiation of light, and shall contain in it further what forms a resin complex.

Moreover, particles, suchasaresinparticle, an inorganic particle, and a metal particle, may be contained in said optical wiring. By blending a particle, adjustment of a heat expansion coefficient can be aimed at among optical wiring. The same thing as the particle contained in the photosensitive composite used by the formation method of an optical waveguide present invention of the second group as said particle etc. is mentioned.

Moreover, the form and the particle diameter of said particle are the same as that of the particle contained in the photosensitive composite used by the formation method of an optical waveguide present invention of the second group. When a particle is contained in said optical wiring, as for the minimum of the amount of combination, it is desirable that it is 10 % of the weight in the amount of combination after hardening, and it is more desirable that it is 20 % of the weight. Moreover, as for the maximum of said amount of combination, it is desirable that it is 80 % of the weight, and it is more desirable that it is 70 % of the weight. It is because transmission of an optical signal may be checked when the effect with which a particle will be combined if the amount of combination of a particle is less than 10 % of the weight may seldom be acquired and the amount of combination of a particle, on the other hand, exceeds 80 % of the weight. Moreover, especially the form of the portion combined with other optical wiring of said optical wiring may not be limited, but flatized processing may especially be performed, and flatized processing does not need to be performed. Moreover, surface roughness Ra based on JIS B 0601 may be 0.1 micrometers or more. Moreover, especially the form of said optical wiring may not be limited, but may be a straight line-like, and may be a curve-like. Moreover, all the cross-sectional form of the form of said optical wiring cut in positions arbitrary in a direction perpendicular to optical axis, such as the shape of the shape of a pillar and 4 square pillars, may be the form from which each of the cross-sectional form which may be the same form and was cut in the direction perpendicular to optical axis, such as a taper type and a spindle type, in arbitrary positions differs.

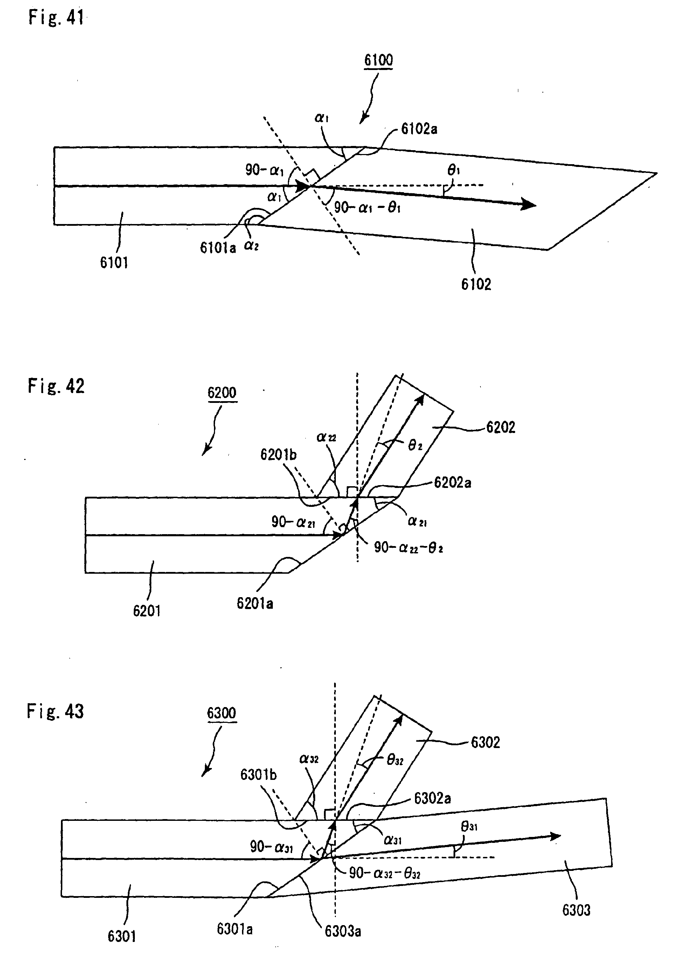

Hereafter, the concrete enforcement form of the optical wiring connection obj ect of present invention of the sixth group is explained. As an example of the enforcement form of said optical wiring connection object, it has the optical wiring A and the optical wiring B at least, facet of said optical wiring A and facet of said optical wiring B are connected, and the form (it says also with the first enforcement form group sixth of present invention hereafter) which bent in the connection part of said optical wiring A and said optical wiring B is mentioned. Fig. 41 is a sectional view showing typically an example of the optical wiring connection object of present invention of the sixth group. In addition, usually, although optical wiring consists of a core and clad, it is illustrating only the core of optical wiring in Fig. 41. The optical wiring connection object 6100 shown in Fig. 41 consists of optical wiring 6101 and optical wiring 6102, and facet 6101a of the optical wiring 6101 and facet 6102a of the optical wiring 6102 are connected. Here, the optical wiring 6101 will correspond to said optical wiring A, and the optical wiring 6102 will correspond to said optical wiring B. Moreover, the angle $\alpha_1$ with optical axis (a thick line arrow shows among a figure) of facet 6101a of the side which the optical refractive index (n11) of the optical wiring 6101 differed from the optical refractive index (n12) of the optical wiring 6102, and was connected with the optical wiring 6102 of the optical wiring 6101 with the optical wiring connection object 6100 to make is not 90 °. In addition, although $\alpha_2$ shown in Fig. 41 can be considered to be the angle of optical axis and facet to make, suppose that only $\alpha_1$ shown in the angle 41 with the angle of optical axis and facet smaller than 90 ° to make, i.e., a figure, in this specification is said. Moreover, as for the optical wiring connection object 6100, the angle $\theta_1$ of the optical wiring 6101 and the optical wiring 6102 to make has satisfied the relation of the following formula (1). In addition, in present invention of the sixth group, the angle which optical wiring of two makes means the angle of optical axis of optical wiring of one, and optical axis of other optical wiring to make. sin (90-$\alpha_1$) = (n12n11) xsin (90-$\alpha_1$-$\theta_1$) ...

(1) above-mentioned formula (1), although big transmission loss will occur when it is computable based on Snell's law, it originates in refraction by the interface of optical wiring when the optical wiring of two from which an optical refractive index differs is usually connected on the straight line, and an optical signal is transmitted When the optical wiring of two from which an optical refractive index differs is connected so that said formula (1) maybe satisfied, the fall of the optical transmission ability resulting from refraction in a connection part does not occur. Therefore, it is desirable that it is satisfied with the optical wiring connection object of the first enforcement form of present invention of the sixth group of said formula (1). Moreover, it is also desirable to have satisfied the formula (1') later mentioned depending on the size of the optical refractive index of the optical wiring A and B. Although such an optical wiring connection object 6100 has the form which bent in the connection part of the optical wiring 6101 and the optical wiring 6102, it can transmit an optical signal certainly. Moreover, with the optical wiring connection object 6100 shown in Fig. 41, although it is n12 "the optical refractive index of the optical wiring B", i.e., n11< "optical refractive index of the optical wiring A" < The size relation of the optical refractive index of the optical wiring A in the optical wiring connection object of the first enforcement form and the optical wiring B may be "optical refractive index of the optical wiring A" > "the optical refractive index of the optical wiring B", and the optical wiring B will bend to a contrary side with the direction shown in Fig. 41 at this time. That is, in "optical refractive index of the optical wiring A" > "the optical refractive index of the optical wiring B", with the optical wiring connection object 6100 shown in Fig. 41, the optical wiring B will bend on the basis of optical axis of the optical wiring A at a contrary side to the optical wiring 6102 having bent to the inside down side of a figure on the basis of optical axis of the optical wiring 6101. In this case, an optical wiring connection object can transmit an optical signal certainly between the optical wiring A and the optical wiring B by filling the relation of the following formula (1').

$$\sin(90-\alpha_1) = (n12/n11)\, x\sin(90-\alpha_1-(-\theta_1)) = (n12/n11)\, x\sin$$

$$(90- \alpha_1+\theta_1) \tag{1'}$$

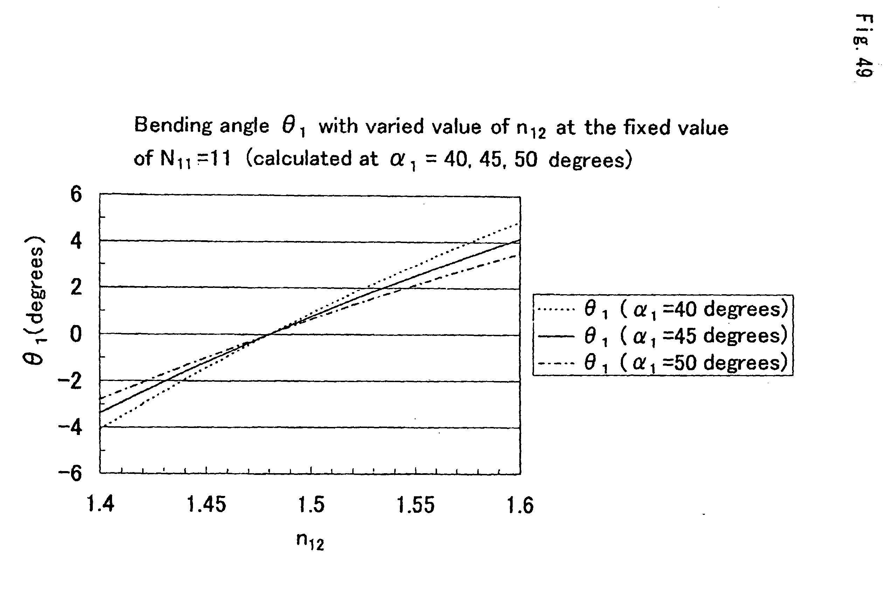

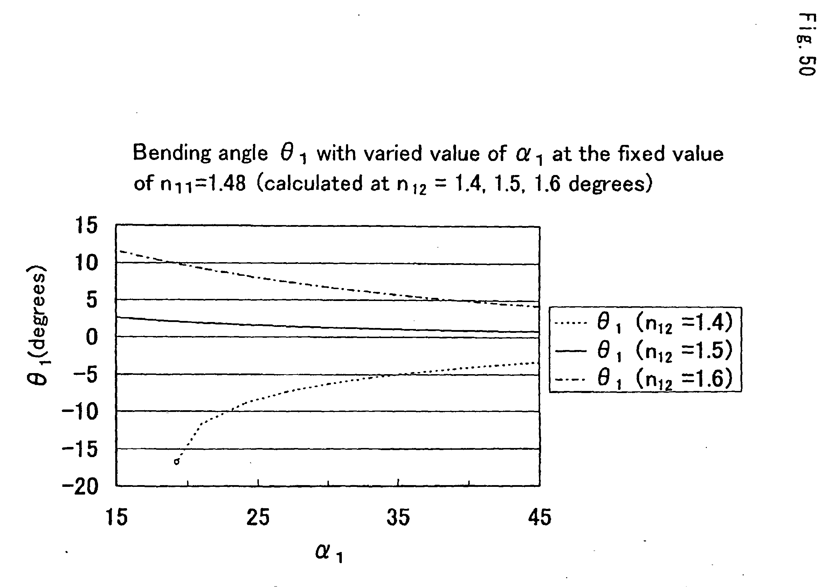

in addition, when you satisfy said formula (1') (i.e., when the direction which the optical wiring B showed in Fig. 41 on the basis of optical axis of the optical wiring A bends to a contrary side), the angle of the optical wiring A and the optical wiring B to make will take a negative value, and suppose that this is indicated as $(-\theta_1)$ by said formula (1'). thus, when the optical wiring connection object of the first enforcement form of present invention of the sixth group satisfies said formula (1) and a formula (1') The optical refractive index (n11) of the optical wiring 6101, the optical refractive index (n12) of the optical wiring 6102, and facet 6101a of the optical wiring 6101 with optical axis and the combination of the angle $\alpha_1$ to make The angle $\theta_1$ (henceforth the bending angle $\theta_1$) of the optical wiring 6101 and the optical wiring 6102 to make can be chosen arbitrarily. It explains referring to the graph shown in Fig. 49 and 50 about the example hereafter. Fig. 49 is graph which shows the relation between the optical refractive index (n12) of the optical wiring 6102, and the angle $\theta_1$ of the optical wiring 6101 and the optical wiring 6102 to make. In the graph shown in Fig. 49, the optical refractive index (n11) of the optical wiring 6101 is fixed to n11=1.48, and the optical refractive index (n12) and said bending angle $\theta_1$ of said optical wiring 6102 when facet 6101a of the optical wiring 6101 makes optical axis and the angle $\alpha_1$ to make 40° , 45° , and 50° are plotted on the horizontal axis and the vertical axis, respectively. The bending angle $\theta_1$ can be chosen among -4.08° -4.88° by fixing the optical refractive index (n11) of the optical wiring 6101 to 1.48, and choosing the optical refractive index (n12) of the optical wiring 6102 between 1.4-1.6, when facet 6101a of the optical wiring 6101 makes 40 ° optical axis and the angle $\alpha_1$ to make so that more clearly than the graph shown in Fig. 49. When said angle $\alpha_1$ is made into 45 ° , moreover, by choosing the optical refractive index (n12) of the optical wiring 6102 between 1.4-1.6 When the bending angle $\theta_1$ can be chosen among -3.38° - 4.15° and said angle $\alpha_1$ is made into 50° By choosing the optical refractive index (n12) of the optical wiring 6102 between 1.4-1.6, the bending angle $\theta_1$ can be chosen among -2.81° -3.52° . In addition, it is the case where that said bending angle $\theta_1$ takes a positive value is the case where are n11<n12 and said formula (1) is satisfied, n11>n12 takes a value negative in said bending angle $\theta_1$, and it satisfies said formula (1'). Although it showed clearly to be able to choose the angle $\theta_1$ (bending angle $\theta_1$) of the optical wiring 6101 and the optical wiring 6102 to make by choosing the optical refractive index (n12) of the optical wiring 6102 here As mentioned above, when facet 6101a of the optical wiring 6101 chooses optical axis and the angle $\alpha_1$ to make, the angle $\theta_1$ (bending angle $\theta_1$) of the optical wiring 6101 and the optical wiring 6102 to make can be chosen. Fig. 50 is graph facet 6101a of the optical wiring 6101 indicates the relation between optical axis, the angle $\alpha_1$ to make, and the angle $\theta_1$ of the optical wiring 6101 and the optical wiring 6102 to make to be. In addition, in the graph shown in Fig. 50, the optical refractive index (n11) of the optical wiring 6101 is fixed to n11=1.48, and said angle $\alpha_1$ and said bending angle $\theta_1$ at the time of setting the optical refractive index (n12) of the optical wiring 6102 to n12=1.4, and 1.5 and 1. 6 are plotted on the horizontal axis and the vertical axis, respectively. When the optical refractive index (n11) of the optical wiring 6101 is fixed to 1.48, the optical refractive index (n12) of the optical wiring 6102 is set to n12=1.4 so that more clearly than the graph shown in Fig. 50, and facet 6101a of the optical wiring 6101 chooses optical axis and the angle $\alpha_1$ to make among 18.9 ° -45° , the bending angle $\theta_1$ can be chosen among -18.5 ° to -3.4° . In addition, since the angle of optical axis of the optical wiring 6101 and normal line of facet 6101a of the optical wiring 6101 to make becomes larger than the critical angle of this facet 6101a in this case when said angle $\alpha_1$ is smaller than 18.9 ° , transmission of the optical signal through the optical wiring 6101 and the optical wiring 6102 becomes difficult. Moreover, when are referred to as said n12=1.5 and facet 6101a of the optical wiring 6101 chooses optical axis and the angle $\alpha_1$ to make among 15° -45° When the bending angle $\theta_1$ can be chosen among 0.76° - 2.63 ° and it is referred to as said n12=1.6 When facet 6101a of the optical wiring 6101 chooses optical axis and the angle $\alpha_1$ to make among 15 ° - 45 ° , the bending angle $\theta_1$ can be chosen among 4.15 ° - 11.7 ° . Thus, when facet 6101a of the optical wiring 6101 chooses optical axis and the angle $\alpha_1$ to make, the angle $\theta_1$ (bending angle $\theta_1$) of the optical wiring 6101 and the optical wiring 6102 to make can be chosen.

It is the case where that said bending angle $\theta_1$ takes a positive value is the case where are n11<n12 and said formula (1) is satisfied, n11>n12 takes a value negative in said bending angle $\theta_1$, and it satisfies said formula (1') as well as when shown in this figure 50 the case where it is shown in Fig. 49. In the example shown in the graph of Figs. 4 9 and 50, although the optical refractive index (n11) of the optical wiring 6101 was fixed, when the optical refractive index (n11) of the optical wiring 6101 is chosen, the angle $\theta_1$ (bending angle $\theta_1$) of the optical wiring 6101 and the optical wiring 6102 to make can be chosen similarly. By "optical refractive index of the optical wiring A" > "the optical refractive index of the optical wiring B", in addition, when the angle of optical axis of the optical wiring A and normal line of facet of the optical wiring A to make is larger than the critical angle of this facet Since it becomes impossible to transmit an optical signal between the optical wiring A and the optical wiring B, the value of (90-$\alpha_1$) needs to be smaller than the critical angle of facet of the optical wiring A. Thus, with the optical wiring connection object of the first enforcement form of present invention of the sixth group, it can consider as the optical wiring connection object with which facet 6101a of the optical refractive index of the optical wiring 6101 and the optical wiring 6102 and the optical wiring 6101 has a desired bending angle by choosing suitably optical axis, the angle to make, the angle of the optical wiring 6101 and the optical wiring 6102 to make. In the optical wiring connection object of the first enforcement form of present invention of the sixth group, although especially the absolute value of the size of the angle $\theta_1$ of the optical wiring 6101 and the optical wiring 6102 to make is not limited, the minimum has desirable 0.1 ° and its 0.5 ° are more desirable. On the other hand, the maximum of said angle $\theta_1$ has desirable 10 °, and is more desirable. of 7 ° It is because the amount of reflection of the optical signal in the interface of the optical wiring 6101 and the optical wiring 6102 may become large too much when the effect that said angle $\theta_1$ connects the optical wiring from which an optical refractive index differs at less than 0.1 ° can hardly be acquired but said angle $\theta_1$ exceeds 10°. In addition, in the design of the optical wiring connection object of the first enforcement form of present invention of the sixth group, in order to design so that said angle $\theta_1$ may satisfy said range, as mentioned above, the optical refractive index (n11) of the optical wiring 6101, the optical refractive index (n12) of the optical wiring 6102, and facet of the optical wiring 6101 should just adjust at least one of optical axis and the angles $\alpha_1$ to make. In addition, in said optical wiring connection object, it says that it is not parallel that optical axis of the optical wiring A and optical axis of the optical wiring B have bent in the connection part of the optical wiring A and the optical wiring B. As another example of the enforcement form of said optical wiring connection object, it has the optical wiring C and the optical wiring D at least, the side of the end of said optical wiring C and facet of said optical wiring D are connected, and the form (it says also with the second enforcement form group sixth of present invention hereafter) which has bent in the connection part of said optical wiring C and said optical wiring D is mentioned. Fig. 42 is a sectional view showing typically an example of the optical wiring connection object of present invention of the sixth group. In addition, usually, although optical wiring consists of a core and clad, it is illustrating only the core of optical wiring in Fig. 42. The optical wiring connection object 6200 shown in Fig. 42 consists of optical wiring 6201 and optical wiring 6202, and side 6201b of end 6201a of the optical wiring 6201 and facet 6202a of the optical wiring 6202 are connected. Here, the optical wiring 6201 will correspond to said optical wiring C, and the optical wiring 6202 will correspond to said optical wiring D. In addition, in the optical wiring connection obj ect of present invention of the sixth group, the side of the end of optical wiring means the side near the end of optical wiring. Moreover, when clad, covering, etc. which are not necessarily limited to the own side of a core, but consist of a specific material exist in the circumference of a core, you may be a portion through clad, covering, etc. Moreover, the angle $\alpha_{21}$ with optical axis (a thick line arrow shows among a figure) of facet of the side which the optical refractive index (n21) of the optical wiring 6201 differed from the optical refractive index (n22) of the optical wiring 6202, and was connected with the optical wiring 6202 of the optical wiring 6201 with the optical wiring connection object 6200 to make is not 90 °. Moreover, with the optical wiring connection object 6200, an optical signal will be transmitted between the optical wiring 6201 and the optical wiring 6202 through reflection by facet 6201a of the optical wiring 6201. Therefore, as for the size relation with the optical refractive index (n23) of the medium which touches the optical refractive index (n21) of the optical wiring 6201, and facet 6201a of the optical wiring 6201, it is desirable that it is n21>n23, and, as for the angle (90-$\alpha_{21}$) of normal line of facet 6201a of the optical wiring 6201, and optical axis of the optical wiring 6201 to make, it is still more desirable that it is close to a critical angle. It is because an optical signal will be more certainly transmitted between the optical wiring 6201 and the optical wiring 6202 when close to a critical angle. In addition, said critical angle is easily computable by using the following formula (2) from the optical refractive index n21 of the optical wiring 6201, and the optical refractive index n23 of the medium which touches facet 6201a of the optical wiring 6201. In addition, $\theta$ is a critical angle among the following formula (2).

$$\sin\theta= (n23/n21) \tag{2}$$

with the optical wiring connection obj ect 6200, since the optical wiring 6201 and the optical wiring 6202 from which an optical refractive index differs are connected, the optical signal which reflects by facet 6201a of the optical wiring 6201, and is transmitted to the optical wiring 6202 will be refracted by the interface of the optical wiring 6201 and the optical wiring 6202 again Therefore, as for optical axis of light (only henceforth catoptric light in explanation of the optical wiring connection object of the second enforcement form of present invention of the sixth group) and optical axis of the optical wiring 6202 which it was transmitted from the optical wiring 6201 side, and were reflectedby facet of the optical wiring 6201 with the optical wiring connection object of the second enforcement form of present invention of the sixth group, it is desirable for there to be nothing on a straight line.

It is desirable for the angle $\theta_2$ of optical axis of catoptric light and optical axis of the optical wiring 6202 to make to specifically satisfy the relation of the following formula (3) like the optical wiring connection object 6200 shown in Fig. 42 in "optical refractive index n21 of the optical wiring 6201" > "the optical refractive index n22 of the optical wiring 6202."

$$\sin(90-\alpha_{22}) = (n21/n22) \times \sin(90-\alpha_{22}-\theta_2) \tag{3}$$

In addition, the inside $\alpha_{22}$ of a formula is the angle of facet 6202a of the optical wiring 6202, and optical axis to make Moreover, to the case of the optical refractive-index n21< light refractive index n22, the optical wiring 6202 will bend with the direction shown in Fig. 42 at a contrary side. That is, in "optical refractive index of the optical wiring C" < "the optical refractive index of the optical wiring D", with the optical wiring connection object 6200 shown in Fig. 42, the optical wiring D will bend on the basis of optical axis of the catoptric light of the optical wiring C at a contrary side to the optical wiring 6202 having bent on the right-hand side in a figure on the basis of optical axis of the catoptric light of the optical wiring 6201. In this case, it is desirable for the angle $\theta_2$ of optical axis of catoptric light and optical axis of the optical wiring 6202 to make to satisfy the relation of the following formula (3'). $\sin(90-\alpha_{22}) = (n21/n22) \times \sin(90-\alpha_{22}-(-\theta_2)) = (n21/n22) \times \sin(90-\alpha_{22}+\theta_2)$ ... (3') in addition When you satisfy said formula (3') (i.e., when the direction which the optical wiring D showed in Fig. 41 on the basis of optical axis of the optical wiring C bends to a contrary side), the angle of the optical wiring C and the optical wiring D to make will take a negative value, and suppose that this is indicated as $(-\theta_2)$ by said formula (3'). Although such an optical wiring connection object 6200 has the form which bent in the connection part of the optical wiring 6201 and the optical wiring 6202, it can transmit an optical signal certainly. With the optical wiring connection object of the second enforcement form of present invention of the sixth group, it can consider as the optical wiring connection object with which facet 6202a of the optical refractive index of the optical wiring 6201 and the optical wiring 6202, the angle which facet 6201a of the optical wiring 6201 makes with optical axis, and the optical wiring 6202 has a desiredbending angle by choosing optical axis, the angle to make suitably. Moreover, it sets on the optical wiring connection object of the second enforcement form of present invention of the sixth group. Since an optical signal will reflect by facet of the optical wiring 6201, the size of the angle $(90-\alpha_{21})$ of normal line of facet 6201a of the optical wiring 6201 and optical axis of the optical wiring 6201 in the optical wiring connection object 6200 to make It is the same as the critical angle in facet of the optical wiring 6201, or it is desirable that it is larger than this, and a thing large about 2-3° s is more desirable than said critical angle. It is because an optical signal will be more certainly reflected in facet 6201a of the optical wiring 6201 with the optical wiring connection object acquired though the variation in some arose from the design at the time of manufacture when the size of said angle $(90-\alpha_{21})$ is larger than a critical angle about 2-3 °s. In addition, in said optical wiring connection object, it says that it is not parallel that optical axis of the optical wiring C and optical axis of the optical wiring D have bent in the connection part of the optical wiring C and the optical wiring D. As still more nearly another example of the enforcement form of said optical wiring connection obj ect While having the optical wiring E, the optical wiring F, and the optical wiring G at least and connecting the side of the end of said optical wiring E, and facet of said optical wiring F facet of the side to which the optical wiring F of said optical wiring E was connected, and facet of said optical wiring G are connected, and the form (it says also with the third enforcement form hereafter) which has bent in the connection part of said optical wiring E and Above F and the connection part of said optical wiring E and said optical wiring G is mentioned. Fig. 43 is a sectional view showing typically an example of the optical wiring connection object of present invention of the sixth group. In addition, usually, although optical wiring consists of a core and clad, it is illustrating only the core of optical wiring in Fig. 43. While the optical wiring connection object 6300 shown in Fig. 43 consists of the optical wiring 6301, optical wiring 6302, and optical wiring 6303 and side 6301b of end 6301a of the optical wiring 6301 and facet 6302a of the optical wiring 6302 are connected, facet 6301a of the side to which the optical wiring 6302 of the optical wiring 6301 was connected, and facet 6303a of the optical wiring 6303 are connected. Here, the optical wiring 6301 will correspond to said optical wiring E, the optical wiring 6302 will correspond to said optical wiring F, and the optical wiring 6303 will correspond to said optical wiring G. moreover, facet 6301a of the side which the optical refractive index (n31) of the optical wiring 6301 differed from the optical refractive index (n32) of the optical wiring 6302, and was connected with the optical wiring 6302 of the optical wiring 6301 with the optical wiring connection object 6300 the angle $\alpha_{31}$ with optical axis (a thick line arrow shows among a figure) to make 90 °s not but, the optical refractive index of the optical wiring 6301 differs from the optical refractive index (n33) of the optical Moreover, the angle $\theta_{31}$ of the optical wiring 6301 and the optical wiring 6303 to make is satisfied with the optical wiring connection object 6300 of the predetermined relation.

The relation specifically expressed with said formula (1') which the angle $\theta_1$ of the optical wiring 6101 of the optical wiring connection object 6100 of the first enforcement form of present invention of the sixth group and the optical wiring 6102 to make has satisfied, and the same relation are satisfied. In addition, with the optical wiring connection object 6300 shown in Fig. 43, it is "optical refractive index n31 of the optical wiring 6301" > "the optical refractive index n33 of the optical wiring 6303."

This reason is as follows. As the meaning that it was the same in case the optical wiring connection object of the second enforcement form of present invention of the sixth group is explained was already expressed In transmitting an optical signal between the optical wiring 6301 and an optical waveguide 6302 through reflection of the light in facet 6301a of the optical wiring 6301 That it is n31>n33 depends the size relation with the optical refractive index (n33) of the medium (optical wiring 6303) which touches the optical refractive index (n31) of the optical wiring 6301, and facet 6301a of the optical wiring 6301 on a desirable thing. Moreover, the angle $(90-\alpha_{31})$ of normal line of facet 6301a of the optical wiring 6301 and optical axis of the optical wiring 6301 to make is because it is desirable that it is close to a critical angle. In addition, an optical signal will be more certainly transmitted between the optical wiring 6301 and the optical wiring 6302, so that the angle of the above $(90-\alpha_{31})$ is close to a critical angle. In addition, with the optical wiring connection object 6300, while transmitting an optical signal between the optical wiring 6301 and the optical wiring 6302 In order to transmit an optical signal also between the optical wiring 6301 and the optical wiring 6303, not necessarily the angle $(90-\alpha_{31})$ of normal line of facet 6301a of the optical wiring 6301, and optical axis of the optical wiring 6301 to make What is necessary is not to be necessarily desirable and just to, choose the angle of the above $(90-\alpha_{31})$ the more suitably in consideration of optical transmission ability between the optical wiring 6301 and the optical wiring 6302 between optical transmission ability, and the optical wiring 6301 and the optical wiring 6303, the more it is close to a critical angle. Moreover, with the optical wiring connection obj ect 6300, since the optical wiring 6301 and the optical wiring 6302 from which an optical refractive index differs are connected, the optical signal which reflects by facet 6301a of the optical wiring 6301, and is transmitted to the optical wiring 6302 will be refracted by the interface of the optical wiring 6301 and the optical wiring 6302. therefore, with the optical wiring connection object of the third enforcement form Light which it was transmitted from the optical wiring 6301 side, and was reflected by facet of the optical wiring 6301 (in explanation of the optical wiring connection obj ect of the third enforcement form of present invention of the following and the sixth group) Only, as for optical axis called catoptric light and optical axis of the optical wiring 6302, it is desirable for there to be nothing on a straight line, and it is desirable for the angle $\theta_{32}$ of optical axis of catoptric light and optical axis of the optical wiring 6302 to make to.have satisfied the predetermined relation. It is desirable to specifically have satisfied said formula (3) which the angle $\theta_2$ of optical axis of catoptric light and optical axis of the optical wiring 6202 to make has satisfied or (3') the relation expressed, and the same relation in the optical wiring connection object 6200 of the second enforcement form of present invention of the sixth group. It can transmit an optical signal between the optical wiring 6301 and the optical wiring 6303 while it can transmit an optical signal between the optical wiring 6301 and the optical wiring 6302, although such an optical wiring connection object 6300 has the form which bent in the connection part of the optical wiring 6301 and the optical wiring 6302, and the connection part of the optical wiring 6301 and the optical wiring 6303. Therefore, the optical wiring connection object of the third enforcement form of present invention of the sixth group can function as optical KAPPURA (optical branch joint machine). With the optical wiring connection obj ect of the third enforcement form, it can consider as the optical wiring connection object with which facet 6302a of the optical refractive index of the optical wiring 6301, the optical wiring 6302, and the optical wiring 6303, the angle which facet 6301a of the optical wiring 6301 makes with an axis, and the optical wiring 6302 has a desired bending angle by choosing optical axis, the angle to make suitably.

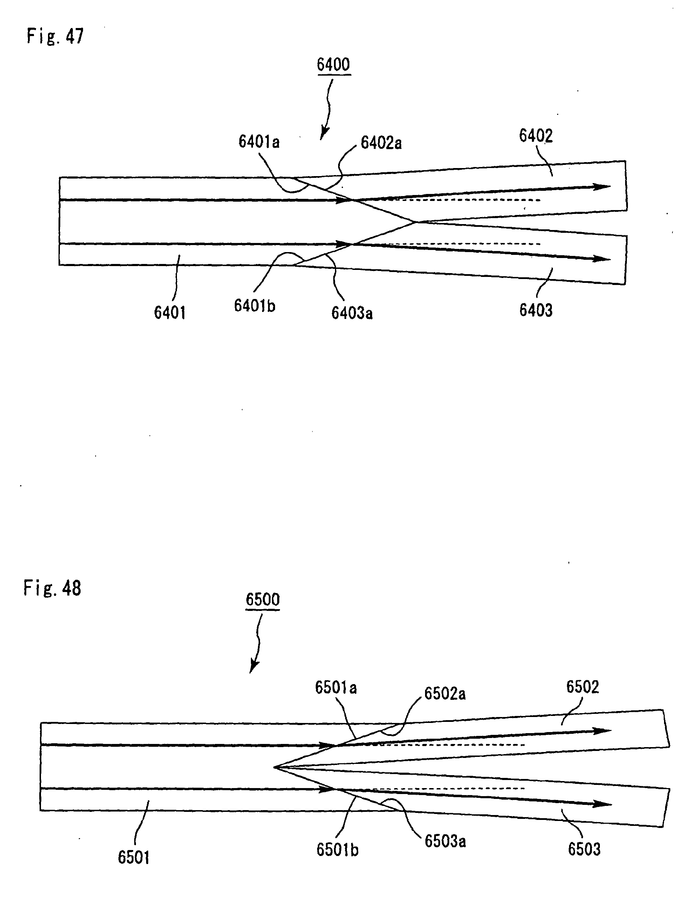

Moreover, in the optical wiring connection object of the third enforcement form of present invention of the sixth group, although especially the absolute value of the size of the angle $\theta_{31}$ of the optical wiring 6301 and the optical wiring 6303 to make is not limited, the minimum has desirable 7° and its 10° are more desirable. On the other hand, as for the maximum of said angle $\theta_{31}$, it is desirable that it is smaller than the critical angle in facet 6301a of the optical wiring 6301 7° , and it is more desirable than said critical angle. of a thing small 10 ° The size of said angle $\theta_{31}$ sets to facet 6301a of the optical wiring 6301 at less than 7 ° . An optical signal seldom reflects and an optical signal may fullybe unable to be transmittedbetween the optical wiring 6301 and the optical wiring 6302. On the other hand, when the size of said angle $\theta_{31}$ exceeds an angle smaller 7 ° than said critical angle In facet 6301a of the optical wiring 6301, it is because most optical signals reflect and an optical signal may fully be unable to be transmitted between the optical wiring 6301 and the optical wiring 6303. In addition, in order to design in the design of the optical wiring connection object of the third enforcement form of present invention of the sixth group so that said angle $\theta_{31}$ may satisfy said range The optical refractive index (n31) of the optical wiring 6301, the optical refractive index (n32) of the optical wiring 6302, the optical refractive index (n33) of the optical wiring 6303, and facet of the optical wiring 6301 should just adjust at least one of optical axis and the angles $\alpha_{31}$ to make. in addition, having bent in the connectionpart of the optical wiring E and the optical wiring F in said optical wiring connection object It says that optical axis of the optical wiring E and optical axis of the optical wiring Fare not parallel, and says that it is not parallel that optical axis of the optical wiring E and optical axis of the optical wiring G have bent in the connection part of the optical wiring E and the optical wiring G in said optical wiring connection object. in addition, first of present invention of the sixth group - the optical wiring connection object of the third enforcement form, although optical wiring of 2 or 3 is connected the enforcement form of the optical wiring connection object of present invention of the sixth group is not necessarily limited to such a form, and optical wiring of three or more connects it you may have the optical wiring connection object of an enforcement form individual parts other than optical wiring namely, . The optical parts represented by optical elements, such as optical parts, such as a lens, a mirror, a prism, and a filter, and a luciferin child, a light receiving element, etc. may be connected. moreover, first - which mentioned above the optical wiring connection object of present invention of the sixth group you may combine arbitrarily the optical wiring connection object of the third enforcement form Moreover, the enforcement form of the optical wiring connection object of present invention of the sixth group which can be used as optical capular may be an enforcement form as not necessarily limited to the enforcement form shown in Fig. 43 and shown in Figs. 47 and 48. Fig. 47 and 48 is a sectional view showing typically the enforcement form of the optical wiring connection object of present invention of the sixth group, respectively. In addition, usually, although optical wiring consists of a core and clad, it is illustrating only the core of optical wiring in Figs. 47 and 48. what the optical wiring connection object 6400 shown in Fig. 47 becomes from the optical wiring 6401, the optical wiring 6402, and the optical wiring 6403 it is a part of facet of the optical wiring 6401 while 6401a and facet 6402a of the optical wiring 6402 are connected a part of another facet of the optical wiring 6401 6401b and facet 6403a of the optical wiring 6403 are connected Moreover, this optical wiring connection object 6400 has the form which bent in the connection part of the optical wiring 6401 and the optical wiring 6402, and the connection part of the optical wiring 6401 and the optical wiring 6403 as it is shown in Fig. 47. In addition, in the optical wiring 6400, it says that it is not parallel that optical axis of the optical wiring 6401 and optical axis of the optical wiring 6402 have bent in the connection part of the optical wiring 6401 and the optical wiring 6402, and says that it is not parallel that optical axis of the optical wiring 6401 and optical axis of the optical wiring 6403 have bent in the connection part of the optical wiring 6401 and the optical wiring 6403.

Moreover, end which the optical refractive index of the optical wiring 6401 differs from the optical refractive index of the optical wiring 6402, and is connected with the optical wiring 6402 of the optical wiring 6401 with the optical wiring connection object 6400 does not have the perpendicular angle with optical axis (a thick line arrow shows among a figure) to make. Furthermore, the angle with optical axis (a thick line arrow shows among a figure) of facet which the optical refractive index of the optical wiring 6401 differs from the optical refractive index of the optical wiring 6403, and is connected with the optical wiring 6403 of the optical wiring 6401 to make isnotperpendicular, either. Inaddition, theoptical refractive index of each optical wiring which constitutes the optical wiring connection object 6400 has the relation of the optical refractive index of the optical refractive-index < light wiring 6402 of the optical wiring 6401, and the optical refractive index of the optical refractive-index < light wiring 6403 of the optical wiring 6401. Here, the optical wiring 6402 and the optical wiring 6403 may be the same, and may differ from each other. what the optical wiring connection object 6500 shown in Fig. 48 becomes from the optical wiring 6501, the optical wiring 6502, and the optical wiring 6503 it is a part of facet of the optical wiring 6501 while 6501a and facet 6502a of the optical wiring 6502 are connected a part of another facet of the optical wiring 6501 6501b and facet 6503a of the optical wiring 6503 are connected Moreover, this optical wiring connection object 6500 has the form which bent in the connection part with the optical wiring 6502 with the optical wiring 6501, and the connection part of the optical wiring 6501 and the optical wiring 6503 as it is shown in Fig. 48. In addition, in the optical wiring 6500, it says that it is not parallel that optical axis of the optical wiring 6501 and optical axis of the optical wiring 6502 have bent in the connection part of the optical wiring 6501 and the optical wiring 6502, and says that it is not parallel that optical axis of the optical wiring 6501 and optical axis of the optical wiring 6503 have bent in the connection part of the optical wiring 6501 and the optical wiring 6503. Moreover, facet which the optical refractive index of the optical wiring 6501 differs from the optical refractive index of the optical wiring 6502, and is connected with the optical wiring 6502 of the optical wiring 6501 with the optical wiring connection object 6500 The angle with optical axis (a thick line arrow shows among a figure) to make is not perpendicular, and the angle with optical axis (a thick line arrow shows among a figure) of facet which the optical refractive index of the optical wiring 6501 differs from the optical refractive index of the optical wiring 6503, and is further connected with the optical wiring 6503 of the optical wiring 6501 to make is not perpendicular, either. In addition, the optical refractive index of each optical wiring which constitutes the optical wiring connection object 6500 has the relation of the optical refractive index of the optical refractive-index > light wiring 6502 of the optical wiring 6501, and the optical refractive index of the optical refractive-index > light wiring 6503 of the optical wiring 6501. Here, the optical wiring 6502 and the optical wiring 6503 may be the same, and may differ from each other. In addition, the difference in the enforcement form of the optical wiring connection object 6400 and the optical wiring connection object 6500 is in the form of each facet of the optical wiring 6401 and the optical wiring 6501 so that clearly from Fig. 47 and 48.

That is, with the optical wiring connection object 6400, facet (6501a, 6501b) of form which is dented in the optical wiring 6501 side is formed with the optical wiring connection object 6500 to facet (6401a, 6401b) of form which projects in an optical wiring 6401 and opposite side being formed. Such optical wiring connection objects 6400 and 6500 can be used as optical capular, as mentioned above. In addition, in the optical wiring connection object 6400, when the optical refractive index of the optical wiring 6402 and the optical refractive index of the optical wiring 6403 are the same and the angle which facet 6401a makes with optical axis, and the angle which facet 6401b makes with optical axis are still the same, the optical wiring connection object 6400 can branch so that the intensity may be set to 1:1 in an optical signal. Furthermore, when the optical refractive index of the optical wiring 6502 and the optical refractive index of the optical wiring 6503 are the same similarly and the angle which facet 6501a makes with optical axis, and the angle which facet 6501b makes with optical axis are still the same also in the optical wiring connection object 6500, the optical wiring connection object 6500 can branch so that the intensity may be set to 1:1 in an optical signal. Moreover, although the optical wiring connection object explained so far while referring to the drawing had the crookedness part of the form which bent in the connection part of optical wiring, the optical wiring connection object of present invention of the sixth group may have the crookedness part of the shape of a smooth curve depending on the case. As an example, the optical wiring H of the optical refractive index nh and the optical wiring I of the optical refractive index ni are connected through the optical curve-like wiring J, and the optical wiring connection object of a form from which the optical refractive index of the optical wiring J changes to ni in inclination from nh toward the optical wiring H side to the optical wiring I is mentioned. The optical wiring connection object of such a form can also transmit an optical signal certainly, although the optical wiring from which an optical refractive index differs is connected. Inaddition, facet of the side connected with the optical wiring J of the optical wiring H and/or the optical wiring I does not cross at the optical wiring connection object which has the crookedness part of the shape of a curve mentioned above at right angles to optical axis.

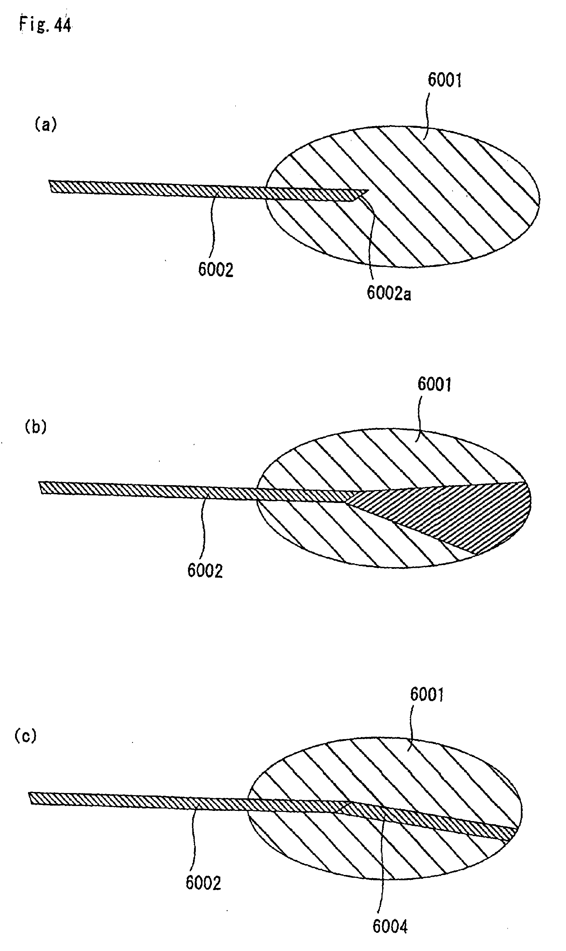

Next, how to manufacture the optical wiring connection object of present invention of the sixth group is explained. Especially the manufacture method of the optical wiring connection object present invention of the sixth group is not limited, but can use the method of using the technology of self-organizing optical waveguide etc. Hereafter, it explains, referring to a drawing about this method. In addition, here explains how to manufacture the optical wiring connection obj ect of the first enforcement form of present invention of the sixth group to an example. Fig. 44 (a) - (c) is a schematic diagrams for describing an example of a method which manufactures the optical wiring connection object of present invention of the sixth group. In addition, usually, although optical wiring consists of a core and clad, it shows only the core of optical wiring in Fig. 44. By this manufacture method, optical wiring (optical wiring A) of one of the optical wiring which constitutes an optical wiring connection object is first used as start material. As an example of said optical wiring A, as mentioned above, an optical fiber, an optical waveguide, etc. are mentioned, and this optical wiring A processes so that the form of facet which will be connected with the optical wiring B may turn into form which does not cross at right angles to optical axis. Moreover, as shown in Fig. 44, the optical wiring A used here may consist only of a core, and may consist of a core and clad. Moreover, covering etc. may exist in the core or the perimeter part of clad. When said optical wiring is an optical fiber, polish processing etc. can be used as a method of making it into the form which described the facet above. Moreover, when said optical wiring is an optical waveguide, as a method of making it into the form which described the facet above, cutting with polish processing, laser, a dicing braid, etc. can be used. Moreover, in case an optical waveguide is produced, you may produce an optical waveguide so that it may have facet of said form. Next, the core according to the course of light is formed by arranging said optical wiring and irradiating light into said photosensitive composite through said optical wiring so that facet which the optical wiring A processed at least maybe immersed into the photosensitive composite mentioned above, and it considers as other optical wiring (optical wiring B) connected to the optical wiringA. It plasters, or (figure 44(a) reference) and a photosensitive composite are put into a container, and the facet side which the optical wiring A processed here is immersed so that facet to which the optical wiring A processed the photosensitive composite 6001 may specifically be wrapped in first. In addition, 6002 are the optical wiring A among Fig. 44, and 6002a is facet of the optical wiring A.

Moreover, as the optical wiring from which an optical refractive index differs was connected andbeingmentionedabove, as for the optical wiring connection object of present invention of the sixth group, it is desirable for the angle of the optical refractive index of the optical wiring connected and optical axis of facet of optical wiring of one to make and the angle which optical wiring makes to be what satisfies a predetermined relation. Therefore, although what is necessary is just to use the photosensitive composite used as a desired optical refractive index after hardening, choosing in manufacturing an optical wiring connection object by the manufacture method using the technology of this self-organizing optical waveguide, even if it is photosensitive composites other than this, it can be used by adjusting the optical refractive index. In addition, when adjusting the optical refractive index of a photosensitive composite, while the optical refractive index after hardening becomes a desired value, it is desirable to adjust so that the optical refractive index before hardening may become a desired value. The method explained by invention of the second of present invention of the first group as a method which adjusts the optical refractive index of said photosensitive composite, and the same method, i.e., the method of adjusting molecule refraction and molecular volume, can be used. Moreover, as facet to which processing of said optical wiring A was performed was mentioned above, flat-ized processing may be performed, especially flat-ized processing does not need to be performed, and surface roughness Ra of the facetmaybe 0.1 micrometers ormore. Therefore, said facet could only be cut at the angle predetermined by the arbitrary cutting methods (cutting instruments, such as nippers, cut). as mentioned above, the end of the optical wiring A is wrapped in this manufacture method as applying a photosensitive composite etc., after carrying out By which irradiate light into the photosensitive composite 6001 through the optical wiring A irradiating light through the optical wiringA in this way (referring to Fig. 44 (b)) The photosensitive composite 6001 will begin to harden from the optical wiring A side according to the course of light, and an optical waveguide (optical wiring B) combined with the optical wiring A will be formed (see Fig. 44 (c) ) . In addition, 6004 are the optical wiring B among Fig. 44. Moreover, the optical wiring B shown in Fig. 44 (c) consists only of a core, and in this state, since the photosensitive composite which consists of a core and which is not hardened around the optical wiring B can play a role of clad, it can transmit an optical signal. In addition, it is good also as optical wiring B which hardens the photosensitive composite which consists of a core, and which is not hardened around the optical wiring B, and consists of a core and clad so that it may mention later.

By such manufacture method of the optical wiring connection object present invention of the sixth group, the optical wiring B will be formed in gradually from the optical wiring A side according to the irradiated course of light. Therefore, as for the photosensitive composite used by this manufacture method, it is desirable that it is that to which the optical refractive index becomes higher than hardening before after hardening. It is because it will glare intensively from the tip of this optical wiring B and an optical waveguide (optical wiring B) according to the course of light can be formed more certainly, being shut up in the optical wiring B in which the light irradiated through the optical wiring A when an optical refractive index became high after hardening was formed. Moreover, in this manufacture method, it is not limited especially as a light irradiated in case aphotosensitive composite is stiffened, but light including an ultraviolet ray with a wavelength of 200-500nm etc. can be used that what is necessary is just to choose suitably in consideration of composition of a photosensitive composite. Moreover, a high-pressure mercury lamp etc. can be used as a light source which irradiates the light of such wavelength. Moreover, a metal HALIDE lamp, a XENON lamp, laser, etc. can be used. Moreover, in this manufacture method, although light will usually be introduced from the end by the side of that was flooded with the photosensitive composite of the optical wiring A, and opposite in case light is irradiated through the optical wiring A, depending on the case, you may introduce light from the side of the optical wiring A. It is because light may be able to be introduced with the form of the optical wiring A etc. having introduced light efficiently way from the side of the optical wiring A. By passing through such a process, the optical wiring connection object which the optical wiring A and the optical wiring B (an optical waveguide) combined can be manufactured. Moreover, after forming the optical wiring B which consists of a core, as it connected with the optical wiring A, and it mentioned above by the manufacture method of this optical wiring connection object, it is good also as optical wiring B which forms clad hardened around the core and consists of a core and clad. It is because it will be stabilized more as optical wiring.

How to consider optical wiring B as the optical wiring which consists of a core and clad hereafter is explained. Specifically, after forming said core, solid clad can be formed by performing hardening processing to clad which is not hardened of the circumference . Then, after forming said core, it is possible by irradiating light at non-hardened clad to solid-ize the whole system. Since a core and clad will have the almost same optical refractive index and it becomes impossible to confine light in a core by performing hardening processing and forming clad when using what contains only one kind of photosensitive composite as said photosensitive composite, it will stop however, functioning as optical wiring B. Therefore, it is desirable to consider as stable an optical waveguide (optical wiring B) which the whole system solid-ized by forming clad solid-ized using the following methods. That is, after removing the photosensitive composite which is not hardened of the circumference after forming said core, then flooding said core with another resin or a resin composite, themethodof forming clad can be used by performing hardening processing. However, as mentioned above, after only the core has hardened, this core has a very unstable thing, and a photosensitive non-hardened composite is not removed in this state, if handling very carefully. Therefore, it is desirable to use the method of forming a core part and a cladding part beforehand using the photosensitive composite which mixed the resin for core formation and the resin for clad formation as the method explained also by the formation method of an optical waveguide invention of the second present invention of the first group, i.e., a photosensitive composite. Here, the same photosensitive composite as what was used by invention of the second of present invention of the first group as a photosensitive composite containing said resin for core formation and said resin for clad formation can be used. By this manufacture method, although the polymerization of the resin for core formation is possible in case light is irradiated into a photosensitive composite through the optical wiring A as mentioned above While only the resin for core formation hardens preferentially like the case of invention of the secondof present invention of the first group and the core part according to the course of the light is formed by irradiating the light of substantial almost impossible intensity, the polymerization of the resin for clad formation It will be in the state where the photosensitive composite the circumference of whose is not hardened surrounded. Then, a stable cladding part can be formed in the circumference of a core part by hardening the resin for clad formation. In addition, like invention of the second of present invention of the first group, in case the resin for clad formation is hardened, the non-hardened resin for core formation may harden here. By using such a manufacture method, the optical wiring connection object of the first enforcement form can be manufactured.

Moreover, in manufacturing the optical wiring connection object of the second enforcement form using the technology of self-organizing optical waveguide mentioned above Replace with the optical wiring A and using the optical wiring C except the portion which will be connected with the optical wiring D of the optical wiring C at least arranging the optical wiring C so that it may be immersed into a photosensitive composite It can manufacture using the method of manufacturing the optical wiring connection object of the first enforcement formmentioned above, and the same method. At this time, polish processing and cutting are performed to facet of the optical wiring C so that the angle with optical axis to make may serve as a desired angle. Moreover, what is necessary is just to determine suitably the angle with facet of the optical wiring C to make in consideration of the optical refractive index of the medium (for example, photosensitive composite) of the portion which will touch in case the optical refractive index of the optical wiring C, the optical refractive index of the optical wiring D to form, and facet of the optical wiring C form the optical wiring D, the bending condition of the optical wiring C and the optical wiring D, etc. furthermore, in manufacturing the optical wiring connection object of the third enforcement form using the technology of self-organizing optical waveguide mentioned above Replace with the optical wiring A and the portion which will be connected with facet of the optical wiring E and the optical wiring F of the optical wiring E at least using the optical wiring E Except arranging the optical wiring E so that it may be immersed into a photosensitive composite, it can manufacture using the method of manufacturing the optical wiring connection object of the first enforcement formmentionedabove, and the same method. At this time, polish processing and cutting are performed to facet of the optical wiring E so that the angle with optical axis to make may serve as a desired angle. Moreover, the angle with facet of the optical wiring E to make should just determine suitably the optical wiring connection object of the optical refractive index of the optical wiring E, the optical refractive index of the optical wiring F to form and the optical wiring G and the optical refractive index of a photosensitive composite, the bending condition of the optical wiring E and the optical wiring F, the bending condition of the optical wiring E and the optical wiring G, and the third enforcement form in consideration of the characteristic of this optical capular in the case of moreover, the method using reactive ion etching as a method of manufacturing the optical wiring connection object of present invention of the sixth group, the exposure developing-negatives method, and a metallic mold the method of using the formation methods of conventionally well-known an optical waveguide, such as the forming method, the register strike forming method, and a method that combined these, etc. can be used Here, how to manufacture the optical wiring connection object of the first enforcement form of present invention of the sixth group is explained using each method mentioned above. the manufacture method of using the method using said reactive ion etching (i) the resin for core formation for forming the optical wiring A on a substrate, a remote type film, and the resin layer for clad is applied first, and it considers as the resin layer for core formation by performing hardening processing further if needed (ii) Next, a mask (etching register strike) is formed on the resin layer for core formation by forming the resin layer for mask formation on said resin layer for core formation, and subsequently performing exposure development processing to the resin layer for this mask formation. (iii) By giving reactive ion etching to the resin layer for core formation, the resin layer for core formation of a mask a non-formingportion is removed, the above (i) of - (iii) and a process are performed after that (iv) which forms the core of the optical wiring A using the resin for core formation for forming the optical wiring B, and the core of the optical wiring B connected with the core of the optical wiring A is formed. By passing through such a process, the optical wiring connection object of the first enforcement form of present invention of the sixth group can be manufactured. Moreover, when the core of the optical wiring A and the optical wiring B is formed on the resin layer for clad, you may form the resin layer for clad further so that this core may be covered. Moreover, by the method using reactive ion etching mentioned above depending on the case, after forming the optical wiring A and the optical wiring B separately, you may connect both. moreover the manufacture method of using said exposure developing-negatives method (i) the resin for core formation for forming the optical wiring A on a substrate, a remote type film, and the resin layer for clad is applied first, and the resin layer for core formation is further formed by performing half-hardening processing if needed (ii) Next, the core of the optical wiring A is formed by laying the mask with which the pattern corresponding to the core formation portion of the optical wiringAwas drawn on said resin layer for core formation, and performing exposure development processing after that. (iii) After that, the process of the above (i) and (ii) is performed using the resin for core formation for forming the optical wiring B, and the core of the optical wiring B connected with the core of the optical wiring A is formed. By passing through such a process, the optical wiring connection object of the first enforcement form of present invention of the sixth group can be manufactured.

Moreover, when the core of the optical wiring A and the optical wiring B is formed on the resin layer for clad, you may form the resin layer for clad further so that this core may be covered. Moreover, by the exposure developing-negatives method mentioned above depending on the case, after forming the optical wiring A and the optical wiring B separately, you may connect both. moreover, the above a metallic mold the method of using the forming method (i) first the substrate, remote type film, andresin layer top for clad ametallicmold the slot for forming the core of the optical wiring A by formation is formed (ii) Next, above-mentioned Mizouchi is filled up with the resin for core formation for forming the optical wiring A by printing, and the core of the optical wiring A is formed by performing hardening processing after that. (iii) The core of the optical wiring B which forms the optical wiring B for the above (i) and the same process as (ii) and which carried out for accumulating and was connected with the core of the optical wiring A is formed after that. By passing through such a process, the optical wiring connection object of the first enforcement form of present invention of the sixth group can be manufactured. Moreover, when the core of the optical wiring A and the optical wiring B is formed on the resin layer for clad, you may form the resin layer for clad further so that this core may be covered.

moreover, the metallic mold mentioned above depending on the case by the fabricating method, after forming the optical wiring A and the optical wiring B separately, you may connect both moreover the manufacture method of using said register strike forming method (i), first, after applying the resin composite for register strikes on a substrate, a remote type film, and the resin layer for clad, the register strike for core formation is formed in core the non-forming portion of tops, such as said resin layer for clad, by performing exposure development processing (ii) Next, the core of the optical wiring A is formed by the resin for core formation for forming the optical wiring A applying to said register strike non-forming portion, and exfoliating said register strike for core formation, after hardening the resin for core formation further. (iii) The core of the optical wiring B which forms the optical wiring B for the above (i) and the same process as (ii) and which carried out for accumulating and was connected with the core of the optical wiring A is formed after that. By passing through such a process, the optical wiring connection object of the first enforcement form of present invention of the sixth group can be manufactured. Moreover, when the core of the optical wiring A and the optical wiring B is formed on the resin layer for clad, you may form the resin layer for' clad further so that this core may be covered. Moreover, by the register strike fabricating method mentioned above depending on the case, after forming the optical wiring A and the optical wiring B separately, you may connect both. In addition, clad which consists of the same material is formed by the manufacture method of using the method using reactive ion etching mentioned above etc. When connecting both as an example after forming the optical wiring A and the optical wiring B separately, you may consist of a different material from clad formed in the optical wiring A, and clad formed in the optical wiring B. moreover, the method and the exposure developing-negatives method for having used reactive ion etching here, and a metallic mold although how to manufacture the optical wiring connection obj ect of the first enforcement form of present invention of the sixth group was explained by the forming method, the register strike forming method, etc., the optical wiring connection object of the second of present invention of the sixth group or the third enforcement form can also be manufactured using the same method as abbreviation. Namely, what is necessary is just to form the optical wiring D using the method of forming the optical wiring C and forming the optical wiring B, and the same method using the method of forming the optical wiring A, and the same method, in manufacturing the optical wiring connection object of the second enforcement form of present invention of the sixth group. Moreover, what is necessary is just to form the optical wiring F and the optical wiring G by repeating the method of forming the optical wiring E and forming the optical wiring B, and the same method twice using the method of forming the optical wiring A, and the same method, in manufacturing the optical wiring connection object of the third enforcement form of present invention of the sixth group. Moreover, as the optical wiring connection object of present invention of the sixth group was mentioned above, optical wiring of three or more maybe connected. Then, it is the optical wiring connection object by which optical wiring of three was connected to below, and how to manufacture a differing the optical refractive indicees of the optical wiring to connect light wiring connection object is explained briefly.

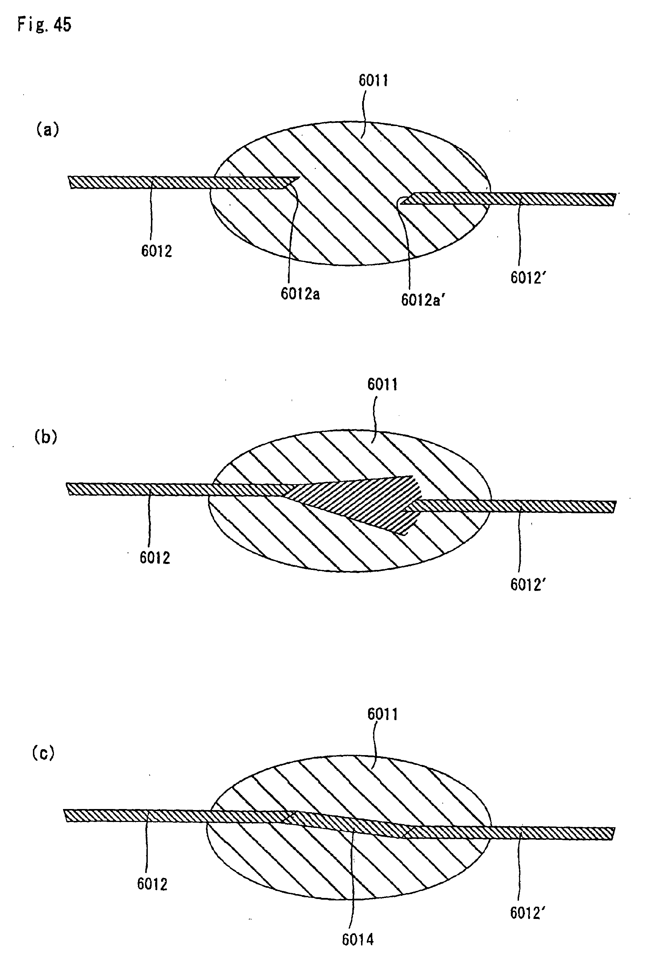

Fig. 45 (a) - (c) is a schematic diagrams for describing an example of a method which manufactures the optical wiring connection object of present invention of the sixth group. In addition, usually, although optical wiring consists of a core and clad, it shows only the core of optical wiring in Fig. 45. Specifically, first, opposite arrangement of the optical wiring 6012 of two and 6012' is carried out, and both end 6012a of the optical wiring 6012 and 6012' and 6012a' are flooded with the photosensitive composite 6011 by applying a photosensitive composite so that between this optical fiber 6012 and the end of 6012' may be surrounded etc. (see Fig. 45 (a)). As an example of the optical wiring 6012 and 6012', as mentioned above, an optical fiber, an optical waveguide, etc. are mentioned, and even if both optical refractive index is the same, they may differ. Moreover, to each facet6012a of this optical wiring 6012 and 6012', and 6012a', it processes so that optical axis and facet may not cross perpendicularly. In addition, polish processing, cutting, etc. which were mentioned above are mentioned as a method of processing facet of optical wiring. Moreover, in case an optical waveguide is produced, you may produce an optical waveguide so that it may have facet of said form. Next, the light for stiffening the photosensitive composite 6011 mentioned above is irradiated towards optical wiring 6012' of another side which counters from one optical wiring 6012 (see Fig. 45 (b)). Thus, the optical wiring 6014 to which the photosensitive composite 6011 hardens from the optical wiring 6012 side to gradually, and connects the optical wiring 6012 and optical wiring 6012' according to the course of light will be formed by irradiating light toward optical wiring 6012' of another side fromone optical wiring 6012 (see Fig. 45 (c)). Then, by forming clad hardened around the optical wiring 6014 using said method and the same method if needed, optical wiring of three is connected and it can consider as the optical wiring connection object which bent in each connection part. Moreover, by the manufacture method of the optical wiring connection object which connects between the optical wiring of two mentioned above, light is irradiated only through optical wiring of one. It may replace with this method and light may be irradiated toward optical wiring of another side from each of optical wiring of two. In this case, light may be simultaneously irradiated through optical wiring of two, and light may be irradiated by turns from each optical wiring. In addition, with the optical wiring connection object manufactured by such manufacture method, the optical refractive index of the optical wiring 6014 differs from the optical refractive index of the optical wiring 6012 and 6012'.

Next, the formation method of an optical waveguide according to the seventh group of the present invention will be explained. The formation method of an optical waveguide present invention of the seventh group is an optical waveguide formation method which comprising steps of:

forming an optical waveguide according to course of the light by irradiating light into photosensitive composite,

wherein
forming two or more an optical waveguide at the tip of each said optical wiring,by passing the optical wiring of two or more laid in parallel in the light which came out of the light source equipped with the single irradiation domain, and was put, and glaring into said photosensitive composite.

Since two or more an optical waveguide can be made to form collectively to the light source equipped with the single irradiation domain according to the formation method of an optical waveguide present invention of the seventh group, as compared with the conventional formation method mentioned above, the manufacture efficiency of an optical waveguide is circulated by leaps and bounds. In addition, even when irradiating light at optical wiring of two or more, even if it does not condense for every with a lens, optical intensity required for formation of an optical waveguide can fully be secured by enlarging the irradiation output of a light source or making sensitivity of a photosensitive composite high. by the way, when the light which comes out of a light source and is put diffuses, theopticalon-the-strengthdistribution the optical intensity near the center of the optical course of the Idei light is high, and of Yamagata that the optical intensity near an end is low may arise When it does so, a difference will arise at the growth speed of an optical waveguide which a difference arises about the intensity of the light which carries out ON light with the position of the optical wiring which lets the Idei light pass, as a result is formed at the tip of each optical wiring. Therefore, it is desirable for incidence end of said optical wiring to detach only predetermined distance, and to prepare it from the Idei end of said light source, by the formation method of an optical waveguide present invention of the seventh group. thus, if it carries out, the on-the-strength distribution of the light which came out of the light source and was put will become possible carrying out ON light of the light for the almost uniform central part to optical wiring of two or more Therefore, two or more an optical waveguide formed at the tip of optical wiring can be uniformly formed now, respectively. Furthermore, as for the area of the Idei end of said light source, by the formation method of an optical waveguide present invention of the seventh group, it is desirable to be made larger than the area of incidence end of said optical wiring. Also in this case, it is possible to be able to carry out ON light of the respectively uniform light of how often to optical wiring of two or more, and to make uniform an optical waveguide form at the tip of optical wiring. There is structure which makes thick the optical guide from the light source to the Idei end, or bundles and uses the optical guide of two or more as a method of enlarging area of the Idei end of said light source. Moreover, the light irradiated by said photosensitive composite by the formation method of an optical waveguide present invention of the seventh group makes the pair which should be combined optically, and it is desirable to glare towards optical wiring of the other party, respectively from optical wiring. by considering as said composition, optical intensity becomes high in the portion which the mutual Idei light which comes out of each optical wiring and is put overlaps Therefore, even when optical axis of each optical wiring has shifted, an optical waveguide is formed in the course which connects the end of both light wiring, and it becomes possible to attain an optical combination by highprobability. In addition, the same thing as the photosensitive composite used by the formation method of an optical waveguide invention of the second present invention of the first group as a photosensitive composite used by the formation method of an optical waveguide present invention of the seventh group etc. is mentioned.

Next, the formation method of an optical waveguide according to the eighth group of the present invention will be explained.

The formation method of an optical waveguide present invention of the eighth group is an optical waveguide formation method which comprising steps of:

placing a photosensitive composite into a case made of resin, and
making a line harden of the irradiation region of light by and irradiating light in said photosensitive composite,

wherein
in said case made of resin, recurrence rate of the light which recur after being scattered on the circumference from the irradiation region of said light differs along the formation direction of said an optical waveguide.

Since the intensity of the light of the irradiation region of light becomes high and the diameter of the domain over which the light of the intensitymore than predetermined is distributed becomes large when there is much light which recur after being around scattered about from the irradiation region of light in a photosensitive composite, the diameter of an optical waveguide formed becomes large. On the contrary, since the intensity of the light of the irradiation region of light becomes low when there is little light which recur, the diameter of an optical waveguide formed becomes small. Therefore, it becomes possible by considering recurrence rate of light as different composition along the formation direction of an optical waveguide like the formation method of an optical waveguide present invention of the eighth group to adjust the diameter of an optical waveguide in the direction of an axis within a certain amount of limits. Thus, there is a method of changing the reflectance in the inside of a resin accommodation part as one of the methods which changes recurrence rate of light along the formation direction of an optical waveguide. Moreover, as other methods, there is a method of changing the distance of the irradiation region of light and the inside of a resin accommodation part. One method for changing recurrence rate of light along the formation direction of an optical waveguide is changing the reflectance of the light in the inside of a resin accommodation part, as mentioned above. What is necessary is just to specifically, form the inside of a resin accommodation part by the substance which has a refractive index lower than the photosensitive composite which forms an optical waveguide, in order to make reflectance high. If it is made such, since the light more than a certain fixed incidence angle will be all reflected in the inside of a resin accommodation part, reflectance will be raised. In addition, since there are some which absorb irradiation light depending on a substance, it is desirable to use the low thing of absorption efficiency in the wavelength range of irradiation light. If it is silica glass and is specifically a visible domain as a substance desirable although the inside of a resin accommodation part is constituted when irradiation light is a domain outside purple, it is silica glass, soda glass, borosilicate glass, etc., and is silica glass etc. in an infrared domain. Furthermore, if coating of the metal is carried out to the inside of a resin accommodation part by spatter etc. to raise reflectance, most irradiation light by which incidence is carried out at all angles can be reflected altogether, and intensity of the light irradiated into a photosensitive composite can be made high. What is necessary is on the other hand, for that just to form the inside of a resin accommodation part by the substance which makes irradiation light absorb that what is necessary is just to make irradiation light absorb, in order to make reflectance low. Specifically, when irradiation light is an ultraviolet ray, the glass with a big absorption coefficient which carried out the thing dope is effective in ultraviolet ray domains, such as Ce and germanium, and, in the case of the outside of purple to a visible domain, the so-called colored glass which doped changes metal ion, suchas Fe, CO, nickel, Cu, and Mn, is effective. Moreover, the sharp cut filter using CdS-CdSe mixed crystal system glass etc. can control absorption wavelength by the mixed crystal ratio. Moreover, generally, since the absorption based on in an organic material electronic changes or molecule vibration from the charge of non-equipments is large, it can migrate to an infrared domain from the outside of purple, and it can absorb light. Or what is necessary is just to form by the substance which has the almost same refractive index as the photosensitive composite which forms an optical waveguide for the inside of a resin accommodation part. Since light will not be reflected if it is the same refractive index, reflectance becomes low. Moreover, other methods for changing recurrence rate of light along the formation direction of an optical waveguide are making the irradiated light penetrate. The method with easy No. 1 is putting nothing on proximity of the domain in which an optical waveguide's is formed. Since the intensity is fully decreased even if there may be quality of a foreign substance in the distant place of a domain and there is light reflected in this case, the form of an optical waveguide formed is hardly affected.

In order to check the contents mentioned above, it experimented in the following procedure, and it observed about the formation situation of an optical waveguide. the multimode fiber made from GI type quartz (Fujikura; a core /clad= 50 micrometers / 125 micrometers) which performed facet processing by the fiber cutter etc. 1 it prepared about m A Incidence of the ultraviolet ray was carried out from the ultraviolet ray irradiation equipment (a Matsushita machine and vision company make, 5252L) which made the high-pressure mercury lamp the light source from one end of a fiber. The irradiation intensity of a lamp was adjusted to high-pressure mercury so that it might become 0.7 - 0.8 mW/ cm2 using an ultraviolet ray illuminometer (UIT by USHIO, INC. - 150) about the ultraviolet ray illumination which acts as Idei from the Idei end of a fiber. <Formation in free space> B-A The pipe made from the acrylics of a length of 1cm and about 6mm of diameters of inner was prepared, and the bottom was fixed with adhesives on the slide. The ultraviolet ray hardening type resin (lock tight company make, Loctite358) which starts radical polymerization by irradiating an ultraviolet ray was poured into the inside of a pipe, and the fiber end by the side of Idei was put in into resin. The fiber was located in around the central part of a pipe, and it was fixed so that it might not move. <Formation in glass V slot> B-B The end of the fiber by the side of Idei was located in V slot board for optical fibers made from silica glass (quartz by Moritex Corp. V slot) , and further, it applied so that said ultraviolet ray hardening type resin might be buried with the whole end of the fiber without a crevice. It put so that the end of a fiber and ultraviolet ray hardening type resin might not be moved by V slot control board made from quartz. The ultraviolet ray which adjusted illumination in A was irradiated into ultraviolet ray hardening type resin from the Idei end of a fiber, holding a fiber in the state of C B-A and B. Above-mentioned were operated, and when an optical waveguide by which self-formation is carried out from the Idei end of a fiber was observed, it was microscope (VH by KEYENCE CORP. 7000)-upper-checked that about 1.5mm an optical waveguide is formed in 10 seconds also in which method of B-A and B. Moreover, also by irradiating visible light from the Idei end of a fiber, and observing light leakage from an optical waveguide, light leakage was observed in accordance with the form of an optical waveguide, and it checked that the light which acted as Idei was shut up in an optical waveguide. Furthermore, when change of the path in the direction of an axis of an optical waveguide formed as mentioned above was checked, in the place which became little by little thick as the path of an optical waveguide near the Idei end is about 50 micrometers as well as the core of a fiber and separated near the Idei end, and separated 600 micrometers from 500 micrometers, the path of all was about 60 micrometers. However, an optical waveguide producedby themethod shown in B-A became thin after that gradually, and the path about 45 micrometers and near 1.2mm of the path near 1mm was about 30 micrometers. On the other hand, as for an optical waveguide produced by B-B, the path near 1mm held about 50-micrometer diameter also about 65 micrometers and near 1.2mm. distance was established between the irradiation region of an ultraviolet ray, and the pipe made from acrylics so that said experiment result might show in B-A, since the intensity of the light which returns within irradiation is very weak, the path of an optical waveguide in which a tip side is formed for the intensity of light by falling gradually becomes small on the other hand, the ultraviolet ray was irradiated all over V slot of V slot board made from quartz which reflects an ultraviolet ray in B-B, the light scattered about from the irradiation region is reflected on V slot and the control board surface, and since it recur within irradiation and the intensity of light becomes high, large an optical waveguide of a path is obtained In addition, the same thing as the photosensitive composite used by the formation method of an optical waveguide invention of the second present invention of the first group as a photosensitive composite used by the formation method of an optical waveguide present invention of the eighth group etc. is mentioned.

BEST MODE FOR CARRYING OUT THE INVENTION

Embodiments according to the first to eighth groups of the present invention described above will be described hereinafter in detail. It should be noted that the embodiments according to the first to eighth groups of the present invention are not limited thereto.

(Example 1)

A. Preparation of photosensitive composition

As a photosensitive composition, an acrylate-based UV-cured adhesive cured by a radical polymerization reaction when being irradiated with ultraviolet rays (Loctite 358 made by Loctite Corporation; hereinafter, referred to as "resin A") was prepared.
An optical refractive index of this resinA at a wavelength of 589 nm is about 1.48 before curing and about 1.51 after curing.

B. Formation of optical waveguide (see Fig. 24)

(1) A GI multimode fiber made of quartz and having a length of about one meter (made by Fujikura Ltd., core/cladding part = 50 μm/125 μm) was prepared.
After cutting this optical fiber on a side on which the optical fiber was immersed in the photosensitive composition by a cutting tool (a nipper), a cladding part was exposed by peeling off about 10 mm of a coating layer from an end surface side by an ordinary method. Thereafter, the optical fiber was not specially subjected to a planarization processing.
As for a roughness of an end surface of a core of the optical fiber on the side on which the optical fiber was immersed in the photosensitive composition, Ra was 1 μm and Rmax was 10 μm. The roughness of this end surface was measured by a laser displacement gauge manufactured by Keyence Corporation.
An optical refractive index of the core of this optical fiber at a wavelength of 589 nm is about 1.48.
(2) UV-containing light having a spectral distribution in a wavelength range of 200 to 500 nm was incident on one end of the optical fiber 1002 by an ultraviolet irradiation device 1005 (5252L, manufactured by Matsushita Machine and Vision Ltd.) using a high pressure mercury lamp of 250 W as a light source. A luminous intensity of an ultraviolet ray emitted from the other end of the optical fiber 1002 was adjusted to 0.3 mW/cm$^2$ by a UV luminometer (UIT-150, manufactured by Ushio Inc.).
(3) An emission-side end of the optical fiber 1002 was located in an optical fiber V-groove substrate 1006 (quartz V groove, made by Moritex Corporation), the photosensitive composition 1001 prepared in the process A was coated on the entire end of the optical fiber 1002 so as to bury the photosensitive composition 1001 in the end without gap. Thereafter, the end of the optical fiber 1002 and the photosensitive composition 1001 were caught in a V-groove fixation plate so as not to be moved.
(4) While keeping the optical fiber 1002 in the state described in (3) above, the UV-containing light the luminous intensity of which was adjusted in the step (2) was irradiated from the emission end of the optical fiber 1002 into the photosensitive composition 1001, thereby forming a core part.
In this step (4), shapes of the core part formed by irradiating the UV-containing light for one second, three seconds and 10 seconds, respectively, were observed by a microscope (VH-7000, manufactured by Keyence Corporation). As a result, when the UV-containing light was irradiated for one second, three seconds and 10 seconds, the core part of about 300 μm, about 500 μm and about 1 mm were formed, respectively.
After the step (4) was finished, visible light was irradiated to the core part thus formed from the emission end of the optical fiber 1002, and leakage light from an optical waveguide was observed. The leakage light was observed along a shape of the optical waveguide, and it was confirmed that a stable optical waveguide was formed.

In addition, an optical refractive index of the core part of the optical waveguide formed in this example is 102% of that of the core of the optical fiber 1002 connected to the core part.

A relative value (102%) of the optical refractive index of the core part of the optical waveguide to the optical refractive index of the core of this optical wiring was calculated based on the optical refractive index (about 1.48) of the core of the optical fiber at the wavelength of 589 nm and the optical refractive index (about 1.51) of the resin A at the wavelength of 589 nm after curing. In the following examples, reference examples and comparative examples, the same calculation method is applied.

Further, a return loss of an optical transmission structural body comprising the optical fiber and the optical waveguide thus manufactured was measured as 50 dB. The measurement of the return loss was carried out according to the method (4) according to JIS C 5961 6.2.4.

(Example 2)

An optical waveguide was formed similarly to Example 1 except that a fitting plate made of quartz glass was arranged on an optical path of irradiated light so as to be inclined at 45° with respect to an end surface of an optical fiber in the step (3) of the process B in Example 1 (see Fig. 15).

The optical waveguide formed in this example was observed by a microscope. As a result, it was confirmed that an optical path conversion mirror inclined at 45° with respect to the end surface of the optical fiber was formed on an end surface of the optical waveguide at opposite side to a side on which the optical waveguide was coupled to the optical fiber.

In addition, for the optical waveguide formed in this example, an uncured photosensitive composition was removed to allow surroundings of a core part to serve as a cladding part comprising the air. In this state, similarly to Example 1, visible light was irradiated from an emission end of the optical fiber. As a result, it was confirmed that an optical path of the visible light was converted by 90° on the end surface of the optical waveguide at opposite side to the side on which the optical waveguide was coupled to the optical fiber.

Furthermore, a return loss of an optical transmission structural body comprising the optical fiber and the optical waveguide manufactured in this example was measured as 50 dB.

(Example 3)

An optical waveguide was formed similarly to Example 1 except that amirror a reflection surface of which made of aluminum was arranged on an optical path of irradiated light so as to be inclined at 45° with respect to an end surface of an optical fiber in the step (3) of the process B in Example 1 (see Fig. 16).

The optical waveguide formed in this example was observed by a microscope. As a result, it was confirmed that the optical waveguide was bent at 90° halfway.

In addition, for the optical waveguide formed in this example, similarly to Example 1, visible light was irradiated from an emission end of the optical fiber and leakage light of the optical waveguide was observed. As a result, itwas confirmed that an optical path was converted by 90° halfway along the optical waveguide.

Furthermore, a return loss of an optical transmission structural body comprising the optical fiber and the optical waveguide manufactured in this example was measured as 50 dB.

(Example 4)

An optical waveguide was formed similarly to Example 1 except that a mirror a reflection surface of which is made of aluminum was arranged on a part of an optical path of an irradiated light so as to be inclined at 45° with respect to an end surface of an optical fiber in the step (3) of the process B in Example 1 (see Fig. 18(b)).

The optical waveguide formed in this example was observed by a microscope. As a result, it was confirmed that an optical path conversion mirror was formed halfway along the optical waveguide, and that the optical waveguide was branched into two directions in a portion of the optical path conversion mirror.

In addition, for the optical waveguide formed in this example, similarly to Example 1, visible light was irradiated from an emission end of the optical fiber and leakage light of the optical waveguide was observed. As a result, it was confirmed that an optical path was branched into two parts halfway along the optical waveguide, and that the visible light was emitted from each of two end surfaces.

Furthermore, a return loss of an optical transmission structural body comprising the optical fiber and the optical waveguide manufactured in this example was measured as 50 dB.

(Example 5)

A. Preparation of photosensitive composition

A resin A was prepared similarly to Example 1.

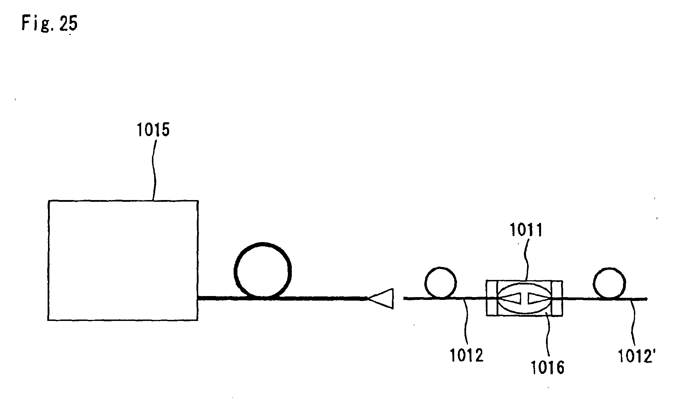

B. Formation of optical waveguide (see Fig. 25)

(1) Similarly to Example 1, five sets of two GI multimode fibers made of quartz and having a length of about one meter (made by Fujikura Ltd., core/cladding part = 50 μm/125 μm) (ten GI multimode fibers in all) were prepared. As optical fibers, the following fibers were used. After cutting each fiber on a side on which the optical fiber was immersed in the photosensitive composition by a cutting tool (a nipper), a cladding part was exposed by peeling off about 10 mm of a coating layer from an end surface by an ordinary method. Thereafter, the optical fiber was not specially subjected to a planarization processing. Although roughnesses of end surfaces of these optical fibers were irregular, an average Ra was 2 μm and an average Rmax was 20 μm.

(2) UV-containing light having a spectral distribution in a wavelength range of 200 to 500 nm was input from one end of each set of a pair of optical fibers 1012 and 1012' by an ultraviolet irradiation device 1015 (5252L, manufactured by Matsushita Machine and Vision Ltd.) using a high pressure mercury lamp of 250 W as a light source. A luminous intensity of ultraviolet rays emitted from the other emission-side end of each of the optical fibers 1012 and 1012' was adjusted to 0.3 mW/cm$^2$ by a UV luminometer (UIT-150, manufactured by Ushio Inc.).

(3) The emission-side ends of the respective optical fibers 101'2 and 1012' were located face to face with each other with a distance of about 500 μm kept between the optical fibers 1012 and 1012' and placed on an optical fiber V-groove substrate 1016 (quartz V groove, made by Moritex Corporation). The photosensitive composition 1.001 prepared in the process A was coated on an entire faced portion so as to bury the photosensitive composition 1001 between the optical fibers 1012 and 1012' without gap. Thereafter, the faced portion of optical fibers and the photosensitive composition 1001 were caught in a V-groove fixation plate so as not to be moved.

(4) While keeping the optical fibers 1012 and 1012' in the state described in (3) above, light having a power of about -10 dBm (about 0.1 mW) was incident on an incidence side of one optical fiber 1012 using an LED light source at a wavelength of 850 nm (AQ2140 and AQ4215, manufactured by Ando Electric Co., Ltd.), and a power of light emitted from an incidence side of the other optical fiber 1012' wasmeasuredbyapowermeter (AQ2140 and AQ2730, manufactured by Ando Electric Co., Ltd.)

(5) While keeping the optical fibers 1012 and 1012' in the state described in (3) above, UV-containing lights the luminous intensity of each of which was adjusted in the step (2) were simultaneously irradiated from emission ends of the respective optical fibers 1012 and 1012' into the photosensitive composition 1011 for one to two seconds.

When the steps (1) to (4) were carried out for each of the five sets of the optical fibers, the photosensitive composition 1011 was not cured yet. At the end of the step (4), an optical power loss of 8 dB or more was measured for each set. In addition, at the end of the step (5), core parts were formed on the emission ends of the respective optical fibers 1012 and 1012' for each set. An microscopic observation indicated that the respective core parts were coupled to each other in the vicinity of a center.

Further, after the step (5) was finished, an optical power loss at a wavelength of 850 nm was measured by the same method as that used in the step (4). The optical power loss was 1.6 to 3.3 dB, which was greatly lower than the value measured between the optical fibers for each set after the step (4) was finished. This indicated that in the optical fibers for each set, the two optical fibers 1012 and 1012' were surely, optically coupled to each other. It was confirmed that after the step (5) was finished, light was guided through the core part.

Furthermore, a return loss of an optical transmission structural body comprising the two optical fibers and the optical waveguide manufactured in this example was measured for each set. Return losses of the five sets were all 50 dB or more.

It is noted that an optical refractive index of the core part of the optical waveguide formed in this example is 102% of that of a core of each optical fiber to which the core part was connected.

(Example 6)

In the step (1) of the process B in Example 5, five sets of two GI multimode fibers each consisting of quartz and each having a length of about one meter (ten GI multimode fibers in all) similar to those used in Example 1 were prepared. Optical waveguides were formed similarly to Example 1 except for the following respects. As optical fibers, the following fibers were used. After cutting each fiber on a side on which theoptical fiber was immersed in the photosensitive compositionby a cutting tool (a nipper), a processing of peeling of a coating layer was not carried out, and a planarization processing was not specially carried out. Although roughnesses of end surfaces of the optical fibers thus cut were irregular, an average Ra was 2 μm and an average Rmax was 20 μm. In addition, the coating layer is left in the vicinity of the end surface of each optical fiber used in this example on the side on which the optical fiber was immersed in the photosensitive composition.

A shape of a core part of each optical waveguide formed in this example was observed by a microscope. The microscopic observation indicated that each core has a stable shape, and that the core parts were coupled to each other in the vicinity of a center.

Further, an optical power loss of each of the five sets of optical fibers was measured using the same method as that used in Example 5. It was confirmed that before and after the lights were simultaneously irradiated from the respective optical fibers, the loss was greatly reduced from 8 dB or more down to 1.5 to 3.3 dB for each set.

Furthermore, a return loss of an optical transmission structural body comprising the two optical fibers and the optical waveguide manufactured in this example was measured for each set. Return losses of the five sets were all 50 dB or more.

It is noted that an optical refractive index of the core part of each optical waveguide formed in this example is 102% of that of a core of each optical fiber to which the core part was connected.

(Example 7)

A. Preparation of photosensitive composition

As a photosensitive composition, a UV-curedadhesive cured when being irradiated with ultraviolet rays (OPTOKLEB HV16 made by Ardel Co.; hereinafter, referred to as "resin B") was prepared.

An optical refractive index of this resin B at a wavelength of 589 nm is about 1.57 before curing and about 1.60 after curing.

B. Formation of optical waveguide

A core part of each optical waveguide made of the resin B was formed similarly to Example 5 except for the use of the photosensitive composition (resin B) prepared in the step of the process A. A shape of this core part was observed by a microscope. The microscopic observation indicated that the core part has a stable shape, and that the core parts of each optical waveguides were coupled in the vicinity of the center.

Further, an optical power loss of each of five sets of optical fibers was measured using the same method as that used in Example 5. It was confirmed that before and after the lights were simultaneously irradiated from the respective optical fibers, the loss was greatly reduced from 8 dB or more down to 2.3 to 6.5 dB for each set.

Furthermore, a return loss of an optical transmission structural body comprising the two optical fibers and the optical waveguide manufactured in this example was measured for each set. Return losses of the five sets were all 50 dB or more.

It is noted that an optical refractive index of the core part of each optical waveguide formed in this example is 108% of that of a core of each optical fiber to which the core part was connected.

(Example 8)

A. Preparation of photosensitive composition

As a photosensitive composition, the resin B and an acrylate-based UV-cured adhesive cured when being irradiated with ultraviolet rays (OPTODYNEUV2000, made by Daikin Industries, Ltd.; hereinafter, referred to as "resin C") were prepared.

An optical refractive index of this resin C at a wavelength of 589 nm is about 1.45 before curing, and about 1.48 after curing.

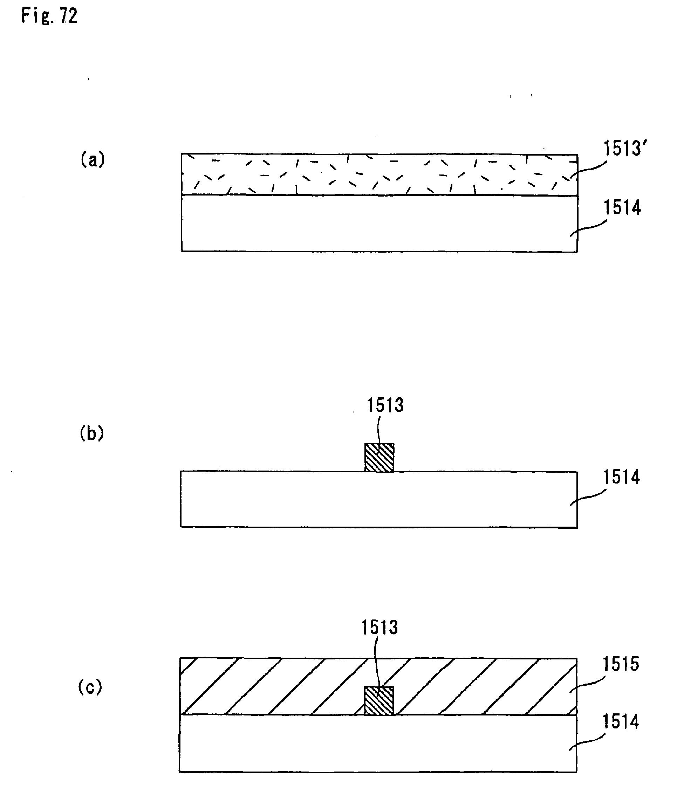

B. Formation of optical wiring (see Fig. 72)

(1) The resin B was coated on a flat quartz glass plate 1514 by spin coating so that a film thickness of the resin B after curing was about 40 μm, thereby forming a core formation resin layer 1513' (see Fig. 72(a)).

(2) A mask (not shown) drawing a core pattern (a width of 40 μm) was placed on the core formation resin layer, and an exposure processing was then carried out, thereby forming a linear core 1513. After an unexposed portion was removed by alcohol (see Fig. 72 (b) ) , an appropriate quantity of the resin C was coated on the core 1513 thus formed, and an exposure processing was carried out to cure the resin C.

(3) Through these steps, an optical wiring (a linear waveguide) comprising the core 1513 made of a cured matter of the resin B, and a cladding part comprising the quartz glass 1514 and a cured matter 1515 of the resin C was formed (see Fig. 72(c)).

(4) Five optical wirings were manufactured, and were broken and cut almost at centers, respectively.

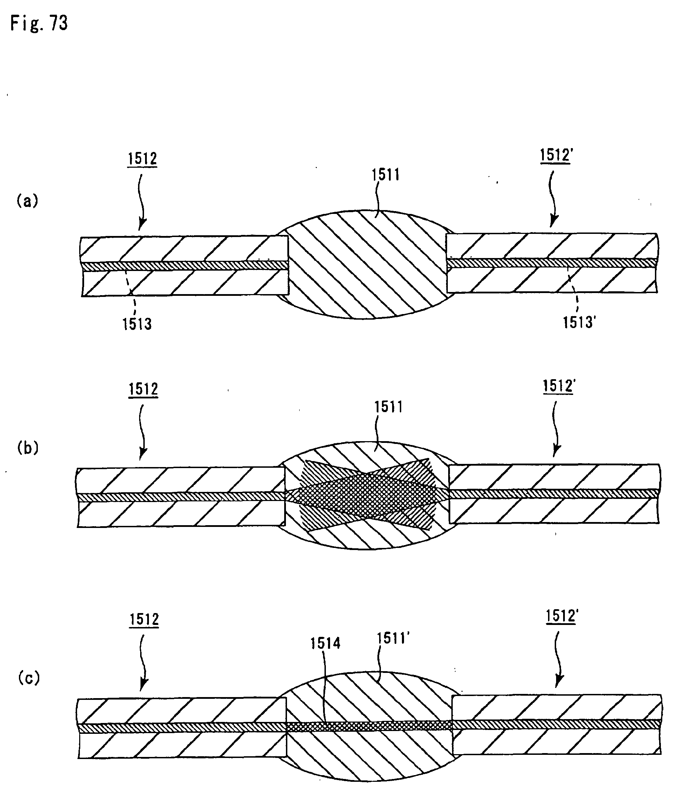

C. Formation of optical waveguide (see Fig. 73)

(1) The five sets of optical wirings (linear waveguides) (ten in all) manufactured through the steps of the process B were prepared. An end surface of a core of each optical wiring on a side on which the optical wiring was immersed in the photosensitive composition was broken and cut, and not specially subjected to a planarization processing. Although roughnesses of the optical wirings were irregular, an average Ra was 2 μm and an average Rmax was 20 μm.

(2) UV-containing light having a spectral distribution in a wavelength range of 200 to 500 nm was input from one end of a set of two optical wirings 1512 and 1512' through an optical fiber by an ultraviolet irradiation device (5252L, manufactured by Matsushita Machine and Vision Ltd.) using a high pressure mercury lamp of 250 W as a light source. A luminous intensity of ultraviolet rays emitted from the other emission-side end of each of the optical wirings 1512 and 1512' was adjusted to 0.3 mW/cm$^2$ by a UV luminometer (UIT-150, manufactured by Ushio Inc.).

(3) The emission-side ends of the respective optical wirings 1512 and 1512' were located face to face, with a distance of about 500 μm kept between the optical fibers 1512 and 1512' . The photosensitive composition (resin C) 1511 prepared in the process A was coated on an entire faced portion so as to bury the photosensitive composition 1511 between the optical wirings 1512 and 1512' without gap (see Fig 73(a)). Thereafter, the faced portion of optical fibers and the resin C were caught in a fitting plate so as not to be moved.

(4) While keeping the optical wirings 1512 and 1512' in the state described in (3) above, light having a power of about -10 dBm (about 0.1 mW) was incident on an incidence side of one optical wiring 1512 using an LED light source at a wavelength of 850 nm (AQ2140 and AQ4215, manufactured by Ando Electric Co., Ltd.), and a power of light emitted from an incidence side of the other optical wiring 1512' was measured by a power meter (AQ2140 and AQ2730, manufactured by Ando Electric Co., Ltd.)

(5) While keeping the optical wirings 1512 and 1512' in the state described in (3) above, UV-containing lights the luminous intensity of each of which was adjusted in the step (2) were simultaneously irradiated from emission ends of the respective optical wirings 1512 and 1512' into the photosensitive composition (resinC) 1511 for one to two seconds (see Fig. 73(b)).

At the end of the step (5), core parts were formed on the emission ends of the respective optical wirings 1512 and 1512' for each set, and a microscopic observation indicated that the core parts were coupled to each other in the vicinity of a center (see Fig. 73(c)).

An optical power loss was measured for each of the five sets of the optical wirings using the same method as that used in Example 5. It was confirmed that before and after the lights were simultaneously irradiated from the respective optical wirings, the loss was greatly reduced from 8 dB or more down to 2.5 to 6.8 dB for each set.

Furthermore, a return loss of an optical transmission structural body comprising the two optical wirings and the optical waveguide manufactured in this example was measured for each set. Return losses of the five sets were all 50 dB or more.

It is noted that an optical refractive index of the core part of each optical waveguide formed in this example is 93% of that of a core of each optical wiring to which the core part was connected.

(Example 9)

A. Preparation of photosensitive composition

As a photosensitive composition, a UV-cured adhesive cured when being irradiated with an ultraviolet ray (NOA 72 made by Noland Company; hereinafter, referred to as "resin D") was prepared.

It is noted that an optical refractive index of this resin D at a wavelength of 589 nm is about 1.53 before curing and about 1.56 after curing.

B. Formation of optical waveguide

Similarly to Example 5 except for the use of the photosensitive composition (resin D) prepared in the step of the process A, core parts of each optical waveguide made of the resin D were formed. A shape of each core part of the optical waveguide was observed by a microscope. The microscopic observation indicated that each core has a stable shape, and that the core parts were coupled to each other in the vicinity of a center.

Further, an optical power loss of each of the five sets of optical fibers was measured using the same method as that used in Example 5. It was confirmed that before and after the lights were simultaneously irradiated from the respective optical fibers, the loss was greatly reduced from 8 dB or more down to 2.1 to 5.7 dB for each set.

Furthermore, a return loss of an optical transmission structural body comprising the two optical fibers and the optical waveguide manufactured in this example was measured for each set. Return losses of the five sets were all 50 dB or more.

It is noted that an optical refractive index of the core part of each optical waveguide formed in this example is 105% of that of a core of each optical fiber to which the core part was connected.

(Example 10)

A. Preparation of photosensitive composition

As a photosensitive composition, the resin C and the resin D were prepared.

B. Formation of optical wiring

Similarly to the steps (1) to (4) of the process B in Example 8, five optical wirings (linear waveguides) each comprising a core made of a cured matter of the resin D, and a cladding part comprising quartz glass and a cured matter of the resin C were formed, and broken and cut almost at centers, respectively.

C. Formation of optical waveguide

(1) The five sets of optical wirings (linear optical waveguides) (ten in all) manufactured through the steps of the process B were prepared. An end surface of a core of each optical wiring on a side on which the optical wiring was immersed in the photosensitive composition was broken and cut, and not specially subjected to a planarization processing. Although roughnesses of the optical wirings were irregular, an average Ra was 2 μm and an average Rmax was 20 μm.

Using these optical wirings, optical waveguides each comprising a core made of the resin C were formed similarly to the steps (2) to (5) of the process C in Example 8. Thereafter, a shape of each core part was observed by a microscope. The microscopic observation indicated that the core part has a stable shape, and that the core parts were coupled to each other in the vicinity of a center.

An optical power loss was measured for each of the five sets of the optical wirings using the same method as that used in Example 5. It was confirmed that before and after the lights were simultaneously irradiated from the respective optical wirings, the loss was greatly reduced from 8 dB or more down to 1.9 to 5.6 dB for each set.

Furthermore, a return loss of an optical transmission structural body comprising the two optical wirings and the optical waveguide manufactured in this example was measured for each set. Return losses of the five sets were all 50 dB or more.

It is noted that an optical refractive index of the core part of each optical waveguide formed in this example is 95% of that of a core of each optical wiring to which the core part was connected.

(Example 11)

A. Preparation of photosensitive composition

As a photosensitive composition, the resin A and the resin C were prepared.

B. Formation of optical wiring

Similarly to the steps (1) to (4) of the process B in Example 8, five optical wirings (linear waveguides) each comprising a core made of a cured matter of the resin A, and a cladding part comprising quartz glass and a cured matter of the resin C were formed, and broken and cut almost at centers, respectively.

C. Formation of optical waveguide

(1) The five sets of optical wirings (linear optical waveguides) (ten in all) manufactured through the steps of the process B were prepared. An end surface of a core of each optical wiring on a side on which the optical wiring was immersed in the photosensitive composition was broken and cut, and not specially subjected to a planarization processing. Although roughnesses of the optical wirings were irregular, an average Ra was 2 μm and an average Rmax was 20 μm.

Using these optical wirings, optical waveguides each comprising a core made of the resin C were formed similarly to the steps (2) to (5) of the process C in Example 8. Thereafter, a shape of each core part was observed by a microscope. The microscopic observation indicated that the core part has a stable shape, and that the core parts were coupled to each other in the vicinity of a center.

An optical power loss was measured for each of the five sets of the optical wirings using the same method as that used in Example 5. It was confirmed that before and after the lights were simultaneously irradiated from the respective optical wirings, the loss was greatly reduced from 8 dB or more down to 1.8 to 3.4 dB for each set.

Furthermore, a return loss of an optical transmission structural body comprising the two optical wirings and the optical waveguide manufactured in this example was measured for each set. Return losses of the five sets were all 50 dB or more.

It is noted that an optical refractive index of the core part of each optical waveguide formed in this example is 98% of that of a core of each optical wiring to which the core part was connected.


(Example 12)


A. Preparation of photosensitive composition

As a photosensitive composition, resin C was prepared.


B. Formation of optical waveguide

Similarly to Example 5 except for the use of the photosensitive composition (resin C) prepared in the step of the process A in place of the resin A, core parts of each optical waveguide made of the resin C were formed. A shape of each core part of the optical waveguide was observed by a microscope. The microscopic observation indicated that each core has a stable shape, and that the core parts were coupled to each other in the vicinity of a center.

Further, an optical power loss of each of the five sets of optical fibers was measured using the same method as that used in Example 5. It was confirmed that before and after the lights were simultaneously irradiated from the respective optical fibers, the loss was greatly reduced from 8 dB or more down to 1 dB or less for each set.

Furthermore, a return loss of an optical transmission structural body comprising the two optical fibers and the optical waveguide manufactured in this example was measured for each set. Return losses of the five sets were all 60 dB or more.

It is noted that an optical refractive index of the core part of each optical waveguide formed in this example is 100% of that of a core of each optical fiber to which the core part was connected.


(Reference Example 1)


A. Preparation of photosensitive composition

As a photosensitive composition, the resin C, a UV-cured adhesive cured when being irradiated with ultraviolet rays (OPTODYNE W1000, made by Daikin Industries, Ltd.; hereinafter, referred to as "resin E"), and a UV-cured adhesive cured when being irradiated with the ultraviolet rays (OPTOKLEB HV153 made by Ardel Co.; hereinafter, referred to as "resin F") were prepared.

An optical refractive index of this resin E at a wavelength of 589 nm is about 1.42 before curing and about 1.45 after curing. An optical refractive index of this resin F at a wavelength of 589 nm is about 1.60 before curing and about 1.63 after curing.


B. Formation of optical wiring

Similarly to the steps (1) to (4) of the process B in Example 8, five optical wirings (linear waveguides) each comprising a core made of a cured matter of the resin F, and a cladding part comprising quartz glass and a cured matter of the resin C were formed, and broken and cut almost at centers, respectively.


C. Formation of optical waveguide

(1) The five sets of optical wirings (linear optical waveguides) (ten in all) manufactured through the steps of the process B were prepared. An end surface of a core of each optical wiring on a side on which the optical wiring was immersed in the photosensitive composition was broken and cut, and not specially subjected to a planarization processing. Although roughnesses of the optical wirings were irregular, an average Ra was 2 μm and an average Rmax was 20 μm.

(2) Optical waveguides each comprising a core made of the resin C were formed similarly to the steps (2) to (5) of the process C in Example 8 except that these optical wirings were used and that the resin E was used in place of the resin C. Thereafter, a shape of each core part was observed by a microscope. The microscopic observation indicated that the core part has a stable shape, and that the core parts were coupled to each other in the vicinity of a center.

An optical power loss was measured for each of the five sets of the optical wirings using the same method as that used in Example 5. It was confirmed that before and after the lights were simultaneously irradiated from the respective optical wirings, the loss was greatly reduced from 8 dB or more down to 3.1 to 7.9 dB for each set.

Furthermore, a return loss of an optical transmission structural body comprising the two optical wirings and the optical waveguide manufactured in this reference example was measured for each set. Return losses of the five sets were all 50 dB or more.

It is noted that an optical refractive index of the core part of each optical waveguide formed in this reference example was 89% of that of a core of each optical wiring to which the core part was connected.

(Reference Example 2)

A. Preparation of photosensitive composition

As a photosensitive composition, the resin E and the resin F were prepared.

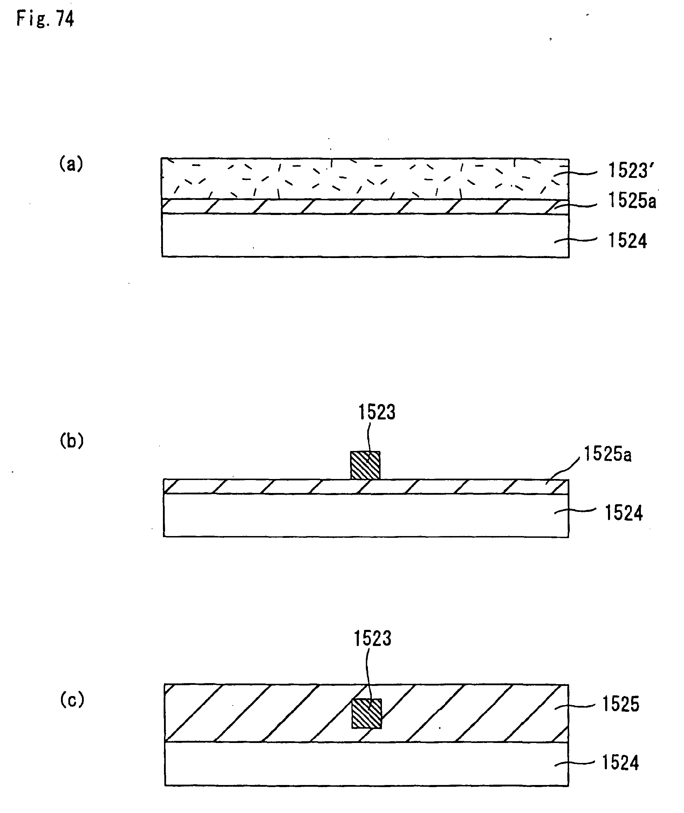

B. Formation of optical wiring (see Fig. 74)

(1) CYTOP made by Asahi Glass Co., Ltd. (hereinafter, referred to as "resin G") was coated on a flat quartz glass plate 524 by spin coating so that a film thickness of the resin G after drying was about 20 μm, and dried, thereby forming an under cladding part 525a.

An optical refractive index of the resin G at a wavelength of 589 nm was about 1.34 after being dried.

(2) The resin E was coated on the under cladding part 525a thus formed by spin coating so that a film thickness after curing was about 40 μm, thereby forming a core formation resin layer 523' (see Fig. 74(a)).

(3) A mask (not shown) drawing a core pattern (a width of 40 μm) was placed on the core formation resin layer 523', and an exposure processing was then carried out, thereby forming a linear core 523.

(4) After an unexposed portion of the core formation resin layer 523' was removedby alcohol (see Fig. 74 (b) ) , an appropriate quantity of the resin G was coated on the under cladding part 525a including the core 523, and dried, thereby forming a cladding part 525 around the core 523.

Through these steps, anopticalwiring (a linear waveguide) comprising the core made of a cured matter of the resin E, and the cladding part comprising resin G was formed (see Fig. 74 (c)).

(5) Five optical wirings weremanufactured, andwerebroken and cut almost at centers, respectively.

C. Formation of optical waveguide

(1) The five sets of optical wirings (linear waveguides) (ten in all) manufactured through the steps of the process B were prepared. An end surface of a core of each optical wiring on a side on which the optical wiring was immersed in the photosensitive composition was broken and cut, and not specially subjected to a planarization processing. Although roughnesses of the optical wirings were irregular, an average Ra was 2 μm and an average Rmax was 20 μm.

Optical waveguides each comprising a core made of the resin F were formed similarly to the steps (2) to (5) of the process C in Example 8 except that these optical wirings were used and that the resin F was used in place of the resin C. Thereafter, a shape of each core part was observed by a microscope. The microscopic observation indicated that the core part has a stable shape, and that the core parts were coupled to each other in the vicinity of a center.

An optical power loss was measured for each of the five sets of the optical wirings using the same method as that used in Example 5. It was confirmed that before and after the lights were simultaneously irradiated from the respective optical wirings, the loss was greatly reduced from 8 dB or more down to 2.9 to 7.8 dB for each set.

Furthermore, a return loss of an optical transmission structural body comprising the two optical wirings and the optical waveguide manufactured in this example was measured for each set. Return losses of the five sets were all 50 dB or more.

It is noted that an optical refractive index of the core part of each optical waveguide formed in this reference example is 112% of that of a core of each optical wiring to which the core part is connected.

(Comparative Example 1)

(1) Five sets of two GI multimode fibers (ten in all) similar to that used in Example 1 were prepared. After an end surface of a core of each optical fiber on a side on which the optical fiber is facing the other optical fiber was cut by a cutting tool (a nipper) , a cladding part was exposed by peeling off about 10 mm of a coating layer from the end surface by an ordinary method. Thereafter, each optical fiber was not specially subjected to a planarization processing. Although roughnesses of end surfaces of the optical fibers were irregular, an average Ra was 2 μm and an average Rmax was 20 μm.

A set of the two optical fibers were arranged face to face with each other with a distance of about 500 μm kept between them and placed on an optical fiber V-groove substrate (quartz V groove, made by Moritex Corporation).

Thereafter, using a V-groove fixation plate, the two optical fibers were fixed so as not be moved.

A return loss of the two optical fibers thus connected face to face was measured for each of the five sets. The return loss was 25 dB or more for each set. The measurement of the return loss was carried out in accordance with the method (4) according to JIS C 5961 6.2.4.

In addition, the connection loss between the optical fibers arranged face to face with each other for each of the five sets in Comparative Example 1 was measured to be 30 to 55 dB. For the measurement of the connection loss, the same method as that used in the step (4) in Example 5 was used. That is, light having a power of about -10 dBm (about 0.1 mW) was incident on a side of one of the optical fiber at opposite side to the side on which the optical fibers were placed face to face, and a power of light emitted from a side of the other optical fiber at opposite side to the side on which the optical fibers were placed face to face was measured. In this comparative example, no optical waveguide was formed. However, the air (optical refractive index of 1.00) was present in the gap between the two optical fibers, and the refractive index of the air was 68% of that of the core of each of the connected optical fiber.

(Comparative Example 2)

An optical transmission structural body was manufactured similarly to Example 12 except for the use of the following optical fibers in Example 12.

Namely, five sets of two GI multimode fibers (ten in all) made of quartz and having a length of about one meter similarly to that prepared in Example 12 were prepared. An end surface of a core of each optical fiber on a side on which the optical fiber was immersed in the photosensitive composition was cut by a cutting tool (a nipper). Thereafter, a cladding part was exposed by peeling off a coating layer of about 10 mm from the end surface side by an ordinary method. The end surface was polished vertically and smoothly using alumina grinder particles. Although roughnesses of the end surfaces of the respective optical fibers were irregular, an average Ra was 0.05 μm.

Using the optical fibers subjected to the above-mentioned end surface processing, core parts of an optical waveguide made of the resin C were formed similarly to Example 12. A shape of each core part was observed by a microscope. The microscopic observation indicated that each core part has a stable shape, and that the core parts were coupled to each other in the vicinity of a center.

Further, using the same method as that used in Example 12, an optical power loss of each of the five sets of optical fibers was measured. It was confirmed that before and after the lights were simultaneously irradiated from the respective optical fibers, the loss was greatly reduced from 8 dB or more down to 1 dB or less for each set.

Furthermore, a return loss of the optical transmission structural body comprising the two optical fibers and the optical waveguide manufactured in this comparative example was measured for each set. Return losses of the five sets were all 60 dB or more.

It is noted that an optical refractive index of the core part of each optical waveguide formed in this comparative example was 100% of that of a core of each optical fiber to which the core part is connected.

(Comparative Example 3)

An optical transmission structural body was manufactured similarly to Example 12 except for the use of the following optical fibers in Example 12.

Namely, five sets of two GI multimode fibers (ten in all) made of quartz and having a length of about one meter similarly to that prepared in Example 12 were prepared. An end surface of a core of each optical fiber on a side on which the optical fiber was immersed in the photosensitive composition was cut by a cutting tool (a nipper). Thereafter, a cladding part was exposed by peeling off a coating layer of about 10 mm from the end surface side by an ordinary method, and was cut by using an optical fiber cutter, thereby subjecting the end surface to a mirror-like processing vertically. Although roughnesses of the end surfaces of the respective optical fibers were irregular, an average Ra thereof was 0.01 µm or less.

Using the optical fibers subjected to the above-mentioned end surface processing, core parts of an optical waveguide made of the resin C were formed similarly to Example 12. A shape of each core part was observed by a microscope. The microscopic observation indicated that each core part has a stable shape, and that the core parts were coupled to each other in the vicinity of a center.

Further, using the same method as that used in Example 12, an optical power loss of each of the five sets of optical fibers was measured. It was confirmed that before and after the lights were simultaneously irradiated from the respective optical fibers, the loss was greatly reduced from 8 dB or more down to 1 dB or less for each set.

Furthermore, a return loss of the optical transmission structural body comprising the two optical fibers and the optical waveguide manufactured in this comparative example was measured for each set. Return losses of the five sets were all 60 dB or more.

It is noted that an optical refractive index of the core part of each optical waveguide formed in this comparative example was 100% of that of a core of each optical fiber to which the core part was connected.

Results of Examples 1 to 12, Reference Examples 1 and 2, and Comparative Example 1 to 3 are shown in Table 1.

Table 1

| | End surface shape of optical wiring | End surface state of optical wiring | | (1) Refractive index of core of optical wiring | (2) Refractive index of core layer of optical waveguide | Relative value of (2) to (1) (%) | Connection loss between optical wirings (min to max) (dB) | Return loss (dB) |
|---|---|---|---|---|---|---|---|---|
| | | Ra (μm) | Rmax (μm) | | | | | |
| Example 1 | Rupture surface | 1 | 10 | 1.48 | 1.51 | 102 | – | 50 |
| Example 2 | Rupture surface | 1 | 10 | 1.48 | 1.51 | 102 | – | 50 |
| Example 3 | Rupture surface | 1 | 10 | 1.48 | 1.51 | 102 | – | 50 |
| Example 4 | Rupture surface | 1 | 10 | 1.48 | 1.51 | 102 | – | 50 |
| Example 5 | Rupture surface | 2 | 20 | 1.48 | 1.51 | 102 | 1.6 to 3.3 | 50 or more |
| Example 6 | Rupture surface | 2 | 20 | 1.48 | 1.51 | 102 | 1.5 to 3.3 | 50 or more |
| Example 7 | Rupture surface | 2 | 20 | 1.48 | 1.60 | 108 | 2.3 to 6.5 | 50 or more |
| Example 8 | Rupture surface | 2 | 20 | 1.60 | 1.48 | 93 | 2.5 to 6.8 | 50 or more |
| Example 9 | Rupture surface | 2 | 20 | 1.48 | 1.56 | 105 | 2.1 to 5.7 | 50 or more |
| Example 10 | Rupture surface | 2 | 20 | 1.56 | 1.48 | 95 | 1.9 to 5.6 | 50 or more |
| Example 11 | Rupture surface | 2 | 20 | 1.51 | 1.48 | 98 | 1.8 to 3.4 | 50 or more |
| Example 12 | Rupture surface | 2 | 20 | 1.48 | 1.48 | 100 | 1 or less | 60 or more |
| Reference Example 1 | Rupture surface | 2 | 20 | 1.63 | 1.45 | 89 | 3.1 to 7.9 | 50 or more |
| Reference Example 2 | Rupture surface | 2 | 20 | 1.45 | 1.63 | 112 | 2.9 to 7.8 | 50 or more |
| Comparative Example 1 | Rupture surface | 2 | 20 | 1.48 | 1.00(*) | 68 | 30 to 55 | 25 or more |
| Comparative Example 2 | Plane polished surface | 0.05 | – | 1.48 | 1.48 | 100 | 1 or less | 60 or more |
| Comparative Example 3 | Mirror surface | 0.01 or less | – | 1.48 | 1.48 | 100 | 1 or less | 60 or more |

(*) In Comparative Example 1, no optical waveguide is formed between optical wirings. Therefore, optical refractive index herein is the optical refractive index of the air present between the optical wirings.

EP 1 503 231 A1

As is obvious from the results shown in Table 1, in the optical transmission structural body manufactured in each of Examples 1 to 4, although the core of the end surface of the optical wiring which surface is connected to the optical waveguide is not subjected to the planarization processing and the surface roughness Ra is 1 µm, the return loss thereof is 50 dB. Therefore, it is obvious that the optical transmission structural body can be appropriately used as an optical communication device.

The optical transmission structural body according to Example 12 is compared with the optical transmission structural body according to each of Comparative Examples 2 and 3. Regardless of the Ra of the end surface of the core of the optical wiring, i.e., regardless of the presence or absence of the end surface processing to the optical wiring, there is no difference in characteristics (the connection loss between the optical wirings and the return loss) of the acquired optical transmission structural body between Example 12 and Comparative Examples 2 and 3. This result also indicates obviously that the optical transmission structural body can be appropriately used as the optical communication device.

Examples 5, 7 to 12, Reference Examples 1 and 2, and Comparative Example 1 are compared. It is obvious from the comparison of the connection loss among them that Examples 5, 7 to 12 and Reference Examples 1 and 2 in which the optical waveguides are formed are excellent in optical transmission performance to Comparative Example 1 in which no optical waveguide is formed.

Examples 5, 7 to 12 and Reference Examples 1 and 2 are compared with one another in detail. If the optical refractive index of the core part of the optical waveguide is substantially equal to that of the core of the optical waveguide to which the core part is connected (Example 12), the connection loss and irregularity of the loss are minimized. In addition, if the optical refractive index of the core part of the optical waveguide is 98 to 102% (Examples 5 and 11) of that of the core of the optical waveguide to which the core part is connected, 95 to 105% (Examples 9 and 10) and 90 to 110% (Examples 7 and 8) , the connection loss and the irregularity of the loss are greater in this order.

If the optical refractive index of the core part of the optical waveguide is 85 to 115% of that of the core of the optical wiring to which the core part is connected (Reference Examples 1 and 2), the connection loss and the irregularity of the loss are further greater. Obviously, therefore, as compared with the instance in which the optical refractive index of the core part of the optical waveguide is 90 to 110% of that of the core of the optical wiring, Reference Examples 1 and 2 are inferior in optical transmission performance.

Furthermore, as is obvious from the result of the comparison between Examples 5 and 6, the connection loss of the optical transmission structural body is not influenced by the presence or absence of the end portion of the optical wiring on the side on which the optical wiring is connected to the optical waveguide.

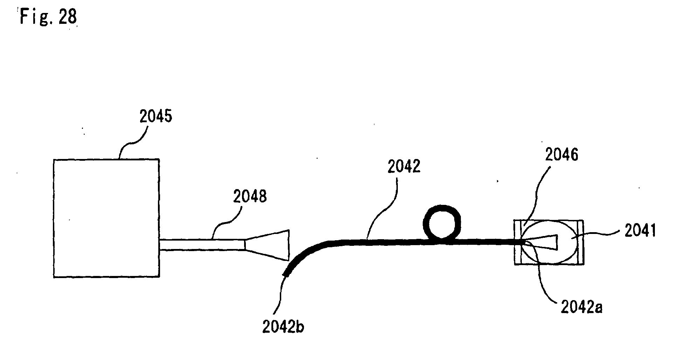

(Example 13) the formation of an optical waveguide (see Fig. 28)

(1) The multimode optical fiber made from GI type quartz with a length of about 1m (the Fujikura make, a core / clad =50 / 125 micrometers) which performed facet processing using fiber cutter was prepared. Furthermore, a coloring tape is stuck on facet 2042b of an optical fiber 2042, and the light including the ultraviolet ray irradiated using ultraviolet ray irradiation equipment 2045 (a Matsushita machine and vision company make, 5252L) was made not to carry out incidence from facet2042b of an optical fiber 2042.

(2) Next, the side of an optical fiber 2042 was incurvated. In addition, the curvature radius in the part which the optical fiber 2042 incurvated was about 100mm. A curvature radius means the radius of the curvature circle in the part which carries out incidence of the light here. Furthermore, incidence of the light including the ultraviolet ray irradiated through the light guide 2048 from the ultraviolet ray irradiation equipment 2045 which made the high-pressure mercury lamp the light source was carried out through the side which the optical fiber 2042 incurvated. At this time, incidence of the light which includes an ultraviolet ray through the side which the optical fiber 2042 incurvated where abbreviation agreement of the axis (main axis) of the light guide 2048 and the optical axis of the optical fiber 2042 in the part which carries out incidence of the light is carried out was carried out. Then, the intensity of the ultraviolet ray irradiated from facet2042a of the optical fiber 2042 made into the Idei side was measured using the ultraviolet ray illuminometer (theUSHIO, INC. make, UIT-150) . Consequently, the intensity of an ultraviolet ray was two or less (below a detection limit) 0.01 mW/cm. However, it checked that light was irradiated from facet2042a of an optical fiber 2042 by the ability having perceived light (visible light contained in lamp light) from facet2042a of an optical fiber 2042.

(3) Next, facet 2042a of an optical fiber 2042 was laid on V slot board 2046 (the Moritex Corp. make, quartz V slot) for optical fibers, and it applied so that the photosensitive composite 2041 (resin A) might be buried with the whole facet 2042a without a crevice. Next, V slot control board was laid on V slot board 2046 for optical fibers, and it fixed so that facet2042a of an optical fiber 2042 and the photosensitive composite 2041 might not be moved by this control board.

(4) Next, by irradiating light including an ultraviolet ray at the photosensitive composite 2041 using the same method as the process of the above (2), with the optical fiber 2042 fixed, (referring to Fig. 28) and the photosensitive composite 2031 were stiffened, and an optical waveguide was formed. As a result of irradiating the light which includes an ultraviolet ray at the process of the above (4) for 5 minutes, it was checked under the microscope (the KEYENCE CORP. make, VH-7000) that the core part the length of whose is about 30 micrometers - about 50 micrometers is formed. The side on which the formation optical fiber of an optical waveguide curved is minded.

(Example 14) formation of optical waveguide

In case light is irradiated from facet of 1 of an optical fiber at a photosensitive composite, light including the ultraviolet ray irradiated through the light guide from ultraviolet ray irradiation equipment After condensing with a condenser (a Matsushita machine and vision company make), an was formed like the case of the operation 13 except having decided to carry out incidence through the side on which said optical fiber curved. In addition, the intensity of the ultraviolet ray irradiated from said ultraviolet ray irradiation equipment presupposed that it is the same as a case of the operation 13. Moreover, it considered as for 5 minutes about the time which irradiated light including an ultraviolet ray as well as a case of the operation 13. Consequently, it was checked under the microscope that the core part longer than the core part (length : about 30-50 micrometers) formed in the case of the operation 13 is formed. That whose core part formed in the case of the operation 14 was longer than the core part formed in the case of the operation 13 While strengthening intensity of the ultraviolet ray to which incidence of the light including the ultraviolet ray irradiated through the light guide from ultraviolet ray irradiation equipment is carried out through the side on which the optical fiber curved by making it condense with a condenser It is thought that it is because incidence of the light was efficiently carried out to the core of an optical fiber.

(Example 15) the formation of optical waveguide(see Fig. 30)

(1) Two multimode optical fibers made from GI type quartz with a length of about 1m (the Fujikura make, a core / clad =50 / 125 micrometers) which performed facet processing using fiber cutter of an optical waveguide were prepared.
(2) From one end of optical fiber 3012', the intensity of the ultraviolet ray irradiated from the other ends of optical fiber 3012' which carries out incidence of the light including an ultraviolet ray, and is made into the Idei side from the ultraviolet ray irradiation equipment (a Matsushita machine and vision company make, 5252L) (not shown) which is the optical irradiation means which made the light source the high-pressure mercury lamp of 250W was adjusted so that it might become about two 0.3 mW/cm. In addition, measurement of the intensity of an ultraviolet ray was performed using the ultraviolet ray illuminometer (the USHIO, INC. make, UIT-150).
(3) next, the interval of about 500 micrometers is opened, and end 3012a of an optical fiber 3012 and 3012' and 3012' a are made associate and arranged to V slot board 3016 (the Moritex Corp. make, quartz V slot) for optical fibers making further the it applied so that it might be made to associate and the ultraviolet ray hardening type resin composite 3011 (resin A) might be buried with the whole part without a crevice Then, it put so that it might be made to associate with V slot control board and a part and the photosensitive composite 3011 might not be moved.
(4) An optical fiber 3012 and 3012' have been held in the state of the above (3). the incidence end of one optical fiber 3012' a Light Emitting Diode light source (the Ando Electric make ) with a wavelength of 850nm The optical output which carries out incidence of the light of output -10dBm (about 0.1mW), and acts as Idei from the incidence end of the optical fiber 3012 of another side was measured using the PAWAME evening (the Ando Electric Co., Ltd. make, AQ2140 and AQ2730) using AQ2140 and AQ4215.
(5) Next, thealuminummirror (not shown) has been arranged to the incidence end side of an optical fiber 3012. At this time, facet by the side of the incidence end of an optical fiber 3012 and the reflective side of said aluminum mirror were parallel, and those distance was 10 micrometers or less.
(6) Light including the ultraviolet ray which adjusted illumination above (2) further, holding an optical fiber 3012 and 3012' in the state of the above (5) was irradiated for 1 - 2 seconds into the photosensitive composite 3011 from the Idei end of optical fiber 3012', and said aluminum mirror was removed after that. The above (1) When the process of - (4) was performed, hardening of the photosensitive composite 3011 was not yet performed, but loss of an optical output 8dB or more was measured at the time of the process end of the above (4). Moreover, it was observed under the microscope (the KEYENCE CORP. make, VH-7000) that the core part was formed and each core part has joined together from both optical fibers 3012 and the Idei end of 3012' at the time of the process end of the above (6).
(7) After performing the process of the above (6), the optical output which acts as Idei from the incidence side of optical fiber 3012' was measured using the same method as the process of the above (4) . Consequently, loss of an optical output 3dB or less was measured. That there was less loss (3dB or less) of the optical output measured at the time of the process end of the above (7) than loss (8dB or more) of the optical output measured at the time of the process end of the above (4) shows that an optical waveguide which consists of a core part is formed and an optical fiber 3012 and 3012' are connected by said an optical waveguide between both optical fibers 3012 and the Idei end of 3012'. Also by irradiating visible light from the Idei end of an optical fiber 3012 after the process end of the above (6), and observing light leakage from an optical waveguide, light leakage was observed in accordance with an optical waveguide form, and it was checked that the light which acted to formed an optical waveguide as Idei is shut up in said optical waveguideH. Moreover, independently a case of the operation 15, as shown in Fig. 29, an optical waveguide which consists of a core part was formed using the optical fiber 3012 which formed the optical parts 3017 equipped with the light receiving element 3018, and optical fiber 3012' by the same method as the case of the operation 15 mentioned above. Then, about this an optical waveguide, when incidence of the transmission light was carried out from optical fiber 3012', said transmission light was able to be light receiving(ed) by the light receiving element 3018.

(Example 16) Formation of an optical waveguide

(1) The same method as the process of (1) - (3) of the case of the operation 15 which carried out formation (see Fig. 31) above-mentioned of an optical waveguide is used so that both the ends that each end of a different optical fiber 3022 and 3022' faced each other, and faced each other at least may be immersed into the photosensitive composite 3021 The intensity of the ultraviolet ray irradiated from the other ends of optical fiber 3022' which arranges a different optical fiber 3022 and different 3022', carries out incidence of the light which includes an ultraviolet ray using ultraviolet ray irradiation equipment from one end of optical fiber 3022' further, and is made into the Idei side was adjusted so that it might become about 0.3mW cm two. In addition, although the optical parts 3027 equipped with the light receiving element 3028 are formed in end 3022b of an optical fiber 3022 in Fig. 31, the optical parts 3027 are not formed in end 3022b of the optical fiber 3022 used in the case of the operation 16.

(2) Next, the optical output which uses a Light Emitting Diode light source (the Ando Electric make, AQ2140 and AQ4215) with a wavelength of 850nm for the incidence end of one optical fiber 3022', carries out incidence of the light of output -10dBm (about 0.1mW), and acts as Idei from the incidence end of the optical fiber 3022 of another side was measured using the PAWAME evening (the Ando Electric Co., Ltd. make, AQ2140 and AQ2730).

(3) Next, the optical filter 3029 (dielectric multilayer film filter) was formed in the optical fiber 3022 side. In addition, although the slit which divides a core was formed in the optical fiber 3022 and the optical filter was inserted in this slit in Fig. 31, the optical filter 3029 was formed in the incidence end side of an optical fiber 3022 in the case of the operation 16.

(4) Light including the ultraviolet ray which adjusted intensity above (1) further, holding an optical fiber 3022 and 3022' in the state of the above (3) was irradiated for 1 - 2 seconds into the photosensitive composite 3021 from the Idei endof optical fiber 3022', and the optical filter 3029 was removed after that. When the process of the above (1) was performed, hardening of the photosensitive composite 3011 was not yet performed, but loss of an optical output 8dB or more was measured at the time of the process end of the above (2). Moreover, it was observed under the microscope (the KEYENCE CORP. make, VH-7000) that the core part was formed and each core part has joined together from both optical fibers 3022 and the Idei end of 3022' at the time of the process end of the above (4).

(5) After performing the process of the above (4), the optical output which acts as Idei from the incidence side of optical fiber 3022' was measured using the same method as the process of the above (2) . Consequently, loss of an optical output 3dB or less was measured. That there was less loss (3dB or less) of the optical output measured at the time of the process end of the above (5) than loss (8dB or more) of the optical output measured at the time of the process end of the above (4) shows that an optical waveguide which consists of a core part is formed and an optical fiber 3022 and 3022' are connected by said an optical waveguide between both optical fibers 3022 and the Idei end of 3022'. Moreover, also by irradiating visible light from the Idei end of an optical fiber 3022 after the process end of the above (5), and observing light leakage from an optical waveguide, light leakage was observed in accordance with an optical waveguide form, and it was checked that the light which acted to formed an optical waveguide as Idei is shut up in said an optical waveguide. Moreover, independently a case of the operation 16 , as shown in Fig. 31, an optical waveguide which consists of a core part was formed using the optical fiber 3022 which formed the optical parts 3027 equipped with the light receiving element 3028, and optical fiber 3022' by the same method as the case of the operation 16 mentioned above. Then, about this an optical waveguide, when incidence of the transmission light was carried out from optical fiber 3022' , said transmission light was able to be light receivinged by the light receiving element 3028.

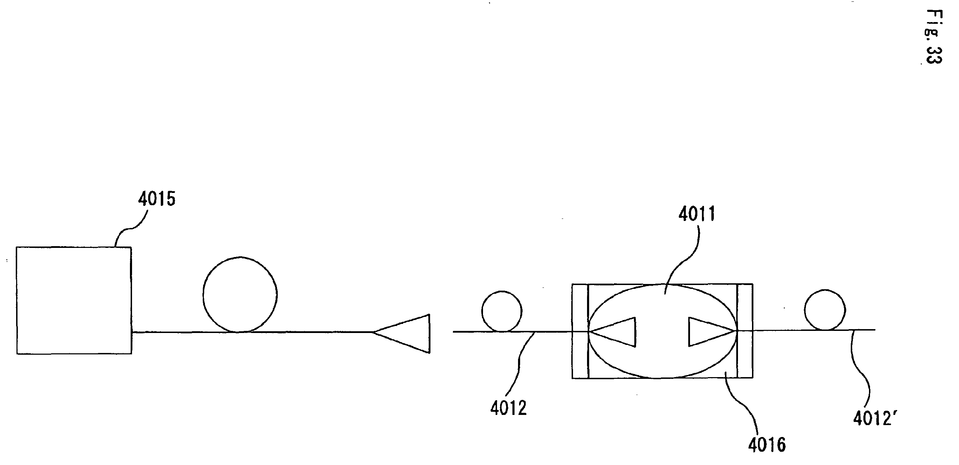

(Example 17) Formation of optical waveguide (see Fig. 33)

(1) Two GI multimode optical fibers subjected to an end surface processing using a fiber cutter, made of quartz and having a length of about one meter (made by Fuj ikura Ltd., core/cladding part = 50 $\mu$m/125 $\mu$m) were prepared.

(2) UV-containing light was incident on one end of an optical fiber 4012 from one end of each of the optical fibers 4012 and 4012' by an ultraviolet irradiation device 4015 (5252L, manufactured by Matsushita Machine and Vision Ltd.) using a high pressure mercury lamp of 250 W as a light source. A luminous intensity of ultraviolet rays emitted from the other end of the optical fiber 4012 was adjusted to 0.3 mW/cm$^2$ by a UV luminometer (UIT-150, manufactured by Ushio Inc.).

(3) The respective optical fibers 4012 and 4012' were fixed to optical fiber fixingbases placedon two optical high precision slide bases (X stages) (not shown), respectively. The emission-side ends of the optical fibers 4012 and 4012' were placed face to face with each other with a distance of about 500 μm kept between the optical fibers 4012 and 4012' and placed on an optical fiber V-groove substrate 4016 (quartz V groove, made byMoritex Corporation). A UV-cured resin composition 4011 (resin A) was coated on an entire faced portion so as to bury the UV-cured resin composition 4011 between the optical fibers 4012 and 4012' without gap. Thereafter, the faced portion of optical fibers and the photosensitive composition 4011 were caught in a V-groove fixation plate so as not to be moved.

(4) While keeping the optical fibers 4012 and 4012' in the state described in (3) above, light having a power of about -10 dBm (about 0.1 mW) was incident on an incidence side of one optical fiber 4012 using an LED light source at a wavelength of 850 nm (AQ2140 and AQ4215, manufactured by Ando Electric Co., Ltd.), and a power of a light emitted from an incidence side of the other optical fiber 4012' was measured by a power meter (AQ2140 and AQ2730, manufactured by Ando Electric Co., Ltd.).

(5) While keeping the optical fibers 4012 and 4012' in the state described in (3) above, UV-containing lights the luminous intensity of each of which was adjusted in the step (2) were simultaneously irradiated from emission ends of the respective optical fibers 4012 and 4012' into the photosensitive composition 4011 for one to two seconds.

When the steps (1) to (4) were carried out, the photosensitive composition 4011 was not cured yet. At the end of the step (4), an optical power loss of 8 dB ormore was measured. In addition, at the end of the step (5) , core parts were formed on the emission ends of the two optical fibers 4012 and 4012'. An observation using a microscope (VH-7000 manufactured by Keyence Corporation) indicated that the respective core parts were coupled to each other in the vicinity of a center.

(6) After the step (5), a power of the light emitted from the incidence side of the optical fiber 4012' was measured using the same method as that in the step (4).

As a result, an optical power loss of 3 dB or less was measured.

The fact that the optical power loss (3 dB or less) measured at the end of the step (6) was lower than the optical power loss (8 dB or more) measured at the end of the step (4) indicates the following respect. An optical waveguide comprising a core part was formed between the emission ends of the two optical fibers 4012 and 4012', and the optical fibers 4012 and 4012' were connected to each other by the optical waveguide.

Further, after the step (6) was finished, visible light was irradiated from the emission end of the optical fiber 4012, and leakage light of the optical waveguide was observed. In this observation, the leakage light along a shape of the optical waveguide was observed, and it was confirmed that the light emitted to the optical waveguide thus formed was constrained in the optical waveguide.

(7) While keeping the state described in (6) above, the power of the light emitted from the incidence end of the optical fiber 4012' was continuously measured.

As a result, it was confirmed that the optical power loss (3 dB or less) measured at the end of the step (6) was increased with the passage of time.

Specifically, about 30 seconds after the measurement of the optical power in the step (6), the optical power loss of about 5 dB was measured. After about 60 seconds, the optical power loss of about 10 dB was measured.

In addition, microscopic observation indicated that following an increase of the optical power loss, the optical waveguide formed between the optical fibers 4012 and 4012' is fluidized and was thereby deformed.

(8) Thereafter, while measuring the optical power emitted from the incidence end of the optical fiber 4012', the fixing of the V-groove fixation plate in which the faced portion between the optical fibers 4012 and 4012' was caught so as not to be movedwas loosened. Using the optical high precision slide base, the optical fibers 4012 and 4012' were pulled so that the distance between the ends of the optical fibers 4012 and 4012' widens by about 50 μm.

At this time, output loss of 3 dB or less was measured.

(9) While repeating the step of pulling the optical fibers 4012 and 4012' so that the distance between the ends of the optical fibers 4012 and 4012' widens by about 50 μm, the optical power emitted from the incidence side of the optical fiber 4012' was continuously measured.

As a result, the optical power loss decreases and, when the distance between the ends of the optical fibers 4012 and 4012' was about 700 μm, an optical power loss of about 2 dB or less was measured.

The reason that the optical power loss (2 dB or less) measured at the end of the step (9) was lower than the optical power loss (3 dB or less) measured at the end of the step (8) was considered as follows. By continuously pulling the optical fibers, the shape of the optical waveguide was stabilized, and the optical waveguide was formed into the shape with which the optical power loss can be reduced.

(Example 18) Formation of optical waveguide

A. Preparation of photosensitive composition

A photosensitive composition was prepared by mixing, by a weight ratio of 1 : 1, an acrylate-based UV-cured adhesive (resin A) cured by a radical polymerization reaction when being irradiated with ultraviolet rays, and an epoxy fluoride-based UV-cured adhesive curedby a cation polymerization reaction when being irradiated with the ultraviolet rays (made by NTT-AT; hereinafter, referred to as "resin H").

B. Formation of optical waveguide

(1) An optical waveguide comprising a core part both ends of which optical fibers were connected, was formed similarly to (1) to (7) in Example 17 except for the use of the photosensitive composition prepared in the process A in the step (3) of Example 17.

In the steps (5) to (7) in Example 17, the shape of the formed core part was observed using the microscope (VH-7000 manufactured by Keyence Corporation) when the UV-containing light was irradiated for three seconds. The microscopic observation indicated that core parts were formed on the emission ends of the both optical fibers, and that the respective core parts were coupled to each other in the vicinity of a center.

Separately from this example, the same steps as the steps (1) to (7) in Example 17 were carried out for each of the independent resin A and the independent resin H. Similarly to the above, the shape of the core part when the UV-containing light was irradiated for three seconds was observed by the microscope. As a result, for the resin A, the microscopic observation indicated that core parts were formed on the emission ends of the both optical fiber, and that the core parts were coupled to each other in the vicinity of a center for the resin A. For the resin H, by contrast, the microscopic observation indicated that core parts were formed on the emission ends of the both optical fibers, but that the core parts were not coupled to each other.

Furthermore, for the resin H, the UV-containing light was continuously irradiated, and the shape of the core part was observed by the microscope. The microscopic observation indicated that the core parts were not coupled to each other even after 10 seconds of the start of the irradiation of the UV-containing light.

Based on these results, it is considered that the core parts formed through the steps (1) to (7) were formed by selectively curing the resin A in the photosensitive composition.

(2) While the both ends of each core part were pulled, an entire V-groove substrate 4013 including the photosensitive composition 4011 in a faced portion between the optical fibers 4012 and the 4012' was irradiated with ultraviolet rays having a luminous intensity of 300 mW/cm$^2$ for 30 seconds using the same ultraviolet irradiation device 4015, thereby forming a cladding part.

After the cladding part was formed in this step (2), the state was observed by the microscope. The microscopic observation indicated that the shape of each core part formed after the end of the step (1) was maintained. Further, visible light was irradiated from the emission end of the optical fiber 4012, and leakage light of the optical waveguide was observed. The observation indicates that the leakage light along a shape of the optical waveguide was observed, and that the stable cladding part was formed around the core part.

(3) Thereafter, thepullingof the optical fibers connected to the both ends of the core part, respectively, was stopped, and an optical power loss was measured. As a result, the optical power loss of 2 dB or less was measured.

The reason that the optical power loss (2 dB or less) measured at the end of the step (3) was equal to the optical power loss (2 dB or less) measured at the end of the step (1) was considered as follows. By forming the cladding part while pulling the both ends of the core part, the state of pulling the both ends of the core part was maintained, and the stable shape is therefore maintained.

(Example 19)

(1) AGI multimode optical fiber subjectedto an end surface processing using a fiber cutter, made of quartz, and having a length of about one meter (made by Fujikura Ltd., core/cladding part = 50 μm/125 μm) was prepared.

(2) UV-containing light irradiated through a light guide 5037 from an ultraviolet irradiation device 5038 (5252L, manufactured by Matsushita Machine and Vision Ltd.) using a high pressure mercury lamp 5038' as a light source was incident from one end of the quartz multimode optical fiber 5032. A luminous intensity of an ultraviolet ray emitted from the other end of the optical fiber 5032 was adjusted to 0.01 mW/cm$^2$ or less (a detection limit or less). The fact that the light was irradiated from the other end of the optical fiber was confirmed by visually recognizing light (visible ray contained in a lamp light) from the end of the optical fiber.

The intensity of the ultraviolet ray was measured by a UV luminometer (UIT-150, manufactured by Ushio Inc.).

(3) One end of the quartz multimode optical fiber 5032 was placed on an optical fiber V-groove substrate 5035 made of quartz glass (made by Moritex Corporation). A UV-cured resin composition 5031 (resin A) was coated entirely on one end of this optical fiber so as to be buried without gap. Then, a V-groove fixation plate was placed on the optical fiber V-groove substrate 5035, and the end of the optical fiber 5032 and the photosensitive composition 5031 were caught in the V-groove fixation plate so as not to be moved.

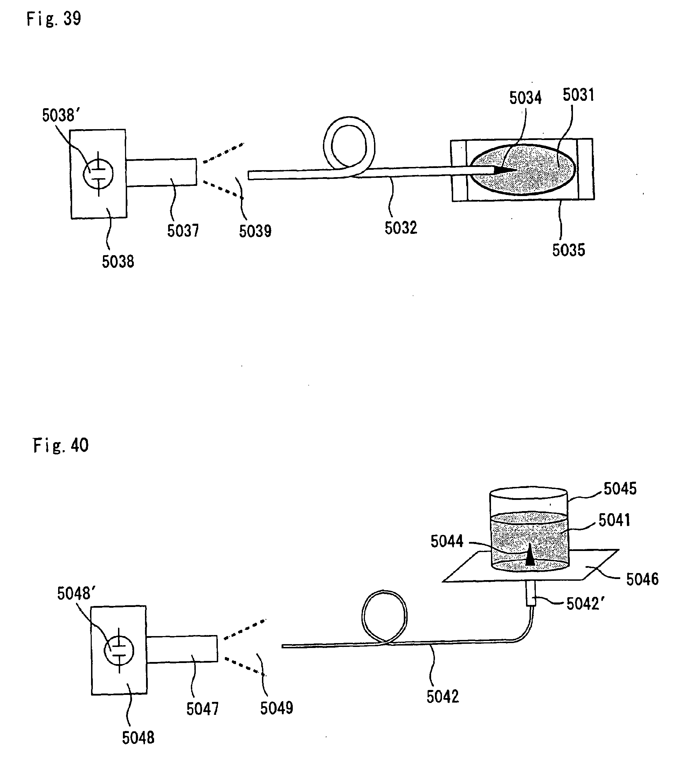

(4) While fixing the quartz multimode optical fiber 5032, UV-containing light 5039 the luminous intensity of which was adjusted in the step (2) was irradiated to the UV-cured resin composition 5031, thereby curing the resin composition and forming an optical waveguide 5034 shaped such that one end was gradually narrower (see Fig. 39).

Observation using a microscope (VH-7000 manufactured by Keyence Corporation) indicated that, as a result of the irradiation of the UV-containing light for five minutes in the step (4), a core part shaped such that a tip end having a length of about 30 to 50 μm was gradually thinner.

Further, if the core part thus formed was taken out, and laser light at a wavelength of 532 nm was irradiated from a bottom of the core part, it was confirmed that the laser light was condensed on an apex of the core part.

(Example 20)

(1) First, an optical fiber collimator in which one end of a GI multimode optical fiber (core/cladding part = 50/125 μm) was attached to a condensing type collimator lens (focal length of five millimeters, a wavelength of 850 nm) (lens-added optical fiber) (OPCL, manufactured by Nippon Sheet Glass Co., Ltd.; a length of about one meter) was prepared.

(2) UV-containing light irradiated from an ultraviolet irradiation device 5048 (5252L, manufactured by Matsushita Machine and Vision Ltd.) using a high pressure mercury lamp 5048' as a light source through a light guide 5047 was incident from an end of the optical fiber collimator 5042 at opposite side to a side on which the collimator lens 5042' was attached. A luminous intensity of ultraviolet rays emitted from the other end of the optical fiber collimator 5042 through the collimator lens 5042' was adjusted to about 0.3 to 0.5 mW/cm$^2$.

The measurement of the intensity of the ultraviolet ray was carried out using a UV luminometer (UIT-150, manufactured by Ushio Inc.).

(3) Separately from the steps (1) and (2), an acrylic cylinder 5045 having a length of about 1 cm and an inner diameter of about 6 mm was prepared, and one end of the cylinder 5045 was fixed onto a slide glass 5046 by an adhesive.

Thereafter, a UV-cured resin composition 5041 (resin A) was poured into the cylinder 5045. The collimator lens 5042'-side of the optical fiber collimator 5042 was attached to a lower portion of the cylinder 5045 through the slide glass 5046 and fixed by the adhesive.

It was noted that the optical fiber collimator 5042 was attached so that the collimator lens was located substantially in a central portion of the cylinder 5045.

(4) While fixing the optical fiber collimator 5042 to the cylinder 5045 through the slide glass 5046, the UV-containing light 5049 the intensity of which was adjusted in the step (2) was irradiated to the UV-cured resin composition 5041, thereby curing the resin composition and forming an optical waveguide 5044 shaped such that one end was gradually thinner (see Fig. 40).

It was confirmed that, as a result of irradiating the UV-containing light in the step (4), the core part shaped such that the tip end was gradually thinner by about 1 mm about 10 seconds after the start of the ultraviolet ray, by about 2 mm about 30 to 90 seconds after the start of the ultraviolet ray was formed.

Furthermore, after irradiating the UV-containing light for 90 seconds, the formed core part was taken out, and laser light at a wavelength of 532 nm was incident from a bottom of the core part. As a result, the laser light was condensed on an apex of the core part.

(Example 21 : production of the optical wiring connection object of the first enforcement form of present invention of the sixth group)

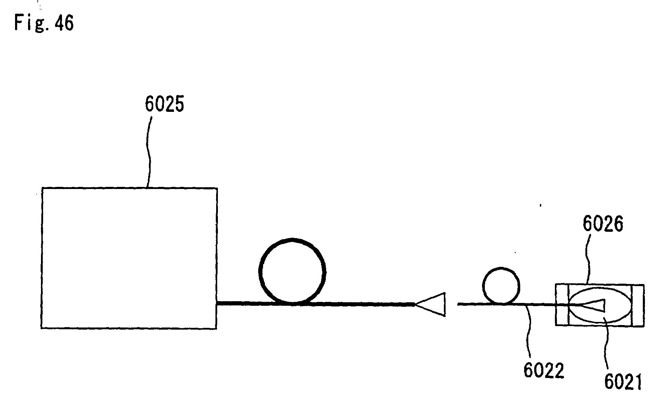

A. the multimode fiber made from production (see Fig. 46)

(1) GI type quartz (the Fujikura make, a core / clad =50micrometer 125 micrometers) of light wiring A 1 it prepared about m

(2) next, the ultraviolet ray irradiation equipment 6025 (a Matsushita machine and vision company make, 5252L) which made the light source the high-pressure mercury lamp of 250W the wavelength range of 200-500nm a spectrum incidence of the light including an ultraviolet ray with a distribution was carried out, and the ultraviolet ray illumination which comes out from the other ends of a fiber 6022, and is put was adjusted so that it might become 0.3 mW/cm2 using an ultraviolet ray illuminometer (the USHIO, INC. make, UIT-150)

(3) Next, the end of the fiber 6022 by the side of Idei V slot board 6026 (the Moritex Corp. make ) for optical fibers Make it located in a quartz V slot, and after that the reliance board (not shown) which becomes on the street of irradiation light / optical from silica glass It has arranged so that the angle with optical axis of a fiber 6022 to make may become 45°, and further, the photosensitive composite (resin A) 6021 used for the whole end of the fiber 6022 above (2) was applied so that it might be buried without a crevice. Then, it put so that the end and the photosensitive composite 6021 of a fiber 6022 might not be moved by V slot control board.

(4) Next, light including the ultraviolet ray which adjusted illumination above (2) was irradiated into the photosensitive composite 6021 from the Idei end of a fiber 6022, holding a fiber 6022 in the state of the above (3), and an optical waveguide by which facet whose angle with optical axis to make is 45 ° was formed in the connecting side with the fiber 6022 and opposite side was formed. In this case of the operation, the connection object of this fiber and an optical waveguide is used as optical wiring A. B. After the process of (4) of the production above A of an optical wiring connection object was completed, it hit with the resin composite which is not hardened around an optical waveguide, and the board was removed, and the photosensitive composite (resin C) was applied to the whole facet whose angle with optical axis of an optical waveguide to make is 45 ° after that so that it might be buried without a crevice. next, the ultraviolet ray irradiation equipment (a Matsushita machine and vision company make, 5252L) which made the light source the high-pressure mercury lamp of 250W using the optical wiring A minding the wavelength range of 200-500nm a spectrum by irradiating light including an ultraviolet ray with a distribution at a photosensitive composite, an optical waveguide (optical wiring B) connected with the optical wiring A was formed, and the optical wiring connection object was completed In addition, the illumination of the ultraviolet ray irradiated at this process is 0. 3 mW/cm2. When the optical wiring connection object formed through Above B was observed using the microscope (the KEYENCE CORP. make, VH-7000), the angle which the optical wiring A and the optical wiring B are connected, and both make was 1 degree (in addition by $\theta_1$ shown in Fig. 41, it becomes $\theta_1$=-1 degree.). This is for the optical refractive index of the optical refractive-index > resin B of Resin A.. Furthermore, incidence of the visible light is carried out from the endby the side of that was connectedwith an optical waveguide of the fiberwhichconstitutes the optical wiringA, and opposite. When glared toward the optical wiring B through the optical wiring A, it was checked that it is observed that light leakage from the optical wiring A and the optical wiring B is crooked along with optical wiring in the connection part of both light wiring, and it is functioning as an optical wiring connection object. furthermore, carried out incidence of the infrared rays with a wavelength of 850nm, they were made to waveguide toward the optical wiring B through the optical wiring A from the end by the side of that was connected with an optical waveguide of the fiber which constitutes the optical wiring A, and opposite, the infrared intensity which comes out of a connecting side with the optical wiring A of the optical wiring B and opposite side, and is put was measured, and optical loss was computed Optical loss of the optical wiring connection object formed in this case of the operation was 1.0dB.

(Example 22 : production of the optical wiring connection object of the second enforcement form of present invention of the sixth group)

In the process of (3) of A of a case of the operation 21, the optical wiring connection object was formed like the case of the operation 21 except having arranged the angle of the reliance board arranged to the optical on the street one of irradiation light so that the angle ($\alpha_{21}$ shown in Fig. 42) with optical axis of a fiber to make may become 9 ° . In addition, with the optical wiring connection object produced in this case of the operation, the connection obj ect of the fiber and an optical waveguide which were produced through the process of A of a case of the operation 21 and the same process as abbreviation will correspond to the optical wiring C, and an optical waveguide formed through the process of B of a case of the operation 21 and the same process will correspond to the optical wiring D. When the optical wiring connection object formed in this case of the operation was observed using the microscope (the KEYENCE CORP. make, VH-7000) , the optical wiring D was connected to the side of the end of the optical wiring C. Furthermore, incidence of the visible light is carried out from the end by the side of that was connected with an optical waveguide of the fiber which constitutes the optical wiring C, and opposite. When glared toward the optical wiring D through the optical wiring C, it was checked that it is observed that light leakage from the optical wiring C and the optical wiring D is crooked along with optical wiring in the connection part of both light wiring, and it is functioning as an optical wiring connection object.

(Example 23 : production of the optical wiring connection object of the third enforcement form of present invention of the sixth group)

In the process of (3) of A of a case of the operation 21, the optical wiring connection object was formed like the case of the operation 21 except having arranged the angle of the reliance board arranged to the optical on the street one of irradiation light so that the angle ($\alpha_{31}$ shown in Fig. 43) with optical axis of a fiber to make may become 13 ° . In addition, with the optical wiring connection object produced in the case of the operation, the connection object of the fiber and an optical waveguide which were produced through the process of A of a case of the operation 21 and the same process as abbreviation will correspond to the optical wiring E, and an optical waveguide formed through the process of B of a case of the operation 21 and the same process will correspond to the optical wiring F and the optical wiring G. When the optical wiring connection object formed in this case of the operation was observed using the microscope (the KEYENCE CORP. make, VH-7000), while the optical wiring F was connected to the side of the end of the optical wiring E, the optical wiring G was connected to facet of the optical wiring E. Furthermore, incidence of the visible light is carried out from the end by the side of that was connected with an optical waveguide of the fiber which constitutes the optical wiring E, and opposite. When it glares toward the optical wiring F and the optical wiring G through the optical wiring E, while light leakage from the optical wiring E, the optical wiring F, and the optical wiring G is crooked along with optical wiring in a connection part with the optical wiring E, the optical wiring F, and the optical wiring G It was checked that having branched is observed and it is functioning as an optical wiring connection object. Moreover, when the intensity of light leakage from each end of the optical wiring F and the optical wiring G was measured, it is optical wiring F: light wiring G=1:10 about, and the optical wiring connection object produced in this case of the operation became clear functioning as optical capular from which a distribution ratio differs.

(Comparative Example 4)

(1) On the glass board (optical refractive index in the wavelength of 589nm : 1.46) of flat quartz, on the spin coat, the photosensitive composite (resin A) used in the case of the operation 1 was applied so that film-thickness after hardening might be set to 40 micrometers, and the resin layer for core formation was formed.

(2) Next, the mask with which the core pattern (a width of 40 micrometers) was drawn was laid on the resin layer for core formation, after that, exposure processing was performed and the core was formed. In addition, the bent core was formed and the bending angle was made into 1 degree here. Furthermore, the proper quantity application of the photosensitive composite was carried out on the formed core. By passing through such a process, the core formed an optical waveguide which it becomes from the hardening thing of a photosensitive composite, and clad becomes from silica glass and a photosensitive non-hardened composite. an optical waveguide formed in this example of comparison has the form which bent at the bending angle of 1 degree, and the full length is the same as that of the sum total length of the optical wiring A and the optical wiring B which were formed in the case of the operation 21. Moreover, all the optical refractive indicees of the core formed in this example of comparison are uniform. Moreover, although light leakage in alignment with the form of an optical waveguide was observed when visible light was introduced in the core and the light leakage was observed from the end of 1 of an optical waveguide formed in this example of comparison, can come, simultaneously it sets near a crookedness part. A part of light was emanating from the core (radiation loss having arisen), and it became clear that produced an optical waveguide is not functioning as a design. Furthermore, from the end of an optical waveguide produced in this example of comparison, infrared rays with a wavelength of 850nm were introduced in the core, the infrared intensity which acts as Idei from other ends was measured, and optical loss was computed. Optical loss of an optical waveguide produced in this example of comparison was 1.8dB. Optical loss of an optical waveguide produced in this example of comparison was larger than optical loss of the optical wiring connection object of a case of the operation 21 0.8dB so that clearly from this result. Thus, in this example of comparison, it was thought that that optical loss became large originated in the radiation loss produced in near the crookedness part of an optical waveguide as mentioned above, and it became clear that an optical waveguide produced in this example of comparison also from this is not functioning as a design. If it is going to abolish radiation loss in a crookedness part when bending an optical waveguide which has a uniform optical refractive index, the bending' angle must be made small and the size will become large compared with the optical wiring connection object to which the optical wiring from which an optical refractive index like the optical wiring connection object of cases of the operation 21-23 differs was connected.

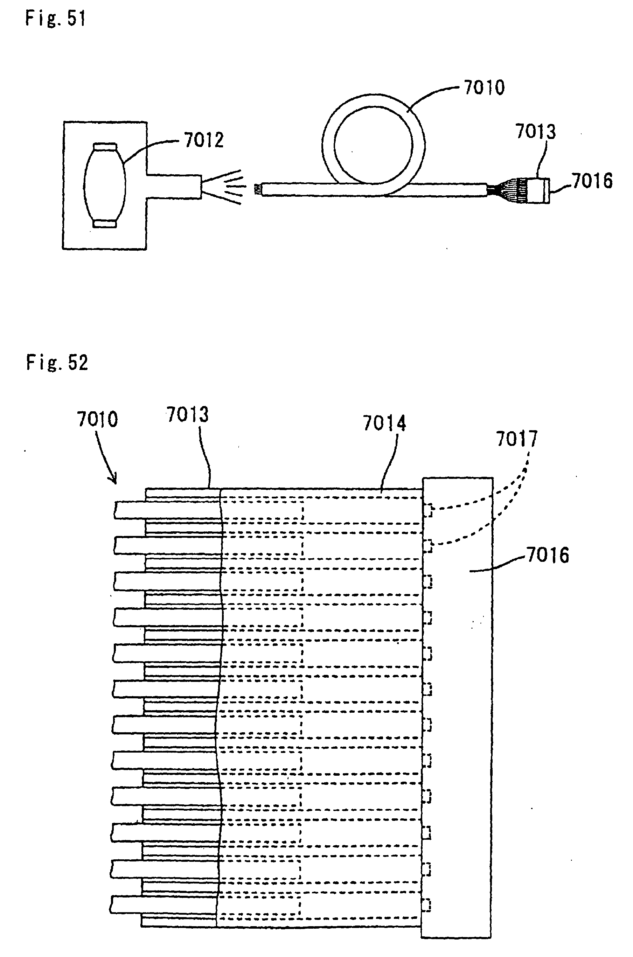

(Example 24: Refer to the figure 51-54) the multimode fiber 7010 (Fujikura; a core /clad= micrometers 50 / 125 micrometers)

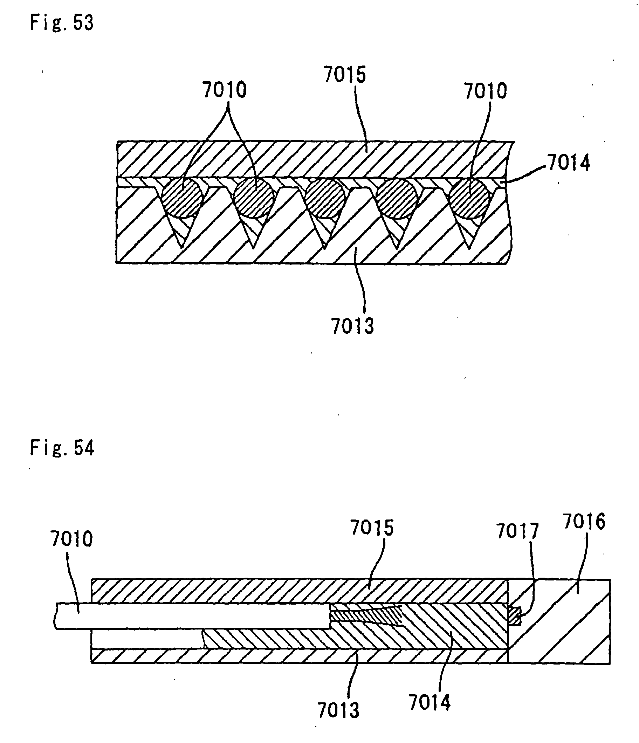

(1) Fiber cutter etc. made from the shape type quartz of a tape GI of the 12 hearts which performed facet processing by 1 it prepared about m
(2) From one end of the tape-like fiber 7010, incidence of the light which includes an ultraviolet ray through a light guide from the ultraviolet ray irradiation equipment (a Matsushita machine and vision company make, 5252L) which made the high-pressure mercury lamp 7012 the light source was carried out (see Fig. 51). At this time, distance between incidence end of the tape-like fiber 7010 and the Idei end of a light guide was set to 30mm - 40mm. The irradiation intensity of a lamp 7012 was adjusted to high-pressure mercury so that it might become 0.5 - 0.7 mW/cm2 using an ultraviolet ray illuminometer (USHIO UIT- 150) about the ultraviolet ray illumination which acts as Idei from the Idei end of the tape-like fiber 7010.
(3) The photo-diode array 7016 was fixed to one end of V slot board 7013 (quartz by Moritex Corp. V slot) for optical fibers so that the element 7017 of a photo-diode might be made to associate with V slot (see Fig. 52) . And the end by the side of Idei of the tape-like fiber 7010 was located in V slot board 7013 for optical fibers so that the distance between the elements 7017 of a photo-diode might be set to about 2mm. Furthermore, by irradiating ultraviolet light from near the end of the tape-like fiber 7010 at the photo-diode array 7016 side (figure 52 Nakamigi side), radical polymerization was applied so that super-ultraviolet ray hardening type resin 7014 (resinA) might be buried without a crevice (see Fig. 52). It put so that the end of the tape-like fiber 7010 and ultraviolet ray hardening type resin 7014 might not be moved by V slot control board 7015 (see Fig. 53).

(4) Light including the ultraviolet ray which adjusted illumination by (2) was irradiated into the formation type resin 7014 of ultraviolet ray facilities from the Idei end of the tape-like fiber 7010, holding the tape-like fiber 7010 in the state of the above (3) (see Fig. 54) . In the state of the above (2), when the illumination of each ultraviolet ray which acts as Idei from the fiber 7011 located in the fiber 7011 located in an end among each two or more fibers 7011 which constitute the tape-like fiber 7010, and the center was measured, there was no great difference. Moreover, above-mentioned (1) - (4) was operated, and when an optical waveguide by which self-formation is carried out from the Idei end of the tape-like fiber 7010 was observed, about 600 micrometers of things for which optical waveguide 1mm or more is formed almost uniformly from the tip of each fiber 7011 of the tape-like fiber 7010 were microscope (VH by KEYENCE CORP. 7000)-upper-checked in 10 seconds in about 400 micrometers and 3 seconds in 1 second. Furthermore, also by irradiating visible light from the Idei end of the tape-like fiber 7010, and observing light leakage from an optical waveguide, light leakage was observed in accordance with an optical waveguide form, and it was checked that stable an optical waveguide is formed.

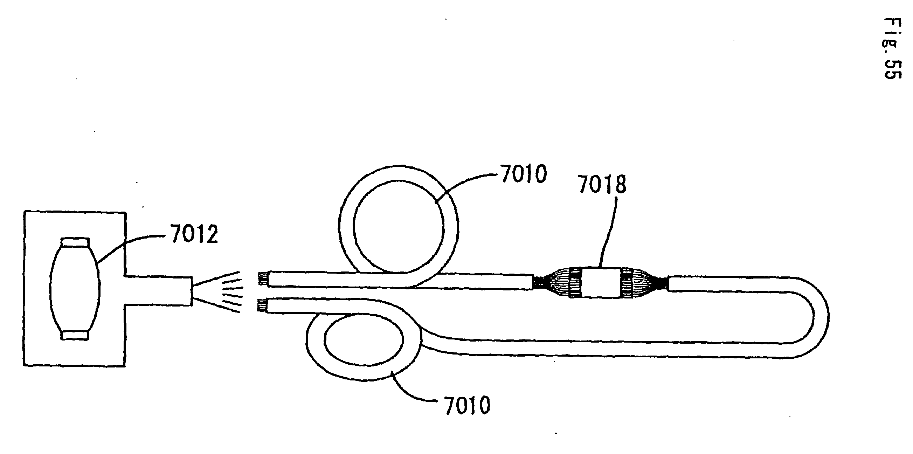

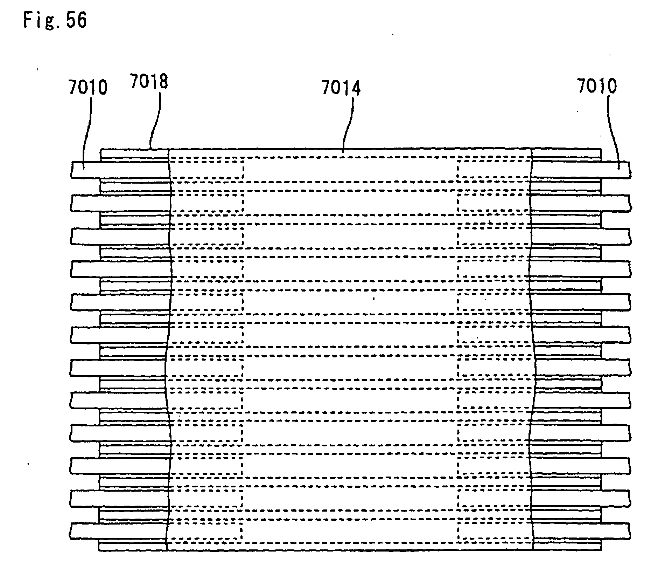

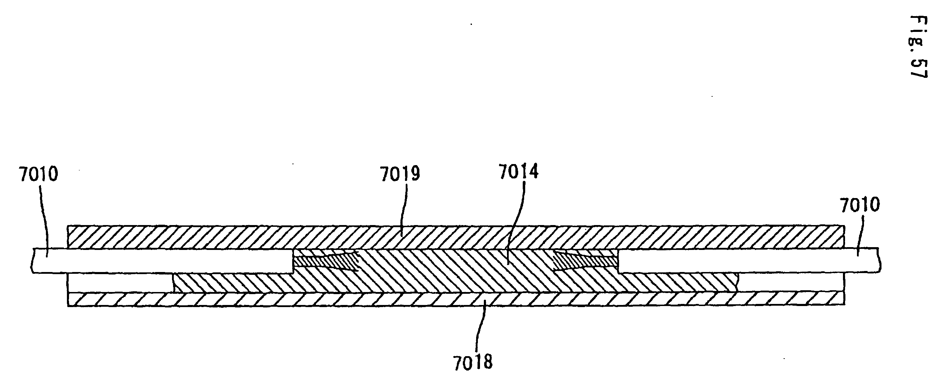

(Example 25: Refer to the figure 55- figure 57)

(1) Two multimode fibers 7010 (Fujikura; a core /clad= micrometers 50 / 125 micrometers) made from the 1 shape type quartz of a tape GI of the about m 12 hearts which performed facet processing by fiber cutter etc. were prepared.

(2) The light which includes an ultraviolet ray through a light guide from the ultraviolet ray irradiation equipment (a Matsushita machine and a vision, 5252L) which made the high-pressure mercury lamp 7012 the light source was inputted from one end of each tape-like fiber 7010 and 7010. At this time, distance between incidence end of the tape-like fiber 7010 and the Idei end of a light guide was set to 30mm- 40mm. The irradiation intensity of the high-pressure mercury lamp 7012 was adjusted so that it might become 0.5 - 0.7 mW/cm2 using an ultraviolet rayilluminometer (UITbyUSHIO, INC. -150) about the ultraviolet ray illumination irradiated from another end of each fiber 7010 and 7010 made into the Idei side.

(3) It opens, the interval of about 1mm is made to associate to V slot board 7018 (quartz byMoritexCorp. Vslot) foroptical fibers, the end of the tape-like fibers 7010 and 7010 by the side of each Idei was located, and further, the ultraviolet ray hardening type resin 7014 which was made to associate and was used for the whole part in the case of the operation 24 was applied so that it might be buried without a crevice between the tape-like fiber 7010 and 7010. It put so that it might be made to associate with V slot control board 7019 and a part and ultraviolet ray hardening type resin 7014 might not be moved.

(4) Light including the ultraviolet ray which adjusted illumination above (6) was irradiated for 1 second to 2 seconds into ultraviolet ray hardening resin 7014 more nearly simultaneous than the Idei end of each tape-like fiber 7010 and 7010, holding the tape-like fibers 7010 and 7010 in the state of the above (7). The above (1) When - (4) was operated, it was observed on the microscope that an optical waveguide was formed and each an optical waveguide has joined together near middle from the Idei endofboth tape-like fibers 7010 and 7010. Moreover, by irradiating visible light from the irradiation end of one tape-like fiber 7010, and observing light leakage from an optical waveguide between the tape-like fiber 7010 and 7010 as well as a case of the operation 24, light leakage was observed in accordance with an optical waveguide form, and it was checked that stable an optical waveguide is formed. In addition, although the enforcement form of cases of the operation 24 and 25 is an example of the enforcement form concerning present invention of the seventh group As mentioned above, the enforcement form concerning present invention of the seventh group It does not divide and come out, for example, an enforcement form like following (1) - (3) etc. is included in the technical range of present invention of the seventh group, and further, within limits which are limited only to these enforcement forms and which do not deviate from a summary besides the following, it can change variously and can carry out. That is, although considered as the composition which uses the high-pressure mercury lamp 7012 which light diffuses as a light source with the enforcement form shown in the (1) cases of the operation 24 and 25, it is good also as composition which uses the light source which light does not diffuse not only like this but like laser. In this case, it is possible by using the large laser light source of the diameter of spot to form an optical waveguide of the uniform many hearts in a package. Moreover, the number of light sources may not necessarily be one, and they are good also as composition which bundles two or more light sources and is made into single spot. (2) Although considered as the composition which forms an optical waveguide at the tip of the tape-like optical fiber 7010 with the enforcement form shown in cases of the operation 24 and 25, you may apply to the multi-heart optical fiber of not only this but this cardiac arrangement for example. (3) Although considered as the composition which irradiates a photosensitive composite more nearly simultaneous than the Idei end of each tape-like fiber 7010 and 7010 with the enforcement form shown in the case of the operation 25, you may make it glare not only this but by turns.

(Example 26)

(1) The multimode fiber 8010 (Fujikura; a core /clad= micrometers 50 / 125 micrometers) made from GI type quartz which performed facet processing by fiber cutter etc. 1 it prepared about m

(2) From-one end of a fiber 8010, incidence of the light which includes an ultraviolet ray from the ultraviolet ray irradiation equipment (a Matsushita machine and vision company make, 5252L) which made the high-pressure mercury lamp the light source was carried out. The irradiation intensity of a lamp was adjusted to high-pressure mercury so that it might become 0.7 -0.8 mW/cm2 using an ultraviolet ray illuminometer (UITbyUSHIO, INC. - 150) about the ultraviolet ray illumination which acts as Idei from the Idei end of a fiber 8010. (Connectionwith (Example 26-1:light emitting diode array (I))

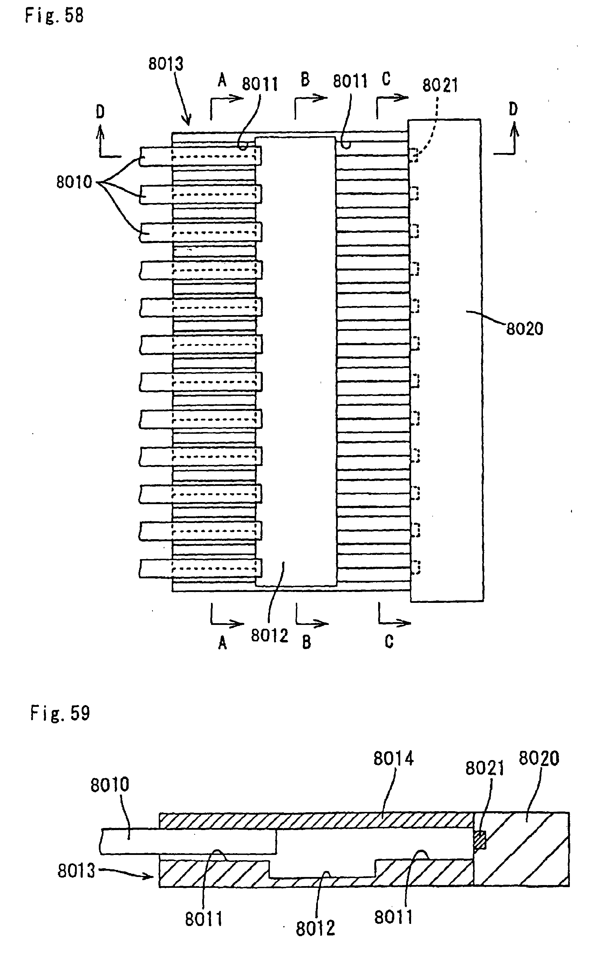

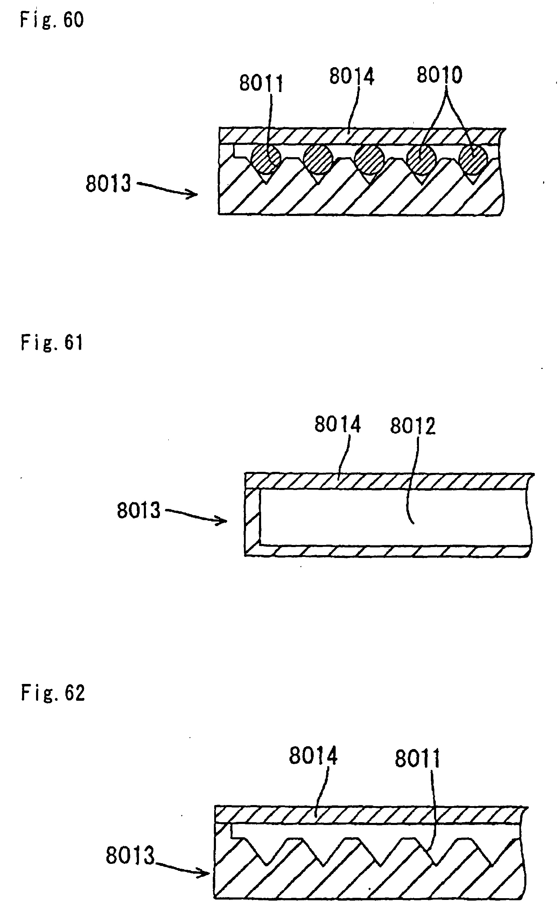

(3)-A While the V slot 8011 for optical fibers was formed in the both-ends side of the direction of an axis as shown in figure 58 - figure 62, the substrate 8013 for optical fibers made from the silica glass with which the resin storage part 8012 of the shape of a container wide opened by bottom-depth was formed in the middle part was prepared. The light emitting diode array 8020 was fixed to the single-sided end of this substrate 8013 for optical fibers so that the element 8021 of a light emitting diode might be made to associate with the V slot 8011 of the substrate 8013 for optical fibers (see Fig. 58 and Fig. 59). Moreover, the end by the side of Idei of a fiber 8010 was located in the V slot 8011 by the side of the other ends of the substrate 8013 for optical fibers so that the distance between the elements 8021 of a light emitting diode might be set to about 1mm. Furthermore, the ultraviolet ray hardening type resin (resin A) which starts radical polymerization from near the end of a fiber 8010 by irradiating an ultraviolet ray at the light emitting diode array 8020 side (right-hand side in a figure) was embedded without the crevice (not shown) . It put so that the end of a fiber 8010 and ultraviolet ray hardening type resin might not be moved by the control board 8014 made from quartz.

(Example 26-2: Connection with a photo-diode array)

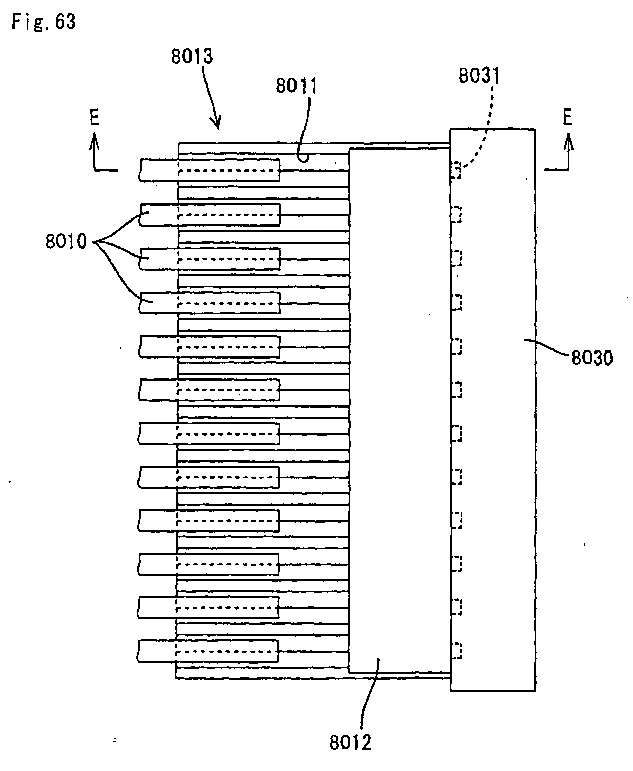

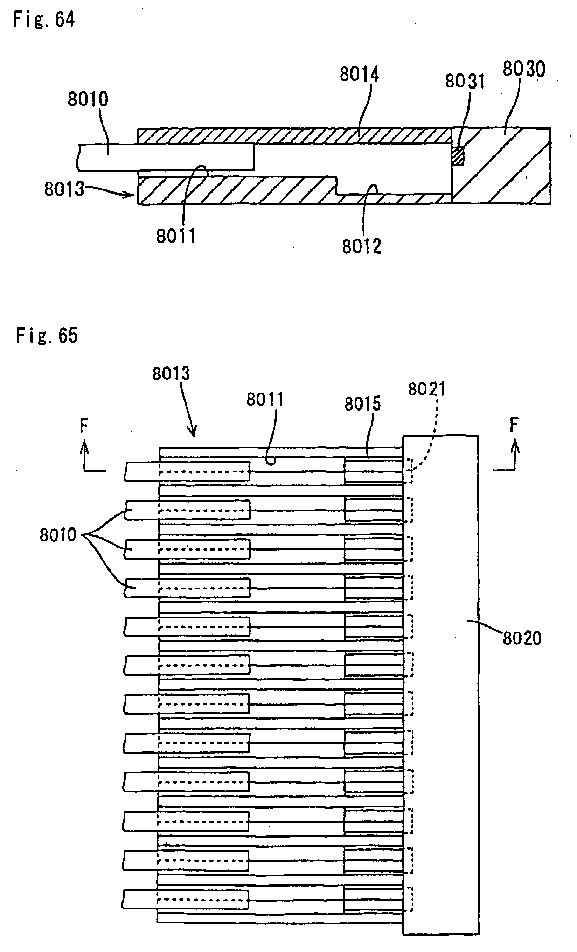

(3)-B While the V slot 8011 for optical fibers is formed in the one end part side of the direction of an axis as shown in Fig. 63 and Fig. 64 The element 8031 fixed the photo-diode array 8030 to the direction compared with the substrate 8013 for optical fibers at the resin storage part 8012 side of V slot board 8013 for optical fibers made from the silica glass with which the resin storage part 8012 of bottom-depth was formed in the other end side. Moreover, the end by the side of Idei of a fiber 8010 was located in the V slot 8011 by the side of the other ends of V slot board 8013 for optical fibers so that the distance between the elements 8017 of a photo-diode might be set to about 1mm. Furthermore, from near the end of a fiber 8010, the same ultraviolet ray hardening type resin as a case of the operation 26-1 was applied to the photo-diode array 8030 side (right-hand side in a figure) so that it might be buried without a crevice (not shown) . It put so that the end of a fiber 8010 and ultraviolet ray hardening type resin might not be moved by the control board 8014 made from quartz.

(Example 26-3: Connection with a light emitting diode array (II))

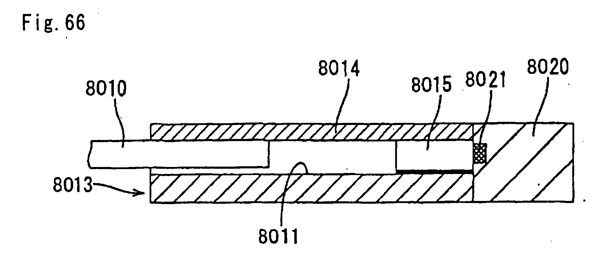

(3)-C The light emitting diode array 8020 was fixed to one end of V slot board 8013 for optical fibers made from the silica glass with which the metal film 8015 was formed in Mizouchi by the side of the one end part of the direction of an axis as shown in Fig. 65 and Fig. 66. Moreover, the end by the side of Idei of a fiber 8010 was located in the V slot 8011 by the side of the other ends of V slot board 8013 for optical fibers so that the distance between the elements 8021 of a light emitting diode might be set to about 1mm. Furthermore, from near the end of a fiber 8010, the same ultraviolet ray hardening type resin as a case of the operation 26-1 was applied to the light emitting diode array 8020 side (figure Nakamigi side) so that it might be buried without a crevice (not shown) . It put so that the end of a fiber 8010 and ultraviolet ray hardening type resin might not be moved by the metal film 8015 of said V slot board 8013, and the control board 8014 made from quartz with which the metal film was formed as well as the corresponding position.

(4) Light including the ultraviolet ray which adjusted illuminationby (2) was irradiatedintoultraviolet rayhardening type resin from the Idei end of a fiber 8010, holding a fiber 8010 in the state of (3)-A-C.

The above (1) - (4) was operated, and when an optical waveguide by which self-formation is carried out from the Idei end of a fiber 8010 was observed, it was microscope (VH by KEYENCE CORP. 7000)-upper-checked that an optical waveguide is formed also in which method of (3) -A-C among the elements 8021 and 8031 of a fiber 8010, the light emitting diode array 8020, or the photo-diode array 8030. Moreover, also by irradiating visible light from the Idei end of a fiber 8010, and observing light leakage from an optical waveguide, light leakage was observed in accordance with the form of an optical waveguide, and it checked that the light which acted as Idei was shut up in an optical waveguide. Furthermore, when the path of the direction of an axis of an optical waveguide by which formed as mentioned above and up observation was carried out under the microscope was checked, like said preliminary experiment, the path of an optical waveguide near the Idei end was about 50 micrometers, and the path was all about 60 micrometers in the place which separated 600 micrometers from 500 micrometers. Moreover, the paths near the element 8021 of a light emitting diode were about 65 micrometers and 75 micrometers, andanopticalwaveguideproduced in the case of the operation 26-1 and the case of the operation 26-3 was whether it is almost equivalent to the path of an element 8021, and more than it. On the other hand in the case of the operation 26-2, it became thin gradually, was about 45 micrometers near the element 8031 of a photo-diode, and was whether it is almost equivalent to the path of an element 8031, and less than it.

In addition, although the enforcement form of a case of the operation 26 is an example of the enforcement form concerning present invention of the eighth group As mentioned above, the enforcement form concerning present invention of the eighth group It does not divide and come out, for example, an enforcement form as shown in the following (1) and (2) etc. is included in the technical range of present invention of the eighth group, and further, within limits which are limited only to these enforcement forms and which do not deviate from a summary besides the following, it can change variously and can carry out.

Namely, the (1) case of the operation 26 the wavelength range of 200nm - 500nm a spectrum although light including an ultraviolet ray with a distribution was irradiated with the high-pressure mercury lamp, you may irradiate monochromatic light, such as laser

(2) When carrying out optical combination of the optical fibers from which not only this but a path differs, you may make it apply, although the case of the operation 26 described the method of connecting an optical fiber and an optical device. Moreover, it is good also as composition made to glare towards the optical fiber of the other party in that case from both of optical fibers.


INDUSTRIAL APPLICABILITY


As described above, with the optical transmission structural body according to the first aspect of the first group of the present invention, even if the portion of the optical wiring which portion is connected to the core part of the optical waveguide is not specially subjected to the planarization processing, or even if the surface roughness Ra based on JIS B 0601 is 0.1 $\mu$m or more, the optical signal can be suitably transmitted between the optical wiring and the optical waveguide. Incidentally, if such an optical transmission structural body is manufactured, the manufacturing process can be simplified.

With the optical waveguide formation method according to the second aspect of the first group of the present invention, the core part excellent in connection performance with the optical wiring can be formed even if the portion of the optical wiring which portion is connected to the core part of the optical waveguide is not specially subjected to the planarization processing, or even if the surface roughness Ra based on JIS B 0601 is 0.1 $\mu$m or more.

Therefore, the portion of the optical wiring coupled to the core part canbe formed without the highly accurate end surface processing. The formation method of the present invention can, therefore, simplify the optical waveguide formation process. Since the formation process can be simplified, the formation method is economically advantageous.

Moreover, by the formation method of optical waveguide this invention of the second group, in order to carry out incidence of the light through the side of optical wiring, even if it is the case where a light source cannot be prepared in the end face side of everything but optical wiring, and incidence of the light cannot be carried out from other end face of optical wiring, it becomes possible to irradiate light from end face of 1 of optical wiring to a photosensitive composite. Therefore, it is economically advantageous, while being able to simplify connection according to the formationmethodof opticalwaveguide this invention of the second group, without receiving most restrictions in the composition of optical wiring and optical parts etc., since optical waveguide can be formed with the technology of self-form waveguide.

Moreover, by the formation method of an optical waveguide present invention of the third group, light can be irradiated towards the endof other optical wiring fromeach end which optical wiring different the account of a top faced by reflecting the light which glared and irradiated light with said optical reflective means from the end of optical wiring of one using an optical irradiation means. Therefore, if it is possible to prepare an optical irradiation means in the optical wiring side of one among the ends where different optical wiring has not faced each other, even if it is the case where an optical irradiation means cannot be prepared in other optical wiring side, it will become possible to irradiate light towards the end of optical wiring of another side from each end of different optical wiring, and to form a core part. Therefore, it is possible to irradiate light towards the end of optical wiring of another side from each end of different optical wiring, and to form a core part, without receivingmost restrictions in optical wiring, the composition of optical parts, etc. according to the formation method of an optical waveguide present invention of the third group, and an optical waveguide of the stable form which connects betweendifferentopticalwiringcanbe formed certainly, without working highly precise positioning.

In the optical waveguide according to the first aspect of the fourth group of the present invention, since the both ends of the core part are connected to the optical wirings or optical components, respectively, both ends of at least the core part are pulled, the shape of the core part is stabilized, and the optical loss in the optical waveguide can be reduced.

Further, a force for pressing the optical wiring and the optical waveguide against each other is not applied, thus, a damage, deformation, and the like does not occur to the end surface of the optical waveguide and those of the optical wirings and the like connected to the both ends of the optical wiring, respectively. The connection loss resulting from diffuse reflection of the transmitted light, radiation of the light to the outside, or the like is less likely to occur.

Therefore, the optical waveguide according to the first aspect of the fourth group of the present invention can realize low connection loss between the different optical wirings or the like.

Furthermore, with the optical waveguide formation method according to the second aspect of the fourth group of the present invention, the core part can be formed while the both ends of the core part are connected to the respective optical wirings. Besides, the both ends of the core part are pulled. Therefore, differently from the conventional art, it is unnecessary to fix the core part when the core part is connected to the optical wiring by pushing, and the core part and each optical wiring are not pressed against each other. As a result, the optical waveguide can be formed without causing the damage, the deformation or the like on the end surfaces of the optical wirings and the core part. In addition, since the both ends of the core part are pulled, the core part is not fluidized and the optical waveguide including the core part of the stabilized shape can be obtained.

Therefore, the optical waveguide formation method according to the second aspect of the fourth group of the present invention can realize low connection loss between the optical wirings connected to the optical waveguide.

Moreover, since the optical waveguide according to the first aspect of the fifth group of the present invention has the above-mentioned shape, the light incident from the bottom can be condensed and the condensed light can be efficiently emitted from the apex.

Therefore, when optical components, optical wirings, or an optical component and an optical wiring are optically connected to each other, the optical waveguide according to the first aspect of the fifth group of the present invention can be interposed between them. With this configuration, it is possible to ensure transmitting the optical signal without using an expensive lens such as a collimator lens or a condensing lens.

Further, by directly attaching the bottom of the above-mentioned core part to the optical component or the optical wiring on the side on which the optical signal is emitted, or by directly attaching the apex of the core part to the optical component or the optical wiring on the side on which the optical signal is received, it is possible to surely and efficiently transmit the optical signal through the core part.

Additionally, with the optical waveguide formation method according to the second aspect of the fifth group of the present invention, the core part is formed by forming the cured matter corresponding to the optical path of the irradiated light, and this cured matter is grown into a shape so as to condense the irradiated light. Therefore, the irradiated light follows an optical path condensed in the photosensitive composition. As a result, the core part having the shape such that the core part is gradually thinner toward one end thereof can be formed.

Moreover, the optical wiring connection object of present invention of the sixth group has the optical transmission ability which was excellent even if the crookedness part was not a crookedness part but the bent crookedness part of the shape of a smooth curve.

Furthermore, when considering as the optical wiring connection object which has the bent crookedness part as said optical wiring connection object, a complicated design is not needed but the optical wiring connection object which is excellent inoptical transmission ability can be designed easily.

In addition, the size can be made compact when using said optical wiring connection object as an optical waveguide parts. moreover, pitch conversion which optical path of an optical signal could be made crooked at arbitrary angles, and was looked at by the conventional electric wiring design, without using additional optical parts, such as a mirror, when the optical wiring connection object of present invention of the sixth group was used it can unite wiring length and the complicated wiring design of branched wiring etc. can be easily taken in also in an optical wiring design

Moreover, according to the formation method of an optical waveguide of the seventh group of the present invention, since two or more an optical waveguide can be made to form collectively to the light source equipped with the single irradiation domain as comparedwith the conventional formation method, the formation efficiency of an optical waveguide is circulated by leaps and bounds.

Moreover, according to the optical waveguide formation method according to the eighth group of the present invention of, it becomes possible to adjust the intensity of the light recurred by the formation way of an optical waveguide in a photosensitive composite by making the reflectance of the light in the inside of a resin accommodation part differ, or making the distance of the irradiation region of light and the inside of a resin accommodation part which are irradiated into a photosensitive composite differ along the formation direction of an optical waveguide.

Namely, the fiber and the optical device from which it becomes possible with which to adjust the form of an optical waveguide formed freely in a certain amount of range, and area differs combination the outstanding effect that optical combination can be carried out efficiently is done so.

**Claims**

1. An optical transmission structural body constituted such that:

at least an optical wiring and an optical waveguide are connected to each other; and
an optical signal can be transmitted between a core of said optical wiring and a core part of said optical waveguide,

wherein
a portion of said optical wiring, said portion being connected to the core part of said optical waveguide, is not specially subjected to a planarization processing or has a surface roughness Ra based on JIS B 0601 of 0.1 μm or more.

2. The optical transmission structural body according to claim 1,
wherein:

the core of said optical wiring is connected to the core part of said optical waveguide; and
a coating layer is formed at least on an circumference of an end of said optical wiring on a side on which connection to the core part of said optical waveguide is conducted.

3. The optical transmission structural body according to claim 1 or 2,
wherein
an optical refractive index of the core part of said optical waveguide is 90 to 110% of an optical refractive index of aportion of said optical wiring, said portion being connected to the core part of said optical waveguide.

4. The optical transmission structural body according to claim 1 or 2,
wherein
an optical refractive index of the core part of said optical waveguide is 95 to 105% of an optical refractive index of a portion of said optical wiring, said portion being connected to the core part of said optical waveguide.

5. The optical transmission structural body according to any of claims 1 to 4,
wherein
an optical path conversion mirror is formed on an end surface of the core part of said optical waveguide at opposite side to the side on which said optical wiring is connected.

6. The optical transmission structural body according to any of claims 1 to 5,
wherein
the core part of said optical waveguide includes at least one bent portion.

7. The optical transmission structural body according to any of claims 1 to 6,
wherein
a roughened surface is formed partially or entirely in a portion other than the portion connected to the core part of the optical waveguide on a surface of said optical wiring.

8. An optical waveguide formation method which comprising steps of:

immersing a part of an optical wiring in a photosensitive composition;
irradiating light into said photosensitive composition through said optical wiring; and
forming a core part corresponding to an optical path of light in said photosensitive composition,

wherein
a portion of said optical wiring, said portion being connected to the core part of said optical waveguide, is not specially subjected to a planarization processing or has a surface roughness Ra based on JIS B 0601 of 0.1 µm or more.

9. The optical waveguide formation method according to claim 8,
wherein
said part of the optical wiring immersed'in the photosensitive composition is an end of said optical wiring, and a coating layer is formed on an circumference of the end of the optical wiring.

10. The optical waveguide formation method according to claim 8 or 9,
wherein
an optical refractive index of said core part is 90 to 110% of an optical refractive index of a portion of said optical wiring, said portion being connected to said core part.

11. The optical waveguide formation method according to claim 8 or 9,
wherein
an optical refractive index of said core part is 95 to 105% of an optical refractive index of a portion of said optical wiring, said portion being connected to said core part.

12. An optical waveguide formation method which comprising steps of:

immersing a part of an optical wiring in a photosensitive composition;
irradiating light into said photosensitive composition through said optical wiring; and
forming a core part corresponding to an optical path of light in said photosensitive composition,

wherein
irradiating light from facet of said optical wiring is the light which carried out incidence through the side of said optical wiring.

13. The optical waveguide formation method according to claim 12,
wherein
incurvating the side of the optical wiring to which incidence of said light is carried out, before carrying out incidence of said light.

14. The optical waveguide formation method according to claim 12 or 13,
the light which carries out incidence through the side of said optical wiring is the light which condensed with the lens.

15. An optical waveguide formation method which comprising steps of:

arranging different optical wirings such that
one end of one of the optical wirings substantially faces one end of the other optical wiring and at least both of the faced ends thereof are immersed in a photosensitive composition; and
irradiating light at least from one of said optical wirings to the other optical wiring, thereby forming a core part that connects said optical wirings to each other,

wherein
establishing the optical irradiation means for irradiating light at one end of one of optical wiring towards one end of other optical wiring,
establishing the optical reflective means at one end of other optical wiring for reflecting the light which is irradiated by using said optical irradiation means at one end of one of optical wiring,
irradiating light at one end of one of optical wiring towards one end of other optical wiring,and
reflecting the light which is irradiated by using said optical irradiation means at one end of one of optical wiring to form a core part at both of the faced ends thereof.

16. The optical waveguide formation method according to claim 15,
said optical reflective means is a mirror.

17. The optical waveguide formation method according to claim 15,

said optical reflective means is an optical filter.

**18.** An optical waveguide comprising a core part and a cladding part, each of both ends thereof being connected to optical wirings or optical components, respectively,
wherein
both ends of at least said core part are pulled.

**19.** The optical waveguide according to claim 18,
wherein
said core part comprises a photosensitive composition.

**20.** The optical waveguide according to claim 18 or 19,
wherein
said cladding part comprises a resin composition.

**21.** An optical waveguide formation method comprising steps of:

arranging different optical wirings such that
one end of one of the optical wirings substantially faces one end of the other optical wiring and at least both of the faced ends thereof are immersed in a photosensitive composition; and
irradiating light at least from one of said optical wirings to the other optical wiring, thereby forming a core part that connects said optical wirings to each other,

wherein
both ends of the core parts are pulled.

**22.** The optical waveguide formation method according to claim 21,
wherein
after pulling said core part or while pulling said core part, a stable cladding part is formed around said core part.

**23.** An optical waveguide formed independently of an optical wiring,
wherein
a shape of a core part is formed to be gradually thinner toward one end of the core part.

**24.** The optical waveguide according to claim 23,
wherein
a cladding part is formed around said core part.

**25.** The optical waveguide according to claim 23 or 24,
wherein
said core part comprises a photosensitive composition.

**26.** An optical waveguide formation method comprising a step of irradiating light into a photosensitive composition through an optical wiring, thereby growing a cured matter of said photosensitive composition having a shape for condensing said light
to form a core part having such a shape that the core part becomes gradually thinner toward one end of the core part.

**27.** The optical waveguide formation method according to claim 26,
wherein
after forming said core part, a stable cladding part is formed around said core part.

**28.** Optical wiring connection body constituted such that:

plural optical wiring are connected to transmit an optical signal to each other,

wherein
said optical wiring connection body includes a bent portion,

said optical wiring connected to each other has different optical refractive index,

at least one of said optical wiring does not cross at right angles to optical axis on the facet of the side connected with other optical wiring.

29. Optical wiring connection body according to claim 28,

wherein

said optical wiring connection has an optical wiring A and an optical wiring B at least,

the facet of said optical wiring A and the facet of said optical wiring B are connected, and

said optical wiring connection has bent in the connection part of said optical wiring A and said optical wiring B.

30. Optical wiring connection body according to claim 28,

wherein

said optical wiring connection has an optical wiring C and an optical wiring D at least,

the side of the end of said optical wiring C and the facet of said optical wiring D were connected, and

said optical wiring connection has bent in the connection part of said optical wiring C and said optical wiring D.

31. Optical wiring connection body according to claim 28,

wherein

said optical wiring connection has an optical wiring E, an optical wiring F and an optical wiring G at least,

the side of the end of said optical wiring E and the facet of said optical wiring F were connected,

the facet of the side where said optical wiring F were connected of said optical wiring E and the facet of said optical wiring G were connected,and

said optical wiring connection has bent in the connection part of said optical wiring E and said optical wiring F, and in the connection part of said optical wiring E and said optical wiring G.

32. An optical waveguide formation method which comprising steps of:

forming an optical waveguide according to course of the light by irradiating light into photosensitive composite,

wherein

forming two or more an optical waveguide at the tip of each said optical wiring,by passing the optical wiring of two or more laid in parallel in the light which came out of the light source equipped with the single irradiation domain, and was put, and glaring into said photosensitive composite.

33. An optical waveguide formation method according to claim 32,

wherein

incidence end of said optical wiring is arranged to be separated at a predetermined distance from the emergent end of said light source.

34. An optical waveguide formation method according to claim 32 or 33,

wherein

the area of the emergent end of said light source is made larger than the area of incidence end of said optical wiring.

35. An optical waveguide formation method according to any of claims 32 to 34,

wherein

the light irradiated into a photosensitive composite is irradiated towards optical wiring of the other party, respectively from optical wiring,while makes the pair, which should be combined optically.

36. An optical waveguide formation method which comprising steps of:

placing a photosensitive composite into a case made of resin,and

making a line harden of the irradiation region of light by and irradiating light in said photosensitive composite,

wherein

in said case made of resin, recurrence rate of the light which recur after being scattered on the circumference from the irradiation region of said light differs along the formation direction of said an optical waveguide.

37. An optical waveguide formation method according to claim 36,

recurrence rate of said light is changed by changing the reflectance of the light in the inside of said case made of resin along the formation direction of said an optical waveguide.

**38.** An optical waveguide formation method according to claim 36,

recurrence rate of said light is changed by changing the distance of the irradiation region of said light, and the inside of said case made of resin along the formation direction of said an optical waveguide.

Fig. 1

Fig. 2

(a)

1110

1115a

1114    1114a

45°

1113a

1115    1113

1112

(b)

1120

1125a

1124    1124a

8°

1123a

1125    1123

1122

(c)

1130

1135a

1134    1134a

1133a

1135    1133

1132

Fig. 3

1140

1145a

1144

1144a

1142

1143

1145

1143a

Fig. 4

1150

(a)

1154

1154a

1152

1153

1155

1153a

1160

(b)

1164

1164a

1162

1163

1165

1163a

Fig. 5

(a)

1170

1174

1174b

1173a     1174a

1173     1175

1172

(b)

1180

1184b

1184

1184a

1183     1185     1183a

1182

Fig. 6

1190

1195a

1194

1195a

1193    1195

1192

Fig. 7

1200

1204

1205a

1202a

1205    1203

1202

Fig. 8

(a)

1210
1217
1217a
1214
1212
1213a
1215    1213    1217a

(b)

1410
1417
1413a
1417a
1414
1412
1415    1413    A    1417a
1415a

Fig. 9

(a)

1220

1222  1223  1225  1224  1228  1235  1233  1232

(b)

1240  1249a

1249

1242  1243  1245  1244  1248

Fig. 10

1250

1252  1262

1255  1253  1257  1254  1267  1263  1265

Fig. 11

Fig. 12

Fig. 13

Fig. 14

(a)

1001

1003

1002

1003a

(b)

1001

1003

1002

(c)

1001

1003

1002

1004

(d)

1001'

1004

1003

1002

Fig. 15

Fig. 16

Fig. 17

Fig. 18

(a)

1062

1064a    1061

1064

1066

(b)

1072

1071

1074

1076

Fig. 19

(a)

(b)

Fig. 20

(a)

1011

1013

1012

1013'

1012'

(b)

1011

1012

1012'

(c)

1011

1012

1014

1012'

(d)

1011'

1014

1012

1012'

Fig. 21

(a)

1021

1023

1022

1022'

1023'

(b)

1021

X

1022

Y

Z

1022'

(c)

1021'

1022

1024

1022'

Fig. 22

1091

1096a

1096

1092

1094

Fig. 23

Fig. 24

Fig. 25

Fig. 26

(a)

2002 2007 2001

2003

2002a

(b)

2002 2007 2001

2003

(c)

2002 2007 2001

2003

2004

(d)

2002 2007 2001 2004

2003

Fig. 27

(a)

2012    2017    2011

2013    2012a

(b)

2012    2017    2011

2013

(c)

2012    2017    2011

2013    2014

(d)

2012    2017    2011    2014

2013

Fig. 28

Fig. 29

(a)

(b)

Fig. 30

(a)

3011

3013

3012

3013'

3012'

(b)

3015a

3011

3015a

3012

3015b

3012'

(c)

3015a

3011

3015a

3012

3015b

3012'

(d)

3015a

3011'

3014

3015a

3012

3015b

3012'

Fig. 31

(a)

(b)

Fig. 32

(a)

(b)

(c)

EP 1 503 231 A1

Fig. 33

121

Fig. 34

5011

(a)

5012

(b)

5013

(c)

5014

(d)

Fig. 35

5015

Fig. 36

(a)

(b)

(c)

Fig. 37

(a)

(b)

(c)

Fig. 38

(a)

5025

5021

5023

5022

(b)

5025

5021

5024

5023

5022

(c)

5025

5021

5024

5023

5022

Fig. 39

Fig. 40

Fig. 41

Fig. 42

Fig. 43

Fig. 44

(a)

6001

6002

6002a

(b)

6001

6002

(c)

6001

6002

6004

Fig. 45

(a)

6011

6012

6012a          6012a'

6012'

(b)

6011

6012

6012'

(c)

6011

6012

6014

6012'

Fig. 46

6025

6026

6022

6021

Fig. 47

6400

6401a    6402a    6402

6401    6401b    6403a    6403

Fig. 48

6500

6501a    6502a    6502

6501    6501b    6503a    6503

Fig. 49

Bending angle $\theta_1$ with varied value of $n_{12}$ at the fixed value of $N_{11} = 11$ (calculated at $\alpha_1 = 40, 45, 50$ degrees)

Fig. 50

EP 1 503 231 A1

Bending angle $\theta_1$ with varied value of $\alpha_1$ at the fixed value of $n_{11}=1.48$ (calculated at $n_{12} = 1.4$, 1.5, 1.6 degrees)

$\theta_1$ ($n_{12} =1.4$)

$\theta_1$ ($n_{12} =1.5$)

$\theta_1$ ($n_{12} =1.6$)

Fig. 51

7010

7012

7013

7016

Fig. 52

7010    7013    7014    7017

7016

Fig. 53

7010    7015    7010

7014

7013

Fig. 54

7010    7015    7017    7016

7013    7014

Fig.55

Fig. 56

7010   7018          7014                7010

Fig. 57

Fig.58

Fig.59

EP 1 503 231 A1

Fig. 60

8011    8014    8010

8013 →

Fig. 61

8014    8012

8013 →

Fig. 62

8014    8011

8013 →

141

Fig. 63

Fig. 64

Fig. 65

Fig. 66

Fig. 67

(a)

(b)

(c)

(d)

Fig. 68

(a)

121

123

122

123'

122'

(b)

121

X

122

Y

Z

122'

(c)

121'

122

124

122'

Fig. 69

Fig. 70

Fig. 71

Fig. 72

(a) 1513'

1514

(b) 1513

1514

(c) 1513

1515

1514

Fig. 73

(a)

1512    1511    1512'

1513    1513'

(b)

1512    1511    1512'

(c)

1512    1514  1511'    1512'

Fig. 74

(a)

1523'
1525a
1524

(b)

1523

1525a

1524

(c)

1523

1525

1524

## INTERNATIONAL SEARCH REPORT

| | International application No. |
|---|---|
| | PCT/JP02/12040 |

**A. CLASSIFICATION OF SUBJECT MATTER**
Int.Cl$^7$ G02B6/24

According to International Patent Classification (IPC) or to both national classification and IPC

**B. FIELDS SEARCHED**

Minimum documentation searched (classification system followed by classification symbols)
Int.Cl$^7$ G02B6/24

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-320422 A (Fujitsu Ltd.),<br>03 December, 1996 (03.12.96),<br>Full text; Figs. 1 to 61<br>& US 6081632 A & US 5854868 A<br>& EP 0689067 A | 1-38 |
| A | JP 50-059044 A (Nippon Telegraph And Telephone Corp.),<br>22 May, 1975 (22.05.75),<br>Full text; Fig. I-3<br>(Family: none) | 1-38 |

☐ Further documents are listed in the continuation of Box C.  ☐ See patent family annex.

| | | | |
|---|---|---|---|
| * | Special categories of cited documents: | "T" | later document published after the international filing date or |
| "A" | document defining the general state of the art which is not considered to be of particular relevance | | priority date and not in conflict with the application but cited to understand the principle or theory underlying the invention |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such |
| "O" | document referring to an oral disclosure, use, exhibition or other means | | combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 21 February, 2003 (21.02.03) | 04 March, 2003 (04.03.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP02/12040

**Box I    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

Claims 1-7 are directed to a roughening process of an edge of a waveguide.
Claims 8-38 are directed to a method for forming a core for coupling waveguides to each other

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)